# EUROPÄISCHE PATENTSCHRIFT

(11) **EP 1 682 717 B1**
(45) Veröffentlichungstag und Bekanntmachung des Hinweises auf die Patenterteilung: **16.03.2011**
(21) Anmeldenummer: 04817273.8
(22) Anmeldetag: 28.10.2004
(51) Int. Cl.: D06P 3/32, D06P 1/38, C09B 62/453

(54) **VERFAHREN ZUM REAKTIV-FÄRBEN VON LEDER, SOWIE FARBSTOFFE UND DEREN VERWENDUNG**
METHOD FOR THE REACTIVE COLOURING OF LEATHER, DYESTUFFS AND THEIR USE
PROCEDE DE TEINTURE REACTIVE DU CUIR, COLORANTS ET LEUR UTILISATION

(30) Priorität: 29.10.2003 DE 10350368; 25.08.2004 DE 102004041187
(43) Veröffentlichungstag der Anmeldung: 26.07.2006
(73) Patentinhaber: BASF SE, 67056 Ludwigshafen (DE)
(72) Erfinder: SOMOGYI, Laszlo, 67117 Limburgerhof (DE); ZAMPONI, Andrea, 67063 Ludwigshafen (DE); STREICHER, Rolf, D-67549 Worms (DE); KIESOW, Harald, 67067 Ludwigshafen (DE); ERHARD, Reiner, 68199 Mannheim (DE)
(86) Internationale Anmeldenummer: PCT/EP2004/012231
(87) Internationale Veröffentlichungsnummer: WO 2005/040490

(56) Entgegenhaltungen:
- EP-A- 0 201 868
- EP-A- 0 647 685
- EP-A- 0 861 879
- EP-A- 0 887 386
- US-A- 5 488 101

## Beschreibung

Die vorliegende Erfindung betrifft ein Verfahren zum Färben von Leder und neue Farbstoffe, die zum Reaktiv-Färben von Leder besonders geeignet sind.

Die Färbung von gegerbtem Leder erfolgt derzeit mit sauren Farbstoffen, Direktfarbstoffen, Schwefelfarbstoffen oder basischen Farbstoffen. Die Erzielung hoher Farbintensitäten und hoher Farbbeständigkeiten, insbesondere Nass- und Schweißechtheiten, ist mit diesen Farbstoffen schwierig und für mittlere bis hohe Farbtiefen bis heute noch nicht befriedigend gelöst worden.

Um die Nass- und Schweißechtheit zu verbessern, wird das Leder häufig mit kationischen Komplexierungsmitteln behandelt, die den Farbstoff komplexieren und so die Löslichkeit im Kontakt mit Wasser vermindern. Die erzielbaren Nass- und Schweißechtheiten und Abriebbeständigkeiten sind jedoch für intensive Farbnuancen noch nicht ausreichend. Ferner neigen daraus gefertigte Lederartikel beim Gebrauch zu Abfärbungen. Das Erzielen hoher Echtheiten bei mittleren bis hohen Farbtiefen erfordert zudem eine sehr sorgfältige Farbstoffauswahl und die Abstimmung des eingesetzten Farbstoffs mit den eingesetzten Lederhilfsmitteln, weiterhin geeignete Fettungsmittel und Nachgerbstoffauswahl. Zudem ist es in der Regel zur Erzielung der gewünschten Echtheiten erforderlich, Farbstoff und Fettungsmittel und in einigen Fällen auch den Nachgerbstoff in getrennter Flotte zu applizieren, was Aufgrund des erforderlichen Flottenwechsels eine Verlängerung der Gesamtprozessdauer und zudem einen verstärkten Anfall von Abwasser zur Folge hat.

Der Färbeprozess im wässrigen und sauren Medium unter Verwendung konventioneller Lederfarbstoff ist folglich durch die unterschiedlichen Verfahrensschritte und mitverwendeten Chemikalien komplex und langwierig und kostenintensiv. Zudem können die oben geschilderten Echtheitsprobleme durch diese Maßnahmen nicht grundlegend gelöst werden. Grund hierfür ist, dass die eingesetzten konventionellen Farbstoffe über ionische Wechselwirkungen an das Leder gebunden sind. Durch Einwirkung wässriger alkalischer Lösungen, wie beispielsweise durch Waschflüssigkeiten oder in Tests zur Schweißechtheit, wird die Ionenbindung zwischen Leder und Farbstoff zerstört, so dass sich der Farbstoff aus dem Leder löst und umgebende Materialien, z.B. Begleitgewebe anfärbt.

Verschiedentlich wurde versucht, die Farb- und Nassechtheit des gefärbten Leders durch Reaktivfärben zu verbessern. Unter Reaktivfärben versteht man die Verwendung von Farbstoffen, die funktionelle Gruppen aufweisen, welche mit den funktionellen Gruppen des Leders eine kovalente chemische Bindung ausbilden können.

So beschreiben T.C. Mullen in the Leather Manufacturer 1964, S. 18 ff. und in J. Soc. Leather, Trades, Chem. 46, 1962, S. 162 ff. sowie M.L. Fein et al. in J. Am. Leather Chem. Assoc. 65, 1970, S.584-591 die Verwendung von Reaktivfarbstoffen, die als Reaktivanker eine Dichlortriazin-Gruppe aufweisen. Die erzielten Fixierausbeuten, d.h. der Anteil an chemisch gebundenem Farbstoff, sind mit etwa 70 bis 75 % jedoch nur mäßig und lösen die oben geschilderten Probleme nicht. Zudem ist das Verfahren auf mit Chrom gegerbte Leder beschränkt.

Um diese Nachteile zu überwinden, schlägt die DE-A 3529294 vor, für die Lederfärbung Farbstoffe zu verwenden, die wenigstens eine 1,3,5-Triazinylgruppe, an die ein Substituent mit einem quartären Stickstoffatom gebunden ist, aufweisen. Eigene Untersuchungen der Anmelderin an N-Acetyllysin als Modellsystem haben jedoch gezeigt, dass unter den dort beschriebenen Färbebedingungen eine Ausbildung von kovalenten Bindungen zwischen Farbstoff und der Aminogruppe des N-Acetyllysins nicht in signifikantem Ausmaß erfolgt.

K. Rosenbusch et al. in Das Leder 19, 1968, S. 284 beschreiben die Verwendung von Remazol®-Farbstoffen, die eine Vinylsulfongruppe oder eine Gruppe, aus welcher bei Einwirkung von Alkalien eine Vinylsulfongruppe freigesetzt wird, aufweisen, zum färben von Sämisch-Leder. Um eine ausreichende Fixierung zu erreichen sind jedoch lange Färbedauern bei einem pH-Wert von 10 erforderlich. Aufgrund der angewendeten Färbebedingungen, d.h. hoher pH-Wert in Verbindung mit langen Färbezeiten von 7 h und länger kann dieses Verfahren nur zum Färben von Sämischleder eingesetzt werden, das bekanntermaßen gegenüber Alkalien beständig ist. Bei anderen Ledersorten führen die beschriebenen Färbebedingungen zu einer Schädigung des Leders. Eigene Untersuchungen der Anmelderin zeigen zudem, dass bei Einsatz von Remazol®-Farbstoffen, die eine Vinylsulfongruppe aufweisen, eine zufriedenstellende Fixierung nicht erreicht wird.

Zusammenfassend lässt sich sagen, dass durch die bekannte Verfahren zur Lederfärbung mit Reaktivfarbstoffen bei mittleren bis hohen farbtiefen gute Fixierausbeuten von 85 % und höher nicht erreicht werden. Zur Erreichung hoher Nass- und Schweißechtheiten und einer guten Migrationsstabilität sind die im Stand der Technik erreichten Fixierausbeuten von 70 bis 75 % nicht ausreichend, da der nicht gebundene Farbstoffanteil mühsam ausgewaschen werden muss, um die hier geschilderten Probleme zu lösen. Auf die hier geschilderten Nachteile der Lederfärbung mit Reaktiv-Farbstoffen wird auch in The Leather Manufacturer 1964, S.18-23, hingewiesen. Es verwundert daher nicht, dass sich die Lederfärbung mit Reaktivfarbstoffen nicht durchgesetzt hat. Vielmehr werden heute andere Wege gesucht, Farbstoffe kovalent im Leder zu binden, beispielsweise durch Vorbehandlung des Leders mit polyfunktionellen Aldehyden, die wenigstens eine reaktive Gruppe aufweisen, welche mit einer reaktiven Gruppe des Farbstoffs unter Bindungsbildung reagieren können (siehe DE 100 44 642 A1)

Aufgrund der hier beschriebenen Nachteile sind die Verfahren insbesondere nicht zur Herstellung von Lederartikeln für spezielle Segmente wie für Schuhe, Bekleidung, Automobil, Handschuh und Möbel geeignet, die in mittlerer und hoher Farbtiefen über hohe Echtheiten, insbesondere Wasch-, Schweiß-, Reib- und Migrationsechtheiten verfügen.

Der vorliegenden Erfindung liegt somit die Aufgabe zugrunde, ein Verfahren zum Färben von Leder bereitzustellen, bei dem auch bei mittleren und hohen Farbtiefen (Farbintensitäten) hohe Echtheiten, insbesondere Nass-, Schweiß- und Reibechtheiten sowie eine hohe Migrationsechtheit erzielt werden. Zudem sollte das Verfahren unter Bedingungen durchgeführt werden können, die nicht oder nur in geringem Umfang zu einer Schädigung des Leders führen. Insbesondere sollte das Verfahren zur Herstellung Lederartikeln für spezielle Segmente wie für Schuhe, Bekleidung, Automobil, Handschuh und Möbel geeignet sein, die besonders in mittlerer und hoher Farbtiefen über hohe Echtheiten, insbesondere Wasch-, Schweiß-, Reib- und Migrationsechtheiten, verfügen.

Es wurde überraschenderweise gefunden, dass bei Verwendung von Farbstoffen F, die wenigstens eine funktionelle Gruppe der nachfolgend definierten Formel A aufweisen, in wässriger Flotte bei pH-Werten von pH 7,5 bis 11 diese Aufgabe gelöst wird. Die Färbung und Fixierung geht dabei so rasch vonstatten, dass nur kurze Färbedauern von 4 h und weniger erforderlich sind um eine hinreichende Farbintensität und eine hohe Fixierung von 85 % und darüber zu erreichen.

Demnach betrifft die vorliegende Erfindung ein Verfahren zum Färben von Leder mit wenigstens einem Farbstoff F, der wenigstens eine unter alkalischen Bedingungen aktivierbare Gruppe der Formel A; 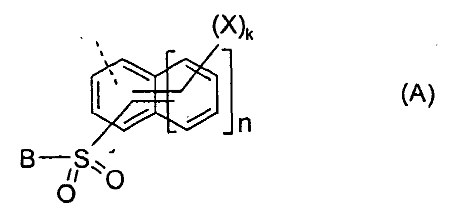 aufweist, worin
- ....: die Bindung zum Rest des Farbstoffmoleküls darstellt;
- X: für einen elektronenziehenden Rest steht,
- k: für 1, 2 oder 3 steht,
- n: 0 oder 1 bedeutet, und
- B: für eine Gruppe CH=CH₂ oder eine Gruppe CH₂CH₂-Q steht, worin Q eine unter alkalischen Bedingungen abspaltbare Gruppe steht,
umfassend die Behandlung des Leders mit einer wässrigen Flotte, enthaltend wenigstens einen Farbstoff F, erfindungsgemäß bei einem pH-Wert von 7,5 bis 11 in der Regel im Bereich von 8 bis 11, vorzugsweise im Bereich von 8,5 bis 10,5 und speziell im Bereich von 8,5 bis 10.

Hier und im Folgenden steht der Ausdruck Alkyl in der Regel für einen linearen oder verzweigten Kohlenwasserstoffrest mit 1 bis 6 und vorzugsweise mit 1 bis 4 C-Atomen (C₁-C₆- bzw. C₁-C₄-Alkyl) wie Methyl, Ethyl, Propyl, Isopropyl und dergleichen. Halogenalkyl steht für Alkyl, wie vorstehend definiert, worin die Wasserstoffatome teilweise oder vollständig durch Halogenatome, insbesondere durch Fluoratome ersetzt sind, wie in Trifluormethyl, Trichlormethyl, Pentafluorethyl, und dergleichen. Alkoxy steht für einen über ein Sauerstoffatom gebundenen Alkylrest, wie vorstehend definiert. Gegebenenfalls substituiertes Phenyl bedeutet, dass der Phenylrest einen oder mehrere, z.B. 1, 2, 3 oder 4 Substituenten aufweisen kann, die beispielsweise ausgewählt sind unter Halogen, Alkyl, Alkoxy, Nitro, Cyano, COOH, SO₃H und dergleichen. Halogen steht insbesondere für Fluor, Chlor oder Brom.

Elektronenziehende Reste × sind solche, die einen -M- und/oder einen -I-Effekt auf den aromatischen Rest, an den sie gebunden sind, ausüben. Hierzu zählen beispielsweise Fluor oder Chlor, CN, NO₂ sowie Gruppen der Formeln -C(O)-R¹ und S(O)2R², worin R¹ und R² unabhängig voneinander für OH, Alkyl, Halogenalkyl, Alkoxy oder gegebenenfalls substituiertes Phenyl stehen. Sofern der Rest A mehrere Gruppen aufweist (k >1), dann können die Gruppen × gleich oder verschieden sein. Vorzugsweise steht wenigstens eine der Gruppen × für eine Hydroxysulfonyl-Gruppe (SO₃H).

Die Variable k steht vorzugsweise für 1 oder 2, d.h. der Rest A weist 1 oder 2 elektronenziehende Reste × auf. Vorzugsweise steht n in Formel A für 0, d.h. der Rest A ist von Benzol abgeleitet. Sofern n für 1 steht, ist der Rest A von Naphthalin abgeleitet. In diesen Fällen kann sich die Gruppe SO₂-B an dem gleichen Benzolkern wie die wenigstens eine Gruppe × befinden oder an dem anderen Benzolkern.

Unter einer unter alkalischen Bedingungen abspaltbaren Gruppe Q versteht man Reste, die unter alkalischen Bedingungen, d.h. bei pH-Werten von 7,5 oder darüber unter Eliminierung unter Ausbildung einer Vinylsulfongruppe abgespalten werden. Beispiele für derartige Gruppen sind Halogen, z.B. Chlor, Brom oder lod, weiterhin -O-SO₃H, -S-SO₃H, Dialkylamino, quartäres Ammoniumreste wie Tri-C₁-C₄-alkylammonium, Benzyldi-C₁-C₄-alkylammonium oder N-gebundenes Pyridinium, sowie Reste der Formeln R³S(O)₂-, R⁴S(P)₂-O-, R⁵C(O)-O-. Hierin stehen R³, R⁴ und R⁵ unabhängig voneinander für Alkyl, Halogenalkyl oder gegebenenfalls substituiertes Phenyl, wobei R⁵ auch Wasserstoff bedeuten kann. Bevorzugt steht Q für eine Gruppe -O-(CO)CH₃ und insbesondere für -O-SO₃H.

Erfindungsgemäß bevorzugt steht B in Formel A für CH=CH₂ , eine Gruppe CH₂-CH₂-O-C(O)CH₃ oder eine Gruppe CH₂-CH₂-O-SO₃H. Insbesondere ist Rest A ausgewählt ist unter den nachfolgenden Resten A1 bis A12:

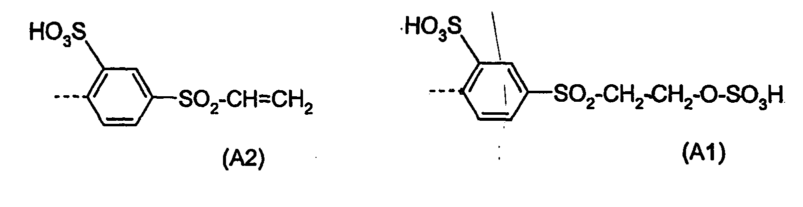

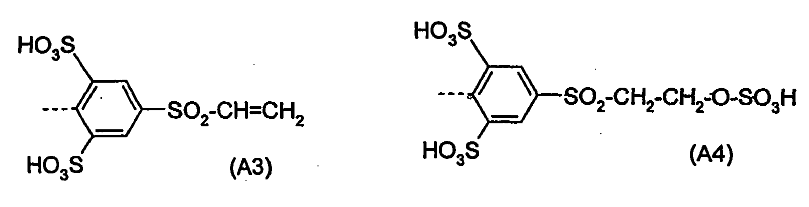

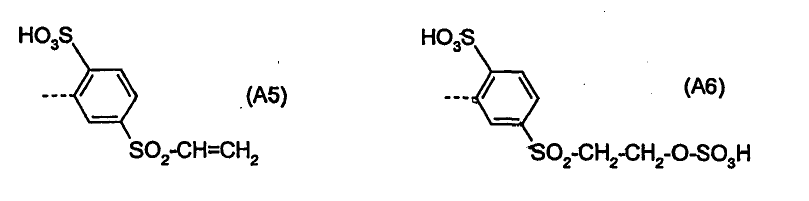

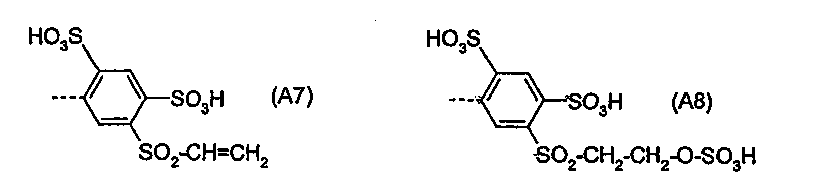

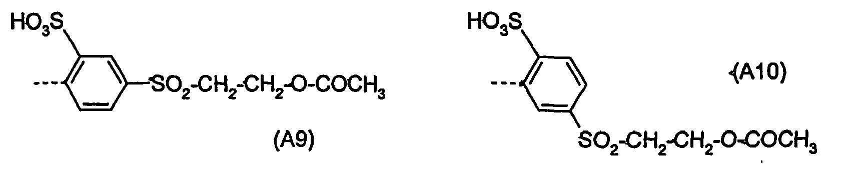

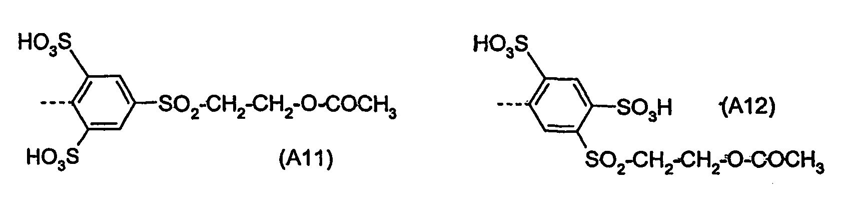

Besonders bevorzugt hierunter sind Farbstoffe, worin der wenigstens eine Rest A die Formel A1, A2 oder A9 aufweist.

Zweckmäßigerweise weist der im erfindungsgemäßen Verfahren eingesetzte Farbstoff, 1, 2 oder 3, vorzugsweise 1 oder 2 der vorgenannten Reste A auf. Dieser Rest A kann, muss aber nicht Bestandteil des Farbstoffchromophors sein und ist vorzugsweise über eine Gruppe -NH- oder -N=N- mit dem Farbstoffmolekül verbunden.

In der Regel weist der Farbstoff F eine oder mehrere, z.B. 1 bis 10, insbesondere 2 bis 8 funktionelle Gruppen je Farbstoffmolekül auf, die dem Farbstoff F Wasserlöslichkeit verleihen. Hierbei handelt es sich in der Regel um anionische bzw. saure funktionelle Gruppen, die im wässrigen Medium bei einem schwach saure oder alkalischen pH-Wert, in der Regel bei pH-Werten oberhalb 4, unter Bildung anionischer-Gruppen dissoziieren. Beispiele für derartige Gruppen sind Hydroxysulfonylgruppen.(-SO₃H), Carboxylgruppen (COOH) und Hydroxysulfonyloxygruppen (-O-SO₃H) sowie die Anionen dieser Gruppen. Diese anionischen/sauren Gruppen können an die Gruppe A und/oder an andere Teile des Farbstoffmoleküls gebunden sein. Sofern diese Gruppen im Farbstoff F als anionische Gruppen vorliegen, versteht es sich von selber, dass der Farbstoff auch die zur Neutralisation erforderlichen Gegenionen umfasst. Geeignete Gegenionen sind insbesondere Alkalimetallionen, speziell Natrium-, Kalium- und Lithium-Ionen sowie Ammoniumionen, z.B. Ammoniumionen, die sich von Mono-, Di-oder Triethanolamin ableiten.

Für das erfindungsgemäße Verfahren sind auch Metallkomplexe, vorzugsweise Übergangsmetallkomplexe der vorgenannten Farbstoffe F, insbesondere Komplexe der Übergangsmetalle der Gruppen VI bis × des Periodensystems und hierunter insbesondere des Cu, Cr, Fe, Ni, Co, Mn, Zn und Cd geeignet. Das Molverhältnis von Übergangsmetall zu Farbstoffmolekül in diesen Metallkomplexen liegt üblicherweise im Bereich von 2:1 bis 1:2. In der Regel erfolgt in diesen Farbstoffen die Komplexierung der Metallionen nicht über die vorgenannten anionischen Gruppen sondern über deprotonierte Hydroxylgruppen, über Aminogruppen, Iminogruppen, Stickstoffatome, die in ein aromatischen π-Elektronensystem eingebunden sind, oder über Azogruppen.

Typische im erfindungsgemäßen Verfahren Farbstoffe F sind aus der Gruppe der folgenden Farbstoffklassen ausgewählt: Farbstoffe der Phthalocyanin-Reihe, Antrachinon-Farbstoffe, Azofarbstoffe, Formazanfarbstoffe, Triphenyldioxazinfarbstoffe und Triarylmethanfarbstoffe.

Derartige Farbstoffe F sind zum Teil aus dem Stand der Technik bekannt, z.B. aus WO 94/18381, EP-A 356 931, EP-A 559 617, EP-A 201 888, DE-A 195 23 245, DE-A 197 31 166, EP 745 640, EP-A 889 098, EP-A 1 097 971, EP-A 880 098 oder können in Analogie zu bekannten Herstellungsverfahren für Strukturell ähnliche Farbstoffe, wie sie aus dem hier zitierten Stand der Technik sowie aus EP-602 562, -EP-A 597 411, EP-A 592 105 oder DE 43 196 74 bekannt sind, hergestellt werden.

Zur Herstellung der Farbstoffe F wird man in der Regel eine Aminoverbindung der Formel B 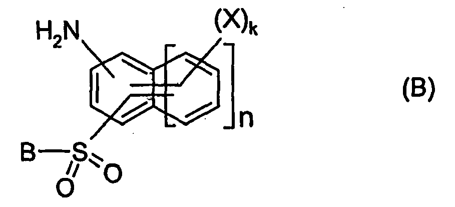 mit einem Farbstoff Vorprodukt, dass eine nucleophil verdrängbare-Gruppe aufweist, in an sich bekannter Weise zur Reaktion bringen. Beispiele für nucleophil verdrängbare Gruppen sind Halogen, insbesondere Chlor oder Brom, das an einen Aromaten gebunden ist wie in Halogentriazin-Resten, oder in Form einer Halogensulfonyl-Gruppe oder einer Halogencarbonylgruppe vorliegt. Verfahren hierzu sind aus dem hier zitierten Stand der Technik bekannt oder können in analoger Weise zur Herstellung der Farbstoffe F angewendet werden. Alternativ kann man die Aminoverbindung B auch zunächst diazotieren und dann auf ein entsprechendes Farbstoffvorprodukt kuppeln. Das bei der Reaktion der Aminoverbindung B bzw, ihres Diazoniumsalzes mit dem Farbstoff-Vorprodukt erhaltene Reaktionsprodukt kann bereits der Farbstoff F sein oder seinerseits ein Vorprodukt für den Farbstoff F darstellen, das in Analogie zu bekannten Verfahren zum Farbstoff F weiterverarbeitet wird.

Es versteht sich von selber, dass im erfindungsgemäßen Verfahren sowohl reine Farbstoffe als auch Farbstoffmischungen eingesetzt werden können. Bei der Lederfärbung gibt es neben den bereits erwähnten Anforderungen an hohe Echtheiten auch Anforderungen an die Qualität der Färbung, beispielsweise Durchfärbung, Farbton, Reinheit, Egalität der Färbung, Abdeckung der Narbenbeschädigung sowie Farbtongleichheit von Fleisch- zu Narbenseite. Eigene Erfahrungen der Erfinder der vorliegenden Erfindung zeigen, dass es für das anwendungstechnische Gesamtprofil von Vorteil sein kann, Farbstoffmischungen einzusetzen.

Bei Farbstoffmischungen kann es sich sowohl um Mischungen handeln, die durch Vermischen verschiedener Farbstoffe F hergestellt werden, als auch um Mischungen, die bei der Herstellung der Farbstoffe F anfallen. Vorzugsweise ist der Anteil der Farbstoffe F in diesen Mischungen wenigstens 70 Gew.%, insbesondere wenigstens 90 Gew.-% und besonders bevorzugt wenigstens 99 Gew.%, bezogen auf den farbigen, organisch chemischen Anteil im Farbstoff. Neben den Farbstoffen F können die im erfindungsgemäßen Verfahren eingesetzten Farbstoffmischungen auch konventionelle Lederfarbstoffe enthalten, die keine Gruppe A aufweisen. Der Anteil derartiger Farbstoffe wird in der Regel weniger als 30 Gew.-%, insbesondere weniger als 10 Gew.-% und speziell nicht mehr als 5 Gew.-% .-%, bezogen auf den farbigen, organisch chemischen Anteil im Farbstoff, ausmachen.

Sofern es sich bei den Farbstoffen F um Mischungen von Farbstoffen F mit ähnlichen Farbtönen handelt, beträgt die Menge des individuellen Farbstoffs in der Regel wenigstens 10 Mol-%, insbesondere wenigstens 20 Mol-%, bezogen auf die Gesamtmenge an Farbstoff F in der Mischung. Hierunter bevorzugt sind Mischungen aus zwei Farbstoffen F, wobei die Einzelkomponenten ein Molverhältnis 9:1 bis 1:9 und insbesondere im Bereich von 2:8 bis 8:2 aufweisen.

Außerdem sind Mischungen von Farbstoffen von Interesse, in denen die Farbstoffe F unterschiedliche Farbtöne aufweisen. Eine Ausführungsform hiebei ist das Nuancieren von Farbstoffen, beispielsweise von Schwarz-Farbstoffen mit andersfarbigen Farbstoffen, beispielsweise mit roten, grünen oder blauen Farbstoffen. Sofern einen Farbstoff ein oder mehrere weiterere Farbstoffe zu Zwecken des Nunancierens zugesetzt werden beträgt die Menge der nuancierenden Farbstoffe in der Regel 0,1 bis 15 Mol-%, bezogen auf den farbigen, organisch chemischen Anteil im Farbstoff. Eine weitere Ausführungsform sind Farbstoffmischungen für die sogenannte Trichromiefärbung. Hierin enthält die Farbstoffmischung 3 oder mehr Farbstoffe F mit unterschiedlichen Farbtönen. In diesem Fall macht die Einzelkomponente in der Regel wenigstens 1 Mol%, insbesondere wenigstens 5 Mol-%, beispielsweise 5 bis 90 Mol.-%, bezogen auf die Gesamtmenge an Farbstoff F in der Mischung aus.

Hierbei ist zu berücksichtigen, dass Farbstoffe herstellungsbedingt anorganische Salze und überdies Stellmittel enthalten können. Der Anteil an derartigen Bestandteilen, im Folgenden auch als nichtfarbige Bestandteile bezeichnet, wird in der Regel nicht mehr als 60 Gew.-% betragen und liegt häufig im Bereich von 10 bis 50 Gew.-%, bezogen auf das Gesamtgewicht von farbigen und nichtfarbigen Bestandteilen des Farbstoffs. In einer bevorzugten Ausführungsform der Erfindung handelt es sich bei dem Farbstoff F um eine Azofarbstoff und vorzugsweise um einen Azofarbstoff, der ausgewählt ist unter den Farbstoffen der allgemeinen Formeln I bis XV und deren Metallkomplexen:

Dk¹-N=N-[P-N=N-]ₚKk¹{-N=N-Dk²]ₘ (I)

Dk¹-N=N-Napht¹[-N=N-Tk¹]ᵣ-N=N-Kk¹]ₖ[-N=N-Dk²]ₙ (II)

Dk¹-N=N-Napht¹-N=N-Tk¹-N=N-Kk¹-N=N-Tk²-N=N-Napht²-N=N-Dk² (III)

Dk¹-N=N-Kk¹-N=N-Tk¹-N=N-Kk²-N=N-Dk² (IV)

Dk¹-N=N-[P-N=N-]ₚNapht¹[-N=N- R]ᵣ-NH-Tr¹-NH-Dk² (V)

Dk¹-N=N-P-NH-Tr¹-NH-R-N=N-Dk² (VI)

Dk¹-N=N-Napht¹-N=N-Tk¹-N=N-P-NH-Tr¹-NH-Dk² (VII)

Dk¹-N=N-Napht¹-NH-Tr¹-NH-P-NH-Tr²-NH-Napht²-N=N-Dk² (VIII)

Dk¹-N=N-Napht¹-NH-Tr¹-NH-Tk¹-NH-Tr²-NH-Napht²-N=N-Dk² (IX)

Dk¹[-N=N-L]ₖ-NH-Tr¹-NH-M-N=N-Napht¹-N=N-P-NH-Tr²-NH-[R-N=N-]ₙDk² (X)

Dk¹-N=N-Kk¹-N=N-Tk¹-NH-Tr¹-NH-Dk² (XI)

Dk¹-N=N-[P-N=N-]ₚR-N=N-Kk¹[-N=N-Dk²]ₙ (XII)

Dk¹-N=N-Pyr-A (XIII)

Kk³-N=N-Tk¹-N=N-Kk¹-N=N-A (XIV)

Dk¹-N=N-P-N=N-Kk¹-N=N-R-N=N-Dk² (XV)

worin:
- k, n, p und r: unabhängig voneinander für 0 oder 1 stehen, wobei k+n+r in Formel II = 1, 2 oder 3 ist;
- m: 0, 1 oder 2 bedeutet;
- Dk¹, Dk²: unabhängig voneinander für einem von einem aromatischen Amin abgelei- ten Rest stehen oder eine Gruppe der Formel A bedeutet, wobei in den Formeln I - XII und XV jeweils wenigstens einer der Reste Dk¹ oder Dk² für einen Rest der Formel A steht
- Kk¹, Kk²: unabhängig voneinander für einen ein-, zwei- oder dreiwertigen aromati- schen, von Benzol, Napthalin, Pyrazol, Chinolin, Diphenylamin, Diphenyl- methan, Pyrimidin, Pyridin oder Diphenylether abgeleiteten Rest stehen, der gegebenenfalls einen oder mehrere der folgenden Reste als Substi- tuenten aufweisen kann: SO₃H, COOH, CN, CONH₂, OH, NH₂, NO₂, Halo- gen, C₁-C₄-Alkyl, C₁-C₄-Hydroxyalkyl, Carboxy-C₁-C₄-alkyl, C₁-C₄-Alkoxy, C₁-C₄-Alkylamino, C₁-C₄-Dialkylamino, C₁-C₄-Alkylaminocarbonyl, C₁-C₄- Dialkylaminocarbonyl, C₁-C₄-Alkylcarbonylamino, N-(C₁-C₄-Alkylcarbonyl)- N-(C₁-C₄-alkylcarbonyl)amino, C₁-C₄-Alkylaminocarbonyloxy, C₁-C₄- Dialkylaminocarbonyloxy, C₁-C₄-Alkylaminocarbonylamino, C₁-C₄- Dialkylaminocarbonylamino, Phenylaminocarbonyloxy, Phenylaminocarbo- nylamino, C₁-C₄-Alkoxycarbonylamino, C₁-C₄-Hydroxy-C₁-C₄-alkylamino, Carboxy-C₁-C₄-alkylamino, Phenylcarbonylamino, C₁-C₄-Alkylsulfonyl, C₁- C₄-Hydroxyalkylsulfonyl, C₁-C₄-Alkylaminosulfonyl, C₁-C₄- Alkylsulfonylamino, Phenylsulfonyl, Phenylsulfonylamino, Formamid, ein Rest der Formel SO₂NR⁵⁶R⁵⁷, worin R⁵⁶ und R⁵⁷ unabhängig voneinander für Wasserstoff, C₁-C₄-Alkyl, Formyl, C₁-C₄-Alkylcarbonyl, C₁-C₄- Alkyloxycarbonyl, NH₂-CO oder C₁-C₄-Alkylaminocarbonyl stehen, C₁-C₄- Alkylaminosulfonylamino, Di-C₁-C₄-alkylaminosulfonylamino, Phenylsulfo- nylamino, das am Phenylring einen oder zwei Substituenten, ausgewählt unter C₁-C₄-Alkyl, C₁-C₄-Alkoxy oder Halogen aufweisen kann, oder 5- o- der 6-gliedriges Heterocyclyl, das gegebenenfalls durch 1, 2 oder 3 der fol- genden Reste: OH, Halogen, C₁-C₄-Alkyl oder Phenyl, substituiert ist, wo- bei 5-gliedriges aromatisches Heterocyclyl gegebenenfalls am Stickstoff ei- ne Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;
- Kk³: für einen von Benzol, Pyrimidin, Pyridin oder Naphthalin abgeleiteten ein- wertigen Rest steht, der gegebenenfalls 1 oder 2 Hydroxysulfonylgruppen aufweist und gegebenenfalls 1, 2 oder 3 weitere Substituenten, ausgewählt unter SO₃H, COOH, CN, CONH₂, OH, NH₂, NO₂, Halogen, C₁-C₄-Alkyl, C₁- C₄-Hydroxyalkyl, Carboxy-C₁-C₄-alkyl, C₁-C₄-Alkoxy, C₁-C₄-Alkylamino, C₁- C₄-Dialkylamino, C₁-C₄-Alkylaminocarbonyl, C₁-C₄-Dialkylaminocarbonyl, C₁-C₄-Alkylcarbonylamino, N-(C₁-C₄-Alkylcarbonyl)-N-(C₁-C₄- alkylcarbonyl)amino, C₁-C₄-Alkylaminocarbonyloxy, C₁-C₄- Dialkylaminocarbonyloxy, C₁-C₄-Alkylaminocarbonylamino, C₁C₄- Dialkylaminocarbonylamino, Phenylaminocarbonyloxy, Phenylaminocarbo- nylamino, C₁-C₄-Alkoxycarbonylamino, C₁-C₄-Hydroxy-C₁-C₄-alkylamino, Carboxy-C₁-C₄-alkylamino, Phenylcarbonylamino, C₁-C₄-Alkytsulfonyl, C₁- C₄-Hydroxyalkylsulfonyl, C¹-C₄-Alkylsulfonylamino, Phenylsulfonyl, Phenylsulfonylamino, Formamid, ein Rest der Formel SO₂NR⁵⁶R⁵⁷, worin R⁵⁶ und R⁵⁷ unabhängig voneinander für Wasserstoff, C₁-C₄-Alkyl, Formyl, C₁-C₄-Alkylcarbonyl, C₁-C₄-Alkyloxycarbonyl, NH₂-CO oder C,-C₄- Alkylaminocarbonyl stehen, C₁-C₄-Alkylaminosulfonylamino, Di-C₁-C4- alkylaminosulfonylamino, Phenylsulfonylamino, das am Phenylring einen oder zwei Substituenten, ausgewählt unter C₁-C₄-Alkyl, C₁-C₄-Alkoxy oder Halogen aufweisen kann, oder 5- oder 6-gliedriges Heterocyclyl, das gege- benenfalls durch 1, 2 oder 3 der folgenden Reste: OH, Halogen, C₁-C₄- Alkyl oder Phenyl, substituiert ist, wobei 5-gliedriges aromatisches Hetero- cyclyl gegebenenfalls am Stickstoff eine Phenylgruppe oder Naphthylgrup- pe trägt, die gegebenenfalls einen oder zwei der folgenden Reste aufwei- sen kann: OH, SO₃H, C₁-C₄-Alkyl, und%der c,-C₄-Alkoxy;
- Tk¹, Tk²: unabhängig voneinander für einen zweiwertigen aromatischen Rest stehen, der von Benzol, Diphenylamin, Diphenyl, Diphenylmethan, 2- Phenylbenzimidazol, Phenylsulfonylbenzol, Phenylaminosulfonylbenzol, Stilben oder Phenylaminocarbonylbenzol abgeleitetet ist, die gegebenen- falls einen oder mehrere der folgenden Reste als Substituenten aufweisen können: S0₃H, COOH, OH, NH₂, NO₂, Halogen, C1-C₄-Alkyl;
- L, M, P und R: unabhängig voneinander für einen zweiwertige aromatischen Rest stehen, der von Benzol oder Naphthalin abgeleitetet ist, die gegebenenfalls einen oder mehrere, z.B. 1, 2, 3, 4 oder 5 der folgenden Reste als Substi- tuenten aufweisen können: SO₃H, COOH, CN, CONH₂, OH, NH₂, NO₂, Halogen, C₁-C₄-Alkyl, C₁-C₄-Hydroxyalkyl, Carboxy-C₁-C₄-alkyl, C₁-C₄- Alkoxy, C₁-C₄-Alkylamino, C₁-C₄-Dialkylamino, C₁-C₄-Alkylaminocarbonyl, C₁-C₄-Dialkylaminocarbonyl, C₁-C₄-Alkylcarbonylamino, N-C₁-C₄- Alkylcarbonyl)-N-(C₁-C₄-alkylcarbonyl)amino, C₁-C₄-Alkylaminocarbonyloxy, C₁-C₄-Dialkylaminocarbonyloxy, C₁-C₄-Alkylaminocarbonylamino, C₁-C₄- Dialkylaminocarbonylamino, Phenylaminocarbonyloxy, Phenylaminocarbo- nylamino, C₁-C₄-Alkoxycarbonylamino, C₁-C₄-Hydroxy-C₁-C₄-alkylamino, Carboxy-C₁-C₄-alkylamino, Phenylcarbonylamino, C₁C₄-Alkylsulfony), C₁- C₄-Alkylaminosulfonyl, C₁-C₄-Hydroxyalkylsufonyl, C₁-C₄- Alkylsulfonylamino, Phenylsulfonyl, Phenylsulfonylamino, Formamid, ein Rest der Formel SO₂NR⁵⁸R⁵⁷, worin R⁵⁶ und R⁵⁷ unabhängig voneinander für Wasserstoff, C₁-C₄-Alkyl, formyl, C₁-C₄-Alkylcarbonyl, C₁C₄- Alkyloxycarbonyl, NH₂-CO oder C₁-C₄-Alkylaminocarbonyl stehen, C₁-C₄- Alkylaminosulfonylamino, Di-C₁-C₄-alkylaminosulfonylamino, Phenylsulfo- nylamino, das am Phenylring einen oder zwei Substituenten, ausgewählt unter C₁-C₄-Alkyl, C₁-C₄-Alkoxy oder Halogen aufweisen kann, oder 5- o- der 6-gliedriges Heterocyclyl, das gegebenenfalls durch 1, 2 oder 3 der fol- genden Reste: OH, Halogen, C₁-C₄-Alkyl oder Phenyl, substituiert ist, wo- bei 5-gliedriges aromatisches Heterocyclyl gegebenenfalls am Stickstoff ei- ne Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;
- Napht¹, Napht²: unabhängig voneinander für einen von Naphthalin abgeleiteten zwei- wertigen Rest stehen, der 1 oder 2 Hydroxysulfonylgruppen aufweist und gegebenenfalls 1, 2 oder 3 weitere Substituenten, ausgewählt unter OH, NH₂, C₁-C₄-Alkylamino, C₁-C₄-Dialkylamino C₁-C₄-Alkylsulfonylamino, Phe- nylsulfonylamino, 4-Methylphenylsulfonylamino, C₁-C₄-Alkylaminosulfonyl, Di-C₁-C₄-alkylaminosulfonyl, Phenylaminosulfonyl, 4- Methylphenylaminosulfonyl und Resten NHC(O)R^{x}, worin R^{x} für Wasser- stoff, C₁-C₄-Alkyl, Maleinyl oder Phenyl, aufweisen kann;
- Pyr: für Pyrazol-1,4-diyl steht, das mit dem Stickstoffatom an die Gruppe A ge- bunden ist und gegebenenfalls einen oder 2 Substituenten aufweist, die ausgewählt sind unter Halogen, C₁-C₄-Alkyl, Hydroxy oder C₁-C₄-Alkoxy;
- Tr¹, Tr²: unabhängig voneinander für einen 1,3,5-Triazin-2,4-diyl-Rest stehen, der gegebenenfalls noch ein Halogenatom, eine Methylgruppe oder-eine Me- thoxygruppe als Substituenten aufweist.

Hier und im Folgenden steht C₁-C₄-Alkyl (sowie die Alkylteile in C₁-C₄-Alkoxy, C₁C₄-Alkylamino, Di-C₁-C₄-alkylamino, C₁-C₄-Alkylsulfonyl, C₁-C₄-Hydroxyalkylsulfonyl, C₁-C₄-Alkylaminosulfonyl, C₁-C₄-Alkylaminocarbonyl, Di-C₁-C₄-alkylaminosulfonyl, Di-C₁-C₄-alkylaminocarbonyl und C₁-C₄-Alkylcarbonylamino und dergleichen für einen linearen oder verzweigten aliphatischen Kohlenwassertoffrest wie Methyl, Ethyl, N-Propyl, Isopropyl, n-Butyl und dergleichen.

C₁-C₄-Hydroxyalkyl steht für C₁-C₄-Alkyl, das eine OH-Gruppe trägt wie 2-Hydroxyethyl. Dementsprechend steht C₁-C₄-Hydroxyalkylamino für C₁-C₄-Alkylamino, das im Alkylrest eine OH-Gruppe trägt wie 2-Hydroxyethylamino.

C₁-C₄-Carboxyalkyl steht für C₁-C₄-Alkyl, das eine Carboxylgruppe (COOH Gruppe) trägt wie Carboxymethyl (CH₂COOH) und 2-Carboxyethy (CH₂CH₂COOH). Dementsprechend steht C₁-C₄-Carboxyalkylamino für C₁-C₄-Alkylamino, das im Alkylteil eine Carboxylgruppe (COOH-Gruppe) trägt wie Carboxymethylamino (NH-CH₂COOH) und 2-Carboxyethylamino (NH-CH₂CH₂COOH).

5- oder 6-gliedriges Heterocyclyl weist in der Regel 1, 2 oder 3 Heteroatome, ausgewählt unter Stickstoff, Sauerstoff und Schwefel, insbesondere 1 oder 2 Stickstoffatome und gegebenenfalls ein Sauerstoff- oder Schwefelatom als Ringglieder auf und kann gesättigt, ungesättigt oder aromatisch sein. Beispiele für gesättigtes Heterocyclyl sind Morpholinyl, Piperidinyl, Piperazinyl und Pyrrolidinyl. Beispiele für aromatisches Heterocyclyl sind Pyridinyl, Pyrazolyl, Oxazolyl, Thiazolyl etc.

Die Farbstoffe der Formeln 1 bis XV können sowohl in freier Form, in Form ihrer Salze und - sofern zwei durch eine Diazogruppe -N=N- verbundene Reste jeweils einen in ortho-Position zur Diazogruppe angeordneten Rest OH, COOH oder NH₂ aufweisen - als Metallkomplexe eingesetzt werden.

In den Farbstoffen der Formeln I bis XIII und XV sind die Reste DK¹ und DK² von aromatischen Aminen DK¹-NH₂ bzw. DK²-NH₂ abgeleitet, die im Folgenden auch als Diazoniumkomponenten bezeichnet werden. Bei den Aminen DK¹-NH₂ bzw. DK²-NH₂ handelt es sich in der Regel um gegebenenfalls substituiertes Anilin, gegebenenfalls substituiertes α- oder β-Naphtylamin oder um gegebenenfalls substituierte Aminochinoline. Dementsprechend stehen in der Regel die Reste DK¹ und DK² unabhängig voneinander für von Benzol, Naphthalin oder Chinolin abgeleitete Reste, worin Naphthalin, Chinolin und Benzol gegebenenfalls einen oder mehrere, z.B. 1, 2 oder 3 Substituenten aufweisen. Beispiele für Substituenten sind die folgenden Reste: SO₃H, COOH, OH, NH₂, NO₂, CN, CONH₂, Halogen, C₁-C₄-Alkyl, C₁-C₄-Hydroxyalkyl, Carboxy-C₁-C₄-alkyl, C₁-C₄-Alkoxy, C₁-C₄-Alkylamino, C₁-C₄-Dialkylamino, C₁-C₄-Alkylaminocarbonyl, C₁-C₄-Dialkylaminocarbonyl, C₁-C₄-Alkylaminocarbonyloxy, C₁-C₄-Dialkylaminocarbonyloxy, C₁-C₄-Alkylaminocarbonylamino, C₁-C₄-Dialkylaminocarbonylamino, Phenylaminocarbonyloxy, Phenylaminocarbonylamino, C₁-C₄-Alkoxycarbonylamino, C₁-C₄-Alkylcarbonylamino, N-(C₁-C₄-Alkylcarbonyl)-N-(C₁-C₄-alkylcarbonyl)amino, C₁-C₄-Hydroxy-C₁-C₄-alkylamino, Carboxy-C₁-C₄-alkylamino, Phenylcarbonylamino, C₁-C₄-Alkylsulfonyl, C₁-C₄-Hydroxyalkylsulfonyl, C₁-C₄-Alkylaminosulfonyl, C₁-C₄-Alkylsulfonylamino, Phenylsulfonyl, Phenylsulfonylamino, Formamid, SO₂NR⁵⁶R⁵⁷, worin R⁵⁶ und R⁵⁷ unabhängig voneinander für Wasserstoff, C₁-C₄-Alkyl, Formyl, C₁-C₄-Alkylcarbonyl, C₁-C₄-Alkyloxycarbonyl, NH₂CO, C₁-C₄-Alkylaminocarbonyl stehe, oder 5- oder 6-gliedriges Heterocyclyl, das gegebenenfalls durch 1, 2 oder 3 der folgenden Reste: OH, Halogen, C₁-C₄-Alkyl oder Phenyl, substituiert ist, wobei 5-gliedriges aromatisches Heterocyclyl gegebenenfalls am Stickstoff eine Phenylgruppe oder Naphthylgruppe trägt, die gegebenenfalls einen oder zwei der folgenden Reste aufweisen kann: OH, SO₃H, C₁-C₄-Alkyl, und/oder C₁-C₄-Alkoxy;

Als Amine Dk¹-NH₂ bzw. Dk²-NH₂ kommen weiterhin auch 4-Amino-1-phenylpyrazole in Betracht, worin der Pyrazolring als auch der Phenylring einen oder mehrere, z.B. 1, 2 oder 3 Substituenten der vorgenannten Art oder eine Gruppe B-SO₂- aufweisen, worin B die zuvor genannten Bedeutungen aufweist. In diesen Fällen steht Dk¹ bzw. Dk² insbesondere für Pyrazol-4-yl, das in der 1-Position einen Phenylrest oder eine Gruppe der Formel A aufweist und gegebenenfalls 1 oder 2 Substituenten trägt, die ausgewählt sind unter Halogen, C₁-C₄-Alkyl, Hydroxy, COOH, Hydroxysulfonyl oder C₁-C₄-Alkoxy,

Vorzugsweise stehen Dk¹ und Dk² unabhängig voneinander für Reste, die von einem gegebenenfalls substituiertes Anilin, einem gegebenenfalls substituiertes α- oder β-Naphtylamin abgeleitet sind, oder für eine Gruppe A.

Beispiele für geeignete Amine Dk¹-NH₂ bzw. Dk²-NH₂ sind die im folgenden angegebenen Verbindungen DK1 bis DK39:

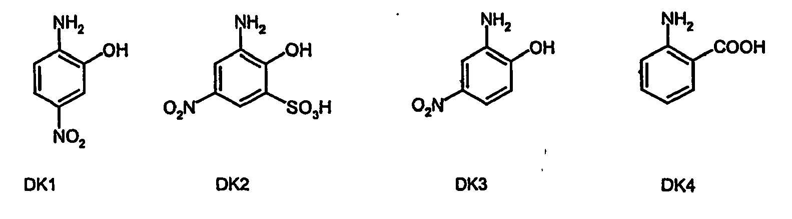

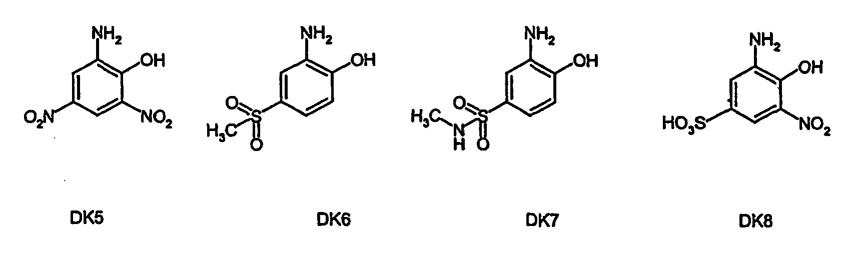

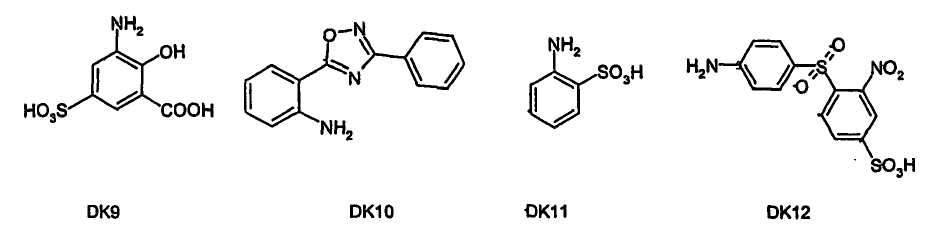

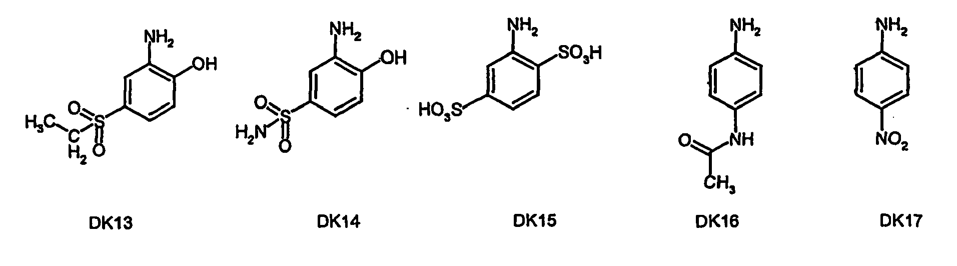

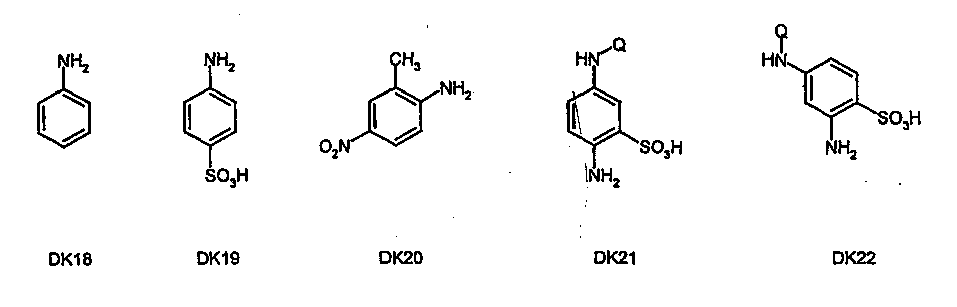

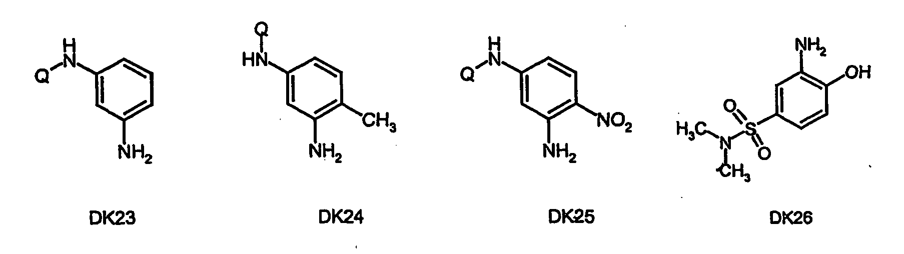

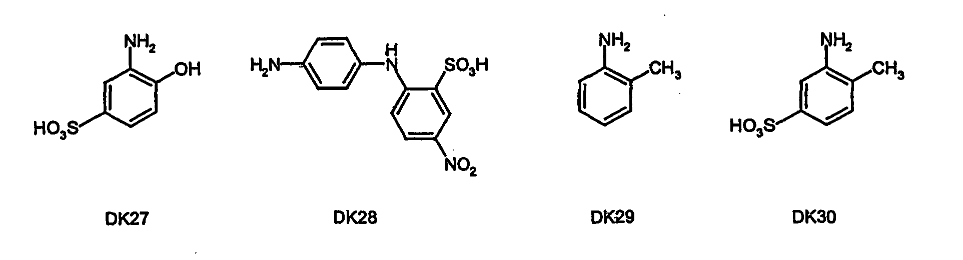

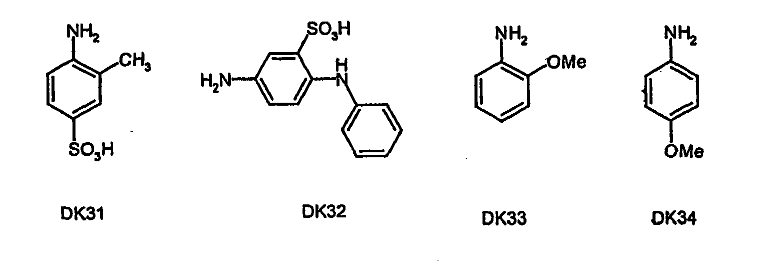

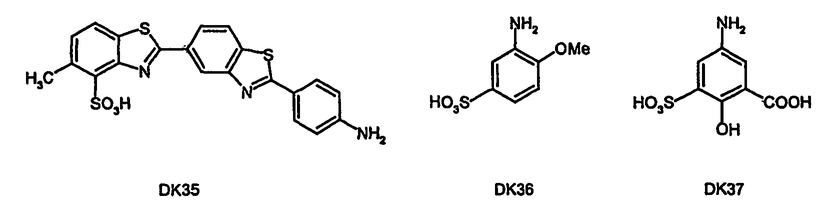

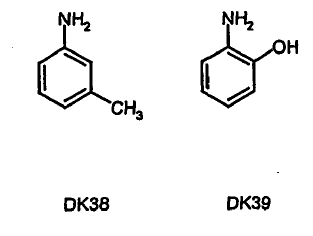

Die Reste Q in den Formeln DK21 bis DK25 bedeuten Wasserstoff C₁-C₄-Alkyl, Carboxy-C₁-C₄-alkyl, C₁-C₄-Hydroxyalkyl, C₁-C₄-Alkoxy oder Phenylcarbonyl.

Geeignete Diazokomponenten sind weiterhin die im folgenden angegebenen Naphthylamine DK40 bis 59: 4-Amino-3-hydroxynahpthalin-1-sulfonsäure (DK40), 4-Amino-3-hydroxy-6-nitronahpthalin-1-sulfonsäure (DK41), 6-Amino-4-hydroxynaphthalin-2-sulfonsäure (Gammasäure, DK42), 4-Amino-5-hydroxynaphthalin-1-sulfonsäure (Chikago-S-Säure, DK43), 4-Amino-5-hydroxynaphthalin-2,7-disulfonsäure (H-Säure DK44), 4-Amino-5-hydroxynaphthalin-1,7-disulfonsäure (K-Säure, DK45), 8-Aminonaphthalin-2-sulfonsäure (Clevesäure 7, DK146), 6-Aminonaphthalin-1-sulfonsäure (D-Säure, DK47), 4-Aminonaphthalin-2,7-sulfonsäure (DK48), 5-Aminonaphthalin-2-sulfonsäure (DK49), 7-Amino-4,8-dihydroxynaphthalin-2-sulfonsäure (DK50), 2-Amino-5-hydroxynaphthalin-1,7-disulfonsäure (DK51), 3-Amino-5-hydroxynaphthalin-2,7-disulfonsäure (DK52), 3-Amino-1,5-disulfonsäure (DK53), 7-Aminonaphthalin-1-sulfonsäure (DK54), 4-Aminonaphthalin-1-sulfonsäure (DK55), 5-Aminonaphthalin-1-sulfonsäure (DK56), 7-Aminonaphthalin-1,3,b-trisulfonsäure (DK57), 4-Amino-3-hydroxy-7-[(4-methylphenyl)sulfonylamino]nahpthalin-1-sulfonsäure (DK58) und 7-Amino-4-hydroxynaphthalin-2-sulfonsäure (I-Säure, DK59),

Beispiele für geeignete Monoamine Dk¹-NH₂ bzw. Dk²-NH₂·sind weiterhin die im folgenden angegebenen Verbindungen DK60 bis DK83:

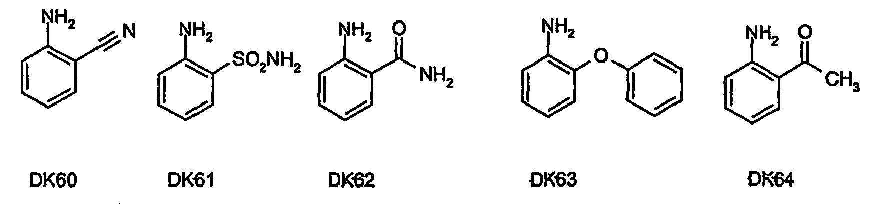

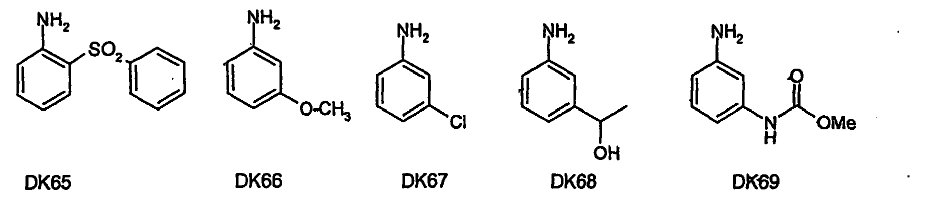

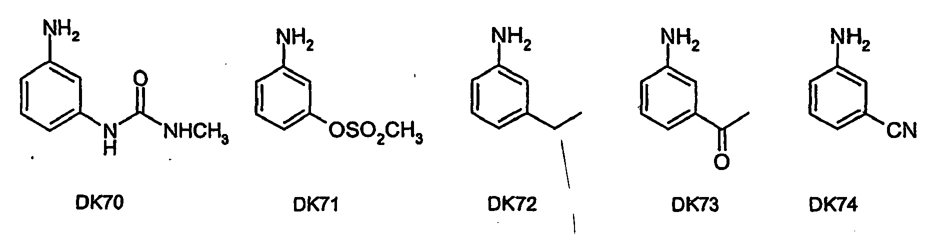

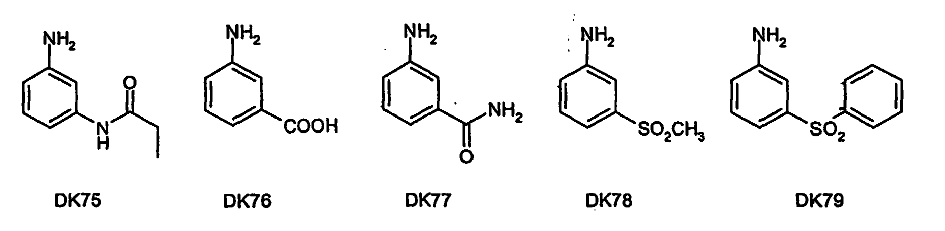

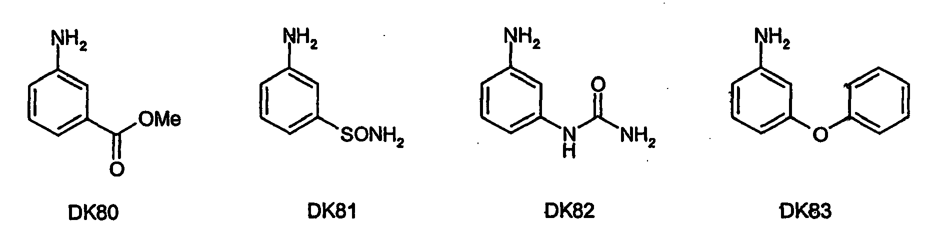

Als Reste Kk¹ und Kk² kommen grundsätzlich alle ein-, zwei- oder dreiwertigen, als Reste Kk³ alle einwertigen aromatischen Reste in Betracht, die sich von einem -gegebenenfalls substituierten Benzol, Naphthalin, Pyrazol, Diphenylamin, Diphenylmethan, Pyridin, Pyrimidin oder Diphenylether ableiten, die noch 1, 2 oder 3 freie Positionen aufweisen, auf die sukzessive ein-, zwei- oder dreimal eine Diazoniumverbindung gekuppelt werden kann. Die den Resten Kk¹, Kk² und Kk³ zugrundeliegenden Verbindungen werden im folgenden auch als Kupplungskomponente bezeichnet.

Geeignet Kupplungskomponenten sind beispielsweise von Benzol abgeleitete Verbindungen der allgemeinen Formel Kk-A, von Naphthalin abgeleitete Verbindungen der Formel Kk-B, von Chinolin abgeleitete Verbindungen der Formel PCk-C, von Pyrazol abgeleitete Verbindungen der Formel Kk-D, von Diphenylmethan abgeleitete Verbindungen der Formel Kk-E von Diphenylamin abgeleiteten Verbindungen der Formel Kk-F, von Pyridin abgeleitete Verbindungen der Formel Kk-G und von Pyridon abgeleitete Verbindungen der Formel Kk-H:

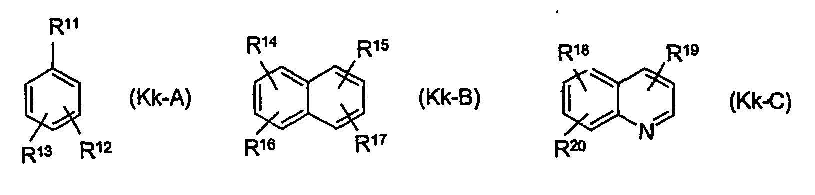

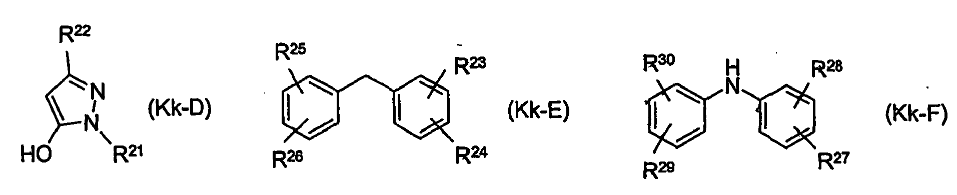

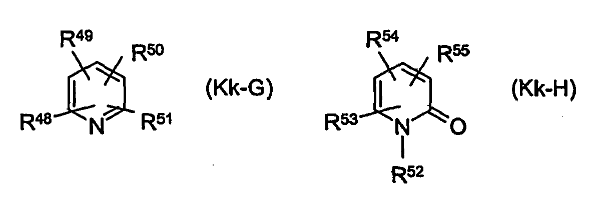

In der Formel Kk-A stehen R¹¹ für NH₂, OH, C₁-C₄-Alkoxy, C₁-C₄-Alkylamino, Di-C₁-C₄-alkylamino, Hydroxy-C₁-C₄-alkylamino, Carboxy-C₁-C₄-alkylamino, C₁-C₄-Alkylcarbonylamino oder Phenylamino, R¹² für Wasserstoff, NH₂, OH, C₁-C₄-Alkoxy, Hydroxy-C₁-C₄-alkylamino, Carboxy-C₁-C₄-alkylamino, C₁-C₄-Alkylamino, Di-C₁-C₄-alkylamino und R¹³ für Wasserstoff, C₁-C₄-Alkyl, C₁-C₄-Alkoxy, C₁-C₄-Alkylaminocarbonyloxy, C₁-C₄-Dialkylaminocarbonyloxy, C₁-C₄-Alkylaminocarbonylamino, C₁-C₄-Dialkylaminocarbonylamino, Phenylaminocarbonyloxy, Phenylaminocarbonylamino, C₁-C₄-Alkoxycarbonylamino, SO₃H, C₁-C₄-Alkylsulfonyl, C₁-C₄-Hydroxyalkylsulfonyl, COOH, Cl, Br, F, SO₂NR⁵⁶R⁵⁷, NO₂, oder NH₂, wobei R⁵⁶ und R⁵⁷ unabhängig voneinander für Wasserstoff, C₁-C₄-Alkyl, Formyl, C₁-C₄-Alkylcarbonyl, C₁-C₄-Alkyloxycarbonyl, NH₂-CO, C₁-C₄-Alkylaminocarbonyl stehen.

In Formel Kk-B stehen R¹⁴ und R¹⁵ unabhängig voneinander für Wasserstoff oder weisen eine der als R¹¹ genannten Bedeutungen auf, wobei R¹⁵ auch für SO₃H stehen kann. R¹⁶ steht für Wasserstoff, OH, SO₃H, C₁-C₄-Alkylsulfonylamino, C₁-c₄-Alkylaminosulfonyl, C₁-C₄-Alkylaminosulfonylamino, Di-C₁-C₄-alkylaminosulfonylamino, C₁-C₄-Alkoxycarbonylamino, Phenylsulfonylamino, das am Phenylring einen oder zwei Substituenten, ausgewählt unterC₁-C₄-Alkyl, C₁-C₄-Alkoxy oder Halogen aufweisen kann. R¹⁷ steht für Wasserstoff, OH-oder eine-Gruppe SO₃H.

In Formel Kk-C stehen R¹⁸ bis R²⁰ unabhängig voneinander für Wasserstoff, OH oder C₁-C₄-Alkyl.

In Formel Kk-D steht R²¹ für Wasserstoff, Phenyl oder Naphthyl, wobei die 2 letztgenannten Gruppen 1, 2 oder 3 Substituenten aufweisen können, die ausgewählt sind unter Wasserstoff, OH, Halogen, C₁-C₄-Alkyl, SO₃H, NO₂ und der zuvor definierten Gruppe B-SO₂-, In einer Ausführungsform der Erfindung steht R²¹ für eine der zuvor definierten Gruppen A und insbesondere für eine der Gruppen A1 bis 12. R²² bedeutet Wasserstoff, COOH oder C₁-C₄-Alkyl.

In Formel Kk-E bedeuten R²³ und R²⁵ unabhängig voneinander Wasserstoff, COOH, Hydroxy oder C₁-C₄-Alkyl. R²⁴ und R²⁶ stehen unabhängig voneinander Wasserstoff, Hydroxy oder C₁-C₄-Alkyl,

In Formel Kk-F bedeuten R²⁷ und R²⁹ unabhängig voneinander Wasserstoff, SO₃H, COOH, Hydroxy oder C₁-C₄-Alkyl. R²⁸ und R³⁰ stehen unabhängig voneinander Wasserstoff, Hydroxy oder C₁-C₄-Alkyl,

In Formel Kk-G bedeuten R⁴⁸, R⁴⁹, R⁵⁰ und R⁵¹ unabhängig voneinander Wasserstoff, SO₃H, COOH, NH₂, CN, Hydroxy oder C₁-C₄-Alkyl.

In Formel Kk-H bedeuten R⁵², R⁵³, R⁵⁴ und R⁵⁵ unabhängig voneinander Wasserstoff, SO₃H, COOH, NH₂, CN, Hydroxy oderC₁-C₄-Alkyl.

Beispiele für Kupplungskomponenten der Formel Kk-A sind die vorgenannten Anilinverbindungen DK3, DK4, DK6, DK7, DK11, DK13, DK14, DK15, DK118, DK21 bis DK27, DK29, DK30, DK33, DK36, DK38, DK39, weiterhin Salicylsäure (Kk1), 3-Aminophenol (Kk2), Resorcin (Kk3), 3-Phenylaminophenol (Kk4), 1,3-Diaminobenzol (Kk5), 3-Acetylamino-Anilin (Kk6), 2-Nitro-Anilin (Kk7), 3-(Diethylamino)phenol (Kk8), 3-(Morpholin-1-yl)phenol (Kk9), 3-(Diethylamino)anilin (Kk10), N-Acetyl-3-(diethylamino)anilin (Kk11), N-(3-Hydroxyphenyl)glycin.(Kk12), 3-(2-Hydroxyethyl)aminophenol Kk13), 2,4-Diaminotoluol (kr14), 2,4-Diaminobenzolsulfonsäure (Kk15), 2,4-Diamino-1-nitrobenzol (Kk16), N-(3-Amino-6-methylphenyl)-glyzin (Kk17), 2,4-Diamino-5-methylbenzolsulfonsäure.(Kk18), 2,4 Diamino-1-hydroxybenzol (Kk54), 2,4-Diamino-1-methoxybenzol(Kk55), 2,4-Diamino-1-chlorobenzol (Kk56), 1,2,4-Triaminobenzol (Kk57), 3-(Dimethylamino)-anilin (Kk58), 3-(Dimethylamino)-1-nitrobenzol (Kk59), 2-(N,N-Diethylamino)-4-acetylamino-1-methoxybenzol (Kk60), 2-(N,N-Diethylamino)-4-amino-1-methoxybenzol (Kk61), 2,4-Diamino-1-benzolsulfonamid (Kk62), 2-Amino-4-acetylamino-1-methoxybenzol (Kk63), 2-Amino-4-acetylamino-1-chlorbenzol (Kk64), 2,4-Diamino-1-methylsulfonylbenzol, (Kk65), 2,4-Diamino-1-ethylsulfonylbenzol, (Kk66) und 2,4-Diamino-1-2-hydroxyethyl)sulfonylbenzol ·(Kk67).

Beispiele für Kupplungskomponenten der Formel Kk-B sind 2-Naphthol-(Kk19), 2-Phenylaminonaphthalin (Kk20), 4-Methyl-1-Naphthol (Kk21), 8-Methoxycarbonylamino-2-naphthol (Kk22), 8-Acetylamino-2-naphthol (Kk23), 8-Methylaminosulfonyl-2-naphthol (Kk24), 8-Dimethylaminosulfonylamino-2-naphthol (Kk25), 6-[(4-Methylphenyl)sulfonyl]amino-4-hydroxynaphthalin-2-sulfonsäure (Kk26), 8-Phenylaminonaphthalin-1-sulfonsäure (Kk27), 6-Amino-4-hydroxynaphthalin-2-sulfonsäure (DK42), 4-Amino-5-hydroxynaphthalin-1-sulfonsäure (DK43), 7-Amino-4-hydroxynaphthalin-2-sulfonsäure (DK59), 4-Amino-5-hydroxynaphthalin-2,7-disulfonsäure (DK44), 4-Amino-5-hydroxynaphthalin-1,7-disulfonsäure (DK45), 8-Aminonaphthalin-2-sulfonsäure (DK46), 6-Aminonaphthalin-1-sulfonsäure (DK147), 4-Aminonaphthalin-2,7-sulfonsäure (DK48), 4-Hydroxynaphthalin-2,7-disulfonsäure (Kk28), 3-Hydroxynaphthalin-2,7-disulfonsäure (Kk29), 4-(Phenylcarbonyl)amino-5-hydroxynaphthalin-2,7-disulfonsäure (Kk30), 4,6-Dihydroxynaphthalin-2-sulfonsäure (Kk31), 4,5-Dihydroxynaphthalin-2,7-disulfonsäure (Kk32), 4-(Phenylcarbonyl)amino-5-hydroxynaphthalin-1-sulfonsäure (Kk33), 4-Hydroxynaphthalin-1-sulfonsäure (Kk34), 4,5-Dihydroxynaphthalin-1-sulfonsäure (Kk35), 5-Aminonaphthalin-2-sulfonsäure (DK49), 7-Hydroxynaphthalin-1,3-disulfonsäure (Kk36), 7-Amin-4,8-dihydroxynaphthalin-2-sulfonsäure (DK50), 8-Hydroxynaphthalin-1-sulfonsäure (Kk37), 2-Amino-5-hydroxynaphthalin-1,7-disulfonsäure (DK51), 3-Amino-5-hydroxynaphthalin-2,7-disulfonsäure (DK52), 3-Amino-1,5-disulfonsäüre (DK53), 4,8-Dihydroxy-7-hydroxycarbonylnaphthalin-2-sulfonsäure (Kk38), 7-Aminonaphthalin-1-sulfonsäure (DK54), 4-Aminonaphthalin-1-sulfonsäure (DK55), 5-Aminonaphthalin-1-sulfonsäure (DK56) 7-Aminonaphthalin-1,3,5-trisulfonsäure (DK57) und 4-Acetylamino-5-hydroxynaphthalin-2,7-disulfonsäure (Kk39).

Beispiele für Kupplungskomponenten Kk-C sind 2,4-Dihydroxychinolin (Kk40) und 8-Hydroxychinolin (Kk41).

Beispiele für Kupplungskomponenten Kk-D sind 3-Methyl-5-hydroxypyrazol (Kk42), 1-Phenyl-3-methyl-5-hydroxypyrazol (Kk43), 1-[4-(2-Hydroxysulfonyloxyethyl)-2-hydroxysulfonylphenyl]-3-methyl-5-hydroxypyrazol (Kk44), 1-[4-(2-Hydroxysulfonyloxyethyl)-2-hydroxysulfonylphenyl]--hydroxypyrazol-3-carbonsäure (Kk45), 1-[4-Hydroxysulfonylphenyl]-5-hydroxypyrazol-3-carbonsäure (Kk46) und 1-[6-Hydroxysulfonylnaphthalin-2-yl]-5-hydrox-3-methylypyrazol (Kk47), 1-14-Hydroxysulfonylphenyl]- 3-methyl-5-hydroxypyrazol (Kk48).

Ein Beispiel für Kupplungskomponenten Kk-E ist 4,4'-Dihydroxydiphenylmethan-3,3'-dicarbonsäure (Kk49).

Ein Beispiel für eine Kupplungskomponente Kk-F ist 4,4'-Dihydroxydiphenylamin (Kk50).

Ein Beispiel für eine Kupplungskomponente Kk-G ist 2,6-diamino-pyridin (Kk51).

Beispiele für Kupplungskomponenten Kk-H sind 1-Methyl-2-pyridon (Kk52) und 3-Cyano-4-methyl-6-hydroxy-1-ethylpyridon (Kk53).

Geeignete Reste Kk³ sind insbesondere einwertige von einem gegebenenfalls substituierten Benzol oder Naphthalin abgeleitete Reste, z.B. die von den Kupplungskomponenten Kk-A und Kk-B abgeleiteten einwertige Reste wie die von den Anilinverbindungen DK3, DK4, DK6, DK7, DK11, DK13, DK14, DK15, DK18, DK21 bis DK27, DK29, DK30, DK33, DK36, DK38, DK39, DK42 bis DK83, Kk1 bis Kk48 und Kk51 bis Kk67 abgeleiteten Reste.

Bei den Resten Tk¹ und Tk² handelt es sich um zweiwertige aromatische Reste, die sich von aromatischen Diaminen der Formeln Tk¹(NH₂)₂ bzw. Tk²(NH₂)₂ ableiten. Diese Diamine werden im Folgenden auch als Tetraazokomponente bezeichnet.

Geeignete Tetraazokomponenten sind beispielsweise von Benzol abgeleitete Verbindungen der allgemeinen Formel Tk-A, von Diphenyl abgeleitete Verbindungen der Formel Tk-B, von Phenylbenzimidazol abgeleitete Verbindungen der Formel Tk-C, von Diphenylmethan abgeleitete Verbindungen der Formel Tk-D, von Diphenylamin abgeleitete Verbindungen der Formel Tk-E, von Phenylsulfonylbenzol abgeleiteten Verbindungen der Formel Tk-F, von Phenylaminosulfonylbenzol abgeleiteten Verbindungen der Formel Tk-G, von Stilben abgeleiteten Verbindungen der Formel Tk-H und von Phenylaminocarbonylbenzol abgeleiteten Verbindungen der Formel Tk-J:

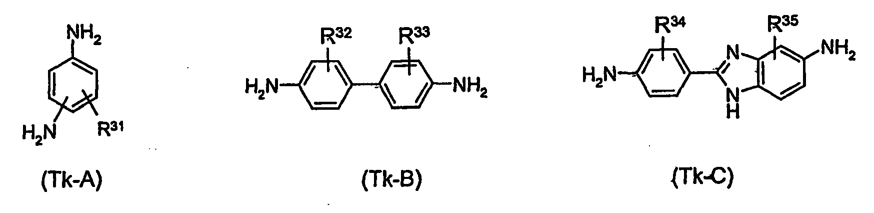

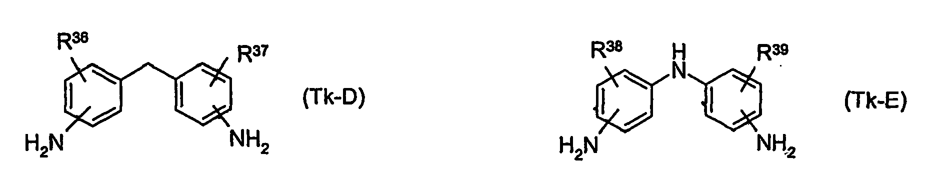

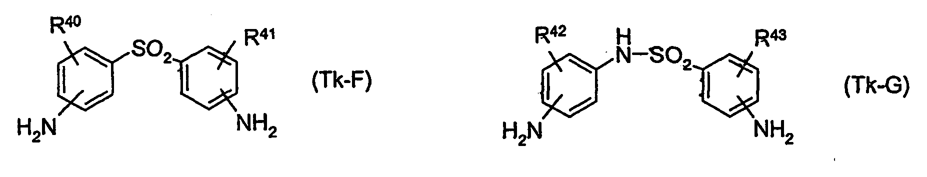

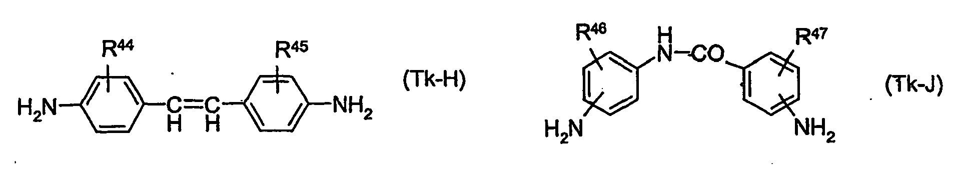

In Formel Tk-A steht R³¹ beispielsweise für Wasserstoff, C₁-C₄-Alky), C₁-C₄-Alkoxy, COOH oder SO₃H. Vorzugsweise sind die beiden NH₂-Gruppen in para-Position zueinander angeordnet. Beispiele für Verbindungen der Formel Tk-A sind 1,4-Diaminobenzol (Tk1), 1,4-Diamino-2-methoxybenzol (Tk2), 2,5-Diaminobenzoesäure (Tk3) und 2,5-Diaminobenzolsulfonsäure (Tk4).

In Formel Tk-B stehen R³² und R³³ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Beispiele für Verbindungen der Formel Tk-B sind 4,4'-Diaminobiphenyl (Tk5), 4,4'-Diamino-3,3'-dimethylbiphenyl Tk6), 4,4'-Diamino-3,3'-dimethoxybiphenyl (Tk7), 4,4'-Diamino-3,3'-dihydroxybiphenyl (Tk8), 4,4'-Diamino-3-hydroxysulfonylbiphenyl (Tk9), 4,4'-Diamino-3,3'-bis(hydroxysulfonyl)biphenyl Tk10) und 4,4'-Diamino-3,3'-dicarboxybiphenyl (Tk11).

In Formel Tk-C stehen R³⁴ und R³⁵ unabhängig voneinander beispielsweise für Wasserstoff, OH, C₁-C₄-Alkyl oder C₁-C₄-Alkoxy. Ein Beispiel für eine Verbindung der Formel Tk-C ist 6-Amino-2-[4-aminophenyl]benzimidazol (Tk12).

In Formel Tk-D stehen R³⁶ und R³⁷ unabhängig voneinander beispielsweise für Wasserstoff, OH, C₁-C₄-Alkyl, C₁-C₄-Alkoxy, COOH oder SO₃H. Vorzugsweise-sind die beiden NH₂-Gruppen in der 4- und der 4'-Position angeordnet. Beispiele für Verbindungen Tk-D sind Bis(4-aminophenyl)methan (Tk13), Bis(4-amino-3-carboxyphenyl)methan (Tk14) und Bis(4-amino-3-methylphenyl)methan (Tk15).

In Formel Tk-E stehen R³⁸ und R³⁹ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-E ist (4-Aminophenyl)(4'-amino-2'-hydroxysulfonylphenyl)amin oder 4,4'-diaminodiphenylamin-2-sulfonsäure (Tk16).

In Formel Tk-F stehen R⁴⁰ und R⁴¹ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-F ist Bis-(4-aminophenyl)sulfon (Tk17).

In Formel Tk-G stehen R⁴² und R⁴³ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-G ist N-(4'-Aminophenyl)-4-aminobenzolsulfonamid (Tk18).

In Formel Tk-H stehen R⁴⁴ und R⁴⁵ unabhängig voneinander beispielsweise für Wasserstoff, C₁-C₄-Alkyl, COOH oder SO₃H. Vorzugsweise sind die beiden NH₂-Gruppen in der 4- und der 4'-Position angeordnet. Ein Beispiel für eine Verbindung Tk-H ist 1,2-Bis-(4-amino-2-hydroxysulfonylphenyl)ethen (Flavonsäure, Tk19).

In Formel Tk-J stehen R⁴⁶ und R⁴⁷ unabhängig voneinander beispielsweise für Wasserstoff, OH, C₁-C₄-Alkyl, C₁-C₄-Alkoxy, COOH oder SO₃H. Vorzugsweise sind die beiden NH₂-Gruppen in der 4- und der 4'-Position angeordnet. Ein Beispiel für eine Verbindung Tk-J ist N-(4'-Aminophenyl)4-aminobenzoesäureämid (Tk20).

Bevorzugte Reste Napht¹ und Napht² gehorchen der allgemeinen Formel Napht-II: 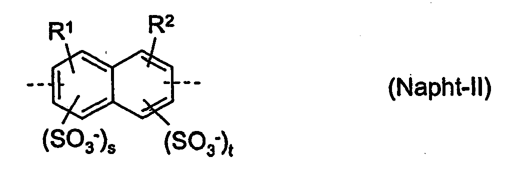 worin R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoffverschieden ist, die Bindungen zu den Azogruppen darstellen, s und t für 0 oder 1 stehen. Vorzugsweise hat die Summe s + t den Wert 1 oder 2.

Beispiele für geeignete Reste Napht¹ bzw. Napht² umfassen die nachfolgend aufgeführten Reste II-1 bis II-14:
2-Hydroxysulfonyl-4-hydroxynaphthalin-3,6-diyl (II-1),
6-Amino-2-hydroxysulfonyl-4-hydroxynaphthalin-3,5-diyl (II-2),
1-Hydroxysulfonyl-5-hydroxynaphthalin-4,6-diyl (II-3),
4-Amino-1-hydroxysulfonyl-5-hydroxynaphthalin-3,6-diyl (H-4),
2-Hydroxysulfonyl-4-hydroxynaphthalin-3,7-diyl (II-5),
7-Amino-2-hydroxysulfonyl-4-hydroxynaphthalin-3,8-diyl-(II-6),
5-Hydroxy-2,7-bishydroxysulfonylnaphthalin-4,6-diyl (II-7),
4-Amino-5-hydroxy-2,7-bishydroxysulfonylnaphthalin-3,6-diyl (II-8)
5-Hydroxy-1,7-bishydroxysulfonylnaphthalin-4,6-diyl (II-9),
4-Amino-5-hydroxy-1,7-bishydroxysulfonylnaphthalin-3,6-diyl (II-10),
2-Hydroxysulfonylnaphthalin-5,8-diyl (II-11),
2-Amino-5-hydroxy-1,7-bishydroxysulfonylnaphthalin-3,6-diyl (II-12),
5-Hydroxy-2,7-bishydroxysulfonylnaphthalin-3,6-diyl (II-13),
3-Amino-5-hydroxy-2,7-bishydroxysulfonylnaphthalin-4,6-diyl (II-14),
2-Hydroxysulfonylnaphthalin-5,8-diyl (II-15) und
1-Hydroxysulfonylnaphthalin-5,8-diyl (II-16).

Bei den Resten L, M, P und R handelt es sich um zweiwertige, von Benzol oder Naphthalin abgeleitete Reste, z.B. von den Kupplungskomponenten der Formeln Kk-A und Kk-B abgeleitete Reste sowie von den vorgenannten Diazokomponenten abgeleitete Reste, die noch eine freie Position aufweisen, auf die eine Diazoniumverbindung gekuppelt werden kann. Beispiele hierfür sind die Anilinverbindungen DK3, DK4, DK6, DK7, DK11, DK13, DK14, DK15, DK18, DK21 bis DK27, DK29, DK30, DK33, DK36, DK38, DK39, und DK60 bis DK83 sowie die Naphthylamine DK42 bis DK59.

Unter den vorgenannten Verbindungen der Formeln I bis XV sind die Farbstoffe der allgemeinen Formeln IIa, IIIa und IVa besonders bevorzugt:

Dk¹-N=N-Napht¹-N=N-Tk¹[-N=N-Kk¹]ₖ[-N=N-Dk²]ₙ (IIa)

Dk¹-N=N-Napht¹-N=N-Tk¹-N=N-Kk¹-N=N-Tk²-N=N-Napht²-N=N-Dk² (IIIa)

Dk¹-N=N-Napht¹-N=N-Tk¹-N=N-Napht²-N=N-Dk² (IVa)

In den Formeln IIa, IIIa und IVa haben Dk¹,-Dk², Napht1, Napht², Kk¹, TK¹, Tk² und Kk¹ die zuvor genannten Bedeutungen, wobei einer oder beide Reste Dk¹ und Dk² für einen Rest der Formel A, wie zuvor definiert, stehen und insbesondere eine der Reste A1 bis A12 bedeuten. Die Zahlen n und k stehen für 0 oder 1, wobei n+ k = 1 oder 2 ist. Derartige Verbindungen sind neu, wenn Tk¹ in Formel IIa nicht für einen von Diphenylamin abgeleiteten Rest steht, wenn k = 0 ist. Derartige Verbindungen und deren Mischungen sind daher ebenfalls Gegenstand der vorliegenden Erfindung.

Eine besonders bevorzugte Ausführungsform der Farbstoffe II bzw. IIa sind die Farbstoffe der allgemeinen Formel IIb

Dk¹-N=N-Napht¹-N=N-Tk¹-N=N-Kk¹[-N=N-Dk²]ₙ (IIb)

worin A, Dk², Napht¹ und Kk¹ die zuvor genannten Bedeutungen aufweisen, n für 0 oder 1 steht, und worin Tk¹ für einen von Diphenyl, Diphenylmethan, 2-Phenylbenzimidazol, Phenylsulfonylbenzol, Phenylaminosulfonylbenzol, Diphenylamin, Stilben oder Phenylaminocarbonylbenzol abgeleiteten, zweiwertigen Rest steht, der gegebenenfalls einen oder mehrere der folgenden Reste als Substituenten aufweisen kann: SO₃H, COOH, OH, NH₂, NO₂, Halogen, C₁-C₄-Alkyl, wobei Tk¹ nicht für einen von Diphenylamin abgeleiteten Rest steht, wenn n = 0 ist, und wobei Rest Dk² auch für einen Rest der Formel A, wie zuvor definiert, stehen kann. Farbstoffe der allgemeinen Formel IIb und insbesondere deren Mischungen sind ein besonders bevorzugter Gegenstand der vorliegenden Erfindung.

Unter den erfindungsgemäßen Farbstoffen der allgemeinen Formeln IIa IIb IIIa und IVa sind solche Farbstoffe besonders bevorzugt, worin wenigstens eine der Gruppen Tk¹ und/oder Tk² für einen Rest der Formel 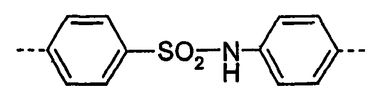 steht, worin die Bindungen zu den Azogruppen darstellen.

Unter den Verbindungen der allgemeinen Formeln IIa, IIb, IIIa und IVa sind solche Farbstoffe besonders bevorzugt, worin Napht¹ und/oder Napht² für einen bivalenten Rest der oben definierten allgemeinen Formel Naphth-II stehen und insbesondere die dort aufgeführten konkreten Bedeutungen besitzen.

Unter den Verbindungen der allgemeinen Formeln IIa, IIb, IIIa und IVa sind solche Farbstoffe besonders bevorzugt, worin einer oder beide der Reste Dk¹ und Dk² für einen der zuvor definierten Reste A1 bis A12 stehen.

In den Farbstoffen der allgemeinen Formel IIb steht Kk¹ beispielsweise für einen von den Kupplungskomponenten der Formeln Kk1 bis Kk67, DK3, DK4, DK6, DK7, DK11, DK13, DK14, DK15, DK18, DK21 bis DK27, DK29, DK30, DK33, DK36, DK38, DK39 oder DK42 bis DK83 abgeleiteten Rest. Unter den Farbstoffen der Formel IIa, IIb und IIIa sind insbesondere solche bevorzugt, worin Kk¹ von einer Verbindung Kk-A abgeleitet ist.

Besonders bevorzugt sind Mischungen der Farbstoffe der allgemeinen Formel IIb. Die Mischungen der Farbstoffe IIb bestehen aus wenigstens zwei, z.B. 2, 3 oder 4 individuellen Farbstoffen IIb. Die Menge des individuellen Farbstoffs IIb beträgt wenigstens 10 Mol% und insbesondere wenigstens 20 Mol%, bezogen auf die Gesamtmenge an Farbstoff F. Bevorzugt sind Mischungen aus zwei Farbstoffen F, worin die Einzelkomponenten im Molverhältnis im Bereich von 9:1 bis 1:9, insbesondere im Bereich von 2:8 bis 8:2 und besonders bevorzugt im Bereich von 3:7 bis 7:3 liegen. Eine besonders bevorzugte Ausführungsform sind Mischungen von Farbstoffen IIb, worin die individuellen Farbstoffe sich nur in dem Rest Kk¹ unterscheiden.

Die Herstellung der erfindungsgemäß zur Anwendung kommenden Azofarbstoffe der allgemeinen Formeln I bis XV und ihrer Metallkomplexe erfolgt in an sich bekannter Weise durch eine mehrstufige Diazotierung/Kupplungs-Sequenz, wobei der Farbstoff durch sukzessives Diazotieren/Kuppeln aufgebaut werden, d.h. die Verknüpfung der einzelnen Bausteine Diazogruppen oder NH-Gruppen erfolgt sukzessiven, oder durch eine konvergente Synthese, d.h. Molekülgruppen des Farbstoffs, die bereits Diazogruppen oder NH-Gruppen aufweisen, werden generiert und anschließend über eine weitere Diazotierung/Kupplung mit einem weiteren Molekülteil des Farbstoffs, das ebenfalls bereits eine oder mehrere Diazogruppen aufweist, verknüpft, gegebenenfalls vermittels einer Kupplungs- oder Tetraazokomponente.

Beim sukzessiven Diazotieren/Kuppeln wird beispielsweise zunächst die Diazoniumkomponenten Dk¹ bzw. Dk² diazotiert und auf eine Gruppe Napht¹, bzw. Napht², Kk¹ oder Kk² oder auf eine Gruppe P oder R gekuppelt, anschließend wird das Reaktionsprodukt erneut diazotiert, und auf einen weiteren Kupplungspartner gekuppelt und dieser Vorgang gegebenenfalls wiederholt, bis der Farbstoff aufgebaut ist. Alternativ kann bei der sukzessiven Synthese auch das Reaktionsprodukt der ersten Kupplung mit einer oder mehreren Diazoniumverbindungen nacheinander umgesetzt werden.

Beim sukzessiven Kuppeln kann man auch zunächst eine Tetrazokomponente Tk¹(NH₂)₂ bzw. Tk²(NH₂)₂ in das entsprechende Tetrazoniumsalz überführen und nacheinander mit Kupplungspartnem Kk¹, P, Napht¹, Napht² etc. umsetzen und anschließend weitere Diazotierungs/Kupplunsgreaktionen durchführen.

Mischungen zweier oder mehrerer Farbstoffe F kann man sowohl durch Vermischen der gewünschten Mischungspartner herstellen, als auch durch Einsatz von Mischungen der zur Herstellung der Farbstoffe F eingesetzten Ausgangsmaterialien. Mischungen von Azofarbstoffen I bis XV kann man beispielsweise dadurch herstellen, dass man bei der Herstellung Mischungen wenigstens zweier Amine Dk¹-NH₂, Dk²-NH₂ oder A-NH₂, Mischungen wenigstens zweier Kupplungskomponenten H-Kk¹ bzw. H-Kk², Mischungen wenigstens zweier Tetrazokomponenten (H₂N)₂-Tk¹ bzw. (H₂N)₂-Tk² oder Mischungen wenigstens zweier verschiedener Verbindungen Napth¹H₂ bzw. Napth²H₂ einsetzt. Selbstverständlich kann man auch Mischungen aus 3 oder mehr Komponenten einsetzen.

Entsprechend dem gewünschten Mischungsverhältnis der Farbstoffe F in der Mischung wird man bei der Herstellung des Farbstoffs F eine Mischung des jeweiligen Ausgangsmaterials einsetzen, in welchem das individuelle Ausgangsmaterial in einer Menge von wengistens 10 Mol-%, insbesondere wenigstens 20 mol-%, besonders bevorzugt wenigstens 30 Mol%, bezogen auf die Mischung vorliegt. Bei Mischungen zweier Ausgangsmaterialien, z.B. bei einer Mischung zweier Kupplungskomponenten H-Kk(1) bzw. H-Kk(2), oder bei Mischungen zweier Diazokomponenten oder bei Mischung zweier Tetrazokomponenten liegt das Molverhältnis der Einzelbestandteile der Mischung im Bereich von 9:1 bis 1:9, insbesondere im Bereich von 8:2 bis 2:8 und besonders bevorzugt im Bereich von 3:7 bis 7:3.

Die Herstellung der Azofarbstoffe der allgemeinen Formeln I bis XV wird nunmehr exemplarisch anhand der Herstellung der Farbstoffe der allgemeinen Formel IIb erläutert. Die hierzu angewendeten Methoden lassen sich in an sich bekannter Weise zum Aufbau anderer Azofarbstoffe der allgemeinen Formeln I bis XV modifizieren. Farbstoffe der allgemeinen Formel II b können bespielsweise hergestellt werden, indem man in einem ersten Schritt die der Tetrazokomponente Tk¹ zugrundeliegende Diamino-Verbindung Tk¹(NH₂)₂ tetrazotiert und anschließend zunächst auf die dem Rest Napht¹ zugrundeliegende Naphthalinverbindung Napht¹H₂ gekuppelt. Anschließend kuppelt man auf die so erhaltene Diazonium-Verbindung H-Napht¹-N=N-Tk¹-N₂⁺ eine Diazoniumverbindung Dk¹-N₂⁺ bzw. A-N₂⁺, wobei man die Verbindung Dk¹-N=N-Napht¹-N=N-Tk¹-N₂⁺ bzw. A-N=N-Napht¹-N=N-Tk¹-N₂⁺ erhält. Diese Verbindung kuppelt man auf die eine Kupplungskomponente Kk¹H, wobei man die Verbindung der Formel IIb mit n = 0 erhält. Alternativ kann man die Diazonium-Verbindung H-Napht¹-N=N-Tk¹-N₂⁺ auf die eine Kupplungskomponente Kk¹H kuppeln, wobei man die Verbindung, H-Napht¹-N=N-Tk¹-N=N-Kk¹ erhält. Hierauf kuppelt man eine Diazoniumverbindung Dk¹-N₂⁺ bzw. A-N₂⁺, wobei man den Farbstoff derformel IIb mit n = 0 erhält.

Farbstoffe der Formel IIb kann man außerdem herstellen, indem man die Verbindung Dk¹-N₂⁺ bzw. A-N₂⁺ auf eine Verbindung Napht¹H₂ kuppelt, wobei man die Verbindung der Formel Dk¹-N=N-Napht¹-H bzw. A-N=N-Napht¹-Herhält. Auf diese Verbindung kuppelt man dann das der Tetrazokomponente Tk¹ zugrundeliegende Tetrazotierungsprodukt der Diamino-Verbindung Tk¹(NH₂)₂, wobei man die Verbindung Dk¹-N=N-Napht¹-N=N-Tk¹-N₂⁺ bzw. A-N=N-Napht¹-N=N-Tk¹-N₂⁺ erhält. Diese Verbindung kuppelt man auf die eine Kupplungskomponente Kk¹H, wobei man den Farbstoff der Formel IIb mit n = 0 erhält.

Farbstoffe der allgemeinen Formel IIb können außerdem hergestellt werden, indem man in einem ersten Schritt die der Tetrazokomponente Tk¹ zugrundeliegende Diamino-Verbindung Tk¹(NH₂)₂ tetrazotiert und anschließend zunächst auf die Kupplungskomponente Kk¹H kuppelt. Hierbei erhält man die Verbindung ⁺N₂-Tk¹-N=N-Kk¹, welche man dann auf die Verbindung Napht¹H₂ kuppelt, wobei man die Verbindung der Formel H-Napht¹-N=N-Tk¹-N=N-Kk¹ erhält. Hierauf kuppelt man eine Diazoniumverbindung Dk¹-N₂⁺ bzw. A-N₂⁺, wobei man die Verbindung der Formel IIb mit n = 0 erhält. Alternativ kann man die Verbindung ⁺N₂-Tk¹-N=N-Kk¹ auf die Verbindung Dk¹-N=N-Napht¹-H bzw. A-N=N-Napht¹-H kuppeln, wobei man den Farbstoff der Formel IIb mit n = 0 erhält.

In einer weiteren Reaktionsstufe kann man dann auf die Verbindung der Formel IIb mit n = 0 eine Verbindung Dk²-N₂⁺ kuppeln, wobei man die Farbstoffe der Formel IIb mit n = 1 erhält.

Farbstoffe der allgemeinen Formel IIb mit n = 1 kann man auch herstellen, indem man zunächst eine Verbindung der Formel Dk₂-NH₂ diazotiert und anschließend auf die Kupplungskomponente Kk¹H kuppelt, wobei man die Verbindung der Formel Kk¹-N=N-Dk² erhält. Auf diese Verbindung kuppelt man dann die Verbindung Dk¹-N=N-Napht¹-N=N-Tk¹-N₂⁺ bzw. A-N=N-Napht¹-N=N-Tk¹-N₂⁺, wobei man die Farbstoffe der Formel IIb mit n = 1 erhält.

Farbstoffe der allgemeinen Formel IIb mit n = 1 kann man auch herstellen, indem man die der Tetrazokomponente Tk¹ zugrundeliegende Diamino-Verbindung Tk¹(NH₂)₂ tetrazotiert und auf die Verbindung Kk¹-N=N-Dk² kuppelt, wobei man die Verbindung ⁺N₂-Tk¹-N=N-Kk1-N=N-Dk² erhält. Diese Verbindung kuppelt man dann auf die Verbindung Dk¹-N=N-Napht¹H, wobei man die Farbstoffe der Formel IIb mit n = 1 erhält.

Zur Herstellung der bevorzugten Mischungen der Farbstoffe der allgemeinen Formel IIb, in denen sich die individuellen Farbstoffe IIb bezüglich ihres Restes HKk¹ unterscheiden, setzt man vorzugsweise eine Mischung wenigstens zweier verschiedener Kupplungskomponenten Kk¹ ein, worin die individuellen Bestandteile wie oben angegeben sind.

Sofern die Farbstoffe einen Triazin-Rest Tr¹ und/oder Tr² aufweisen, umfasst die Herstellung der Farbstoffe auch die Umsetzung einer Triazinverbindung der Formel C 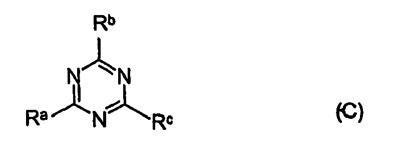 worin R^{a} und R^{c} für Halogen, insbesondere für Chlor und R^{b} für Halogen, Methyl oder Methoxy steht, mit zwei Aminokomponenten. Die Aminokomponenten sind z.B. die als Diazokomponenten genannten Monoaminverbindungen Dk¹-NH₂ bwz. Dk²-NH₂, die als Tetrazokomponente genannten Diaminverbindungen Tk¹(NH₂)₂ bzw. Tk²(NH₂)₂ sowie Molekülteile des Farbstoffs, die eine primäre Aminogruppe aufweisen.

Derartige Verfahren sind aus dem Stand der Technik für anionische Azofarbstoffe bekannt und können analog auf die Herstellung der Farbstoffe I bis XV übertragen werden.

Die Diazotierung und die Kupplung der dabei erhaltenen Diazonium- bzw. der Tetrazoniumverbindung erfolgt üblicherweise in einem wässrigen Reaktionsmedium unter pH Kontrolle in an sich bekannter Weise.

Sofern die umgesetzten Molekülbauteile bereits eine Gruppe A aufweisen, die einen Rest B der Formel CH₂CH₂-Q trägt, dann wird der pH-Wert der Reaktionsmischung vorzugsweise einen Wert von pH 8 nicht übersteigen, da anderenfalls eine Abspaltung der Gruppe Q unter Ausbildung einer Vinylgruppe erfolgt.

Bei Kupplungen Diazonium-Komponente oder einer Tetrazonium-Komponente auf eine Naphthalin-Verbindung der Formeln II bzw. Kk-B, die sowohl eine OH-Gruppe als auch eine Aminogruppe trägt und wenigstens zwei mögliche Kupplungsstellen aufweist, ist zu berücksichtigen, dass pH-Werten von höchstens 3 die erste Kupplung regioselektiv in ortho-Position zur Aminogruppe erfolgt, wohingegen bei pH-Werten von pH ≥6, vorzugsweise pH ≥8 eine regioselektive Kupplung in der ortho-Position der OH-Gruppe erfolgt.

Die Umsetzung eines Amins mit einer Triazinverbindung C erfolgt üblicherweise bei sauren pH-Werten, vorzugsweise unter pH7 und insbesondere im Bereich von pH 1 bis pH 4.

Die für die Diazotierung/Kupplung bzw. die Umsetzung mit Triazinen erforderlichen Reaktionstemperaturen liegen in der Regel im Bereich von 0°C bis 50°C und insbesondere im Bereich von 0 bis 30°C. Die erforderlichen Reaktionszeiten liegen üblicherweise im Bereich von 5 min bis 2 h und insbesondere im Bereich von 20 min.-bis 1 h.

Die Umsetzungen erfolgen üblicherweise stöchiometrisch, d.h. die Reaktionspartner werden in der gewünschten Stöchiometrie miteinander umgesetzt. Die einzelnen Reaktanden können jedoch sowohl im Überschuss als auch im Unterschuss, bezogen auf die gewünschte Stöchiometrie eingesetzt werden. Die Abweichung von der gewünschten Stöchiometrie wird in der Regel nicht mehr als 20 mol% und insbesondere nicht mehr als 10 mol-% betragen. Mit anderen Worten, bei der Umsetzung einer Diazoniumkomponente mit einem Kupplungspartner wird das Molverhältnis der beiden Komponenten im Bereich von 1:1,2 bis 1,2:1 und insbesondere im Bereich von 1,1:1 bis 1:1,1 liegen. Bei der Umsetzung einer Tetrazoniumverbindung mit 2 Moläquivalenten eines Kupplungspartners wird man diesen dementsprechend in einer Menge von 1,6 bis 2,4 mol und insbesondere in einer Menge von 1,8 bis 2,2 mol pro mol Tetrazoniumverbindung einsetzen.

Im Anschluss an die Diazotierungs/Kupplungssequenz kann man zur Herstellung der Übergangsmetallkomplexe das gewünschte Übergangsmetallsalz in Form eines geeigneten, vorzugsweise wasserlöslichen Salzes in der stöchiometrisch gewünschten Menge geben und gegebenenfalls auf die zur Komplexierung erforderliche Temperatur, z.B. auf Temperaturen im Bereich von 40 bis 100°C erwärmen.

Die Gewinnung des Farbstoffs aus der wässrigen Reaktionsmischung erfolgt in an sich üblicher Weise, beispielsweise durch Eindampfen, insbesondere durch Sprühtrocknung der wässrigen Reaktionsmischung, durch Aussalzen des Farbstoffs und Trocknen des Pressguts. Das vorzugsweise noch feuchte Pressgut kann man erneut lösen, vorzugsweise in Wasser und man kann eine Dia- und/oder Ultrafiltration durchführen, um die bei der Herstellung anfallenden anorganischen Salze abzureichern und/oder die Lösung bezüglich des Farbstoffs anzureichern. Anschließend kann man den so aufgereinigten Farbstoff durch Sprühtrocknung aus der Lösung gewinnen.

Zur Herstellung einer Flüssigmarke bzw. einer Flüssigformulierung der Farbstoffs kann der Farbstoffpresskuchen, bzw. das beim Eindampfen oder Sprühtrocknen erhaltene Farbstoffpulver aufgelöst werden, beispielsweise in Wasser, einem Wasser/Lösungsmittelgemisch, einer wässrigen Säure oder einer wässrigen Base, wobei die wässrige Säure und die wässrige Base ebenfalls Lösungsmittel enthalten können. Als Lösungsmittel kommen dabei insbesondere mit Wasser mischbare Lösungmittel wie C₁-C₄-Alkanole, organische Carbonsäure wie Ameisensäure, Essigsäure und Propionsäure, Alkanolamine, Dialkanolamine und Trialkanolamine wie Ethanolamin, Diethanolamin, Triethanolamin, weiterhin, Amide wie Formamid, Acetamid, Dimethylformamid, Dimethylacetamid, N-Methylpyrrolidon, Dimethylsulfoxid und dergleichen in Betracht. Es ist auch möglich, direkt aus der Reaktionslösung eine Flüssigformulierung des Farbstoffs herzustellen. oder durch Ultrafiltration und Sprühtrocknung. Gegebenenfalls ist es dann für eine ausreichend hohe Farbstoffkonzentration und für die Stabiliät der Flüssigeinstellung erforderlich, eine Dia- und/oder Ultrafiltrationsproezß durchzuführen, um die bei der Herstellung anfallenden anorganischen Salze abzureichern und die Lösung aufzukonzentrieren.

Das erfindungsgemäße Verfahren umfasst einen Färbeschritt bei einem pH-Wert von 7,5 bis 11 Hierzu wird das zu färbende Leder in einer wässriger Flotte, die einen pH-Wert von wenigstens 7,5 und vorzugsweise von wenigstens 8,0 aufweist und die wenigstens einen Farbstoff F der oben bezeichneten Art enthält, behandelt. Erfindungsgemäß wird der pH der Flotte einen Wert von pH 11 und vorzugsweise pH 10,5 nicht überschreiten. Insbesondere liegt der pH-Wert der Flotte im Bereich von 8,5 bis 10. Durch den alkalischen pH-Wert wird eine Fixierung des Farbstoffs auf dem Leder erreicht, da unter diesen Bedingungen die Gruppe A mit den Aminogruppen des Leders unter Ausbildung einer kovalenten Bindung reagiert.

Um den für die Fixierung alkalischen pH-Wert zu erhalten, können beliebige Alkalien und Puffersysteme eingesetzt werden. Beispielhaft zu nennen sind Alkalimetallcarbonate und -hydrogencarbonate wie Natriumcarbonat, Kaliumcarbonat und Natriumhydrogencarbonat, weiterhin Alkalimetallhydroxide wie Natronlauge, Natriummetasilikat, Pyrophosphate wie Natrium- oder Kaliumpyrophosphat, Trikaliumphosphat, Trinatriumphosphat, Borax/Natronlauge-Puffer und Phosphat-Puffer.

Die zur Fixierung des Farbstoffs erforderlichen Temperaturen betragen vorteilhafterweise nicht mehr als 60°C, insbesondere nicht mehr als 50°C, und besonders bevorzugt nicht mehr als 40°C, so dass ein schonendes Färben des Leders möglich ist. In der Regel wird man die Färbung bei Temperaturen von wenigstens 10°C, vorzugsweise wenigstens 20°C, insbesondere wengistens 30°C durchführen um eine hinreichende Reaktionsgeschwindigkeit zu erzielen und somit den Färbevorgang zu beschleunigen. Grundsätzlich sind jedoch auch niedrigere Temperaturen möglich. Für organisch gegerbte Leder ist der bevorzugte Temperaturbereich 15 bis 50°C und besonders 30 bis 40°C. Für mit Metalloxiden gegerbte Leder ist ein Temperaturbereich von 15 bis 60 °C und besonders 30 bis 50°C bevorzugt.

Für eine ausreichende Fixierung sind in der Regel abhängig vom pH-Wert und der Temperatur Behandlungsdauern von 0,5 h bis 4 h erforderlich. Die erforderlichen Behandlungsdauern kann der Fachmann anhand einfacher Routineexperimente für den jeweils eingesetzten Farbstoff ermitteln. Insbesondere bei stark alkalischen pH-Werten im Bereich von 9,5 bis 11, insbesondere bei 9,5 bis 10,5 beträgt die Färbedauer vorzugsweise nicht mehr als 2 h, z.B. 0,5 bis 2 h.

Bei der Färbung können auch Salze, beispielsweise Glaubersalz zugesetzt werden.

Neben den erfindungsgemäß zur Anwendung kommenden Farbstoffen F kann die Flotte auch konventionelle Säure- oder Direktfarbstoffe enthalten. Ihr Anteil wird jedoch vorzugsweise nicht mehr als 10 Gew.-%, insbesondere nicht mehr als 5 Gew.-%, bezogen auf die Gesamtmenge an Farbstoffen in der Flotte betragen (jeweils gerechnet als rein organisch-chemischer, farbiger Bestandteil des Farbstoffs).

Üblicherweise wird der Farbstoff F je nach gewünschter Farbtiefe in einer Menge von wenigstens 0,2 Gew.-%, häufig wenigstens 0,5 Gew.-% und insbesondere wenigstens 1 Gew.-%, bezogen auf das Falzgewicht des eingesetzten Leders bzw. Halbfertigprodukts, eingesetzt, wobei die hier angegebenen Menge auf den Farbstoff einschließlich Synthesesalze und gegebenenfalls vorhandenes Stellmittel beziehen. Bezogen auf die farbigen, chemisch-organischen Bestandteile, wird man den Farbstoff üblicherweise in einer Menge von wenigstens 0,1 Gew.%, häufig wenigstens 0,3 Gew.-% und insbesondere wenigstens 0,5 Gew.%, bezogen auf das Falzgewicht des eingesetzten Leders bzw. Halbfertigprodukts, einsetzen. In der Regel wird man den Farbstoff, gerechnet als Mischung aus organisch-chemischen Bestandteilen + Synthesesalze und gegebenenfalls vorhandenes Stellmittel, in einer Menge bis 20 Gew.%, bzw in einer Menge von bis zu 15 Gew.%, gerechnet als farbige organisch-chemische Bestandteile und bezogen auf das Falzgewicht einsetzen, wobei auch größere Farbstoffmengen eingesetzt werden können. Zur Erreichung mittlerer bis hoher Farbtiefen wird man den Farbstoff F in Abhängigkeit seines molaren Extinktionskoeffizienten und seines Molekulargewichts in der Regel in einer Menge von 2 bis 20 Gew.%, häufig 3 bis 20 Gew.% und insbesondere in einer Menge von 4 bis 20 Gew.-%, bezogen auf das Falzgewicht des Leders bzw. Halbfertigprodukts und gerechnet als Mischung aus organisch-chemischen Bestandteilen + Synthesesalze und gegebenenfalls vorhandenes Stellmittel, bzw. in einer Menge von1 bis 15 Gew.%, häufig 1,5 bis 10 Gew.-% und insbesondere 2 bis 10 Gew.%, bezogen auf das Falzgewicht des Leders bzw. Halbfertigprodukts und gerechnet als farbige organisch-chemische Bestandteile, einsetzen.

Die wässrige Flotte kann übliche anionische Färbehilfsmittel, nichtionische oberflächenaktive Substanzen sowie für die Nachgerbung üblicherweise eingesetzte Wetend-Chemikalien, beispielsweise Gerbstoffe, z.B. polymere Nachgerbstoffe, synthetische Nachgerbstoffe, pflanzliche Gerbstoffe (Vegetabitgerbstoffe) sowie Fettungsmittel (Fettlicker) und Hydrophobiermittel enthalten.

Als Nachgerbstoffe kommen für das erfindungsgemäße Verfahren alle handelsüblichen Systeme in Frage, z.B.:
1. Vegetabilgerbstoffe wie Mimosa, Kastanie, Quebracho;
2. Mineralgerbstoffe wie Chrom-, Eisen-, Aluminium- und Zirkongerbstoffe;
3. Füllstoffe, z.B. Schichtsilikate, Saccharide, Polysaccharide wie Stärke und Mehl;
4. synthetische Gerbstoffe (Syntane), z.B. die in in EP 0459 168, EP 0 520 182, US 5, 342, 915 und US 5,186 846 beschriebenen Substanzen wie:
   a. Napthalinsulfonsäure-Formaldehyd Kondensationsprodukte,
   b. Phenolsulfonsäure-Formaldehyd Kondensationsprodukte,
   c. Cokondensationsprodukte von Napthalinsulfonsäure und/oder Phenolsulfonsäure mit Hydroxyarylsulfonen wie Bis(hydroxyphenyl)sulfon und Formaldehyd,
   d. Cokondensationsprodukte von Napthalinsulfonsäure und/oder Phenolsulfonsäure mit Oligosulfonen (Mischungen mehrkerniger über Sulfonbrücken verküpfter Aromaten, die z.B. mit -OH oder -SO₃H substituiert sein können) und Formaldehyd,
   e. Cokondensatsationsprodukte von Napthalinsulfonsäure, Phenolsulfonsäure mit Formaldehyd und mit N-haltigen Verbindungen sowie gegebenenfalls mit Hydroxyarylsulfonenen oder mit Oligosulfonenen. Beispiele für N-haltige Verbindungen sind Harnstoff, Melamin, Melamin-Derivate wie Hydroxy-C₂-C₂₀-alkyl-melamine, Bis-hydroxy-C₂-C₂₀-alkyl-melamine oder Tris-hydroxy-C₂C₂₀-alkyl-melamine, Hydroxyarylmelamine oder Melamine mit ein bis drei Polyalkylenoxid-Ketten an den N-Atomen, Melem (2,5,8-Triamino-1,3,4,6,7,9,9b-heptaazaphenalen) oder Melem-Derivate wie Hydroxy-C₂-C₂₀-alkylmeleme oder Meleme mit Polyalkylenoxid-Seitenketten an den N-Atomen, Guanamine (in 6-Stellung substituierte 2,4-Diamino-1,3,5-triazine) wie Benzoguanamin, Acetoguanamin, Caprinoguanamin oder Isobutyroguanamin; Derivate von Guanaminen wie N-Hydroxy-C₂-C₂₀-alkyl-guanamine, sowie Guanamine mit ein oder zwei Polyalkylenoxid-Ketten an den N-Atomen, und Dicyandiamid,
   f. Mischungen der unter 4.a bis 4.e genannten Substanzen mit Cr(III) Verbindungen;
5. Harzgerbstoffe; z.B.:
   a. Sulfithaltige Kondensationsprodukte aus Naphthalinsulfonsäure und Formaldehyd,
   b. Sulfithaltige Kondensationsprodukte aus Phenyolsulfonsäure und Formaldehyd,
   c. Mischungen aus 5.a. und 5.b.;
6. Polymergerbstoffe, die anionischer, kationischer oder amphoterer Natur sein können. Anionische Polymergerbstoffe können z.B. Carboxylgruppen tragen, kationische Polymergerbstoffe können z.B. Aminogruppen tragen und amphotere Polymergerbstoffe tragen sowohl kationische als auch anionische Gruppen. In Abhängigikeit vom pH-Wert können amphotere Polymere entweder anionischen oder kationischen Charakter aufweisen. Beispiele für Polymergerbstoff sind:
   a. Homo- und Copolymere der Acrylsäure und der Methacrylsäure,
   b. Homo- und Copolymere der Acrylsäure und/oder der Methacrylsäure mit C₁-C₃₀-Alkylacrylaten und/oder C₁-C₃₀-Alkylmethacrylaten,
   c. funktionalisierte Copolymere von C₁-C₃₀-Alkylacrylaten und/oder C₁-C₃₀-Alkylmethacrylaten mit kationischen oder anionischen bzw. sauren Gruppen tragenden Monomeren,
   d. Copolymere von ethylenisch ungesättigten Dicarbonsäureanhydriden wie Maleinsäureanhydrid mit C₃-C₄₀-alpha-Olefinen wie Propen, 1-Buten, 1-Hexen, 1-Octen, Diisobuten, 1-Decen und dergleichen,
   e. Dicarbonsäureanhydrid-Styrol-Copolymere
   f. Homo- und Copolymere ethylenisch ungesättigter Nitrile wie Acrylnitril und Methacrylnitril, gegebenenfalls mit weiteren monoethylenisch ungesättigten Monomeren wie Acrylsäure, Methacrylsäure, Acrylamid, Methacrylamid oder C₁-C₁₀-Alkyl(meth)acrylaten .

   Beispiele für Polymergerbstoffe sind in EP-A 1335029 und WO 96/15276 angegeben, auf die diesbezüglich Bezug genommen wird.
7. Aldehyde wie z.B.:
   a. Formaldehyde,
   b. Glutardialdehyde,
   c. Oligoaldehyde wie sie in WO 03/095681 beschrieben werden,
   d. Aldehydgenerierende Gerbstoffe wie sie in Bibiothek des Leders Band 3, Umschau Verlag, 1984, Seite 26-27 beschrieben werden, z.B. Oxazolidine und Phosphoniumverbindungen;
8. Dispergiermittel wie in US 5, 186 846 beschrieben, z.B.:
   a. Naphthalinsulfonsäure Formaldehyd Kondensationsprodukte und
   b. Ligninsulfonate.

Als Gerbstoffe können außerdem alle handelsüblichen Gerbstoffe wie beispielsweise Chromgerbstoffe, mineralische Gerbstoffe, Syntane, Polymergerbstoffe und vegetabile Gerbstoffe eingesetzt werden, wie sie z.B. in Ullmann's Encyclopedia of Industrial Chemistry, Band A 15 Seite 259 bis 282 und insbesondere Seite 268 ff, 5. Auflage, (1990), Verlag Chemie Weinheim, beschreiben werden. Handelsübliche-Gerbstoffe können auch Mischungen der unter 1.-8. genannten Gerbstoffklassen sein.

Als Fettungsmittel können alle in der Lederherstellung üblichen Fettungsmittel eingesetzt werden, insbesondere alle handelsüblichen Fettungsmittel. Fettungsmittel enthalten naturgemäß mindestens eine hydrophobe Substanz, die auf einem Kohlenwasserstoff basiert, beispielsweise auf einem natürlichen oder synthetischen Wachs, einem nativem oder synthetischen Öl oder auf einem nativen oder synthetischen Fett. Als Kohlenwasserstoffbasis für Fettungsmittel kommen auch Polyisobuten-basierte Substanzen in Betracht. Die im folgenden näher erläuterte Kohlenwasserstoffbasis der Fettungsmittel kann chemisch modifiziert sein, beispielsweise:
1. sulfatiert
2. sulfoniert
3. sulfitiert
4. sulfoxidiert
5. sulfochloriert
6. ethoxyliert oder generell verestert

Die Fettungsmittel können als Kohlenwasserstoffbasis auch Mischungen nichfunktionalisierter Bestandteile, Mischungen von funktionalisierten Bestandteilen mit nicht-funktionalisierten Bestandteile oder Mischungen funktionalisierter Bestandteile enthalten.

Zu den für Fettungsmittel geeigneten natürlichen Wachse zählen Bienenwachs, Korkwachs, Montanwachse und Carnaúbawachs.

Zu den für Fettungsmittel geeigneten synthetischen Wachsen zählen:
- Polyethylenwachse und Ethylencopolymerwachse, wie sie beispielsweise durch radikalische Polymerisation von Ethylen oder radikalische Copolymerisation von Ethylen mit beispielsweise (Meth)acrylsäure oder durch Ziegler-Natta-Katalyse erhältlich sind;
- Polyisobutylenwachse
- Paraffingemische, d.h. Gemische von Kohlenwasserstoffen, die 12 oder mehr Kohlenstoffatome aufweisen und üblicherweise einen Schmelzpunkt im Bereich von 25 bis 45 °C aufweisen. Derartige Paraffingemische können beispielsweise in Raffinerien oder Crackern anfallen und sind dem Fachmann als Paraffingatsch und Sasolwachse bekannt; sowie
- Montanesterwachse.

Zu den für Fettungsmittel geeigneten natürlichen Ölen zählen insbesondere bei Zimmertemperatur flüssige Triglyceride wie Fischöl, Rinderklauenöl, Olivenöl, Baumwollsamenöl, Rizinusöl, Sonnenblumenöl und Erdnussöl.

Zu den für Fettungsmittel geeigneten synthetischen Ölen zählen insbesondere Weißöl, Paraffinöl, funktionalisierte Paraffine wie beispielsweise chlorierte oder sulfochlorierte Paraffine sowie Polyalkylenglykole wie beilspielsweise Polyethylenglykol.

Zu den für Fettungsmittel geeigneten natürlichen Fetten zählen insbesondere bei Zimmertemperatur feste native Triglyceride wie Lanolin, Schellackwachs sowie deren Gemische.

Beispiele für Polyisobuten basierte Fettungsmittel sind in WO 03/023070 beschrieben.

Weiter Beispiele für Fettungsmittel sind in WO 03/023069 beschrieben.

Neben der Kohlenwasserstoffbasis können Fettungsmittel auch oberflächenaktive Substanzen enthalten. Hierzu zählen alle in Fettungsmitteln, Gerbstoffen, Hydrophobiermitteln und in anderen Hilfsmitteln für die Lederherstellung enthaltenen Emulgatoren. Die oberflächenaktiven Substanzen können nichtionischer, anionischer, kationischer oder auch zwitterionischer Natur sein. Zweckmässigerweise werden in den erfindungsgemässen Fettungsmitteln nichtionische oder anionische Substanzen als Emulgatoren eingesetzt, vorzugsweise Fettalkohole (d. h. Alkoholgemische mit 10 bis 25 C-Atomen) oder oxalkylierte Fettalkohole mit 5 bis 100 Alkylenoxidgruppen als nichtionische Emulgatoren oder deren Sulfate oder Phosphate als anionische Emulgatoren, insbesondere die Natrium, Kalium- oder Ammoniumsalze der anionischen Emulgatoren.

Als Hydrophobiermittel können im erfindungsgemäßen Verfahren alle für die Lederherstellung bekannten Hydrophobiermittel eingesetzt werden, insbesondere handelsübliche Systeme, wie sie in M. Hollstein: Bibliothek des Leders, Band 4 - Entfetten, Fetten, Hydrophobieren von Leder, 1983 beschrieben werden.

Die kommerziel verfügbaren Produkte enthalten insbesondere eine oder mehrere der im folgenden aufgeführten Komponenten:
1. Copolymere von alpha-Olefinen mit Dicarbonsäureanhydriden wie Maleinsäureanhydrid
2. Paraffine
3. Weißöle
4. einfache Silicone
5. funktionalisierte Silikone
6. Emulgatoren

Desweiteren können Hydrophobiermittel sämtliche Komponenten enthalten, die für Fettungsmittel beschrieben sind.

Neben anderen Fettungsmittelbestandteilen sind siliconbasierte Hydrophobiermittel und Hydrophobiermittel auf der Basis von Copolymeren von alpha-Olefinen mit Dicarbonsäureanhydriden umfangreich beschrieben worden, z.B. in EP-A 213480, WO 95/22627, WO 98/04748, EP-A 1087021 und WO 01168584. Weitere Beispiele für Hydrophobiermittel findet man in WO 93/17130 und EP-A 372746.

Art und Menge von eingesetzten, Gerbmitteln, Fettungsmitteln und Hydrophobiermitteln hängen von der Art des herzustellenden Lederartikels, der Art der Gerbung (Mineralgerbung oder metallfreie Gerbung), dem gewünschtem haptischem Profil und gefordertem physikalischem Verhalten in an sich bekannter Weise ab.

Dementsprechend setzt man zur Herstellung des Leders Gerbstoffe in den folgenden Mengen ein:
Polymergerbstoff (als Lösung eingestellt) in Mengen bis zu 20 Gew.-%, häufig 3-8 Gew.% und/oder
Synthane (als Pulver gerechnet) in Mengen bis zu 30 Gew.-%, häufig 4-12 Gew.-%, und/oder
Harzgerbstoff (als Pulver gerechnet) bis zu 15 Gew.-%, häufig 3-6 Gew.-% und/oder bis zu 30 Gew.% vegetabilem Gerbstoff, häufig 4-12 Gew%
wobei die Gesamtmenge an Gerbstoff üblicherweise bis 40 Gew.%, z.B. 4 bis 40 Gew.-% und häufig 10 bis 40 Gew.-% beträgt, wobei alle Angaben auf das Feuchtgewicht des Leders bezogen sind.

Fettungs und Hydrophobiermittel werden üblicherweise in den folgenden Mengen eingesetzt: bis zu 20 Gew.-% Fettungsmittel, häufig 6-12 Gew.-% und bis zu 20 Gew.-% Hydrophobiermittel, häufig 4-8 Gew.-%, jeweils auf das Feuchtgewicht des Leders bezogen.

Die Färbung kann sowohl einstufig als auch in 2 Stufen durchgeführt werden. Bei einer zweistufigen Färbung wird man zunächst in einer ersten Stufe das Leder mit der farbstoffhaltigen Flotte bei pH-Werten unterhalb 7,5, z.B. pH 3 bis 7,4 und vorzugsweise bei pH-Werten im Bereich von 4 bis 7,4 behandeln. Dieser Schritt dient zur gleichmäßigen Verteilung des Farbstoffs im Lederquerschnitt. Anschließend wird man in der zweiten Stufe bei pH-Werten von wenigstens 8 bis 11, insbesondere 8,5 bis 10,5 und speziell 8,5 bis 10 den Farbstoff in der oben beschriebenen Weise fixieren. Es ist auch möglich die Färbung in einem Einstufenverfahren durchzuführen ohne eine Verteilungsstufe der Fixierstufe vorzuschalten.

Gegebenenfalls wird man im Anschluss an die Färbung einen Waschprozess durchführen, um nicht chemischen gebundenen Farbstoff sowie im Farbstoff enthaltene Verunreinigungen, beispielsweise Farbstoffe, die keine Gruppe A enthalten, zu entfernen. Dieser Waschprozess ist jedoch nicht zwingend erforderlich, da in vielen Fällen bereits eine quantitative oder nahezu quantitative Fixierung des Farbstoffs vorliegt. Sofern man einen Waschprozess nachschaltet, wird man nach dem Färben das Leder 1 oder mehrere Male, z.B. 1 bis 6 mal und insbesondere 1 bis 4 mal mit Wasser waschen. Die Menge an Wasser wird in der Regel nicht mehr als 300 Gew.%, bezogen auf das Falzgewicht des Halbfertigprodukts, z.B. 100 bis 300 Gew.-% betragen. Die Waschdauer des einzelnen Waschschritts wird üblicherweise 5 bis 60 min. und insbesondere 10 bis 30 min. betragen.

Im Waschprozeß können auch nichtionische, anionische, kationische oder auch zwitterionische Hilfsmittel eingesetzt werden. Bevorzugt sind handelsübliche ionische Hilfsmittel z.B auf Basis von Polyvinylformamiden, Polyvinylpyrollidonen, Vinylpyrollidon/Vinylimidazol- Copolymeren oder auf Kondensaten von Dicarbonsäure oder Dicarbonsäureanhydride mit Aminen oder von Napthalinsulfonsäure mit Formaldehyd basieren können. Derartige Hilfsmitte werden beispielsweise in EP 0459 168, EP 0 520 182, US 5,342,916 und US 5,186 846 beschrieben.

Der Einsatz von Hilfsmitteln ist dann besonders sinnvoll, wenn im Farbstoff farbige Nebenprodukte enthalten sind oder wenn während der Fixierung farbige Nebenprodukte entstanden sind. Die Hilfsmittel stellen sicher, daß nicht mehr als dreimal, möglicherweise nur zweimal oder im Idealfall nur einmal gewaschen werden muß, um alle farbigen Nebenkomponenten quantitativ oder nahezu quantitav zu entfernen.

Die Lederfärbung inklusive Nachgerbung, Fettung und Nachbehandlung erfolgt im übrigen in an sich bekannter Weise, beispielsweise durch Färben im Walkfass oder in der Haspel. Derartige Verfahren sind ausführlich im Stand der Technik beschrieben, z.B. in: "Bibliothek des Leders", Band 3 (Gerbmittel, Gerbung und Nachgerbung) [1985], Band 4 (Entfetten, Fetten und Hydrophobieren bei der Lederherstellung) [1987] & Band 5 (Das Färben von Leder) [1987] Umschau Verlag; "Leather Technicians Handbook", 1983, von J. H. Sharphouse, publiziert von Leather Producers Association; und "Fundamentals of Leather Manufacturing", 1993, von E. Heidenmann, publiziert von Eduard Roether KG.

Die Färbung wird üblicherweise nach der Vorgerbung, d.h. vor, während oder nach der Nachgerbung durchgeführt. Die Färbung kann sowohl im gleichen Bad wie die Nachgerbung als auch in einem separaten Bad erfolgen. Vorzugsweise erfolgt die Färbung vor der Nachgerbung. Vorzugsweise erfolgt nach der Färbung und vor der Nachgerbung und Fettung einer oder mehrere der oben beschriebenen Waschschritte.

Dem Färbe- und Nachgerbvorgang schließt sich in der Regel ein Fettungsvorgang an, um die gewünschten haptischen Eigenschaften des Leders einzustellen. Nachgerbung und Fettung können jedoch auch in einem Prozessschritt durchgeführt werden. Der Verfahrensschritt Fettung kann an beliebiger Stelle des Wetendprozesses durchgeführt werden, bevorzugt ist die Durchführung am Ende des Wetendprozesses.

In der Regel wird man sowohl die Fettung als auch die Nachgerbung am Ende des Prozesses durch Absäuern fixieren, d.h. nach Färbung und gegebenenfalls Nachgerbung und Fettung folgt ein abschliessendes Absäuem. Üblicherweise wird man zum Absäuern den pH Wert des wässrigen Behandlungsbads durch Zugabe einer Säure, insbesondere Ameisensäure, auf einen Wert unterhalb 3,7 einstellen.

Mit dem erfindungsgemäßen Verfahren können grundsätzlich alle Ledertypen, d.h. nicht nachgegerbte Halbfertigprodukte wie Metalloxid-gegerbtes Leder (wet-blue bei Chromoxid-Gerbung und wet-white bei Aiuminiumoxid-Gerbung) und organisch, z.B. Aldehyd-gegerbtes Leder (wet-white) bwz. pflanzlich gegerbtes Leder, sowie nachgegerbte Halbfertigprodukte wie Borke oder Crustleder gefärbt werden.

Das erfindungsgemäße Verfahren ermöglicht insbesondere die Herstellung von gefärbten Ledern für beliebige Lederartikel, beispielsweise aus den Bereichen Schuh, Bekleidung, Automobil, Handschuh und Möbel. Das erfindungsgemäße Verfahren erlaubt auch die Herstellung von Taschenleder und von Reptilienleder für Accessoirs. Die Einstellung der für den jeweiligen Lederartikel geforderten haptischen, mechanischen und physikalischen Eigenschaften erfolgt in an sich bekannter Weise durch eine für den jeweiligen Artikel geeignete Auswahl von Hilfsmitteln, Fettungsmitteln, Hydrophobiermitteln und Nachgerbstoffen.

Das nach dem erfindungsgemäßigen Verfahren gefärbte Leder zeichnet sich auch bei sehr hoher Farbtiefe durch ein exzellentes Echtheitsniveau aus. Besonders herausragend sind Reibechtheiten und insbesondere Wasch-, Schweiß- und Migrationsechtheiten, was bei konventionell gefärbten Ledern nicht oder nur in sehr viel geringerem Ausmaß erreicht werden kann. Die nach dem erfindungsgemäßen Verfahren gefärbten Leder zeigen in Migrationsechtheitstests selbst bei hoher Feuchtigkeit und hohen Temperaturen, d.h. oberhalb 50° C, z.B. 60 bis 100°C keine oder nahezu keine Anschmutzung des Kontaktmaterials.

Qualitative und quantitative Bestimmung über UV/VIS Spektroskopie und HPLC zeigen, dass mit den erfindungsgemäßen Farbstoffen Fixiergrade zwischen 85 und 100% und häufig oberhalb 90 % erreicht werden.

Die folgenden Beispiele sollen die Erfindung näher erläutern, ohne sie einzuschränken:

### Herstellungsbeispiele:

### Beispiel 1a:

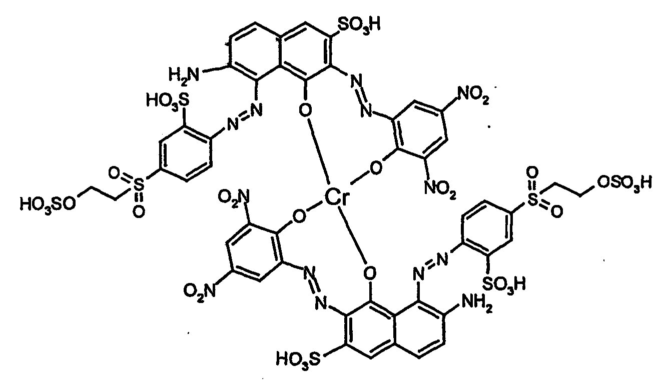

1) 1 mol MSP (3-(2-Sulfatoethylsulfonyl)-6-aminobenzolsulfonsäure) wurde im Eiswasser suspendiert und bei pH < 1 und einer Temperatur von 0-5°C mit überschüssigem Natriumnitrit und Salzsäure diazotiert. 1 mol Gammasäure wurde in 25 gew.-%iger Natronlauge gelöst und dann durch Zugabe von 21 gew.-%iger Salzsäure der pH-Wert unter 1 gestellt. Die Gammasäure fällt aus. Zu dieser Suspension wurde die diazotierte MSP eingestürzt. Die Reaktionsmischung wurde bei pH < 1 eine Stunde nachgerührt bis kein diazotiertes MSP bzw. freie Gammasäure mehr erkennbar war. Danach wurde der pH-Wert durch Zugabe von 15 gew.-%iger Natriumkarbonatlösung auf 3 bis 8 angehoben.
2) 1 mol 4,6-Dinitro-2-aminophenol wurde mit überschüssigem Natriumnitrit und Salzsäure bei pH < 1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde 0,20-0,30 mol Chrom(III)-sulfat zu der Reaktionsmischung gegeben und 1 Stunde nachgerührt. Der Farbstoff wurde durch Zugabe von NaCl ausgesalzen und abgesaugt.

In zu Beispiel 1a analoger Weise können die Metallkomplexe der Farbstoffen der allgemeinen Formel Dk-N=N-Napht-N=N-A erhalten werden (= Farbstoffe der allgemeinen Formel II mit r = k = 0, n=1), worin Dk für einen von den Diazokomponenten DK1 bis DK9, DK13, DK14, DK26, DK27, DK39 bis DK41 oder D58 oder für einen von A1 bis A12 abgeleiteten Rest steht, Napht für einen der bivalenten Reste II-2, II-4, II-6, II-8, II-10, II-12 und II-14 steht und A einen der Reste A1 bis A12 bedeutet. Die Kupplung des Restes A-N=N- erfolgt in ortho-Position zur Aminogruppe der Reste II-2, II-4, II-6, II-8, II-10, II-12 und II-14. Beispiele hierfür sind in der nachfolgenden Tabelle 1 angegeben.

### Beispiel 2a:

Die Umsetzung erfolgte nach der in Beispiel 1a beschriebenen Methode mit dem Unterschied, dass keine Umsetzung mit Chromsalzen folgte.

In zu Beispiel 2a analoger Weise können die Farbstoffe der allgemeinen Formel Dk-N=N-Napht-N=N-A erhalten werden (= Farbstoffe der allgemeinen Formel II mit r = k = 0, n=1), worin Dk für einen von den Diazokomponenten DK1 bis DK83 oder für einen von A1 bis A12 abgeleiteten Rest steht, Napht für einen der bivalenten Reste II-2, II-4, II-6, II-8, II-10, II-12 und II-14 steht und A einen der Reste A1 bis A12 bedeutet. Die Kupplung des Restes A-N=N- erfolgt in ortho-Position zur Aminogruppe der Reste II-2, II-4, II-6, II-8, II-10, II-12 und II-14. Beispiele hierfür sind in der nachfolgenden Tabelle 1 angegeben.

**Tabelle 1:**

| Beispiel-Nr. | Dk | Napht | A | Metall |
|---|---|---|---|---|
| 1a | DK5 | DK42 | A1 | Cr |
| 1b | DK41 | DK42 | A1 | Cr |
| 1c | DK41 | DK44 | A1 | Cr |
| 1d | DK5 | DK44 | A1 | Cr |
| 1e | DK3 | DK44 | A1 | Cr |
| 1f | DK5 | DK43 | A7 | Cr |
| 2a | DK5 | DK42 | A1 | - |
| 2b | DK5 | DK44 | A1 | - |
| 2c | DK12 | DK44 | A1 | - |
| 2d | A1 | DK59 | A1 | - |
| 2e | A1 | DK44 | A1 | - |
| 2f | A7 | DK44 | A7 | - |
| 2g | A4 | DK44 | A4 | - |
| 2h | A6 | DK44 | A6 | - |
| 2i | A1 | DK44 | A6 | - |
| 2j | A1 | DK45 | A1 | - |
| 2k | A6 | DK45 | A6 | - |

### Beispiel 3:

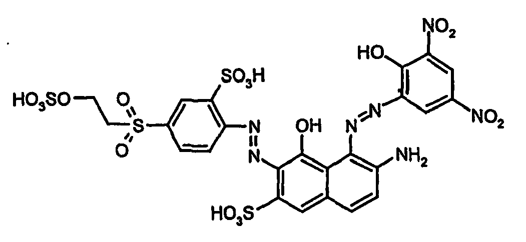

1) 1 mol 4,6-Dinitro-2-aminophenol wurde bei pH<1 und einer Temperatur von 0-5°C mit überschüssigem Natriumnitrit und Salzsäure diazotiert. 1 mol Gammasäure wurde in 25 gew.%iger Natronlauge gelöst und dann durch Zugabe von 21 gew.-%iger Salzsäure der pH-Wert unter 1 gestellt. Die Gammasäure fällt aus. Zu dieser Suspension wurde die diazotierte 4,6-Dinitro-2-aminophenol eingestürtzt. Die Reaktionsmischung wurde bei pH<1 eine Stunde nachgerührt bis kein diazotiertes 4,6-Dinitro-2-aminophenol bzw. freie Gammasäure erkennbar war. Danach wurde der pH-Wert durch Zugabe von 15 gew.%iger Natriumkarbonatlösung auf 3 bis 8 angehoben.
2) 1 mol MSP wurde im Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten. Nach beendeter Umsetzung wurde wurde NaCl zugegeben und der dadurch ausgefallener Farbstoff abgesaugt.

In zu Beispiel 3 analoger Weise können die Farbstoffe der allgemeinen Formel Dk-N=N-Napht-N=N-A bzw. ihre Metallkomplexe erhalten werden (= Farbstoffe der allgemeinen Formel II mit r = k = 0, n=1), worin Dk für einen von den Diazokomponenten DK1 bis DK83 abgeleiteten Rest steht, Napht für einen der bivalenten Reste II-2, II-4, II-6, II-8, II-10, II-12 und II-14 steht und A einen der Reste A1 bis A12 bedeutet. Die Kupplung des Restes A-N=N- erfolgt in ortho-Position zur Hydroxylgruppe der Reste II-2, II-4, II-6, II-8, II-10, II-12 und II-14.

### Beispiel 4a:

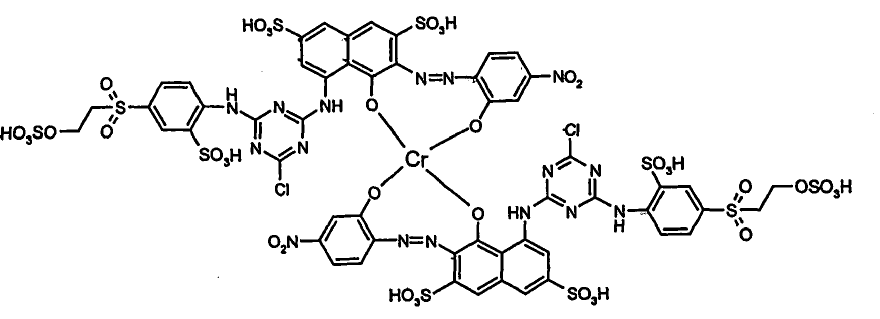

### Methode A

1) 1 mol Trichlor-1,3,5-triazin wurde bei einer Temperatur von 0-5°C im Wasser suspendiert. 1 mol H-Säure wurde in 25 gew.-%iger Natronlauge gelöst und zu der Suspension von Trichlortriazin bei einem pH-Wert von 1-4 zugetropft und 30 min nachgerührt.
2) 1 mol MSP wurde im Eiswasser suspendiert und zu der in Schritt 1) erhaltenen Reaktionsmischung gegeben. Danach wurde der pH-Wert durch Zugabe von Natrumkarbonat zwischen 5-8 gestellt und 1 Stunde nachgerührt.
3) 1 mol 5-Nitro-2-aminophenol wurde bei pH<1 und einer Temperatur von 0-5°C mit überschüssigem Natriumnitrit und Salzsäure diazotiert und zu der in Schritt 2) erhaltenen Reaktionsmischung gegeben. Der pH-Wert wurde durch Zugabe von 10 gew.%iger Natronlauge zwischen 3-8 gehalten. Nach beendeter Umsetzung wurde 0,20-0,30 mol Chrom(III)-sulfat zu der Reaktionsmischung gegeben und 1 Stunde nachgerührt. Der Farbstoff wurde durch Zugabe von NaCl ausgesalzen und abgesaugt.

### Methode B

1) 1 mol Trichlortriazin wurde bei einer Temperatur von 0-5°C im Wasser suspendiert. 1 mol H-Säure wurde in 25 gew.%iger Natronlauge gelöst und zu der Suspension von Trichlortriazin bei einem pH-Wert von 1-4 zugetropft und 30 min nachgerührt.
2) 1 mol 5-Nitro-2-aminophenol wurde bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von 10 gew.%iger Natronlauge zwischen 3-8 gehalten.
3) 1 mol MSP wurde im Eiswasser suspendiert und zu der in Schritt 2) erhaltenen Reaktionsmischung gegeben. Danach wurde der pH-Wert durch Zugabe von Natrumkarbonat zwischen 5-8 gestellt und 1 Stunde nachgerührt. Nach beendeter Umsetzung wurde 0,20-0,30 mol Chrom(III)-sulfat zu der Reaktionsmischung gegeben und 1 Stunde nachgerührt. Der Farbstoff wurde durch Zugabe von NaCl ausgesalzen und abgesaugt.

In zu Beispiel 4a analoger Weise können die Metallkomplexe von Farbstoffen der allgemeinen Formel Dk-N=N-Napht-NH-Tr-NH-A erhalten werden (= Farbstoffe der allgemeinen Formel V mit r = p = 0), worin Dk für einen von den Diazokomponenten DK1 bis DK9, DK13, DK14, DK26, DK27, Dk39-Dk41, Dk58 abgeleiteten Rest steht, Napht für einen der bivalenten Reste II-1, II-3, II-5, II-7, II-9, II-11 und II-13 steht, Trein 2-Chlor-1,3,5-triazin-4,6-diyl-Rest ist und A einen der Reste A1 bis A12 bedeutet. Die Kupplung des Restes Dk-N=N- erfolgt in ortho-Position zur Hydroxylgruppe der Reste II-1, II-3, II-5, II-7, II-9, II-11 und II-13.

### Beispiel 5a:

Die Umsetzung erfolgte nach der in Beispiel 4a beschriebenen Methode mit dem Unterschied, dass keine Umsetzung mit Chromsalzen folgte.

### Beispiel 5b:

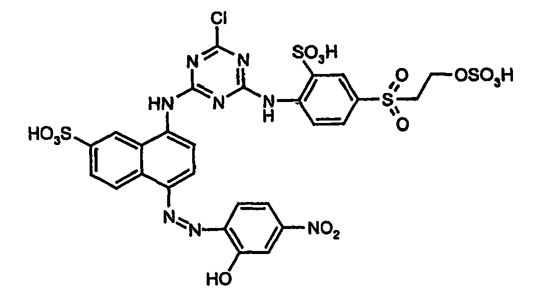

### Methode A:

1) 1 mol 5-Nitro-2-aminophenol wurde bei pH<1 und einer Temperatur von 0-5°C mit überschüssigem Natriumnitrit und Salzsäure diazotiert und mit einer Lösung von 1 mol Clevesäure-7 in 25 gew.-%iger Natronlauge umgesetzt. Der pH-Wert wurde unter 3 gehalten.
2) 1 mol Trichlortriazin wurde bei einer Temperatur von 0-5°C im Wasser suspendiert. Zu dieser Suspension tropft man die in der Schritt 1) erhaltene Reaktionsmischung bei einem pH-Wert von 1-4 und wird es 30 min nachgerührt.
3) 1 mol MSP wurde im Eiswasser suspendiert und zu der in Schritt 2) erhaltenen Reaktionsmischung gegeben. Danach wurde der-pH-Wert durch Zugabe von Natrumkarbonat zwischen 5-8 gestellt und 1 Stunde nachgerührt.Nach beendeter Umsetzung wurde der Farbstoff durch Zugabe von NaCl ausgefällt und abgesaugt.

### Methode B:

1) 1 mol Trichlortriazin wurde bei einer Temperatur von 0-5°C im Wasser suspendiert. 1 mol MSP wurde im Eiswasser suspendiert und zu der Suspension von Trichlortriazin bei einem pH-Wert von 1-4 zugegeben und 30 min nachgerührt.
2) 1 mol 5-Nitro-2-aminophenol wurde bei pH<1 und einer Temperatur von 0-5°C mit überschüssigem Natriumnitrit und Salzsäure diazotiert und mit einer Lösung von 1 mol Clevesäure-7 in 25 gew.%iger Natronlauge umgesetzt. Der pH-Wert wurde unter 3 gehalten.
3) Das in Schritt 2) erhaltenen Produkt wurde zu der in Schritt 1) erhaltenen Reaktionsmischung gegeben. Danach wurde der pH-Wert durch Zugabe von Natrumkarbonat zwischen 5-8 gestellt und 1 Stunde nachgerührt. Nach beendeter Umsetzung wurde der Farbstoff durch Zugabe von NaCl ausgefällt und abgesaugt.

In zu den Beispielen 5a und 5b analoger Weise können die Farbstoffe der allgemeinen Formel Dk¹-N=N-Napht-NH-Tr-NH-Dk² bzw. ihre Metallkomplexe erhalten werden (= Farbstoffe der allgemeinen Formel V mit r = p = 0), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Napht für einen der bivalenten Reste II-1, II-3, II-5, II-7, II-9, II-11, II-13, II-15 und II-16 steht, Tr ein 2-Chlor-1,3,5-triazin-4,6-diyl-Rest ist und A einen der Reste A1 bis A12 bedeutet. Die Kupplung des Restes Dk¹-N=N- erfolgt in ortho-Position zur Hydroxylgruppe der Reste II-1, II-3, II-5, II-7, II-9, II-11 und II-13.

### Beispiel 6a:

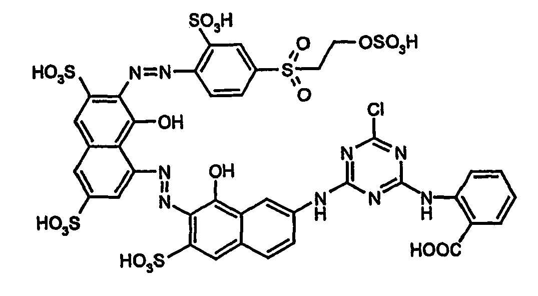

### Methode A:

1) 1 mol Trichlortriazin wurde bei einer Temperatur von 0-5°C im Wasser suspendiert. 1 mol Gammasäure wurde in 25 gew.-%iger Natronlauge gelöst und zu der Suspension von Trichlortriazin bei einem pH-Wert von 1-4 zugetropft und 30 min nachgerührt.
2) 1 mol Anthranilsäure wurde im Eiswasser suspendiert und zu der in Schritt 1) erhaltenen Reaktionsmischung gegeben. Danach wurde der pH-Wert durch Zugabe von Natrumkarbonat zwischen 5 und 8 gestellt und 1 Stunde nachgerührt.
3) 1 mol H-Säure wurde bei pH<1 und einer Temperatur von 0-5°C mit überschüssigem Natriumnitrit und Salzsäure diazotiert und zu der in Schritt 2) erhaltenen Reaktionsmischung gegeben. Der pH-Wert wurde durch Zugabe von 10 gew.-%iger Natronlauge zwischen 3-8 gehalten.
4) 1 mol MSP wurde im Eiswasser suspendiert, bei pH<1 und einer Temperatur von 0-5°C mit überschüssigem Natriumnitrit und Salzsäure diazotiert und zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Methode B:

1) 1 mol Trichlortriazin wurde bei einer Temperatur von 0-5°C im Wasser suspendiert. 1 mol Gammasäure wurde in 25 gew.%iger Natronlauge gelöst und zu der Suspension von Trichlor-triazin bei einem pH-Wert von 1 bis 4 zugetropft und 30 min nachgerührt.
2) 1 mol Anthranilsäure wurde im Eiswasser suspendiert und zu der in Schritt 1) erhaltenen Reaktionsmischung gegeben. Danach wurde der pH-Wert durch Zugabe von Natrumkarbonat zwischen 5 und 8 gestellt und 1 Stunde nachgerührt.
3) 1 mol H-Säure wurde in 25 gew.-%iger Natronlauge gelöst und mit 1,1-1,5 mol Acetanhydrid acetyliert.
4) 1 mol MSP wurde im Eiswasser suspendiert und bei pH<1 und einer Temperatur von 0-5°C mit überschüssigem Natriumnitrit und Salzsäure diazotiert und zu der in Schritt 3) erhaltenen Reaktionsmischung gegeben. Der pH-Wert wurde durch Zugabe von Natrumkarbonat zwischen 4 und 7 gestellt und gehalten. Nach beendeter Kupplung wurde der pH-Wert durch Zugabe von 21 gew.%iger Salzsäure unter 1 gestellt. und die Reaktionsmischung wurde auf 85-95°C erwärmt. Hierbei wurde die Acetylgruppe abgespalten.
5) Das in Schritt 4) erhaltene Produkt wurde bei pH<1 und einer Temperatur von 0-5°C mit überschüssigem Natriumnitrit und Salzsäure diazotiert und zu der in Schritt 2) erhaltenen Reaktionsmischung gegeben. Der pH-Wert wurde durch Zugabe von Natrumkarbonat zwischen 4 und 7 gestellt und gehalten. Nach beendeter Umsetzung wurde die Rektionsmischung ultrafiltriert und getrocknet.

In zu Beispiel 6a analoger Weise können die Farbstoffe der allgemeinen Formel A-N=N-P-N=N-Napht¹-NH-Tr-NH-Dk bzw. ihre Metallkomplexe erhalten werden (= Farbstoffe der allgemeinen Formel V mit r = 0, p =1 und P = Napht²), worin Dk für einen von den Diazokomponenten DK1 bis Dk83 abgeleiteten Rest steht, P und Napht¹ unabhängig voneinander für einen der bivalenten Reste II-1, II-3, II-5, II-7, II-9, II-11, II-13, II-15 und II16 oder für einen von den Diazokomponenten DK3, DK4, DK6, DK7, DK11, DK13, DK14, DK15, DK18, DK21 bis DK27, DK29, DK30, DK33, DK36, DK38, oder DK39 abgeleiteten Rest stehen, Tr ein 2-Chlor-1,3,5-triazin-4,6-diyl-Rest ist und A einen der Reste A1 bis A12 bedeutet. Die Kupplung des Reste A-N=N- und A-N=N-Napht²-N=N- erfolgt in ortho-Position zur Hydroxylgruppe in Napht² bzw. Napht¹. Beispiele hierfür sind in der Nachfolgenden Tabelle 2 angegeben.

**Tabelle 2:**

| Beispiel Nr. | A | P | Napht¹ | Dk | Metall |
|---|---|---|---|---|---|
| 6a | A1 | DK44 | DK42 | DK4 | - |
| 6b | A1 | DK39 | DK43 | DK5 | Cr |
| 6c | A1 | DK4 | DK42 | DK17 | Cr |
| 6d | A1 | DK27 | DK59 | DK4 | Cr |
| 6e | A7 | DK44 | DK42 | DK4 | - |
| 6f | A2 | DK44 | DK42 | DK4 | - |
| 6g | A4 | DK44 | DK42 | DK4 | - |
| 6h | A6 | DK27 | DK59 | DK4 | - |

### Beispiel 7:

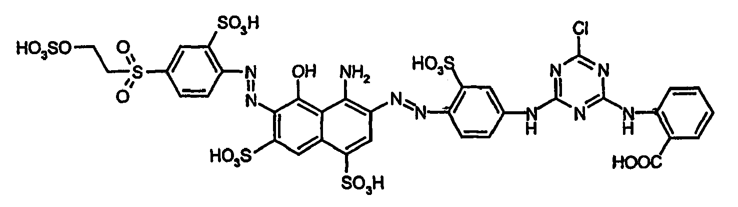

1) 1 mol Trichlortriazin wurde bei einer Temperatur von 0-5°C im Wasser suspendiert und zu dieser Suspension wurde 1 mol Paraminsäure bei einem pH-Wert von 1-4 zugegeben und 30 min nachgerührt.
2) 1 mol Anthranilsäure wurde im Eiswasser suspendiert und zu der in Schritt 1) erhaltenen Reaktionsmischung gegeben. Danach wurde der pH-Wert durch Zugabe von Natrumkarbonat zwischen 5 und 8 gestellt und 1 Stunde nachgerührt. Der Reaktionsprodukt wurde durch Zugabe von überschüssigem Natriumnitrit und Salzsäure bei pH<1 und einer Temperatur von 0-5°C diazotiert.
3) 1 mol K-Säure wurde in 25 gew.-%iger Natronlauge gelöst und und zu der in Schritt 2) erhaltenen Reaktionsmischung gegeben. Der pH-Wert wurde unter 2 gehalten.
4) 1 mol MSP wurde im Eiswasser suspendiert und durch Zugabe von überschüssigem Natriumnitrit und Salzsäure bei pH<1 und einer Temperatur von 0-5°C diazotiert. Anschließend wurde die diazotierte MSP zu der in Schritt 3) erhaltenen Reaktionsmischung gegeben. Der pH-Wert wurde durch Zugabe von 10 gew.%iger Natronlauge zwischen 3 und 8 gehalten. Nach beendeter Umsetzung wurde der Farbstoff durch Zugabe von NaCl ausgefällt und abgesaugt.

In zu Beispiel 7 analoger Weise können die Farbstoffe der allgemeinen Formel A-N=N-Napht¹-N=N-R-NH-Tr-NH-Dk bzw. ihre Metallkomplexe erhalten werden (= Farbstoffe der allgemeinen Formel V mit p = 0, r = 1), worin Dk für einen von den Diazokomponenten DK1 bis DK83 abgeleiteten Rest steht, Napht¹ einen der bivalenten Reste II-2, II-4, II-6, II-8, II-10, II-12 und II-14 steht, R für DK21, worin Q = H, oder für einen von Kk5 und Kk14 bis Kk16 abgeleiteten bivalenten Rest steht, Tr ein 2-Chlor-1,3,5-triazin-4,6-diyl-Rest ist und A einen der Reste A1 bis A12 bedeutet. Die Kupplung des Rest A-N=N- erfolgt in ortho-Position zur Hydroxylgruppe in Napht¹.

### Beispiel 8:

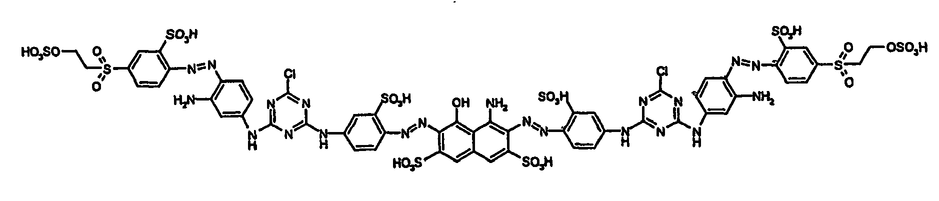

1) 1 mol MSP wurde in Eiswasser suspendiert und mit überschüssigem Natriumnitrit und Salzsäure bei pH<1 und einer Temperatur von 0-5°C diazotiert und mit einer wässrigen Lösung von 1 mol Metamin umgesetzt. Der pH-Wert wurde unter 3 gehalten.
2) 1 mol Trichlortriazin wurde bei einer Temperatur von 0-5°C im Wasser suspendiert und zu dieser Suspension wurde die bei Schritt 1) erhaltenen Reaktionsmischung bei einem pH-Wert von 1 bis 4 zugegeben und 30 min gegeben.
3) 1 mol Paraminsäure wurde im Eiswasser suspendiert und zu der in Schritt 2) erhaltenen Reaktionsmischung gegeben. Danach wurde der pH-Wert durch Zugabe von Natrumkarbonat zwischen 5-8 gestellt und es wurde 1 Stunde nachgerührt. Das Reaktionsprodukt wurde durch Zugabe von überschüssigem Natriumnitrit und Salzsäure bei pH<1 und einer Temperatur von 0-5°C diazotiert.
4) 0,5 mol H-Säure wurde in 25 gew.%iger Natronlauge gelöst und zu der in Schritt 3) erhaltenen Reaktionsmischung gegeben. Der pH-Wert wurde für eine Stunde unter 2 gehalten, danach durch Zugabe von Natriumkarbonat zwischen 3-8 gestellt und eine Stunde gehalten. Nach beendeter Umsetzung wurde die Rektionsmischung ultrafiltriert und getrocknet.

In zu Beispiel 8 analoger Weise können die Farbstoffe der allgemeinen Formel A-N=N-R-NH-Tr-NH-P-N=N-Napht-N=N-P-NH-Tr-NH-R-N=N-A bzw. ihre Metallkomplexe erhalten werden (= Farbstoffe der allgemeinen Formel X mit Dk¹ = Dk²= A, k=n=1), worin Napht für einen der bivalenten Reste II-2, II-4, II-6, II-8, II-10, II-12 und II-14 steht, P für DK21, worin Q = H, oder für einen von Kk5 und Kk14 bis Kk16 abgeleiteten bivalenten Rest steht, R für einen von DK22 bis DK25 abgeleiteten bivalenten Rest oder für einen bivalenten Reste II-1, II-3, II-5, II-7, II-9, II-11, II-13, II-15 oder II-16 steht, Tr ein 2-Chlor-1,3,5-triazin-4,6-diyl-Rest ist und A einen der Reste A1 bis A12 bedeutet.

### Beispiel 9a:

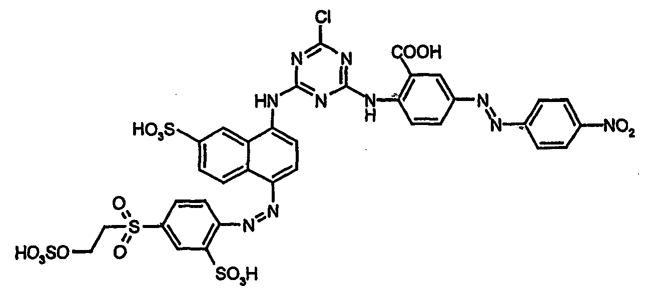

1) 1 mol p-Nitroanilin wurde in 21 gew.-%iger Salzsäure gelöst, danach mit überschüssigem Natriumnitrit bei pH<1 und einer Temperatur von 0-5°C diazotiert und anschließend zu einer Suspension von 1 mol Anthranilsäure und Eiswasser gegeben. Die Beaktionsmischung wurde bei pH<2 und T<10°C 1 Stunde nachgerührt.
2) 1 mol MSP wurde in Eiswasser suspendiert und mit überschüssigem Natriumnitrit und Salzsäure bei pH<1 und einer Temperatur von 0-5°C diazotiert und mit einer Lösung von 1 mol Clevesäure-7 in 25 gew.%iger Natronlauge umgesetzt. Der pH-Wert wurde unter 3 gehalten.
3) 1 mol Trichlortriazin wurde bei einer Temperatur von 0-5°C im Wasser suspendiert und zu dieser Suspension wurde die bei Schritt1) erhaltenen Reaktionsmischung bei einem pH-Wert von 1 bis 4 zugegeben und 30 min nachgerührt.
4) Das in Schritt 2) erhaltene Produkt wurde zu der in Schritt 3) erhaltenen Reaktionsmischung gegeben. Danach wurde der pH-Wert durch Zugabe von Natrumkarbonat zwischen 5-8 gestellt und es wurde 1 Stunde nachgerührt. Nach beendeter Umsetzung wurde der Farbstoff durch Zugabe von NaCl ausgefällt und abgesaugt.

In zu Beispiel 9a analoger Weise können die Farbstoffe der allgemeinen Formel Dk¹-N=N-P-NH-Tr-NH-R-N=N-Dk² bzw. ihre Metallkomplexe erhalten werden (= Farbstoffe der allgemeinen Formel VI), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, P und R für einen von DK3, DK4, DK6, DK7, DK11, DK13, DK14, DK15, DK18, DK21 bis DK27, DK29, DK30, DK33, DK36, DK38, DK39 oder DK60 bis DK83 abgeleiteten bivalenten Rest oder für einen bivalenten Reste II-1, II-3, II-5, II-7, II-9, II-11, II-13, II-15 oder II-16 stehen, Tr ein 2-Chlor-1,3,5-triazin-4,6-diyl-Rest ist und A einen der Reste A1 bis A12 bedeutet. Die Kupplung des Rest A-N=N- erfolgt in ortho-Position zur Hydroxylgruppe in II-1, II-3, II-5, II-7, II-9, II-11 und II-13. Beispiele für derartige Farbstoffe sind in Tabelle 3 angegeben.

**Tabelle 3:**

| Beispiel Nr. | Dk¹ | P | R | Dk² | Metall |
|---|---|---|---|---|---|
| 9a | A1 | DK46 | DK4 | DK17 | - |
| 9b | A1 | DK42 | DK4 | DK19 | - |
| 9c | DK5 | DK42 | DK4 | A1 | Cr |
| 9d | DK4 | DK43 | DK4 | A1 | Co |
| 9e | DK40 | DK59 | DK22 | A1 | Cr |
| 9f | DK5 | DK44 | DK22 | A1 | Cr |
| 9g | A7 | DK46 | DK4 | DK17 | - |
| 9h | DK5 | DK42 | DK4 | A4 | Cr |

### Beispiel 10:

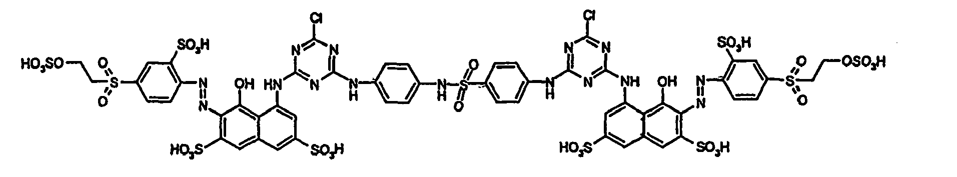

1) 1 mol Trichlortriazin wurde bei einer Temperatur von 0-5°C im Wasser suspendiert und zu dieser Suspension wurde 1 mol H-Säure die vorher in 25 gew.%iger Natronlauge gelöst wurde bei einem pH-Wert von 1 bis 4 zugegeben und 30 min nachgerührt.
2) 1 mol MSP wurde in Eiswasser suspendiert und mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.%iger Natronlauge zwischen 3 und 8 gehalten.
3) 0,5 mol 4,4-Diaminodiphenylsulfamid wurde in Wasser suspendiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 10 analoger Weise können die Farbstoffe der allgemeinen Formel A-N=N-Napht-NH-Tr-NH-Tk-NH-Tr-NH-Napht-N=N-Abzw. ihre Metallkomplexe erhalten werden (= Farbstoffe der allgemeinen Formel IX mit DK¹ =Dk² = A), worin Napht für einen bivalenten Reste II-1, II-3, II-5, II-7, II-9, II-11 oder II-13 steht, Tr-ein 2-Chlor-1 ,3,5-triazin-4,6-diyl-Rest ist, Tk für einen von einer Tetrazokomponenten Tk1 bis Tk20 abgeleiteten bivalenten Rest steht und A einen der Reste A1 bis A12 bedeutet. Die Kupplung des Rest A-N=N- erfolgt in ortho-Position zur Hydroxylgruppe in Napht.

### Beispiel 11a:

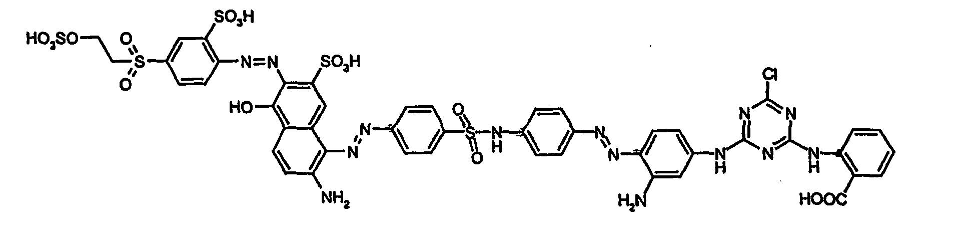

1) 1 mol 4,4-Diaminodiphenylsulfamid wurde mit überschüssigem Natriumnitrit und Salzsäure bei pH<1 und einer Temperatur von 0-5°C tetrazotiert. 1 mol I-Säure wurde in 25 gew.%iger Natronlauge gelöst und zu der Lösung des tetrazotierten 4,4-Diaminodiphenylsulfamid getropft. Der pH-Wert wurde hierbei durch Zugabe von Salzsäure unter 3 gehalten.
2) 1 mol MSP wurde in Eiswasser suspendiert und mit überschüssigem Natriumnitrit und Salzsäure bei pH<1 und einer Temperatur von 0-5°C diazotiert. Anschließend wurde das Reaktionsgemisch zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Metamin wurde zu der in Schritt 2) erhaltenen Reaktionsmischung gegeben und der pH-Wert wurde durch Zugabe von 10 gew.%iger Natronlauge zwischen 3 und 8 gehalten.
4) 1 mol Trichlortriazin wurde bei einer Temperatur von 0-5°C im Wasser suspendiert. Zu dieser Suspension wurde 1 mol Anthranilsäure zudosiert und bei einem pH-Wert von 1-4 30 min nachgerührt.
5) Das in Schritt 4) erhaltene Produkt wurde zu der in Schritt 3) erhaltenen Reaktionsmischung gegeben. Danach wurde der pH-Wert durch Zugabe von Natrumkarbonat zwischen 5 und 8 gestellt und 1 Stunde nachgerührt. Nach beendeter Umsetzung wurde der Farbstoff durch Zugabe von NaCl ausgefällt und abgesaugt.

### Beispiel 11b:

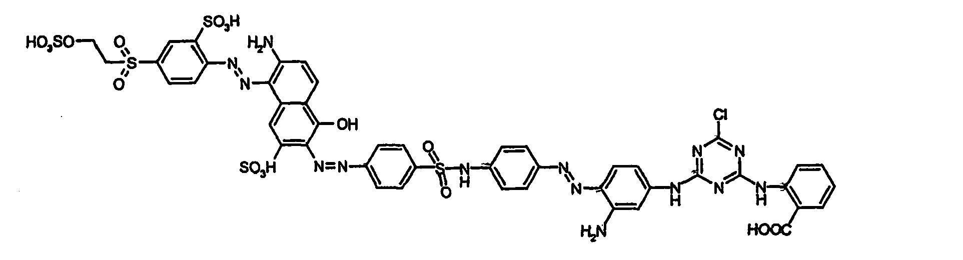

1) 1 mol MSP wurde in Eiswasser suspendiert und mit überschüssigem Natriumnitrit und Salzsäure bei pH<1 und einer Temperatur von 0-5°C diazotiert. 1 mol I-Säure wurde in 25 gew.-%iger Natronlauge gelöst und zu der Reaktionsmischung des diazotierten MSP gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.%iger Natronlauge zwischen 3-8 gehalten.
3) 1 mol Metamin wurde zu der in Schritt 2) erhaltenen Reaktionsmischung gegeben und der pH-Wert wurde durch Zugabe von 10 gew.%iger Natronlauge zwischen 3-8 gehalten.
4) 1 mol Trichlortriazin wurde bei einer Temperatur von 0-5°C im Wasser suspendiert. Zu dieser Suspension wurde 1 mol Anthranilsäure zudosiert und bei einem pH-Wert von 1-4 30 min nachgerührt.
5) Das in Schritt 4) erhaltene Produkt wurde zu der in Schritt 3) erhaltenen Reaktionsmischung gegeben. Danach wurde der pH-Wert durch Zugabe von Natrumkarbonat zwischen 5 und 8 gestellt und 1 Stunde nachgerührt. Nach beendeter Umsetzung wurde der Farbstoff durch Zugabe von NaCl ausgefällt und abgesaugt.

In zu den Beispielen 11a und 11b analoger Weise können die Farbstoffe der allgemeinen Formel A-N=N-Napht-N=N-Tk-N=N-P-NH-Tr-NH-Dk bzw. ihre Metallkomplexe erhalten werden (= Farbstoffe der allgemeinen Formel VII mit DK¹ = A), worin Dk für einen von den Diazokomponenten DK1 bis DK83 abgeleiteten Rest steht, Napht für einen bivalenten Reste II-1, II-3, II-5, II-7, II-9, II-11 oder II-13 steht, Tr ein 2-Chlor-1,3,5-triazin-4,6-diyl-Rest ist, Tk für einen von einer Tetrazokomponenten Tk1 bis Tk20 abgeleiteten bivalenten Rest steht und A einen der Reste A1 bis A12 bedeutet. Die Kupplung des Rest A-N=N- erfolgt bei der in Beispiel 11a angegebenen Reaktionsführung in ortho-Position zur Hydroxylgruppe in Napht und in ortho-Position zur Aminogruppe in Napht bei der in Beispiel 11b angegebenen Reaktionsführung.

### Beispiel 12a:

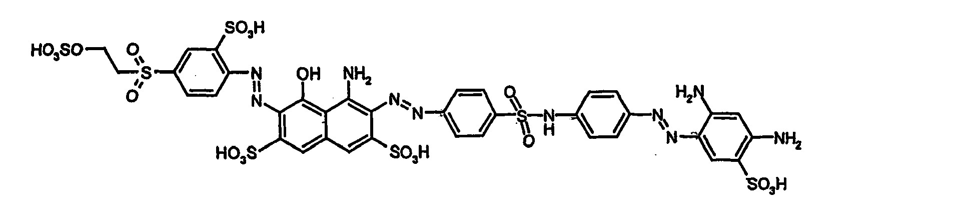

### Methode A

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.%iger Natronlauge gelöst und zu der Lösung des tetrazotierten 4,4-Diaminodiphenylsulfamid getropft. Der pH-Wert wurde hierbei durch Zugabe von Salzsäure unter 3 gehalten.
2) 1 mol MSP wurde in Eiswasser suspendiert und mit überschüssigem Natriumnitrit und Salzsäure bei pH<1 und einer Temperatur von 0-5°C diazotiert. Anschließend wurde das Reaktionsgemisch zu der in Schritt 1) erhaltenen Reaktionsmischung gegeben. Der pH-Wert wurde durch Zugabe von 15 gew.-%iger wässriger Sodalösung zwischen 3 und 8 gehalten.
3) 1 mol Metaminsäure wurde zu der in Schritt 2) erhaltenen Reaktionsmischung gegeben und der pH-Wert wurde durch Zugabe von 15 gew.%iger Sodalösung zwischen 3 und 8 gehalten. Nach beendeter Umsetzung wurde der Farbstoff durch Zugabe von NaCl ausgefällt und abgesaugt.

### Methode B:

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.%iger Natronlauge gelöst und zu der Reaktionsmischung des tetrazotierten 4,4-Diaminodiphenylsulfamids getropft. Der pH-Wert wurde unter 3 gehalten.
2) 1 mol Metaminsäure wurde zu der in Schritt 1) erhaltenen Reaktionsmischung gegeben und der pH-Wert wurde durch Zugabe von 10 gew.-%iger Natronlauge zwischen 3 und 8 gehalten.
3) 1 mol MSP wurde in Eiswasser suspendiert und mit überschüssigem Natriumnitrit und Salzsäure bei pH<1 und einer Temperatur von 0-5°C diazotiert. Anschließend wurde die Reaktionsmischung zu der in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde der Farbstoff durch Zugabe von NaCl ausgefällt und abgesaugt.

In zu Beispiel 12a analoger Weise können die Farbstoffe der allgemeinen formel A-N=N-Napht¹-N=N-Tk-N=N-Kk erhalten werden .(= Farbstoffe der allgemeinen Formel II mit r = k = 1, n=0), worin Kk für einen von den Kupplungskomponenten Kk1 bis Kk67, DK3, DK4, DK6, DK7, DK11, DK13, DK14, DK15, DK18, DK21 bis DK27, DK29, DK30, DK33, DK36, DK38, DK39 oder DK42 bis DK83 abgeleiteten Rest steht, Napht¹ für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes A-N=N-erfolgt in ortho-Position zur Hydroxylgruppe in Napht¹. Beispiele hierfür sind in der Tabelle 4 zusammengestellt.

**Tabelle 4**

| Beispiel Nr. | A | Napht¹ | Tk | Kk |
|---|---|---|---|---|
| 12a | A1 | DK44 | Tk18 | Kk15 |
| 12b | A1 | DK44 | Tk18 | Kk5 |
| 12c | A1 | DK44 | Tk18 | Kk2 |
| 12d | A1 | DK44 | Tk18 | Kk3 |
| 12e | A1 | DK44 | Tk18 | Kk6 |
| 12f | A1 | DK44 | Tk18 | Kk1 |
| 12g | A1 | DK44 | Tk18 | Kk4 |
| 12h | A1 | DK44 | Tk18 | Kk7 |
| 12i | A1 | DK44 | Tk18 | Kk9 |
| 12j | A1 | DK44 | Tk18 | Kk10 |
| 12k | A1 | DK44 | Tk18 | Kk14 |
| 121 | A1 | DK44 | Tk18 | Kk16 |
| 12m | A1 | DK44 | Tk18 | Kk26 |
| 12n | A1 | DK44 | Tk18 | Kk27 |
| 12o | A1 | DK44 | Tk18 | Kk40 |
| 12p | A1 | DK44 | Tk18 | Kk46 |
| 12q | A1 | DK44 | Tk18 | Kk48 |
| 12r | A1 | DK44 | Tk18 | Dk4 |
| 12s | A1 | DK44 | Tk18 | Dk11 |
| 12t | A1 | DK44 | Tk18 | Dk18 |
| 12u | A1 | DK44 | Tk18 | Dk29 |
| 12v | A1 | DK44 | Tk18 | Dk30 |
| 12z | A1 | DK44 | K18 | Dk39 |
| 12aa | A1 | DK44 | Tk16 | Kk5 |
| 12ab | A1 | DK44 | Tk16 | Kk3 |
| 12ac | A1 | DK44 | Tk16 | Kk4 |
| 12ad | A1 | DK44 | K16 | Dk4 |
| 12ae | A1 | DK44 | Tk19 | Kk5 |
| 12af | A1 | DK45 | Tk18 | Kk5 |
| 12ag | A2 | DK44 | Tk18 | Kk5 |
| 12ah | A7 | DK44 | Tk18 | Kk15 |
| 12ai | A4 | DK44 | Tk18 | Kk15 |
| 12aj | A5 | DK45 | Tk18 | Kk10 |
| 12ak | A9 | DK45 | Tk18 | Kk14 |
| 12al | A10 | DK45 | Tk18 | Kk16 |
| 12am | A11 | DK45 | Tk18 | Kk26 |
| 12an | A1 | DK44 | Tk18 | Kk11 |
| 12ao | A1 | DK44 | Tk18 | Kk51 |
| 12ap | A1 | DK44 | Tk18 | Kk52 |
| 12aq | A1 | DK44 | Tk18 | Kk53 |
| 12ar | A1 | DK44 | Tk18 | Kk54 |
| 12as | A1 | DK44 | Tk18 | Kk55 |
| 12at | A1 | DK44 | Tk18 | Kk56 |
| 12au | A1 | DK44 | Tk18 | Kk57 |
| 12av | A1 | DK44 | Tk18 | Kk58 |
| 12aw | A1 | DK44 | Tk18 | Kk59 |
| 12ax | A1 | D44 | Tk18 | Kk60 |
| 12ay | A1 | DK44 | Tk18 | Kk61 |
| 12az | A1 | DK44 | Tk18 | Kk62 |
| 12ba | A1 | DK44 | Tk18 | Kk63 |
| 12bb | A1 | DK44 | Tk18 | Kk64 |
| 12bc | A1 | DK44 | Tk18 | DK66 |
| 12bd | A1 | DK45 | Tk18 | Kk1 |
| 12be | A1 | DK45 | Tk18 | Kk2 |
| 12bf | A1 | DK45 | Tk18 | Kk3 |
| 12bg | A1 | DK45 | Tk18 | Kk4 |
| 12bh | A1 | DK45 | Tk18 | Kk6 |
| 12bi | A1 | DK45 | Tk18 | Kk7 |
| 12bj | A1 | DK45 | Tk18 | Kk10 |
| 12bk | A1 | DK45 | Tk18 | Kk11 |
| 12bl | A1 | DK45 | Tk18 | Kk14 |
| 12bm | A1 | DK45 | Tk18 | Kk15 |
| 12bn | A1 | DK45 | Tk18 | Kk16 |
| 12bo | A1 | DK45 | Tk18 | Kk51 |
| 12bp | A1 | DK45 | Tk18 | Kk53 |
| 12bq | A1 | DK45 | Tk18 | Kk54 |
| 12br | A1 | DK45 | Tk18 | Kk55 |
| 12bs | A1 | DK45 | Tk18 | Kk56 |
| 12bt | A1 | DK45 | Tk18 | Kk61 |
| 12bu | A1 | DK45 | Tk18 | Kk62 |
| 12bv | A1 | DK45 | Tk18 | Kk63 |
| 12bw | A1 | DK45 | Tk18 | Kk64 |
| 12bx | A1 | DK45 | Tk18 | DK66 |
| 12by | A1 | DK44 | Tk16 | Kk10 |
| 12bz | A1 | DK44 | Tk16 | Kk11 |
| 12ca | A1 | DK44 | Tk16 | Kk14 |
| 12cb | A1 | DK44 | Tk16 | Kk15 |
| 12cc | A1 | DK44 | Tk16 | Kk16 |
| 12cd | A1 | DK44 | Tk16 | Kk51 |
| 12ce | A1 | DK44 | Tk16 | Kk53 |
| 12cf | A1 | DK44 | Tk16 | Kk54 |
| 12cg | A1 | DK44 | Tk16 | Kk55 |
| 12ch | A1 | DK44 | Tk16 | Kk56 |
| 12ci | A1 | DK44 | Tk16 | Kk61 |
| 12cj | A1 | DK44 | Tk16 | Kk62 |
| 12ck | A1 | DK44 | Tk16 | Kk63 |
| 12cl | A1 | DK44 | Tk16 | Kk64 |
| 12cm | A1 | DK44 | Tk16 | DK66 |
| 12cn | A1 | DK44 | Tk19 | Kk2 |
| 12co | A1 | DK44 | Tk19 | Kk3 |
| 12cp | A1 | DK44 | Tk19 | Kk10 |
| 12cq | A1 | DK44 | Tk19 | Kk11 |
| 12cr | A1 | DK44 | Tk19 | Kk14 |
| 12cs | A1 | DK44 | Tk19 | Kk15 |
| 12ct | A1 | DK44 | Tk19 | Kk18 |
| 12cu | A1 | DK44 | Tk19 | Kk51 |
| 12cv | A1 | DK44 | Tk19 | Kk53 |
| 12cw | A1 | DK44 | Tk19 | Kk54 |
| 12cx | A1 | DK44 | Tk19 | Kk55 |
| 12cy | A1 | DK44 | Tk19 | Kk56 |
| 12cz | A1 | DK44 | Tk19 | Bk61 |
| 12da | A1 | DK44 | Tk19 | Kk62 |
| 12db | A1 | DK44 | Tk19 | Kk63 |
| 12dc | A1 | DK44 | Tk19 | Kk64 |
| 12dd | A1 | DK44 | Tk19 | DK66 |
| 12de | A1 | DK44 | Tk20 | Kk2 |
| 12df | A1 | DK44 | Tk20 | Kk3 |
| 12dg | A1 | DK44 | Tk20 | Kk5 |
| 12dh | A1 | DK44 | Tk20 | Kk10 |
| 12di | A1 | DK44 | Tk20 | Kk11 |
| 12dj | A1 | DK44 | Tk20 | Kk14 |
| 12dk | A1 | DK44 | Tk20 | Kk15 |
| 12dl | A1 | DK44 | Tk20 | Kk16 |
| 12dm | A1 | DK44 | Tk20 | Kk51 |
| 12dn | A1 | DK44 | Tk20 | Kk53 |
| 12do | A1 | DK44 | Tk20 | Kk54 |
| 12dp | A1 | DK44 | Tk20 | Kk55 |
| 12dq | A1 | DK44 | Tk20 | Kk56 |
| 12dr | A1 | DK44 | Tk20 | Kk61 |
| 12ds | A1 | DK44 | Tk20 | Kk62 |
| 12dt | A1 | DK44 | Tk20 | Kk63 |
| 12du | A1 | DK44 | Tk20 | Kk64 |
| 12dv | A1 | DK44 | Tk20 | DK66 |
| 12dw | A1 | DK45 | Tk16 | Kk2 |
| 12dx | A1 | DK45 | Tk16 | Kk3 |
| 12dy | A1 | DK45 | Tk16 | Kk5 |
| 12dz | A1 | DK45 | Tk16 | Kk10 |
| 12ea | A1 | DK45 | Tk16 | Kk11 |
| 12eb | A1 | DK45 | Tk16 | Kk14 |
| 12ec | A1 | DK45 | Tk16 | Kk15 |
| 12ed | A1 | DK45 | Tk16 | Kk16 |
| 12ee | A1 | DK45 | Tk16 | Kk51 |
| 12ef | A1 | DK45 | Tk16 | Kk53 |
| 12eg | A1 | DK45 | Tk16 | Kk54 |
| 12eh | A1 | DK45 | Tk16 | Kk55 |
| 12ei | A1 | DK45 | Tk16 | Kk56 |
| 12ej | A1 | DK45 | Tk16 | Kk61 |
| 12ek | A1 | DK45 | Tk16 | Kk62 |
| 12el | A1 | DK45 | Tk16 | Kk63 |
| 12em | A1 | DK45 | Tk16 | Kk64 |
| 12en | A1 | DK45 | Tk16 | DK66 |
| 12eo | A1 | DK45 | Tk19 | Kk2 |
| 12ep | A1 | DK45 | Tk19 | Kk3 |
| 12eq | A1 | DK45 | Tk19 | Kk5 |
| 12er | A1 | DK45 | Tk19 | Kk10 |
| 12es | A1 | DK45 | Tk19 | Kk11 |
| 12et | A1 | DK45 | Tk19 | Kk14 |
| 12eu | A1 | DK45 | Tk19 | Kk15 |
| 12ev | A1 | DK45 | Tk19 | Kk16 |
| 12ew | A1 | DK45 | Tk19 | Kk51 |
| 12ex | A1 | DK45 | Tk19 | Kk53 |
| 12ey | A1 | DK45 | Tk19 | Kk54 |
| 12ez | A1 | DK45 | Tk19 | Kk55 |
| 12fa | A1 | DK45 | Tk19 | Kk56 |
| 12fb | A1 | DK45 | Tk19 | Kk61 |
| 12fc | A1 | DK45 | Tk19 | Kk62 |
| 12fd | A1 | DK45 | Tk19 | Kk63 |
| 12fe | A1 | DK45 | Tk19 | Kk64 |
| 12ff | A1 | DK45 | Tk19 | DK66 |
| 12fg | A1 | DK45 | Tk20 | Kk2 |
| 12fh | A1 | DK45 | Tk20 | Kk3 |
| 12fi | A1 | DK45 | Tk20 | Kk5 |
| 12fj | A1 | DK45 | Tk20 | Kk10 |
| 12fk | A1 | DK45 | Tk20 | Kk11 |
| 12fl | A1 | DK45 | Tk20 | Kk14 |
| 12fm | A1 | DK45 | Tk20 | Kk15 |
| 12fn | A1 | DK45 | Tk20 | Kk16 |
| 12fo | A1 | DK45 | Tk20 | Kk51 |
| 12fp | A1 | DK45 | Tk20 | Kk53 |
| 12fq | A1 | DK45 | Tk20 | Kk54 |
| 12fr | A1 | DK45 | Tk20 | Kk55 |
| 12fs | A1 | DK45 | Tk20 | Kk56 |
| 12ft | A1 | DK45 | Tk20 | Kk61 |
| 12fu | A1 | DK45 | Tk20 | Kk62 |
| 12fv | A1 | DK45 | Tk20 | Kk63 |
| 12fw | A1 | DK45 | Tk20 | Kk64 |
| 12fx | A1 | DK45 | Tk20 | DK66 |
| 12fy | A1 | DK44 | Tk16 | Kk65 |
| 12fz | A1 | DK44 | Tk16 | Kk66 |
| 12ga | A1 | DK44 | Tk16 | Kk67 |
| 12gb | A1 | DK45 | Tk16 | Kk65 |
| 12gc | A1 | DK45 | Tk16 | Kk66 |
| 12gd | A1 | DK45 | Tk16 | Kk67 |
| 12ge | A1 | DK44 | Tk18 | Kk65 |
| 12gf | A1 | DK44 | Tk18 | Kk66 |
| 12gg | A1 | DK44 | K18 | Kk67 |
| 12gh | A1 | DK45 | Tk18 | Kk65 |
| 12g | A1 | DK45 | Tk18 | Kk66 |
| 12gj | A1 | DK45 | Tk18 | Kk67 |
| 12gk | A1 | DK44 | Tk19 | Kk65 |
| 12gl | A1 | DK44 | Tk19 | Kk66 |
| 12gm | A1 | DK44 | Tk19 | Kk67 |
| 12gn | A1 | DK45 | Tk19 | Kk65 |
| 12go | A1 | DK45 | Tk19 | Kk66 |
| 12gp | A1 | DK45 | Tk19 | Kk67 |
| 12gq | A1 | DK44 | Tk20 | Kk65 |
| 12gr | A1 | DK44 | Tk20 | Kk66 |
| 12gs | A1 | DK44 | Tk20 | Kk67 |
| 12gt | A1 | DK45 | Tk20 | Kk65 |
| 12gu | A1 | DK45 | Tk20 | Kk66 |
| 12gv | A1 | DK45 | Tk20 | Kk67 |

### Beispiel 12gw:

### Methode A

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Lösung des tetrazotierten 4,4-Diaminodiphenylsulfamid getropft. Der pH-Wert wurde hierbei durch Zugabe von Salzsäure unter 3 gehalten.
2) 1 mol MSP wurde in Eiswasser suspendiert und mit überschüssigem Natriumnitrit und Salzsäure bei pH<1 und einer Temperatur von 0-5°C diazotiert. Anschließend wurde das Reaktionsgemisch zu der in Schritt 1) erhaltenen Reaktionsmischung gegeben. Der pH-Wert wurde durch Zugabe von 15 gew.-%iger Sodalösung zwischen 3 und 8 gehalten.
3) 0,45 mol Metaminsäure und 0,55 mol 2,4-Diamino-1-methoxybenzol wurde gleichzeitig zu der in Schritt 2) erhaltenen Reaktionsmischung gegeben und der pH-Wert wurde durch Zugabe von 15 gew.%iger Sodalösung zwischen 3 und 8 gehalten. Nach beendeter Umsetzung wurde die Reaktionsmischung ultrafiltriert und sprühgetrocknet.

### Methode B:

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids getropft. Der pH-Wert wurde unter 3 gehalten.
2) 0,45 mol Metaminsäure und 0,55 mol 2,4-Diamino-1-methoxybenzol wurden gleichzeitig zu der in Schritt 1) erhaltenen Reaktionsmischung gegeben und der pH-Wert wurde durch Zugabe von 10 gew.%iger Natronlauge zwischen 3 und 8 gehalten.
3) 1 mol MSP wurde in Eiswasser suspendiert und mit überschüssigem Natriumnitrit und Salzsäure bei pH<1 und einer Temperatur von 0-5°C diazotiert. Anschließend wurde die Reaktionsmischung zu der in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde der Farbstoff durch Zugabe von NaCl ausgefällt und abgesaugt.

In zu Beispiel 12gw analoger Weise können die in Tabelle 4a angegebenen Farbstoffmischungen der allgemeinen Formel A-N=N-Napht¹-N=N-Tk-N=N-Kk (Formel IIb mit n = 0) hergestellt werden, wobei die Kupplung des Restes A-N=N- ortho zur Hydroxylgruppe in Napht¹ erfolgt.

**Tabelle 4a:**

| Beispiel Nr. | A | Napht¹ | Tk | Kk *) |
|---|---|---|---|---|
| 12gw | A1 | DK44 | Tk18 | Kk15:Kk55 (45:55) |
| 12gz | A1 | DK44 | Tk18 | Kk15:Kk56 (30:70) |
| 12ha | A1 | DK44 | Tk18 | Kk15:Kk66 (80:20) |
| 12hb | A1 | DK44 | Tk18 | Kk5:Kk10 (10:90) |
| 12hc | A1 | DK44 | Tk18 | Kk5:Kk14 (15:85) |
| 12hd | A1 | DK44 | Tk18 | Kk5:Kk15 (60:40) |
| 12he | A1 | DK44 | Tk18 | Kk5:Kk55 (75:25) |
| 12hf | A1 | DK44 | Tk18 | Kk5:Kk56 (40:60) |
| 12hh | A1 | DK44 | Tk18 | Kk5:Kk67 (20:80) |
| 12hi | A1 | DK44 | Tk18 | Kk5:DK66 (50:50) |
| 12hj | A1 | DK45 | Tk18 | Kk15:Kk55 (45:55) |
| 12hk | A1 | DK45 | Tk18 | Kk15:Kk56 (30:70) |
| 12hl | A1 | DK45 | Tk18 | Kk15:Kk66 (80:20) |
| 12hm | A1 | DK45 | Tk18 | Kk5:Kk10 (10:90) |
| 12hn | A1 | DK45 | Tk18 | Kk5:Kk14 (15:85) |
| 12ho | A1 | DK45 | Tk18 | Kk5:Kk15 (60:40) |
| 12hp | A1 | DK45 | Tk18 | Kk5:Kk55 (75:25) |
| 12hq | A1 | DK45 | Tk18 | Kk5:Kk56.(40:60) |
| 12hr | A1 | DK45 | Tk18 | Kk5:Kk67 (20:80) |
| 12hs | A1 | DK45 | Tk18 | Kk5:DK66 (50:50) |
| 12ht | A1 | DK44 | Tk16 | Kk5:Kk15 (45:55) |
| 12hu | A1 | DK44 | Tk16 | Kk15:Kk55 (45:55) |
| 12hv | A1 | DK44 | Tk19 | Kk15:Kk55 (45:55) |
| 12hw | A1 | DK44 | Tk20 | Kk15:Kk55 (45:55) |

| | | | | |
|---|---|---|---|---|
| * Der in Klammern angegebene Wert gibt das Molverhältnis der jeweiligen Kupplungskomponenten zueinander an. | | | | |

### Beispiel 13a:

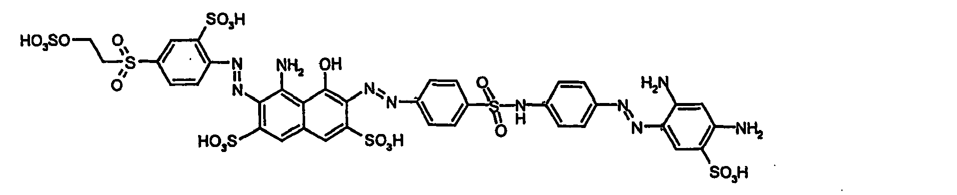

1) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.%iger Natronlauge gelöst und zu der Reaktionsmischung des diazotierten MSP gegeben. Der pH-Wert würde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.%iger Natronlauge zwischen 3-8 gehalten.
3) 1 mol Metaminsäure wurde zu der in Schritt 2) erhaltenen Reaktionsmischung gegeben und der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 13a analoger Weise können die Farbstoffe der allgemeinen Formel A-N=N-Napht¹-N=N-Tk-N=N-Kk erhalten werden (= Farbstoffe der allgemeinen Formel II mit r = k = 1, n=0), worin Kk für einen von den Kupplungskomponenten Kk1 bis KK64, DK3, DK4, DK6, DK7, DK11, DK13, DK14, DK15, DK18, DK21 bis DK27, DK29, DK30, DK33, DK36, DK38, DK39 oder DK42 bis DK83 abgeleiteten Rest steht, Napht für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes A-N=N- erfolgt in ortho-Position zur Aminogruppe in Napht¹. Beispiele hierfür sind in der nachfolgenden Tabelle 5 angegeben.

**Tabelle 5:**

| Beispiel Nr. | A | Napht¹ | Tk | Kk |
|---|---|---|---|---|
| 13a | A1 | DK44 | Tk18 | Kk15 |
| 13b | A1 | DK44 | Tk18 | Kk5 |
| 13c | A1 | DK44 | Tk18 | Kk2 |
| 13d | A1 | DK44 | Tk18 | Kk3 |
| 13e | A1 | DK44 | Tk18 | Kk6 |
| 13f | A1 | DK44 | Tk18 | Kk1 |
| 13g | A1 | DK44 | Tk18 | Kk4 |
| 13h | A1 | DK44 | Tk18 | Kk7 |
| 13i | A1 | DK44 | Tk18 | Kk9 |
| 13j | A1 | DK44 | Tk18 | Kk10 |
| 13k | A1 | DK44 | Tk18 | Kk14 |
| 13l | A1 | DK44 | Tk18 | Kk16 |
| 13m | A1 | DK44 | Tk18 | Kk26 |
| 13n | A1 | DK44 | Tk18 | Kk27 |
| 13o | A1 | DK44 | Tk18 | Kk40 |
| 13p | A1 | DK44 | Tk18 | Kk46 |
| 13q | A1 | DK44 | Tk18 | Kk48 |
| 13r | A1 | DK44 | Tk18 | Dk4 |
| 13s | A1 | DK44 | Tk18 | Dk11 |
| 13t | A1 | DK44 | Tk18 | Dk18 |
| 13u | A1 | DK44 | Tk18 | Dk29 |
| 13v | A1 | DK44 | Tk18 | Dk30 |
| 13z | A1 | DK44 | Tk18 | Dk39 |
| 13aa | A1 | DK44 | Tk16 | Kk5 |
| 13ab | A1 | DK44 | Tk16 | Kk3 |
| 13ac | A1 | DK44 | Tk16 | Kk4 |
| 13ad | A1 | DK44 | Tk16 | Dk4 |
| 13ae | A1 | DK44 | Tk19 | Kk5 |
| 13af | A1 | DK45 | Tk18 | Kk5 |
| 13ag | A2 | DK44 | Tk18 | Kk5 |
| 13ah | A7 | DK44 | Tk18 | Kk15 |
| 13ai | A4 | DK44 | Tk18 | Kk15 |
| 13aj | A1 | DK44 | Tk16 | Kk15 |
| 13ak | A1 | DK44 | Tk16 | Kk34 |
| 13al | A7 | DK44 | Tk18 | Kk3 |
| 13am | A7 | DK44 | Tk18 | Kk5 |
| 13an | A6 | DK45 | Tk18 | Kk10 |
| 13ao | A8 | DK45 | Tk18 | Kk14 |
| 13ap | A11 | DK45 | Tk18 | Kk16 |
| 13aq | A12 | DK45 | Tk18 | Kk26 |
| 13ar | A1 | DK44 | Tk18 | Kk11 |
| 13as | A1 | DK44 | Tk18 | Kk51 |
| 13at | A1 | DK44 | Tk18 | Kk52 |
| 13au | A1 | DK44 | Tk18 | Kk53 |
| 13av | A1 | DK44 | Tk18 | Kk54 |
| 13aw | A1 | DK44 | Tk18 | Kk55 |
| 13ax | A1 | DK44 | Tk18 | Kk56 |
| 13ay | A1 | DK44 | Tk18 | Kk57 |
| 13az | A1 | DK44 | Tk18 | Kk58 |
| 13ba | A1 | DK44 | Tk18 | Kk59 |
| 13bb | A1 | DK44 | Tk18 | Kk60 |
| 13bc | A1 | DK44 | Tk18 | Kk61 |
| 13bd | A1 | DK44 | Tk18 | Kk62 |
| 13be | A1 | DK44 | Tk18 | Kk63 |
| 13bf | A1 | DK44 | Tk18 | Kk64 |
| 13bg | A1 | DK44 | Tk18 | DK66 |
| 13bh | A1 | DK45 | Tk18 | Kk1 |
| 13bi | A1 | DK45 | Tk18 | Kk2 |
| 13bj | A1 | DK45 | Tk18 | Kk3 |
| 13bk | A1 | DK45 | Tk18 | Kk4 |
| 13bl | A1 | DK45 | Tk18 | Kk6 |
| 13bm | A1 | DK45 | Tk18 | Kk7 |
| 13bn | A1 | DK45 | Tk18 | Kk10 |
| 13bo | A1 | DK45 | Tk18 | Kk11 |
| 13bp | A1 | DK45 | Tk18 | Kk14 |
| 13bq | A1 | DK45 | Tk18 | Kk15 |
| 13br | A1 | DK45 | Tk18 | Kk16 |
| 13bs | A1 | DK45 | Tk18 | Kk51 |
| 13bt | A1 | DK45 | Tk18 | Kk53 |
| 13bu | A1 | DK45 | Tk18 | Kk54 |
| 13bv | A1 | DK45 | Tk18 | Kk55 |
| 13bw | A1 | DK45 | Tk18 | Kk56 |
| 13bx | A1 | DK45 | Tk18 | Kk61 |
| 13by | A1 | DK45 | Tk18 | Kk62 |
| 13bz | A1 | DK45 | Tk18 | Kk63 |
| 13ca | A1 | DK45 | Tk18 | Kk64 |
| 13cb | A1 | DK45 | Tk18 | DK66 |
| 13cc | A1 | DK44 | Tk16 | Kk10 |
| 13cd | A1 | DK44 | Tk16 | Kk11 |
| 13ce | A1 | DK44 | Tk16 | Kk14 |
| 13cf | A1 | DK44 | Tk16 | Kk16 |
| 13cg | A1 | DK44 | Tk16 | Kk51 |
| 13ch | A1 | DK44 | Tk16 | Kk53 |
| 13ci | A1 | DK44 | Tk16 | Kk54 |
| 13cj | A1 | DK44 | Tk16 | Kk55 |
| 13ck | A1 | DK44 | Tk16 | Kk56 |
| 13cl | A1 | DK44 | Tk16 | Kk61 |
| 13cm | A1 | DK44 | Tk16 | Kk62 |
| 13cn | A1 | DK44 | Tk16 | Kk63 |
| 13co | A1 | DK44 | Tk16 | Kk64 |
| 13cp | A1 | DK44 | Tk16 | DK66 |
| 13cq | A1 | DK44 | Tk19 | Kk2 |
| 13cr | A1 | DK44 | Tk19 | Kk3 |
| 13cs | A1 | DK44 | Tk19 | Kk10 |
| 13ct | A1 | DK44 | Tk19 | Kk11 |
| 13cu | A1 | DK44 | Tk19 | Kk14 |
| 13cv | A1 | DK44 | Tk19 | Kk15 |
| 13cw | A1 | DK44 | Tk19 | Kk16 |
| 13cx | A1 | DK44 | Tk19 | Kk51 |
| 13cy | A1 | DK44 | Tk19 | Kk53 |
| 13cz | A1 | DK44 | Tk19 | Kk54 |
| 13da | A1 | DK44 | Tk19 | Kk55 |
| 13db | A1 | DK44 | Tk19 | Kk56 |
| 13dc | A1 | DK44 | Tk19 | Kk61 |
| 13dd | A1 | DK44 | Tk19 | Kk62 |
| 13de | A1 | DK44 | Tk19 | Kk63 |
| 13df | A1 | DK44 | Tk19 | Kk64 |
| 13dg | A1 | DK44 | Tk19 | DK66 |
| 13dh | A1 | DK44 | Tk20 | Kk2 |
| 13di | A1 | DK44 | Tk20 | Kk3 |
| 13dj | A1 | DK44 | Tk20 | Kk5 |
| 13dk | A1 | DK44 | Tk20 | Kk10 |
| 13dl | A1 | DK44 | Tk20 | Kk11 |
| 13dm | A1 | DK44 | Tk20 | Kk14 |
| 13dn | A1 | DK44 | Tk20 | Kk15 |
| 13do | A1 | DK44 | Tk20 | Kk16 |
| 13dp | A1 | DK44 | Tk20 | Kk51 |
| 13dq | A1 | DK44 | Tk20 | Kk53 |
| 13dr | A1 | DK44 | Tk20 | Kk54 |
| 13ds | A1 | DK44 | Tk20 | Kk55 |
| 13dt | A1 | DK44 | Tk20 | Kk56 |
| 13du | A1 | DK44 | Tk20 | Kk61 |
| 13dv | A1 | DK44 | Tk20 | Kk62 |
| 13dw | A1 | DK44 | Tk20 | Kk63 |
| 13dx | A1 | DK44 | Tk20 | Kk64 |
| 13dy | A1 | DK44 | Tk20 | DK66 |
| 13dz | A1 | DK45 | Tk16 | Kk2 |
| 13ea | A1 | DK45 | Tk16 | Kk3 |
| 13eb | A1 | DK45 | Tk16 | Kk5 |
| 13ec | A1 | DK45 | Tk16 | Kk10 |
| 13ed | A1 | DK45 | Tk16 | Kk11 |
| 13ee | A1 | DK45 | Tk16 | Kk14 |
| 13ef | A1 | DK45 | Tk16 | Kk15 |
| 13eg | A1 | DK45 | Tk16 | Kk16 |
| 13eh | A1 | DK45 | Tk16 | Kk51 |
| 13ei | A1 | DK45 | Tk16 | Kk53 |
| 13ej | A1 | DK45 | Tk16 | Kk54 |
| 13ek | A1 | DK45 | Tk16 | Kk55 |
| 13el | A1 | DK45 | Tk16 | Kk56 |
| 13em | A1 | DK45 | Tk16 | Kk61 |
| 13en | A1 | DK45 | Tk16 | Kk62 |
| 13eo | A1 | DK45 | Tk16 | Kk63 |
| 13ep | A1 | DK45 | Tk16 | Kk64 |
| 13eq | A1 | DK45 | Tk16 | DK66 |
| 13er | A1 | DK45 | Tk19 | Kk2 |
| 13es | A1 | DK45 | Tk19 | Kk3 |
| 13et | A1 | DK45 | Tk19 | Kk5 |
| 13eu | A1 | DK45 | Tk19 | Kk10 |
| 13ev | A1 | DK45 | Tk19 | Kk11 |
| 13ew | A1 | DK45 | Tk19 | Kk14 |
| 13ex | A1 | DK45 | Tk19 | Kk15 |
| 13ey | A1 | DK45 | Tk19 | Kk16 |
| 13ez | A1 | DK45 | Tk19 | Kk51 |
| 13fa | A1 | DK45 | Tk19 | Kk53 |
| 13fb | A1 | DK45 | Tk19 | Kk54 |
| 13fc | A1 | DK45 | Tk19 | Kk55 |
| 13fd | A1 | DK45 | Tk19 | Kk56 |
| 13fe | A1 | DK45 | Tk19 | Kk61 |
| 13ff | A1 | DK45 | Tk19 | Kk62 |
| 13fg | A1 | DK45 | Tk19 | Kk63 |
| 13fh | A1 | DK45 | Tk19 | Kk64 |
| 13fi | A1 | DK45 | Tk19 | DK66 |
| 13fj | A1 | DK45 | Tk20 | Kk2 |
| 13fk | A1 | DK45 | Tk20 | Kk3 |
| 13fl | A1 | DK45 | Tk20 | Kk5 |
| 13fm | A1 | DK45 | Tk20 | Kk10 |
| 13fn | A1 | DK45 | Tk20 | Kk11 |
| 13fo | A1 | DK45 | Tk20 | Kk14 |
| 13fp | A1 | DK45 | Tk20 | Kk15 |
| 13fq | A1 | DK45 | Tk20 | Kk16 |
| 13fr | A1 | DK45 | Tk20 | Kk51 |
| 13fs | A1 | DK45 | Tk20 | Kk53 |
| 13ft | A1 | DK45 | Tk20 | Kk54 |
| 13fu | A1 | DK45 | Tk20 | Kk55 |
| 13fv | A1 | DK45 | Tk20 | Kk56 |
| 13fw | A1 | DK45 | Tk20 | Kk61 |
| 13fx | A1 | DK45 | Tk20 | Kk62 |
| 13fy | A1 | DK45 | Tk20 | Nk63 |
| 13fz | A1 | DK45 | Tk20 | Kk64 |
| 13ga | A1 | DK45 | Tk20 | DK66 |
| 13gb | A1 | DK44 | Tk16 | Kk65 |
| 13gc | A1 | DK44 | Tk16 | Kk66 |
| 13gd | A1 | DK44 | Tk16 | Kk67 |
| 13ge | A1 | DK45 | Tk16 | Kk65 |
| 13gf | A1 | DK45 | Tk16 | Kk66 |
| 13gg | A1 | DK45 | Tk16 | Kk67 |
| 13gh | A1 | DK44 | Tk18 | Kk65 |
| 13gi | A1 | DK44 | Tk18 | Kk66 |
| 13gj | A1 | DK44 | Tk18 | Kk67 |
| 13gk | A1 | DK45 | Tk18 | Kk65 |
| 13gl | A1 | DK45 | Tk18 | Kk66 |
| 13gm | A1 | DK45 | Tk18 | Kk67 |
| 13gn | A1 | DK44 | Tk19 | Kk65 |
| 13go | A1 | DK44 | Tk19 | Kk66 |
| 13gp | A1 | DK44 | Tk19 | Kk67 |
| 13gq | A1 | DK45 | Tk19 | Kk65 |
| 13gr | A1 | DK45 | Tk19 | Kk66 |
| 13gs | A1 | DK45 | Tk19 | Kk67 |
| 13gt | A1 | DK44 | Tk20 | Kk65 |
| 13gr | A1 | DK44 | Tk20 | Kk66 |
| 13gs | A1 | DK44 | Tk20 | Kk67 |
| 13gt | A1 | DK45 | Tk20 | Kk65 |
| 13gu | A1 | DK45 | Tk20 | Kk66 |
| 13gv | A1 | DK45 | Tk20 | Kk67 |

### Beispiel 13gw

1) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der Reaktionsmischung des diazotierten MSP gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.%iger Natronlauge zwischen 3-8 gehalten.
3) 0,45 mol Metaminsäure und 0,55 mol 2,4-Diamino-1-methoxybenzol wurden zu der in Schritt 2) erhaltenen Reaktionsmischung gegeben und der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 13gw analoger Weise können die in Tabelle 5a angegebenen Farbstoffmischungen der allgemeinen Formel A-N=N-Napht¹-N=N-Tk-N=N-Kk (Formel IIb mit n = 0) hergestellt werden, wobei die Kupplung des Restes A-N=N- ortho zur Aminogruppe in Napht¹ erfolgt.

**Tabelle 5a:**

| Beispiel | A | Napht¹ | Tk | Kk *) |
|---|---|---|---|---|
| 13gw | A1 | DK44 | Tk18 | Kk15:Kk55 (45:55) |
| 13gz | A1 | DK44 | Tk18 | Kk15:Kk56 (30:70) |
| 13ha | A1 | DK44 | Tk18 | Kk15:Kk66 (80:20) |
| 13hb | A1 | DK44 | Tk18 | Kk5:Kk10 (10:90) |
| 13hc | A1 | DK44 | Tk18 | Kk5:Kk14 (15:85) |
| 13hd | A1 | DK44 | Tk18 | Kk5:Kk15 (60:40) |
| 13he | A1 | DK44 | Tk18 | Kk5:Kk55 (75:25) |
| 13hf | A1 | DK44 | Tk18 | Kk5:Kk56 (40:60) |
| 13hh | A1 | DK44 | Tk18 | Kk5:Kk67 (20:80) |
| 13hi | A1 | DK44 | Tk18 | Kk5:DK66 (50:50) |
| 13hj | A1 | DK45 | Tk18 | Kk15:Kk55 (45:55) |
| 13hk | A1 | DK45 | Tk18 | Kk15:Kk56 (30:70) |
| 13hl | A1 | DK45 | Tk18 | Kk15:Kk66 (80:20) |
| 13hm | A1 | DK45 | Tk18 | Kk5:Kk10 (10:90) |
| 13hn | A1 | DK45 | Tk18 | Kk5:Kk14 (15:85) |
| 13ho | A1 | DK45 | Tk18 | Kk5:Kk15 (60:40) |
| 13hp | A1 | DK45 | Tk18 | Kk5:Kk55 (75:25) |
| 13hq | A1 | DK45 | Tk18 | Kk5:Kk56 (40:60) |
| 13hr | A1 | DK45 | Tk18 | Kk5:Kk67 (20:80) |
| 13hs | A1 | DK45 | Tk18 | Kk5:DK66 (50:50) |
| 13ht | A1 | DK44 | Tk16 | Kk5:Kk15 (45:55) |
| 13hu | A1 | DK44 | Tk16 | Kk15:Kk55 (45:55) |
| 13hv | A1 | DK44 | Tk19 | Kk15:Kk55 (45:55) |
| 13hw | A1 | DK44 | Tk20 | Kk15:Kk55 (45:55) |

| | | | | |
|---|---|---|---|---|
| * Der in Klammern angegebene Wert gibt das Molverhältnis der jeweiligen Kupplungskomponenten zueinander an. | | | | |

### Beispiel 14:

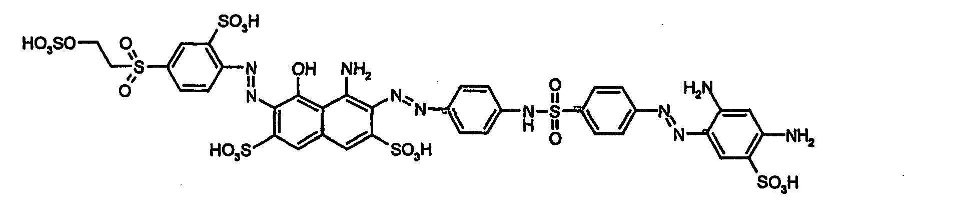

1) 1 mol 4,4-Diaminodiphenylsulfamid wurde mit überschüssigem Natriumnitrit und Salzsäure bei pH<1 und einer Temperatur von 0-5°C tetrazotiert. 1 mol Metaminsäure wurde in 25 gew.-%iger Natronlauge gelöst und zu der Reaktionsmischung des tetrazotierten 4,4-Diaminodiphenylsulfamids getropft. Der pH-Wert der Reaktionsmischung wurde durch Zugabe von 15 gew.-%iger Natriumkarbonatlösung zwischen 2-3 gehalten.
2) 1 mol H-Säure wurde in 25 gew.-%iger Natronlauge gelöst und zu der in Schritt 1) erhaltenen Reaktionsmischung gegeben. Der pH-Wert der Reaktionsmischung wurde durch Zugabe von 15 gew.-%iger Natriumkarbonatlösung zwischen 2-4 gehalten.
3) 1 mol MSP wurde in Eiswasser suspendiert und mit überschüssigem Natriumnitrit und Salzsäure bei pH<1 und einer Temperatur von 0-5°C diazotiert und anschließend zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

### Beispiel 15:

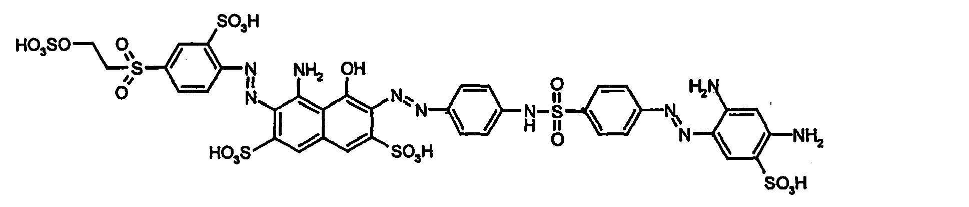

1) 1 mol 4,4-Diaminodiphenylsulfamid wurde mit überschüssigem Natriumnitrit und Salzsäure bei pH<1 und einer Temperatur von 0-5°C tetrazotiert. 1 mol Metaminsäure wurde in 25 gew.-%iger Natronlauge gelöst und zu der Reaktionsmischung des tetrazotierten 4,4-Diaminodiphenylsulfamids getropft. Der pH-Wert der Reaktionsmischung wurde durch Zugabe von 15 gew.-%iger Natriumkarbonatlösung zwischen 2-3 gehalten.
2) 1 mol MSP wurde im Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu der Reaktionsmischung des diazotierten MSP gegeben. Der pH-Wert wurde unter 2 gehalten.
3) Die in Schritt 2) erhaltene Reaktionsmischung wurde zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

### Beispiel 16a:

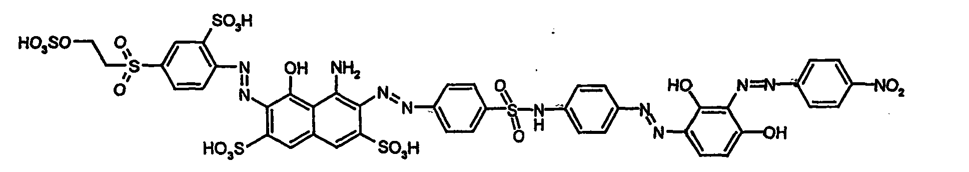

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids zugetropft. Der pH-Wert der Reaktionsmischung wurde durch Zugabe von 15 gew.-%iger Natriumkarbonatlösung zwischen 2 und 3 gehalten.
2) 1 mol MSP wurde in Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten.
4) 1 mol p-Nitroanilin wurde in 21 gew.-%iger Salzsäure gelöst, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 17a:

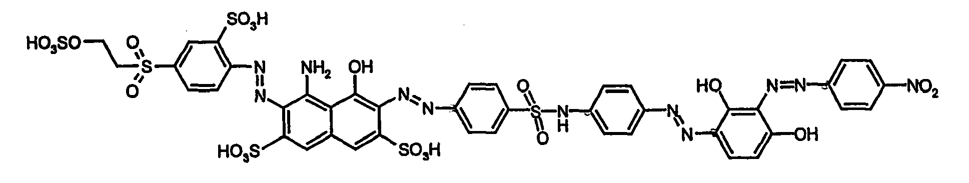

1) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu- der Reaktionsmischung des diazotierten MSP gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert. und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten.
4) 1 mol p-Nitroanilin wurde in 21 gew.-%iger Salzsäure gelöst, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 18:

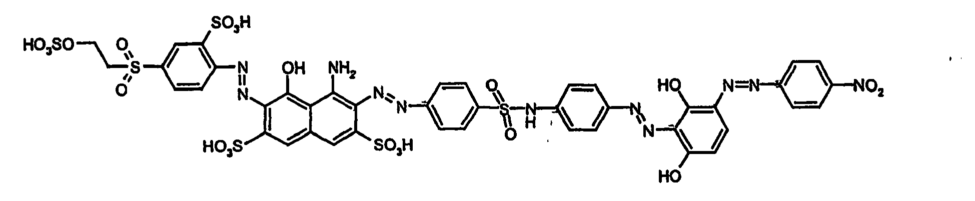

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids getropft. Der pH-Wert der Reaktionsmuschung wurde durch Zugabe von 15 gew.-%iger Natriumkarbonatlösung zwischen 2 und 3 gehalten.
2) 1 mol MSP wurde im Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge zwischen 3-8 gehalten.
3) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst und zu dieser Lösung wurde das diazotierte p-Nitroanilin innerhalb von 30 min bei einer Temperatur von unter 10°C zugetropft wobei man durch Zugabe von 10 gew.-%iger Natronlauge den pH-Wert oberhalb 9 hielt.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt

### Beispiel 19:

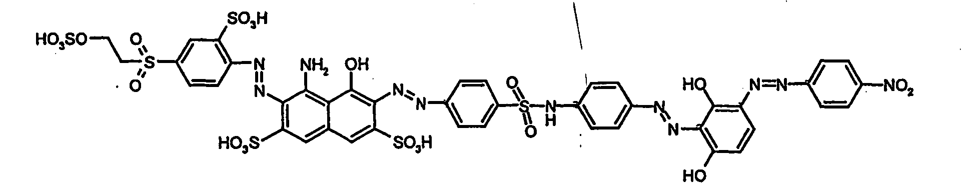

1) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu dem diazotierten MSP gegeben. Der pH-Wert wurde unter 2 gehalten.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst und zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

### Beispiel 20:

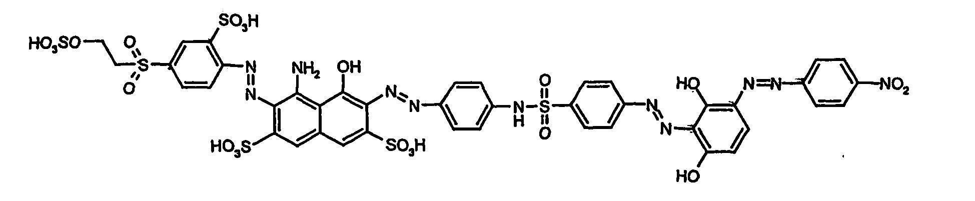

1) 1 mol p-Nitroanilin wurde in 21 gew.-%iger Salzsäure gelöst und danach mit überschüssigem Natriumnitrit bei pH<1 und einer Temperatur von 0-5°C diazotiert. 1 mol Resorcin wurde in 50 gew.-%iger Natronlauge bei einem pH-Wert >12gelöst und zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
2) 1 mol 4,4-Diaminodiphenylsulfamid wurde mit überschüssigem Natriumnitrit und Salzsäure bei pH<1 und einer Temperatur von 0-5°C tetrazotiert. und zu der in Schritt 1) erhaltenen Reaktionsmischung gegeben. Der pH-Wert wurde durch Zugabe von 10 gew.-%iger Natronlauge zwischen 3 und 5 gehalten.
3) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.%iger Natronlauge gelöst und zu dem diazotiertem MSP gegeben. Der pH-Wert wurde unter 2 gehalten.
4) Die in Schritt 3) erhaltene Reaktionsmischung wurde zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu den Beispielen 16a und 18 analoger Weise können die Farbstoffe der allgemeinen Formel Dk¹-N=N-Napht¹-N=N-Tk-N=N-Kk-N=N-Dk² bzw. deren Metallkomplexe erhalten werden (= Farbstoffe der allgemeinen Formel II mit r = k = n = 1), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Kk für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes Dk¹-N=N-erfolgt in ortho-Position zur Hydroxygruppe in Napht¹. Beispiele hierfür sind die in der nachfolgenden Tabelle 6 angegebenen Farbstoffe und Metallkomplexe.

**Tabelle 6:**

| Beispiel Nr. | Dk¹ | Napht¹ | Tk | Kk | Dk² | Metall |
|---|---|---|---|---|---|---|
| 16a | A1 | DK44 | Tk18 | Kk3 | DK17 | - |
| 16b | A1 | DK44 | Tk18 | Kk3 | DK5 | Fe |
| 16c | A1 | DK44 | Tk18 | Kk3 | DK5 | Cr |
| 16d | A1 | DK44 | Tk18 | Kk3 | DK40 | - |
| 16e | DK17 | DK44 | Tk18 | Kk3 | A1 | - |
| 16f | DK17 | DK44 | Tk18 | Kk3 | A7 | - |
| 16g | DK17 | DK44 | Tk18 | Kk5 | A7 | - |
| 16h | DK5 | DK44 | Tk18 | Kk3 | A1 | Fe |
| 16i | DK5 | DK44 | Tk18 | Kk3 | A1 | Cr |
| 16j | DK5 | DK44 | Tk16 | Kk5 | A12 | - |
| 16k | DK17 | DK45 | Tk16 | Kk3 | A10 | - |

In zu den Beispielen 17a, 19 und 20 analoger Weise können die Farbstoffe der allgemeinen Formel Dk¹-N=N-Napht¹-N=N-Tk-N=N-Kk-N=N-Dk² bzw. deren Metallkomplexe erhalten werden (= Farbstoffe der allgemeinen Formel II mit r = k = n = 1), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Kk für einen von den Kupplungskomponenten Kk2, Kk3, Kk5, Kk6, Kk14, Kk15, Kk16, Kk49 oder Kk50 abgeleiteten bivalenten Rest steht, Napht¹ für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes Dk¹-N=N-erfolgt in ortho-Position zur Aminogruppe in Napht¹. Beispiele hierfür sind die in der nachfolgenden Tabelle 7 angegebenen Farbstoffe und Metallkomplexe.

**Tabelle 7**

| Beispiel Nr. | Dk¹ | Napht¹ | Tk | Kk | Dk² | Metall |
|---|---|---|---|---|---|---|
| 17a | A1 | DK44 | Tk18 | Kk3 | DK17 | - |
| 17b | A1 | DK44 | Tk18 | Kk3 | DK5 | Fe |
| 17c | A1 | DK44 | Tk18 | Kk3 | DK5 | Cr |
| 17d | A1 | DK44 | Tk18 | Kk3 | DK40 | - |
| 17e | DK17 | DK44 | Tk18 | Kk3 | A1 | - |
| 17f | DK17 | DK44 | Tk18 | Kk3 | A7 | - |
| 17g | DK17 | DK44 | Tk18 | Kk5 | A1 | - |
| 17h | DK5 | DK44 | Tk18 | Kk3 | A1 | - |
| 17i | DK5 | DK44 | Tk18 | Kk3 | A5 | - |
| 17j | A1 | DK44 | Tk18 | Kk3 | A1 | - |
| 17k | DK5 | DK44 | Tk16 | Kk5 | A9 | - |
| 17l | DK17 | DK45 | Tk16 | Kk3 | A11 | - |

### Beispiel 21:

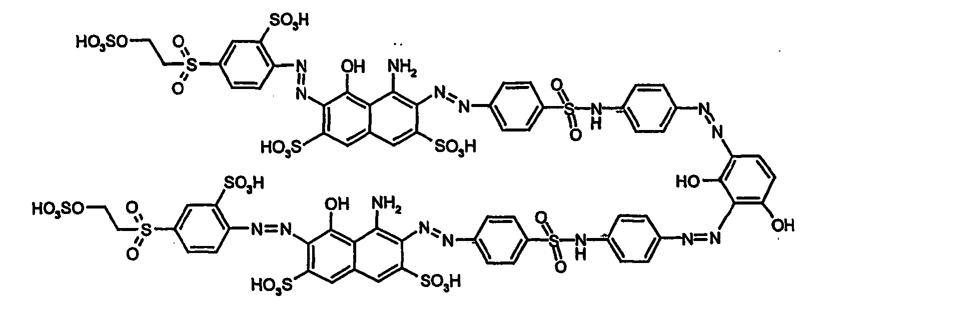

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.%iger Natronlauge gelöst und zu der Reaktionsmischung des tetrazotierten 4,4-Diaminodiphenylsulfamids zugetropft. Der pH-Wert der Reaktionsmischung wurde durch Zugabe von 15 gew.-%iger Natriumkarbonatlösung zwischen 2 und 3 gehalten.
2) 1 mol MSP wurde in Eiswasser suspendiert und mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.%iger Natronlauge zwischen 3 und 8 gehalten.
3) 0,5 mol Resorcin wurde zu der in Schritt 2) erhaltenen Reaktionsmischung gegeben und der pH-Wert wurde durch Zugabe von 10 gew.%iger Natronlauge zwischen 3 und 8 gehalten. Nach beendeter Umsetzung wurde der Farbstoff durch Zugabe von NaCl ausgefällt und abgesaugt.

In zu Beispiel 21 analoger Weise können die Farbstoffe der allgemeinen formel [A-N=N-Napht¹-N=N-Tk-N=N]₂-Kk erhalten werden **(=** Farbstoffe der allgemeinen Formel III mit Dk¹ = Dk² = A, Napht¹ = Napht² und Tk¹ = Tk²), worin Kk für einen von den Kupplungskomponenten Kk2, Kk3, Kk5, Kk6, Kk14, Kk15, Kk16, Kk49 oder Kk50 abgeleiteten bivalenten Rest steht, Napht1 für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes A-N=N- erfolgt in ortho-Position zur Hydroxygruppe in Napht¹.

### Beispiel 22:

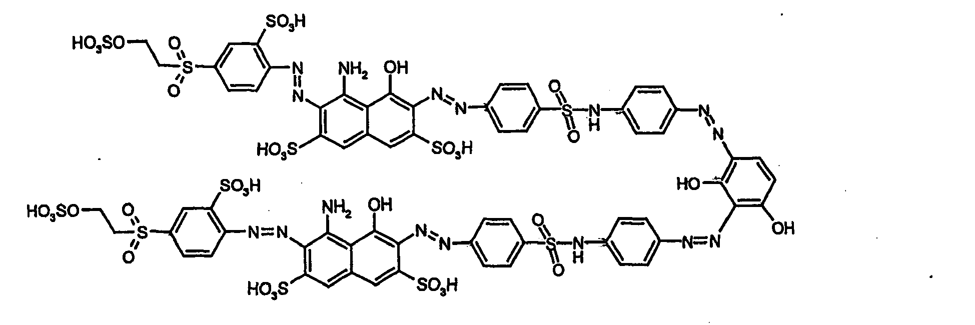

1) 1 mol MSP wurde in Eiswasser suspendiert und mit überschüssigem Natriumnitrit und Salzsäure bei pH<1 und einer Temperatur von 0-5°C diazotiert. 1 mol H-Säure wurde in 25 gew.-%iger Natronlauge gelöst und zu dem diazotierten MSP gegeben. Der pH-Wert wurde unter 2 gehalten.
2) 1 mol 4,4-Diaminodiphenylsulfamid wurde mit überschüssigem Natriumnitrit und , Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.%iger Natronlauge zwischen 3 und 8 gehalten.
3) 0,5 mol Resorcin wurde zu der in Schritt 2) erhaltenen Reaktionsmischung gegeben und der pH-Wert wurde durch Zugabe von 10 gew.-%iger Natronlauge zwischen 3 und 8 gehalten. Nach beendeter Umsetzung wurde der Farbstoff durch Zugabe von NaCl ausgefällt und abgesaugt.

In zu Beispiel 22 analoger Weise können die Farbstoffe der allgemeinen Formel [A-N=N-Napht¹-N=N-Tk-N=N]₂-Kk erhalten werden (= Farbstoffe der allgemeinen Formel III mit Dk¹ = Dk² = A, Napht¹ = Napht² und Tk¹ = Tk²), worin Kk für einen von den Kupplungskomponenten Kk2, Kk3, Kk5, Kk6, Kk14, Kk15, Kk16, Kk49 oder Kk50 abgeleiteten bivalenten Rest steht, Napht1 für einen der bivalenten Reste II-2, II-4, II-6, II-8, II-10, II-12 und II-14 steht, Tk für einen von einer Tetrazokomponenten Tk1 bis Tk20 abgeleiteten bivalenten Rest steht und A einen der Reste A1 bis A12 bedeutet. Die Kupplung des Restes A-N=N- erfolgt in ortho-Position zur Aminogruppe in Napht¹.

### Beispiel 23:

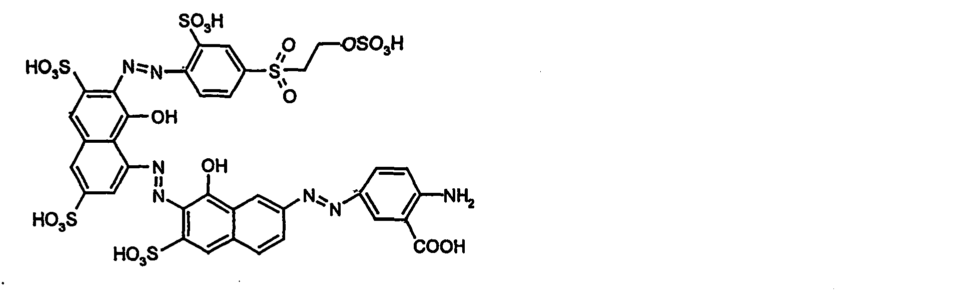

1) 1 mol Gammasäure wurde in 25 gew.%iger Natronlauge gelöst, mit überschüssigem Natriumnitrit und Salzsäure bei pH<1 und einer Temperatur von 0-5°C diazotiert und zu einer wässrigen Lösung von 1 mol Anthranilsäure zugetropft. Der pH-Wert der Reaktionsmischung wurde durch Zugabe von 10 gew.-%iger Natronlauge zwischen 5 und 10 gehalten.
2) 1 mol H-Säure wurde in 25 gew.%iger Natronlauge gelöst und mit überschüssigem Natriumnitrit und Salzsäure bei pH<1 und einer Temperatur von 0-5°C diazotiert. Zu dieser Reaktionsmischung gab man die in Schritt 1) erhaltenen Reaktionsmischung. Der pH-Wert wurde durch Zugabe von 10 gew.%iger Natronlauge zwischen 3 und 8 gehalten.
3) 1 mol MSP wurde im Eiswasser suspendiert und mit überschüssigem Natriumnitrit und Salzsäure bei pH<1 und einer Temperatur von 0-5C diazotiert und anschließend zu der in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde der Farbstoff durch Zugabe von NaCl ausgefällt und abgesaugt.

In zu Beispiel 23 analoger Weise können die Farbstoffe der allgemeinen Formel A-N=N-Napht¹-N=N-Napht²-N=N-Kk erhalten werden(= Farbstoffe der allgemeinen Formel XII mit p = 1, n= 0, P = Napht¹, R = Napht²), worin Kk für einen von den Kupplungskomponenten Kk1 bis Kk48 oder Kk51 bis Kk67 abgeleiteten bivalenten Rest steht, Napht1 und Napht2 jeweils für einen der bivalenten Reste II-1, II-3, II-5, II-7, II-9, II-11, II-13 oder II-15 stehen und A einen der Reste A1 bis A12 bedeutet. Die Kupplung des Restes Napht¹-N=N- erfolgt in ortho-Position zur Hydroxygruppe in Napht².

### Beispiel 24:

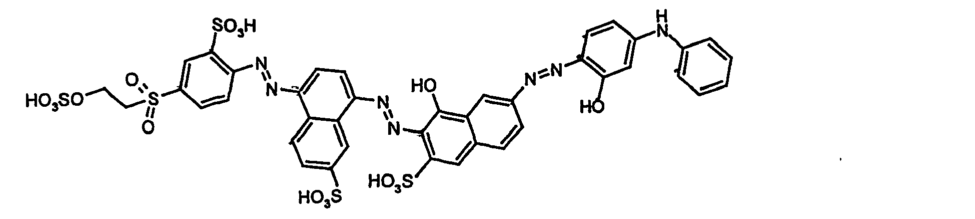

1) 1 mol Gammasäure wurde in 25 gew.-%iger Natronlauge gelöst, mit überschüssigem Natriumnitrit und Salzsäure bei pH<1 und einer Temperatur von 0-5°C diazotiert und zu einer wässrigen Suspension von 1 mol 3-Phenylaminophenol zugetropft. Der pH-Wert der Reaktionsmischung wurde durch Zugabe von 10 gew.-%iger Natronlauge zwischen 5 und 10 gehalten.
2) 1 mol Clevesäure-7 wurde in 25 gew.-%iger Natronlauge gelöst. Gleichzeitig wurde 1 mol MSP im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde
3) Die in Schritt 2) Reaktionsmischung wurde mit überschüssigem Natriumnitrit und Salzsäure bei pH<1 und einer Temperatur von 0-5C diazotiert. Zu dieser Reaktionsmischung gibt man die in Schritt 1) erhaltenen Reaktionsmischung. Der pH-Wert wurde durch Zugabe von 10 gew.%iger Natronlauge zwischen 3-8 gehalten. Nach beendeter Umsetzung der Farbstoff wurde durch Zugabe von NaCl ausgefällt und abgesaugt.

In zu Beispiel 24 analoger Weise können die Farbstoffe der allgemeinen Formel A-N=N-Napht¹-N=N-Napht²-N=N-Kk erhalten werden (= Farbstoffe der allgemeinen Formel XII mit p = 1, n= 0, P = Napht¹, R = Napht²), worin Kk für einen von den Kupplungskomponenten Kk1 bis Kk48 oder Kk51 bis Kk67 abgeleiteten bivalenten Rest steht, Napht¹ und Napht² jeweils für einen der bivalenten Reste II-1, II-3, II-5, II-7, II-9, II-11, II-13 oder II-15 stehen und A einen der Reste A1 bis A12 bedeutet. Die Kupplung des Restes A-N=N-Napht¹-N=N- erfolgt in ortho-Position zur Hydroxygruppe in Napht².

### Beispiel 25:

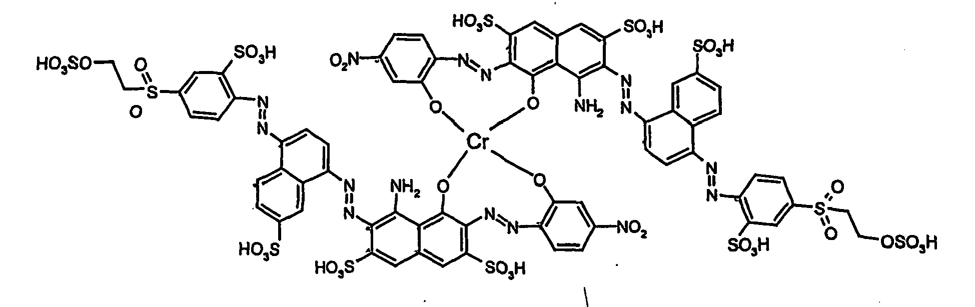

1) 1 mol Clevesäure-7 wurde in 25 gew.-%iger Natronlauge gelöst. Gleichzeitig wurde 1 mol MSP in Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde.
2) 1 mol H-Säure wurde in 25 gew.%iger Natronlauge gelöst. Gleichzeitig wurde die in der Schritt 1) erhaltene Reaktionsmischung mit überschüssigem Natriumnitrit und Salzsäure bei pH<1 und einer Temperatur von 0-5°C diazotiert und zu der Lösung der H-Säure gegeben. Der pH-Wert wurde durch Zugabe von 10 gew.%iger Natronlauge zwischen 1 und 4 gehalten.
3) 1 mol 5-Nitro-2-aminophenol wurde bei pH<1 und einer Temperatur von 0-5°C mit überschüssigem Natriumnitrit und Salzsäure diazotiert und anschließend zu der in Schritt 2) erhaltenen Reaktionsmischung gegeben. Der pH-Wert wurde durch Zugabe von 10 gew.%iger Natronlauge zwischen 3-8 gehalten. Nach beendeter Umsetzung wurde 0,20-0,30 mol Chrom(III)-sulfat zu der Reaktionsmischung gegeben und 1 Stunde nachgerührt. Der Farbstoff wurde durch Zugabe von NaCl ausgefällt und abgesaugt.

### Beispiel 26:

Die Herstellung erfolgte analog der in Beispiel 25 angegebenen Vorschrift, wobei im letzten Schritt keine Metallkomplexierung durchgeführt wurden.

In zu den Beispielen 25 und 26 analoger Weise können die Farbstoffe der allgemeinen Formel A-N=N-Napht¹-N=N-Napht²-N=N-Dk und deren Metallkomplexe erhalten werden (= Farbstoffe der allgemeinen Formel I mit p = m = 1, P = Napht¹, Kk¹ = Napht²), worin Dk für einen von den Diazokomponenten DK1 bis DK9, DK13, DK14, DK26, DK27, DK39 bis DK41 und DK58 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht und A einen der Reste A1 bis A12 bedeutet. Die Kupplung des Restes A-N=N-Napht¹-N=N- erfolgt in ortho-Position zur Aminogruppe in Napht².

### Beispiel 27:

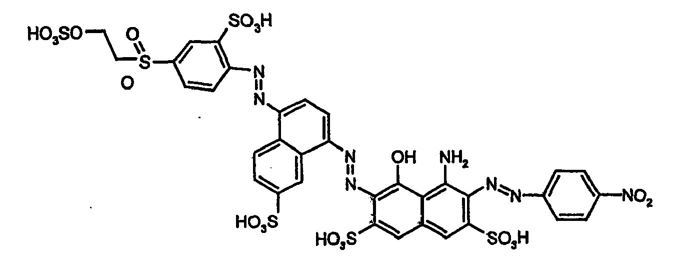

1) 1 mol p-Nitroanilin wurde in 21 gew.%iger Salzsäure gelöst, danach mit überschüssigem Natriumnitrit bei pH<1 und einer Temperatur von 0-5°C diazotiert. Gleichzeitig wurde 1 mol H-Säure in 25 gew.-%iger Natronlauge gelöst und danach durch Zugabe von 21 gew.-%iger Salzsäure die H-Säure gefällt. Die H-Säure Suspension wurde zu der diazotierte p-Nitroanilin gegeben und der pH-Wert unter 2 gehalten. Nach 1 Stunde ist die Umsetzung beendet. ,
2) 1 mol Clevesäure-7 wurde in 25 gew.%iger Natronlauge gelöst. Gleichzeitig wurde 1 mol MSP in Eiswasser suspendiert und mit überschüssigem Natriumnitrit und Salzsäure bei pH<1 und einer Temperatur von 0-5°C diazotiert. Dazu wurde die Clevesäure-7 Lösung gegeben, wobei der pH-Wert unter 2 gehalten wurde.
3) Die in der Schritt 2) erhaltene Reaktionsmischung mit überschüssigem Natriumnitrit und Salzsäure bei pH<1 und einer Temperatur von 0-5C diazotiert und zu dem in Schritt 1) erhaltenen Produkt gegeben. Der pH-Wert wurde durch Zugabe von 10 gew.%iger Natronlauge zwischen 5 und 8 gehalten und 1 Stunde nachgerührt. Der Farbstoff wurde durch Zugabe von NaCl ausgefällt und abgesaugt.

In zu Beispiel 27 analoger Weise können die Farbstoffe der allgemeinen Formel A-N=N-Napht¹-N=N-Napht²-N=N-Dk erhalten werden (= Farbstoffe der allgemeinen Formel I mit p = m = 1, P = Napht¹, Kk¹ = Napht²), worin Dk für einen von den Diazokomponenten DK1 bis DK83 abgeleiteten Rest steht, Napht¹ für einen der bivalenten Reste II-1, II-3, II-5, II-7, II-9, II-11, II-13, II-15 oder II-16 steht, Napht² ür einen der bivalenten Reste 11-2, II-4, II-6, II-8, II-10, II-12 oder II-14 steht und A einen der Reste A1 bis A12 bedeutet. Die Kupplung des Restes A-N=N-Napht¹-N=N- erfolgt in ortho-Position zur Hydroxygruppe in Napht².

### Beispiel 28a:

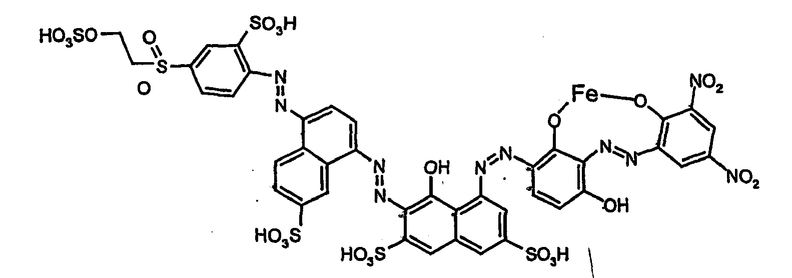

1) 1 mol H-Säure wurde in 25 gew.%iger Natronlauge gelöst, mit überschüssigem Natriumnitrit und Salzsäure bei pH<1 und einer Temperatur von 0-5°C diazotiert. 1 mol Resorcin wurde in 50 gew.%iger Natronlauge bei einem pH-Wert >12 gelöst. Zu dieser Lösung wurde die diazotierte H-Säure innerhalb von 30 min bei einer Temperatur von unter 10°C zugetropft, wobei man durch Zugabe von 10 gew.-%iger Natronlauge den pH-Wert oberhalb 9 hielt.
2) 1 mol 4,6-Dinitro-2-aminophenol wurde bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von 10 gew.%iger Natronlauge zwischen 3 und 8 gehalten.
3) 1 mol Clevesäure-7 wurde in 25 gew.-%iger Natronlauge gelöst. Gleichzeitig wurde 1 mol MSP im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde.
4) Die in Schritt 3) erhaltene Reaktionsmischung wurde mit überschüssigem Natriumnitrit und Salzsäure bei pH<1 und einer Temperatur von 0-5°C diazotiert. Zu- dieser Reaktionsmischung gab man die in Schritt 2) erhaltenen Reaktionsmischung. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt

In zu Beispiel 28a analoger Weise können die Metallkomplexe von Farbstoffen der allgemeinen Formel A-N=N-Napht¹-N=N-Napht-N=N-Kk-N=N-Dk erhalten werden (= Farbstoffe der allgemeinen Formel XII mit p = n = 1, P = Napht¹, R = Napht²), worin Dk für einen von den Diazokomponenten DK1 bis DK9, DK13. DK14, DK26, DK27, DK39 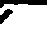 bis DK41 oder DK58 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk für einen von Kk2, Kk3, Kk49 oder Kk50 abgeleiteten bivalenten Rest steht und A einen der Reste A1 bis A12 bedeutet. Die Kupplung des Restes A-N=N-Napht¹-N=N- erfolgt in ortho-Position zur Hydroxygruppe in Napht².

### Beispiel 28b:

Die Umsetzung erfolgte nach der in Beispiel 28a beschriebenen Methode mit dem Unterschied, dass keine Umsetzung mit Eisensalzen folgte.

In zu Beispiel 28b analoger Weise können die Farbstoffe der allgemeinen Formel A-N=N-Napht¹-N=N-Napht²-N=N-Kk-N=N-Dk erhalten werden (= Farbstoffe der allgemeinen Formel XII mit p = n = 1, P = Napht¹, R = Napht²), worin Dk für einen von den Diazokomponenten DK1 bis DK83 oder für einen von A1 bis A12 abgeleiteten Rest steht, Napht¹ für einen der bivalenten Reste II-1, II-3, II-5, II-7, II-9, II-11, II-13, 11-15 oder II-16 steht, Napht² für einen der bivalenten Reste II-2, II-4, II-16, II-8, II-10, II-12 oder II-14 steht, Kk für einen von Kk2, Kk3, Kk5, Kk6, Kk14, Kk15, Kk16, Kk49 oder Kk50 abgeleiteten bivalenten Rest steht und A einen der Reste A1 bis A12 bedeutet. Die Kupplung des Restes A-N=N-Napht¹-N=N- erfolgt in ortho-Position zur Hydroxygruppe in Napht².

### Beispiel 29a:

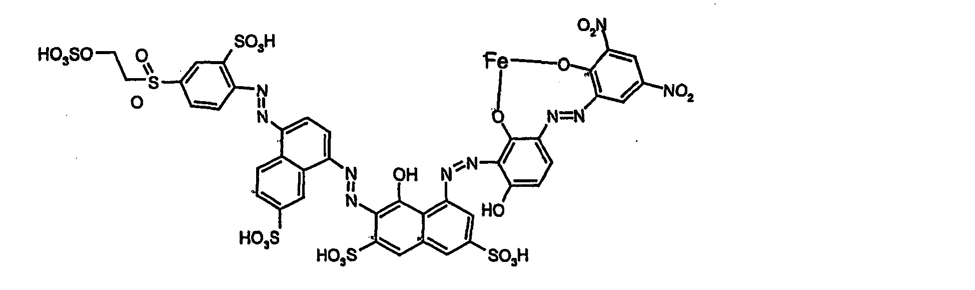

1) 1 mol 4,6-Dinitro-2-aminophenol wurde bei pH<1 und einer Temperatur von 0-5°C mit überschüssigem Natriumnitrit und Salzsäure diazotiert. 1 mol Resorcin wurde in 50 gew.-%iger Natronlauge bei einem pH-Wert >12 gelöst und zu dieser Lösung wurde das diazotierte 4,6-Dinitro-2-aminophenol innerhalb von 30 min bei einer Temperatur von unter 10°C zugetropft wobei man durch Zugabe von 10 gew.-%iger Natronlauge den pH-Wert oberhalb 9 hielt.
2) 1 mol H-Säure wurde in 25 gew.%iger Natronlauge gelöst, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol Clevesäure-7 wurde in 25 gew.-%iger Natronlauge gelöst. Gleichzeitig wurde 1 mol MSP im Eiswasser suspendiert und mit überschüssigem Natriumnitrit und Salzsäure bei pH<1 und einer Temperatur von 0-5°C diazotiert und anschließend zu der Clevesäure-7 Lösung gegeben, wobei der pH-Wert unter 2 gehalten wurde.
4) Die in Schritt 3) erhaltene Reaktionsmischung wurde mit überschüssigem Natriumnitrit und Salzsäure bei pH<1 und einer Temperatur von 0-5°C diazotiert. Zu dieser Reaktionsmischung gab man die in Schritt 2) erhaltenen Reaktionsmischung. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt

In zu Beispiel 29a analoger Weise können die Metallkomplexe von Farbstoffen der allgemeinen Formel A-N=N-Napht¹-N=N-Napht²-N=N-Kk-N=N-Dk erhalten werden (= Farbstoffe der allgemeinen Formel XII mit p = n = 1, P = Napht¹, R = Napht²), worin Dk für einen von den Diazokomponenten DK1 bis DK9, DK13, DK14, DK26, DK27, DK39 bis DK41 oder DK58 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk für einen von Kk2, Kk3, Kk49 oder Kk50 abgeleiteten bivalenten Rest steht und A einen der Reste A1 bis A12 bedeutet. Die Kupplung des Restes A-N=N-Napht¹-N=N-erfolgt in ortho-Position zur Hydroxygruppe in Napht².

### Beispiel 29b:

Die Umsetzung erfolgte nach der in Beispiel 29a beschriebenen Methode mit dem Unterschied, dass keine Umsetzung mit Eisensalzen folgte.

In zu Beispiel 29b analoger Weise können die Farbstoffe der allgemeinen formel A-N=N-Napht¹-N=N-Napht²-N=N-Kk-N=N-Dk erhalten werden (= Farbstoffe der allgemeinen Formel XII mit p = n = 1, P = Napht¹, R = Napht²), worin Dk für einen von den Diazokomponenten DK1 bis DK83 oder für einen von A1 bis A12 abgeleiteten Rest steht, Napht¹ für einen der bivalenten Reste II-1, II-3, II-5, II-7, II-9, II-11, II-13, II-15 oder II-16 steht, Napht² für einen der bivalenten Reste II-2, II-4, II-6, II-8, II-10, II-12 oder II-14 steht, Kk für einen von Kk2, Kk3, Kk5, Kk6, Kk14, Kk15, Kk16, Kk49 oder Kk50 abgeleiteten bivalenten Rest steht und A einen der Reste A1 bis A12 bedeutet. Die Kupplung des Restes A-N=N-Napht¹-N=N- erfolgt in ortho-Position zur Hydroxygruppe in Napht².

### Beispiel 30:

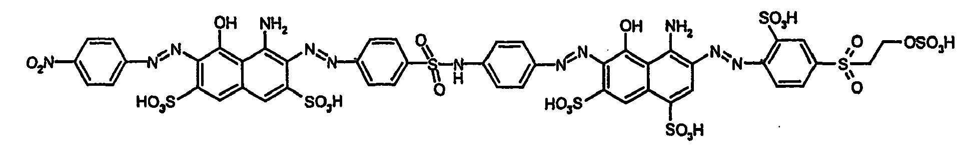

1) 1 mol 4,4-Diaminodiphenylsulfamid wurde mit überschüssigem Natriumnitrit und Salzsäure bei pH<1 und einer Temperatur von 0-5°C tetrazotiert. 1 mol H-Säure wurde in 25 gew.-%iger Natronlauge gelöst und zu der Reaktionsmischung des tetrazotierten 4,4-Diaminodiphenylsulfamids zugetropft. Der pH-Wert wurde unter 3 gehalten.
2) 1 mol p-Nitroanilin wurde in 21 gew.%iger Salzsäure gelöst, danach mit überschüssigem Natriumnitrit bei pH<1 und einer Temperatur von 0-5°C diazotiert und zu der in Schritt 1) erhaltenen Reaktionsmischung gegeben. Der pH-Wert wurde durch Zugabe von 10 gew.%iger Natronlauge zwischen 3 und 8 gehalten.
3) 1 mol MSP wurde im Eiswasser suspendiert und mit überschüssigem Natriumnitrit und Salzsäure bei pH<1 und einer Temperatur von 0-5°C diazotiert. 1 mol K-Säure wurde in 25 gew.-%iger Natronlauge gelöst und zu der diazotierten MSP gegeben. Der pH-Wert wurde unter 2 gehalten.
4) Das in Schritt 3) erhaltene Produkt wurde zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff durch Zugabe von NaCl ausgefällt und abgesaugt.

In zu Beispiel 30 analoger Weise können die Farbstoffe der allgemeinen Formel Dk¹-N=N-Napht¹-N=N-Tk-N=N-Napht²-N=N-Dk² bzw. deren Metallkomplexe erhalten werden (= Farbstoffe der allgemeinen Formel IV), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Napht¹ und Napht² jeweils für einen der bivalenten Reste II-2, II-4, II-6, II-8, II-10, II-12 oder II-14 stehen und Tk für einen bivalenten, von Tk1 bis Tk20 abgeleiteten Rest steht. Die Kupplung der Reste Dk¹-N=N- erfolgt in ortho-Position zur Hydroxygruppe in Napht¹ und die Kupplung der Reste Dk²-N=N-erfolgt in ortho-Position zur Aminogruppe in Napht².

### Beispiel 31:

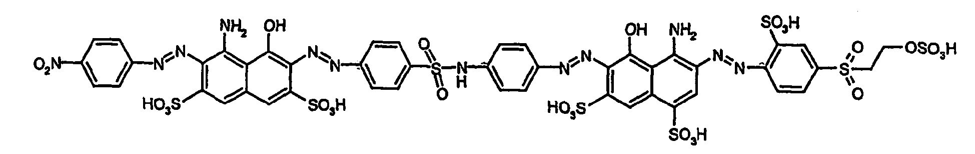

1) 1 mol p-Nitroanilin wurde in 21 gew.%iger Salzsäure gelöst und danach mit überschüssigem Natriumnitrit bei pH<1 und einer Temperatur von 0-5°C diazotiert. Hierzu gab man 1-mol H-Säure, wobei der pH-Wert unter 2 gehalten wurde.
2) 1 mol 4,4-Diaminodiphenylsulfamid wurde mit überschüssigem Natriumnitrit und Salzsäure bei pH<1 und einer Temperatur von 0-5°C tetrazotiert und zu der in Schritt 1) erhaltenen Reaktionsmischung gegeben. Der pH-Wert wurde durch Zugabe von 10 gew.%iger Natronlauge zwischen 3 und 8 gehalten.
3) 1 mol MSP wurde in Eiswasser suspendiert und mit überschüssigem Natriumnitrit und Salzsäure bei pH<1 und einer Temperatur von 0-5°C diazotiert. 1 mol K-Säure wurde in 25 gew.%iger Natronlauge gelöst und zu der Lösung des diazotierten MSP gegeben. Der pH-Wert wurde unter 2 gehalten.
4) Die in Schritt 3) erhaltene Reaktionsmischung wurde in die in Schritt 2) erhaltenen Reaktionsmischung gegeben. Der pH-Wert wurde durch Zugabe von 10 gew.%iger Natronlauge zwischen 3-8 gehalten. Nach beendeter Umsetzung wurde der Farbstoff durch Zugabe von NaCl ausgefällt und abgesaugt.

In zu Beispiel 31 analoger Weise können die Farbstoffe der allgemeinen Formel Dk¹-N=N-Napht¹-N=N-Tk-N=N-Napht²-N=N-Dk² bzw. deren Metallkomplexe erhalten werden (= Farbstoffe der allgemeinen Formel IV), worin Dk¹ und Dk² jeweils für einen von den Diazokomponenten DK1 bis DK83 oder für einen von A1 bis A12 abgeleiteten Rest stehen, wobei wenigstens einer der Reste Dk¹ oder Dk² für einen Rest der formel A steht, Napht¹ und Napht² jeweils für einen der bivalenten Reste II-2, II-4, II-6, II-8, II-10, II-12 oder II-14 stehen und Tk für einen bivalenten, von Tk1 bis Tk20 abgeleiteten Rest steht. Die Kopplung der Reste Dk¹-N=N- und Dk²-N=N-erfolgt jeweils in ortho-Position zur Aminogruppe in Napht¹ bzw. Napht².

### Beispiel 32:

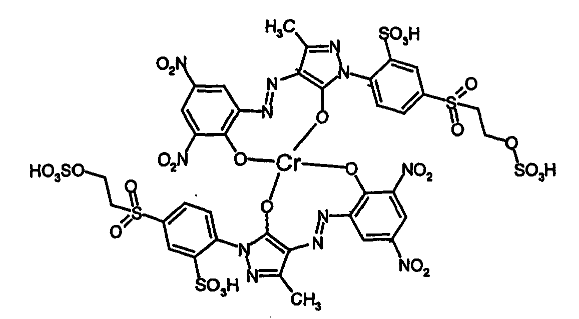

1 mol 4,6-Dinitro-2-aminophenol wurde mit überschüssigem Natriumnitrit und Salzsäure bei pH<1 und einer Temperatur von 0-5°C diazotiert und mit 1 mol 4-(β-Sulfatoethylsulfonyl)pyrazolsäure-2 gekuppelt (Kk44). Der pH-Wert wurde zwischen 2 und 7 gehalten. Nach beendeter Kupplung wurde 0,20-0,30 mol Chrom(III)-sulfat zu der Reaktionsmischung gegeben und 1 Stunde nachgerührt. Anschließend wurde die Reaktionsmischung bei 40°C eingedampft.

In zu Beispiel 32 analoger Weise können die Metallkomplexe von farbstoffen der allgemeinen Formel Dk-N=N-Pyr-A erhalten werden (= Farbstoffe der allgemeinen Formel XIII), worin Dk für einen von den Diazokomponenten DK1 bis DK9, DK13, DK14, DK26, DK27, DK39 bis DK41 oder DK58 abgeleiteten Rest steht, Pyr für 5-Hydroxy-3-methylpyrazol-1,4-diyl oder für 5-Hydroxy-3-carboxypyrazol-1,4-diyl steht und A einen der Reste A1 bis A12 bedeutet, der über den Stickstoff von Pyr gebunden ist.

### Beispiel 33:

Die Umsetzung erfolgte nach der in Beispiel 32 beschriebenen Methode mit dem Unterschied, dass keine Umsetzung mit Chromsalzen folgte.

In zu Beispiel 33 analoger Weise können die Farbstoffe der allgemeinen Formel Dk-N=N-Pyr-A erhalten werden (= Farbstoffe der allgemeinen formel XIII), worin Dk für einen von den Diazokomponenten DK1 bis DK83 abgeleiteten Rest steht, Pyr für 5-Hydroxy-3-methylpyrazol-1,4-diyl oder für 5-Hydroxy-3-carboxypyrazol-1,4-diyl steht und A einen der Reste A1 bis A12 bedeutet, der über den Stickstoff von Pyr gebunden ist.

### Beispiel 34a:

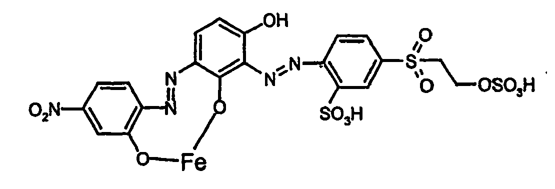

1) 1 mol 5-Nitro-2-aminophenol wurde bei pH<1 und einer Temperatur von 0-5°C mit überschüssigem Natriumnitrit und Salzsäure diazotiert. 1 mol Resorcin wurde in 50 gew.-%iger Natronlauge bei einem pH-Wert >12 gelöst und zu dieser Lösung wurde die diazotierte 5-Nitro-2-aminophenol innerhalb von 30 min bei einer Temperatur von unter 10°C zugetropft, wobei man durch Zugabe von 10 gew.-%iger Natronlauge den pH-Wert oberhalb 9 hielt.
2) 1 mol MSP wurde in Eiswasser suspendiert, mit überschüssigem Natriumnitrit und Salzsäure bei pH<1 und einer Temperatur von 0-5°C diazotiert, und zu der in Schritt 1) erhaltenen Reaktionsmischung gegeben. Der pH-Wert wurde durch Zugabe von 10 gew.%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 35a:

Die Umsetzung erfolgte nach der in Beispiel 34a beschriebenen Methode mit dem Unterschied, dass keine Umsetzung mit Eisensalzen folgte.

### Beispiel 36:

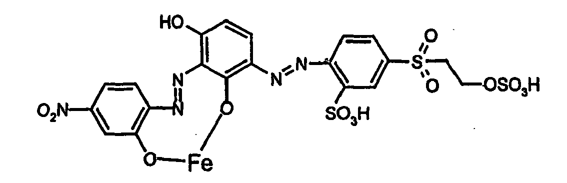

1) 1 mol MSP wurde bei pH<1 und einer Temperatur von 0-5°C mit überschüssigem Natriumnitrit und Salzsäure diazotiert. 1 mol Resorcin wurde in 50 gew.-%iger Natronlauge gelöst und zu dieser Lösung wurde die diazotierte MSP innerhalb von 30 min bei einer Temperatur von unter 10°C zugetropft wobei man durch Zugabe von 10 gew.%iger Natronlauge den pH-Wert zwischen 3 und 8 hielt.
2) 1 mol 5-Nitro-2-aminophenol wurde im Eiswasser suspendiert, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 37:

Die Umsetzung erfolgte nach der in Beispiel 36 beschriebenen Methode mit dem Unterschied, dass keine Umsetzung mit Eisensalzen folgte.

In zu den Beispielen 34a und 36 analoger Weise können die Metallkomplexe von Farbstoffen der allgemeinen Formel Dk-N=N-Kk-N=N-A erhalten werden (= Farbstoffe der allgemeinen Formel I mit p = 0 und m = 1), worin Dk für einen von den Diazokomponenten DK1 bis DK9, DK13, DK14, DK26, DK27, DK39 bis DK41 oder DK58 abgeleiteten Rest steht, Kk für einen von Kk2, Kk3, Kk49 oder Kk50 abgeleiteten bivalenten Rest steht und A einen der Reste A1 bis A12 bedeutet. Beispiele hierfür sind in der Tabelle 8 angegeben.

**Tabelle 8 .**

| Beispiele Nr. | Dk | Kk | A | Metall |
|---|---|---|---|---|
| 34a | DK1 | Kk3 | A1 | Fe |
| 34b | DK2 | Kk3 | A1 | Fe |
| 34c | DK3 | Kk3 | A1 | Fe |
| 34d | DK4 | Kk3 | A1 | Fe |
| 34e | DK4 | Kk3 | A1 | Fe |
| 34f | DK5 | Kk3 | A1 | Fe |
| 34g | DK6 | Kk3 | A1 | Fe |
| 34h | DK7 | Kk3 | A1 | Fe |
| 34i | DK8 | Kk3 | A1 | Fe |
| 34j | DK9 | Kk3 | A1 | Fe |
| 34k | DK13 | Kk3 | A1 | Fe |
| 34l | DK14 | Kk3 | A1 | Fe |
| 34m | DK27 | Kk3 | A1 | Fe |
| 34n | DK39 | Kk3 | A1 | Fe |
| 34o | DK40 | Kk3 | A1 | Fe |
| 34p | DK41 | Kk3 | A1 | Fe |
| 34q | DK58 | Kk3 | A1 | Fe |
| 34r | DK5 | Kk49 | A1 | Fe |
| 34s | DK5 | Kk50 | A1 | Fe |
| 34t | DK5 | Kk3 | A1 | Cr |
| 34u | DK5 | Kk49 | A1 | Co |
| 34v | DK5 | Kk50 | A1 | Cr |
| 34z | DK4 | Kk3 | A3 | Fe |
| 34aa | DK5 | Kk3 | A6 | Fe |
| 34ab | DK6 | Kk3 | A10 | Fe |
| 34ac | DK7 | Kk3 | A11 | Fe |

In zu den Beispielen 35a und 37 analoger Weise können die Farbstoffe der allgemeinen Formel Dk-N=N-Kk-N=N-A erhalten werden (= Farbstoffe der allgemeinen Formel I mit p = 0 und m = 1), worin Dk für einen von den Diazokomponenten DK1 bis DK83 abgeleiteten Rest steht, Kk für einen von Kk2, Kk3, Kk49 oder Kk50 abgeleiteten bivalenten Rest steht und A einen der Reste A1 bis A12 bedeutet. Beispiele hierfür sind in Tabelle 9 angegeben.

**Tabelle 9:**

| Beispiel Nr. | Dk | Kk | A |
|---|---|---|---|
| 35a | DK1 | Kk3 | A1 |
| 35b | DK2 | Kk3 | A1 |
| 35c | DK3 | Kk3 | A1 |
| 35d | DK4 | Kk3 | A1 |
| 35e | DK5 | Kk3 | A1 |
| 35f | DK6 | Kk3 | A1 |
| 35g | DK7 | Kk3 | A1 |
| 35h | DK8 | Kk3 | A1 |
| 35i | DK9 | Kk3 | A1 |
| 35j | DK10 | KK3 | A1 |
| 35k | DK12 | KK3 | A1 |
| 35l | DK13 | Kk3 | A1 |
| 35m | DK14 | Kk3 | A1 |
| 35n | DK17 | Kk3 | A1 |
| 35o | DK27 | Kk3 | A1 |
| 35p | DK28 | Kk3 | A1 |
| 35q | DK32 | Kk3 | A1 |
| 35r | DK39 | Kk3 | A1 |
| 35s | DK40 | Kk3 | A1 |
| 35t | DK41 | Kk3 | A1 |
| 35u | DK42 | Kk3 | A1 |
| 35v | DK46 | Kk3 | A1 |
| 35z | DK47 | Kk3 | A1 |
| 35aa | DK58 | Kk3 | A1 |
| 35ab | DK5 | Kk49 | A1 |
| 35ac | DK5 | Kk50 | A1 |
| 35ad | DK47 | Kk49 | A1 |
| 35ae | DK47 | Kk50 | A1 |
| 35af | DK4 | Kk3 | A4 |
| 35ag | DK5 | Kk3 | A7 |
| 35ah | DK6 | Kk3 | A9 |
| 35ai | DK7 | Kk3 | A12 |

### Beispiel 38a:

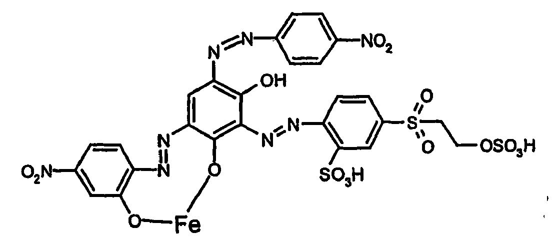

### Methode A:

1) 1 mol 4,6-Dinitro-2-aminophenol wurde bei pH<1 und einer Temperatur von 0-5°C mit überschüssigem Natriumnitrit und Salzsäure diazotiert. 1 mol Resorcin wurde in 50 gew.%iger Natronlauge bei einem pH-Wert >12 gelöst und zu dieser Lösung wurde das diazotierte 4,6-Dinitro-2-aminophenol innerhalb von 30 min bei einer Temperatur > 10°C zugetropft wobei man durch Zugabe von 10 gew.-%iger Natronlauge den pH-Wert oberhalb 9 hielt.
2) 1 mol MSP wurde in Eiswasser suspendiert, mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.-%iger Natronlauge-zwischen 3 und 8 gehalten.
3) 1 mol p-Nitroanilin wurde in 21 gew.%iger Salzsäure gelöst, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 h nachgerührt. Der Farbstoff wurde durch Zugabe von NaCl ausgefällt und abgesaugt.

### Methode B:

1) 1 mol p-Nitroanilin wurde in 21 gew.%iger Salzsäure gelöst und danach mit überschüssigem Natriumnitrit bei pH<1 und einer Temperatur von 0-5°C diazotiert. 1 mol Resorcin wurde in 50 gew.%iger Natronlauge bei einem pH-Wert >12 gelöst. Zu dieser Lösung wurde das diazotierte p-Nitroanilin innerhalb von 30 min bei einer Temperatur von unter 10°C zugetropft, wobei man durch Zugabe von 10 gew.-%iger Natronlauge den pH-Wert oberhalb 9 hielt.
2) 1 mol MSP wurde in Eiswasser suspendiert, mit überschüssigem Natriumnitrit und Salzsäure bei pH<1 und einer Temperatur von 0-5°C diazotiert und anschließend zu der in Schritt 1) erhaltenen Reaktionsmischung gegeben. Der pH-Wert wurde durch Zugabe von 10 gew.%iger Natronlauge zwischen 3-8 gehalten.
3) 1 mol 4,6-Dinitro-2-aminophenol wurde bei pH<1 und einer Temperatur von 0-5C mit überschüssigem Natriumnitrit und Salzsäure diazotiert und zu der in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 39a:

Die Umsetzung erfolgte nach der in Beispiel 38 beschriebenen Methode mit dem Unterschied, dass keine Umsetzung mit Eisensalzen folgte.

### Beispiel 40a:

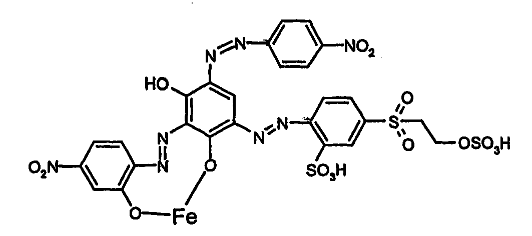

### Methode A:

1) 1 mol p-Nitroanilin wurde in 21 gew.-%iger Salzsäure gelöst, danach mit überschüssigem Natriumnitrit bei pH<1 und einer Temperatur von 0-5°C diazotiert. 1 mol Resorcin wurde in 50 gew.-%iger Natronlauge bei einem pH-Wert >12 gelöst. Zu dieser Lösung wurde das diazotierte p-Nitroanilin innerhalb von 30 min bei einer Temperatur von unter 10°C zugetropft, wobei man durch Zugabe von 10 gew.%iger Natronlauge den pH-Wert oberhalb 9 hielt.
2) 1 mol 4,6-Dinitro-2-aminophenol wurde bei pH<1 und einer Temperatur von 0-5°C mit überschüssigem Natriumnitrit und Salzsäure diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol MSP wurde in Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol MSP wurde im Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Zu dieser Lösung wurde das diazotierte MSP innerhalb von 30 min bei einer Temperatur von unter 10°C zugetropft wobei man durch Zugabe von 10 gew.%iger Natronlauge den pH-Wert zwischen 6 und 7 hielt.
2) 1 mol 4,6-Dinitro-2-aminophenol wurde bei pH<1 und einer Temperatur von 0-5°C mit überschüssigem Natriumnitrit und Salzsäure diazotiert und anschließend zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol p-Nitroanilin wurde in 21 gew.-%iger Salzsäure gelöst, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3-8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 41a:

Die Umsetzung erfolgte nach den in Beispiel 40 beschriebenen Methoden mit dem Unterschied, dass keine Umsetzung mit Eisensalzen folgte.

In zu den Beispielen 38a und 40a analoger Weise können die Metallkomplexe von Farbstoffen der allgemeinen Formel 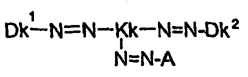 erhalten werden (= Farbstoffe der allgemeinen Formel I mit p = 0 und m = 2), worin Dk¹ und Dk² jeweils für einen von den Diazokomponenten DK1 bis DK83 abgeleiteten Rest stehen, wobei wenigstens einer der Reste Dk¹ oder Dk² für einen von den Diazokomponenten DK1 bis DK9, DK13, DK14, DK26, DK27, DK39 bis DK41 oder DK58 abgeleiteten Rest steht, Kk für einen von Kk2 oder Kk3 abgeleiteten trivalenten Rest steht und A einen der Reste A1 bis A12 bedeutet. Beispiele hierfür sind in Tabelle 10 angegeben.

**Tabelle 10**

| Beispiel Nr. | Dk¹ | Kk | Dk² | A | Me |
|---|---|---|---|---|---|
| 38a | DK1 | KK3 | DK17 | A1 | Fe |
| 38b | DK1 | KK3 | DK5 | A1 | Fe |
| 38c | DK1 | KK3 | DK10 | A1 | Fe |
| 38d | DK2 | KK3 | DK17 | A1 | Fe |
| 38e | DK4 | KK3 | DK17 | A1 | Cu |
| 38f | DK4 | KK3 | DK12 | A1 | Co |
| 38g | DK4 | KK3 | DK56 | A1 | Cr |
| 38h | DK5 | KK3 | DK9 | A1 | Fe |
| 38i | DK5 | KK3 | DK10 | A1 | Fe |
| 38j | DK5 | KK3 | DK12 | A1 | Fe |
| 38k | DK5 | KK3 | DK17 | A1 | Fe |
| 38l | DK5 | KK3 | DK19 | A1 | Fe |
| 38m | DK5 | KK3 | DK27 | A1 | Fe |
| 38n | DK5 | KK3 | DK28 | A1 | Fe |
| 38o | DK5 | KK3 | DK30 | A1 | Fe |
| 38p | DK5 | KK3 | DK32 | A1 | Fe |
| 38q | DK5 | KK3 | DK35 | A1 | Fe |
| 38r | DK5 | KK3 | DK41 | A1 | Fe |
| 38s | DK5 | KK3 | DK46 | A1 | Fe |
| 38t | DK5 | KK3 | DK47 | A1 | Fe |
| 38u | DK5 | KK3 | DK58 | A1 | Fe |
| 38v | DK5 | KK3 | DK12 | A5 | Fe |
| 38z | DK5 | KK3 | DK17 | A9 | Fe |
| 40a | DK1 | KK3 | DK17 | A1 | Fe |
| 40b | DK1 | KK3 | DK5 | A1 | Fe |
| 40c | DK1 | KK3 | DK10 | A1 | Fe |
| 40d | DK2 | KK3 | DK17 | A1 | Fe |
| 40e | DK4 | KK3 | DK17 | A1 | Cu |
| 40f | DK14 | KK3 | DK12 | A1 | Co |
| 40g | DK4 | KK3 | DK56 | A1 | Cr |
| 40h | DK5 | KK3 | DK9 | A1 | Fe |
| 40i | DK5 | KK3 | DK10 | A1 | Fe |
| 40j | DK5 | KK3 | DK12 | A1 | Fe |
| 40k | DK5 | KK3 | DK17 | A1 | Fe |
| 40l | DK5 | KK3 | DK19 | A1 | Fe |
| 40m | DK5 | KK3 | DK27 | A1 | Fe |
| 40n | DK5 | KK3 | DK28 | A1 | Fe |
| 40o | DK5 | KK3 | DK30 | A1 | Fe |
| 40p | DK5 | KK3 | DK32 | A1 | Fe |
| 40q | DK5 | KK3 | DK35 | A1 | Fe |
| 40r | DK5 | KK3 | DK41 | A1 | Fe |
| 40s | DK5 | KK3 | DK46 | A1 | Fe |
| 40t | DK5 | KK3 | DK47 | A1 | Fe |
| 40u | DK5 | KK3 | DK58 | A1 | Fe |
| 40v | DK5 | KK3 | DK12 | A4 | Fe |
| 40z | DK5 | KK3 | DK17 | A11 | Fe |

In zu den Beispielen 39a und 41a analoger Weise können die Farbstoffe der allgemeinen Formel 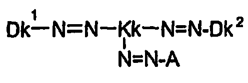 erhalten werden (= Farbstoffe der allgemeinen Formel I mit p = 0 und m = 2), worin Dk¹ und Dk² jeweils für einen von den Diazokomponenten DK1 bis DK83 abgeleiteten Rest stehen, Kk für einen von Kk2, Kk3 oder Kk5 abgeleiteten trivalenten Rest steht und A einen der Reste A1 bis A12 bedeutet. Beispiele hierfür sind in der Tabelle 11 angegeben.

**Tabelle 11:**

| Beispiel Nr. | Dk¹ | Kk | Dk² | A |
|---|---|---|---|---|
| 39a | DK1 | KK3 | DK17 | A1 |
| 39b | DK1 | KK3 | DK5 | A1 |
| 39c | DK1 | KK3 | DK10 | A1 |
| 39d | DK2 | KK3 | DK17 | A1 |
| 39e | DK4 | KK3 | DK17 | A1 |
| 39f | DK4 | KK3 | DK12 | A1 |
| 39g | DK4 | KK3 | DK56 | A1 |
| 39h | DK5 | KK3 | DK9 | A1 |
| 39i | DK5 | KK3 | DK10 | A1 |
| 39j | DK5 | KK3 | DK12 | A1 |
| 39k | DK5 | KK3 | DK17 | A1 |
| 39l | DK5 | KK3 | DK19 | A1 |
| 39m | DK5 | KK3 | DK27 | A1 |
| 39n | DK5 | KK3 | DK28 | A1 |
| 39o | DK5 | KK3 | DK30 | A1 |
| 39p | DK5 | KK3 | DK32 | A1 |
| 39q | DK5 | KK3 | DK35 | A1 |
| 39r | DK5 | KK3 | DK41 | A1 |
| 39s | DK5 | KK3 | DK46 | A1 |
| 39t | DK5 | KK3 | DK47 | A1 |
| 39u | DK5 | KK3 | DK58 | A1 |
| 39v | DK5 | KK3 | DK12 | A7 |
| 39z | DK5 | KK3 | DK17 | A12 |
| 41a | DK1 | KK3 | DK17 | A1 |
| 41b | DK1 | KK33 | DK5 | A1 |
| 41c | DK1 | KK3 | DK10 | A1 |
| 41d | DK2 | KK3 | DK17 | A1 |
| 41e | DK4 | KK3 | DK17 | A1 |
| 41f | DK4 | KK3 | DK12 | A1 |
| 41g | DK4 | KK3 | DK56 | A1 |
| 41h | DK5 | KK3 | DK9 | A1 |
| 41i | DK5 | KK3 | DK10 | A1 |
| 41j | DK5 | KK3 | DK12 | A1 |
| 41k | DK5 | KK3 | DK17 | A1 |
| 41l | DK5 | KK3 | DK19 | A1 |
| 41m | DK5 | KK3 | DK27 | A1 |
| 41n | DK5 | KK3 | DK28 | A1 |
| 41o | DK5 | KK3 | DK30 | A1 |
| 41p | DK5 | KK3 | DK32 | A1 |
| 41q | DK5 | KK3 | DK35 | A1 |
| 41r | DK5 | KK3 | DK41 | A1 |
| 41s | DK5 | KK3 | DK46 | A1 |
| 41t | DK5 | KK3 | DK47 | A1 |
| 41u | DK5 | KK3 | DK58 | A1 |

### Beispiel 42a:

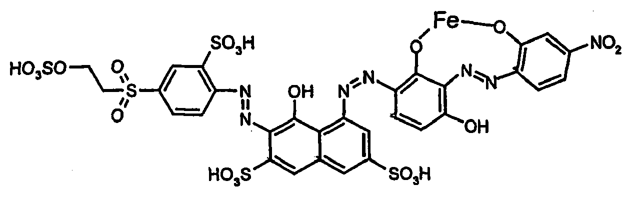

### Methode A:

1) 1 mol H-Säure wurde in 25 gew.%iger Natronlauge gelöst, mit überschüssigem Natriumnitrit und Salzsäure bei pH<1 und einer Temperatur von 0-5°C diazotiert. 1 mol Resorcin wurde in 50 gew.-%iger Natronlauge bei einem pH-Wert >12 gelöst. Zu dieser Lösung wurde die diazotierte H-Säure innerhalb von 30 min bei einer Temperatur von unter 10°C zugetropft, wobei man durch Zugabe von 10 gew.%iger Natronlauge den pH-Wert oberhalb 9 hielt.
2) 1 mol 5-Nitro-2-aminophenol wurde in Eiswasser suspendiert, danach mit überschüssigem Natriumnitrit bei pH<1 und einer Temperatur von 0-5°C diazotiert und anschließend zu der in Schritt 1) erhaltenen Reaktionsmischung gegeben. Der pH-Wert wurde durch Zugabe von 10 gew.%iger Natronlauge zwischen 3 und 8 gehalten.
3) 1 mol MSP wurde im Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol H-Säure wurde in 25 gew.%iger Natronlauge gelöst und mit 1,1-1,5 mol Acetanhydrid acetyliert.
2) 1 mol MSP wurde im Eiswasser suspendiert und bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von Natrumkarbonat zwischen 4 und 7 gehalten. Nach beendeter Kupplung wurde der pH-Wert durch Zugabe von 21 gew.%iger Salzsäure unter 1 gestellt und die Reaktionsmischung wurde auf 85-95°C erhitzt. Hierdurch wurde die Acetylgruppe abgespalten.
3) Das in Schritt 2) erhaltene Produkt wurde bei pH<1 und einer Temperatur von 0-5°C mit überschüssigem Natriumnitrit und Salzsäure diazotiert und zu einer wässrigen Lösung von 1 mol Resorcin gegeben. Der pH-Wert wurde durch Zugabe von 10 gew.%iger Natronlauge zwischen 3 und 8 gehalten.
4) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu der in Schritt 3) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 43a:

Die Umsetzung erfolgte nach den in Beispiel 42a beschriebenen Methoden mit dem Unterschied, dass keine Umsetzung mit Eisensalzen folgte.

### Beispiel 44:

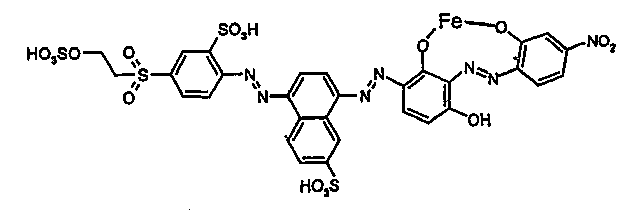

1) 1 mol Clevesäure-7 wurde in 25 gew.%iger Natronlauge gelöst. Gleichzeitig wurde 1 mol MSP im Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde.
2) Der in Schritt 1) erhaltene Produkt wurde mit überschüssigem Natriumnitrit und Salzsäure bei pH < 1 und einer Temperatur von 0-5°C diazotiert. Anschließend wurde das Reaktionsgemisch zu einer wässrigen Lösung von 1 mol Resorcin zugegeben. Der pH-Wert wurde durch Zugabe von 10 gew.%iger Natronlauge zwischen 3 und 8 gehalten.
3) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu der in Schritt 2) erhaltenen Reaktionsmischung gegeben. Der pH-Wert wurde durch Zugabe von 10 gew.-%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 45:

Die Umsetzung erfolgte nach der in Beispiel 44 beschriebene Methode mit dem Unterschied, dass keine Umsetzung mit Eisensalzen folgte.

### Beispiel 46a:

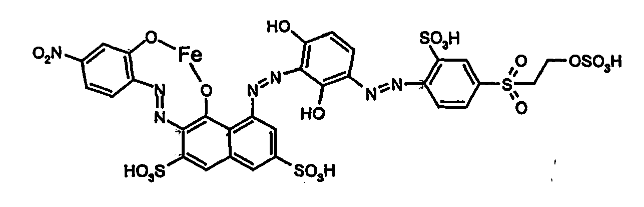

### Methode A:

1) 1 mol MSP wurde in Eiswasser suspendiert, mit überschüssigem Natriumnitrit und Salzsäure bei pH<1 und einer Temperatur von 0-5°C diazotiert. 1 mol Resorcin wurde in 50 gew.%iger Natronlauge gelöst. Zu dieser Lösung wurde das diazotierten MSP innerhalb von 30 min bei einer Temperatur von unter 10°C zugetropft wobei man durch Zugabe von 10 gew.%iger Natronlauge den pH-Wert zwischen 6 und 8 hielt.
2) 1 mol H-Säure wurde in 25 gew.%iger Natronlauge gelöst, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten.
3) 1 mol 5-Nitro-2-aminophenol wurde in Eiswasser suspendiert, danach mit überschüssigem Natriumnitrit bei pH<1 und einer Temperatur von 0-5°C diazotiert und anschließend zu der in Schritt 3) erhaltenen Reaktionsmischung gegeben. Der pH-Wert wurde durch Zugabe von 10 gew.%iger Natronlauge zwischen 3 und 8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Methode B:

1) 1 mol MSP wurde in Eiswasser suspendiert, mit überschüssigem Natriumnitrit und Salzsäure bei pH<1 und einer Temperatur von 0-5°C diazotiert. 1 mol Resorcin wurde in 50 gew.-%iger Natronlauge gelöst. Hierzu wurde das diazotierte MSP innerhalb von 30 min bei einer Temperatur von unter 10°C zugetropft, wobei man durch Zugabe von 10 gew.%iger Natronlauge den pH-Wert zwischen 6 und 8 hielt.
2) 1 mol H-Säure wurde in 25 gew.-%iger Natronlauge gelöst und mit 1,1-1,5 mol Acetanhydrid acetyliert.
3) 1 mol 5-Nitro-2-aminophenol wurde in Eiswasser suspendiert, danach mit überschüssigem Natriumnitrit bei pH<1 und einer Temperatur von 0-5°C diazotiert und zu der in Schritt 2) erhaltenen Reaktionsmischung gegeben. Der pH-Wert wurde durch Zugabe von Natrumkarbonat zwischen 4 und 7 gehalten. Nach beendeter Kupplung wurde der pH-Wert durch Zugabe von 21 gew.%iger Salzsäure unter 1 gestellt und die Reaktionsmischung wurde auf 85-95°C erhitzt, wobei die Acetylgruppe abgespalten wurde.
4) Das in Schritt 3) erhaltene Produkt wurde bei pH<1 und einer Temperatur von 0-5°C mit überschüssigem Natriumnitrit und Salzsäure diazotiert und zu der in Schritt 1) erhaltenen Reaktionsmischung gegeben. Der pH-Wert wurde durch Zugabe von 10 gew.%iger Natronlauge zwischen 3-8 gehalten. Nach beendeter Umsetzung wurde 0,40-0,60 mol Eisen(III)-sulfat zu der Reaktionsmischung gegeben und 1 Stunde nachgerührt. Der Farbstoff wurde durch Zugabe von NaCl ausgefällt und abgesaugt.

### Beispiel 47a:

Die Umsetzung erfolgte nach den in Beispiel 46a beschriebenen Methoden mit dem Unterschied, dass keine Umsetzung mit Eisensalzen folgte.

### Beispiel 48:

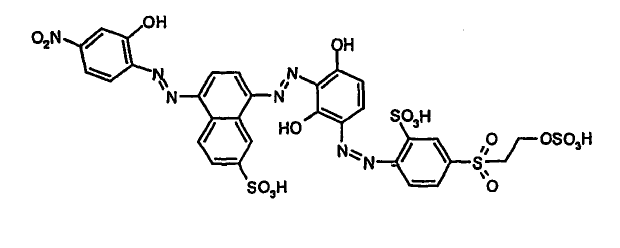

1) 1 Mol MSP wurde in Eiswasser suspendiert, mit überschüssigem Natriumnitrit und Salzsäure bei pH<1 und einer Temperatur von 0-5°C diazotiert. 1 mol Resorcin wurde in 50 gew.%iger Natronlauge gelöst. Hierzu wurde die diazotierte MSP innerhalb von 30 min bei einer Temperatur von unter 10°C zugetropft, wobei man durch Zugabe von 10 gew.-%iger Natronlauge den pH-Wert zwischen 6 und 8 hielt.
2) 1 mol 5-Nitro-2-aminophenol wurde in Eiswasser suspendiert, mit überschüssigem Natriumnitrit und Salzsäure bei pH<1 und einer Temperatur von 0-5°C diazotiert und zu einer 25 gew.%iger Natronlauge Lösung von 1 mol Clevesäure-7 zugegeben, wobei der pH-Wert unter 2 gehalten wurde.
3) Das in Schritt 2) erhaltene Produkt wurde mit überschüssigem Natriumnitrit und Salzsäure bei pH<1 und einer Temperatur von 0-5°C diazotiert und anschließend wurde zu der in Schritt 1) erhaltenen Reaktionsmischung gegeben. Der pH-Wert wurde durch Zugabe von 10 gew.-%iger Natronlauge zwischen 3-8 gehalten. Nach beendeter Umsetzung wurde der Farbstoff wurde durch Zugabe von NaCl ausgefällt und abgesaugt.

In zu den Beispielen 42a, 44 und 46a analoger Weise können die Metallkomplexe von Farbstoffen der allgemeinen Formel Dk¹-N=N-Napht-N=N-Kk-N=N-Dk² erhalten werden (= Farbstoffe der allgemeinen Formel I mit P = Napht, p = 1 und m = 1), worin Dk¹ und DK² entweder für einen von den Diazokomponenten DK1 bis DK9, DK13, DK14, DK26, DK27, DK39 bis DK41 oder DK58 oder für einen von A1 bis A12 abgeleiteten Rest stehen, wobei wenigstens einer der Reste Dk¹ oder Dk² für einen Rest der Formel A steht, Kk für einen von Kk2 oder Kk3 abgeleiteten bivalenten Rest steht und Napht ein bivalenter Rest der Formeln II-1, II-3, II-5, II-7, II-9, II-11, II-13, II-15 oder II-16 ist. Beispiele hierfür sind in der Tabelle 12 angegeben.

**Tabelle 12**

| Beispiel Nr. | Dk¹ | Napht | Kk | Dk² | Me |
|---|---|---|---|---|---|
| 42a | A1 | DK44 | Kk3 | DK1 | Fe |
| 42b | A1 | DK44 | Kk3 | DK4 | Cu |
| 42c | A1 | DK44 | Kk3 | DK5 | Fe |
| 42d | A7 | DK44 | Kk3 | DK5 | Fe |
| 42e | A1 | DK44 | Kk3 | DK40 | Fe |
| 42f | A1 | DK44 | Kk3 | DK58 | Cr |
| 42g | A1 | DK57 | Kk3 | DK5 | Fe |
| 42h | DK1 | DK44 | Kk3 | A1 | Fe |
| 42i | DK2 | DK44 | Kk3 | A1 | Fe |
| 42j | DK4 | DK44 | Kk3 | A1 | Fe |
| 42k | DK5 | DK44 | Kk3 | A1 | Fe |
| 42l | DK27 | DK44 | Kk3 | A1 | Fe |
| 42m | DK41 | DK44 | Kk3 | A1 | Fe |
| 42n | A3 | DK44 | Kk3 | DK5 | Fe |
| 42o | A9 | DK44 | Kk3 | DK40 | Fe |
| 46a | DK1 | DK44 | Kk3 | A1 | Fe |
| 46b | DK2 | DK44 | Kk3 | A1 | Fe |
| 46c | DK4 | DK44 | Kk3 | A1 | Fe |
| 46d | DK5 | DK44 | Kk3 | A1 | Fe |
| 46e | DK27 | DK44 | Kk3 | A1 | Fe |
| 46f | DK41 | DK44 | Kk3 | A1 | Fe |
| 46g | A1 | DK44 | Kk3 | DK1 | Fe |
| 46h | A1 | DK44 | Kk3 | DK4 | Cu |
| 46i | A1 | DK44 | Kk3 | DK5 | Fe |
| 46j | A7 | DK44 | Kk3 | DK5 | Fe |
| 46k | A1 | DK44 | Kk3 | DK40 | Fe |
| 46l | A1 | DK44 | Kk3 | DK58 | Cr |
| 46m | A1 | DK57 | Kk3 | DK5 | Fe |

In zu den Beispielen 43a, 45, 47a und 48 analoger Weise können die Farbstoffe der allgemeinen Formel Dk¹-N=N-Napht-N=N-Kk-N=N-Dk² erhalten werden (= Farbstoffe der allgemeinen Formel I mit P = Napht, p = 1 und m = 1), worin Dk¹ und DK² für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Kk für einen von Kk2, Kk3, Kk5, Kk49 oder Kk50 abgeleiteten bivalenten Rest steht und Napht ein bivalenter Rest der Formeln II-1, II-3, II-5, II-7, II-9, II-11, II-13, II-15 oder II-16 ist. Beispiele hierfür sind in Tabelle 13 angegeben.

**Tabelle 13**

| Beispiel Nr. | Dk¹ | Napht | Kk | Dk² |
|---|---|---|---|---|
| 43a | A1 | DK44 | Kk3 | DK1 |
| 43b | A1 | DK44 | Kk3 | DK4 |
| 43c | A1 | DK44 | Kk3 | DK5 |
| 43d | A7 | DK44 | Kk3 | DK5 |
| 43e | A1 | DK44 | Kk3 | DK9 |
| 43f | A1 | DK44 | Kk3 | DK10 |
| 43g | A1 | DK44 | Kk3 | DK12 |
| 43h | A1 | DK44 | Kk3 | DK28 |
| 43i | A1 | DK44 | Kk3 | DK32 |
| 43j | A1 | DK44 | Kk3 | DK37 |
| 43k | A1 | DK44 | Kk3 | DK40 |
| 43l | A1 | DK44 | Kk3 | DK46 |
| 43m | A1 | DK44 | Kk3 | DK58 |
| 43n | A1 | DK57 | Kk3 | DK5 |
| 43o | DK1 | DK44 | Kk3 | A1 |
| 43p | DK2 | DK44 | Kk3 | A1 |
| 43q | DK4 | DK44 | Kk3 | A1 |
| 43r | DK5 | DK44 | Kk3 | A1 |
| 43s | DK8 | DK44 | Kk3 | A1 |
| 43t | DK10 | DK44 | Kk3 | A1 |
| 43u | DK12 | DK44 | Kk3 | A1 |
| 43v | DK17 | DK44 | Kk3 | A1 |
| 43z | DK27 | DK44 | Kk3 | A1 |
| 43aa | DK28 | DK44 | Kk3 | A1 |
| 43ab | DK32 | DK44 | Kk3 | A1 |
| 43ac | DK41 | DK44 | Kk3 | A1 |
| 43ad | DK46 | DK44 | Kk3 | A1 |
| 43ae | DK47 | DK44 | Kk3 | A1 |
| 43af | DK28 | DK44 | Kk3 | A3 |
| 43ag | DK32 | DK45 | Kk3 | A7 |
| 43ah | DK41 | DK45 | Kk3 | A8 |
| 43ai | DK46 | DK45 | Kk3 | A11 |
| 47a | DK1 | DK44 | Kk3 | A1 |
| 47b | A1 | DK44 | Kk3 | DK4 |
| 47c | A1 | DK44 | Kk3 | DK5 |
| 47d | A7 | DK44 | Kk3 | DK5 |
| 47e | A1 | DK44 | Kk3 | DK9 |
| 47f | A1 | DK44 | Kk3 | DK10 |
| 47g | A1 | DK44 | Kk3 | DK12 |
| 47h | A1 | DK44 | Kk3 | DK28 |
| 47i | A1 | DK44 | Kk3 | DK32 |
| 47j | A1 | DK44 | Kk3 | DK37 |
| 47k | A1 | DK44 | Kk3 | DK40 |
| 47l | A1 | DK44 | Kk3 | DK46 |
| 47m | A1 | DK44 | Kk3 | DK58 |
| 47n | A1 | DK57 | Kk3 | DK5 |
| 47o | A1 | DK44 | Kk3 | DK1 |
| 47p | DK2 | DK44 | Kk3 | A1 |
| 47q | DK4 | DK44 | Kk3 | A1 |
| 47r | DK5 | DK44 | Kk3 | A1 |
| 47s | DK8 | DK44 | Kk3 | A1 |
| 47t | DK10 | DK44 | Kk3 | A1 |
| 47u | DK12 | DK44 | Kk3 | A1 |
| 47v | DK17 | DK44 | Kk3 | A1 |
| 47z | DK27 | DK44 | Kk3 | A1 |
| 47aa | DK28 | DK44 | Kk3 | A1 |
| 47ab | DK32 | DK44 | Kk3 | A1 |
| 47ac | DK41 | DK44 | Kk3 | A1 |
| 47ad | DK46 | DK44 | Kk3 | A1 |
| 47ae | DK47 | DK44 | Kk3 | A1 |
| 47af | DK28 | DK44 | Kk3 | A2 |
| 47ag | DK32 | DK45 | Kk3 | A6 |
| 47ah | DK41 | DK45 | Kk3 | A9 |
| 47ai | DK46 | DK45 | Kk3 | A10 |

### Beispiel 49a:

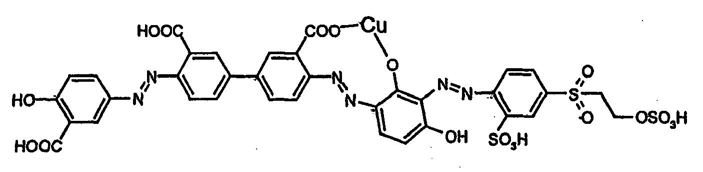

1) 1 mol 4,4'-Diaminobiphenyl-3,3'-Dicarbonsäure wurde mit überschüssigem Natriumnitrit und Salzsäure bei pH<1 und einer Temperatur von 0-5°C tetrazotiert und mit 1 mol Salycilsäure bei einem pH-Wert von 5 bis 11 umgesetzt.
2) 1 mol Resorcin wurde in 50 gew.%iger Natronlauge bei einem pH-Wert >12 gelöst. Zu dieser Lösung wurde das in Schritt 1) erhaltene Reaktionsprodukt innerhalb von 30 min bei einer Temperatur von unter 10°C zugetropft, wobei man durch Zugabe von 10 gew.%iger Natronlauge den pH-Wert oberhalb 9 hielt.
3) 1 Mol MSP wurde in Eiswasser suspendiert, mit überschüssigem Natriumnitrit und Salzsäure bei pH<1 und einer Temperatur von 0-5°C diazotiert. Anschließend wurde der diazotierte MSP zu der in Schritt 2) erhaltenen Reaktionsmischung gegeben wobei man durch Zugabe von 10 gew.-%iger Natronlauge den pH-Wert zwischen 5 und 8 hielt. Nach beendeter Umsetzung wurde 1 mol Kupfer(II)-sulfat zu der Reaktionsmischung gegeben und 1 Stunde bei 70°C nachgerührt. Der Farbstoff wurde durch Zugabe von NaCl ausgefällt und abgesaugt.

### Beispiel 50a:

Die Umsetzung erfolgte nach der in Beispiel 49a beschriebenen Methode mit dem Unterschied, dass keine Umsetzung mit Kupfersalzen folgte.

### Beispiel 51:

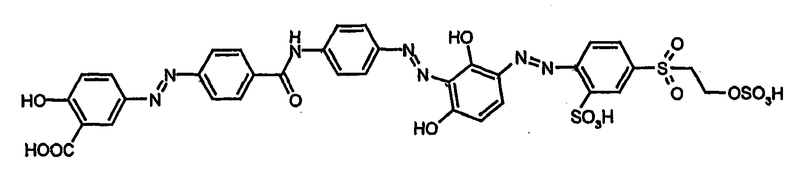

1) 1 mol 4,4-Diaminobenzanilid wurde mit überschüssigem Natriumnitrit und Salzsäure bei pH<1 und einer Temperatur von 0-5°C tetrazotiert und mit 1 mol Salycilsäure bei einem pH-Wert von 5-11 umgesetzt.
2) 1 Mol MSP wurde in Eiswasser suspendiert, mit überschüssigem Natriumnitrit und Salzsäure bei pH<1 und einer Temperatur von 0-5°C diazotiert. 1 mol Resorcin wurde in 50 gew.%iger Natronlauge gelöst. Hierzu wurde die diazotierte MSP innerhalb von 30 min bei einer Temperatur von unter 10°C zugetropft, wobei man durch Zugabe von 10 gew.-%iger Natronlauge den pH-Wert zwischen 6 und 8 hielt.
3) Das in Schritt 2) erhaltene Produkt wurde zu der in Schritt 1) erhaltenen Reaktionsmischung gegeben, wobei man durch Zugabe von 10 gew.-%iger Natronlauge den pH-Wert zwischen 5 und 8 hielt. Nach beendeter Umsetzung wurde der Farbstoff durch Zugabe von NaCl ausgefällt und abgesaugt.

In zu den Beispielen 49a, 50a und 51 analoger Weise können die Farbstoffe der allgemeinen Formel Kk³-N=N-Tk-N=N-Kk¹-N=N-A und deren Metallkomplexe erhalten werden (= Farbstoffe der allgemeinen Formel XIV), worin Kk³ für einen von den Kupplungskomponenten Kk1 bis Kk48 oder Kk51 bis Kk67 abgeleiteten Rest oder für Dk42 bis Dk83 steht, Tk für einen von TK1 bis Tk20 abgeleiteten bivalenten Rest steht, Kk¹ für einen von Kk2, Kk3, Kk5, Kk49 oder Kk50 abgeleiteten bivalenten Rest steht und A einen der Reste A1 bis A12 bedeutet. Beispiele hierfür sind in Tabelle 14 angegeben.

**Tabelle 14:**

| Beispiel Nr. | Kk³ | Tk | Kk¹ | A | Me |
|---|---|---|---|---|---|
| 49a | Kk1 | Tk11 | Kk3 | A1 | Cu |
| 49b | Kk40 | Tk11 | Kk3 | A1 | Cu |
| 49c | Dk46 | Tk8 | Kk3 | A1 | Cu |
| 50a | DK44 | Tk16 | Kk3 | A1 | |
| 50b | DK44 | Tk18 | Kk3 | A1 | |
| 50c | Kk39 | Tk18 | Kk3 | A1 | |

### Beispiel 52a:

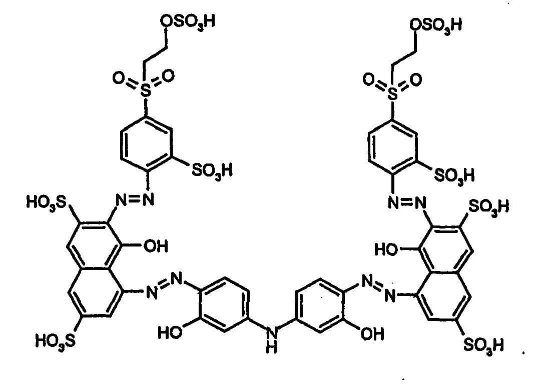

1) 2 mol H-Säure wurde in 25 gew.-%iger Natronlauge gelöst, mit überschüssigem Natriumnitrit und Salzsäure bei pH<1 und einer Temperatur von 0-5°C diazotiert und zu einer wässrigen Lösung von 1 mol 3,3'-Dihydroxydiphenylamin gegeben. Der pH-Wert wurde durch Zugabe von 10 gew.-%iger Natronlauge zwischen 3 und 10 gehalten.
2) 2 mol MSP wurde in Eiswasser suspendiert, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.%iger Natronlauge zwischen 3-8 gehalten. Nach beendeter Umsetzung wurde der Farbstoff durch Zugabe von NaCl ausgefällt und abgesaugt.

In zu Beispiel 52a analoger Weise können die Farbstoffe der allgemeinen Formel Dk¹-N=N-P-N=N-Kk¹-N=N-R-N=N-Dk² und deren Metallkomplexe erhalten werden (Farbstoffe der allgemeinen Formel XV), worin Dk¹ und DK² für einen von denDiazokomponenten DK1 bis DK83 oder für einen von A1 bis A12 abgeleiteten Rest stehen, wobei wenigstens einer der Reste Dk¹ oder Dk² für einen Rest der Formel A steht, Kk für einen von Kk2, Kk3, Kk5, Kk49 oder Kk50 abgeleiteten bivalenten Rest steht und P und R jeweils für einen bivalenten Rest der Formeln II-1, II-3, II-5, II-7, II-9, II-11 und II-13 abgeleiteten zweiwertigen Rest stehen. Beispiele hierfür sind in Tabelle 15 angegeben.

**Tabelle 15:**

| Beispiel Nr. | Dk¹ | P | Kk¹ | R | Dk² | Metall |
|---|---|---|---|---|---|---|
| 52a | A1 | DK44 | Kk50 | DK44 | A1 | |
| 52b | A1 | DK44 | Kk50 | DK44 | A1 | Cu |
| 52c | A1 | DK44 | Kk50 | DK44 | A1 | Co |
| 52d | A1 | DK44 | Kk49 | DK44 | A1 | Cu |
| 52e | A1 | DK44 | Kk49 | DK44 | A1 | Co |

### Beispiel 53a:

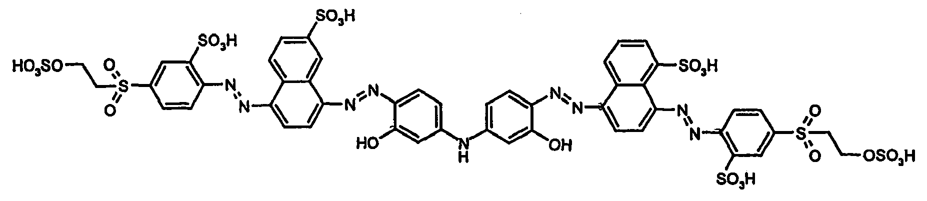

1) 1 mol MSP wurde in Eiswasser suspendiert, mit überschüssigem Natriumnitrit und Salzsäure bei pH<1 und einer Temperatur von 0-5°C diazotiert und zu einer alkalischen Lösung von 1 mol Clevesäure-7 gegeben. Der pH-Wert wurde durch Zugabe von 10 gew.%iger Natronlauge zwischen 3 und 8 gehalten.
2) 1 mol MSP wurde in Eiswasser suspendiert, mit überschüssigem Natriumnitrit und Salzsäure bei pH<1 und einer Temperatur von 0-5°C diazotiert und zu einer alkalischen Lösung von 1 mol 8-Aminonaphthalin-1-sulfonsäure (Dk56) gegeben. Der pH-Wert wurde durch Zugabe von 10 gew.-%iger Natronlauge zwischen 3 und 8 gehalten.
3) Das in Schritt 1) erhaltene Produkt wurde bei pH<1 und einer Temperatur von 0-5°C mit überschüssigem Natriumnitrit und Salzsäure diazotiert und innerhalb von 30 Minuten zu einer alkalischen Lösung von 1 mol 3,3'-Dihydroxydiphenilamine gegeben. Der pH-Wert wurde durch Zugabe von 10 gew.%iger Natronlauge zwischen 3 und 8 gehalten.
4) Das in Schritt 2) erhaltene Produkt wurde bei ph<1 und einer Temperatur von 0-5°C mit überschüssigem Natriumnitrit und Salzsäure diazotiert und zu der in Schritt 3) erhaltenen Reaktionsmischung gegeben, wobei man durch Zugabe von 10 gew.-%iger Natronlauge den pH-Wert zwischen 5 und 8 hielt. Nach beendeter Umsetzung wurde der Farbstoff durch Zugabe von NaCl ausgefällt und abgesaugt.

In zu Beispiel 53a analoger Weise können die Farbstoffe der allgemeinen Formel Dk¹-N=N-P-N=N-Kk¹-N=N-R-N=N-Dk² und deren Metallkomplexe erhalten werden (Farbstoffe der allgemeinen Formel XV), worin Dk¹ und DK² für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht, Kk für einen von Kk2, Kk3, Kk5, Kk49 oder Kk50 abgeleiteten bivalenten Rest steht und P und R jeweils für einen bivalenten Rest der Formeln II-15 oder II-16 oder für einen von den Diazokomponenten DK3, DK4, DK6, DK7, DK11, DK13, DK14, DK15, DK18, DK22 bis DK27, DK29, DK30, DK33, DK36, DK38, oder DK39 abgeleiteten zweiwertigen Rest stehen. Beispiele hierfür sind in Tabelle 16 angegeben.

**Tabelle 16:**

| Beispiel Nr. | Dk¹ | P | Kk¹ | R | Dk² | Metall |
|---|---|---|---|---|---|---|
| 53a | A1 | DK46 | Kk50 | DK56 | A1 | |
| 53b | A1 | DK4 | Kk49 | DK46 | A1 | Cu |
| 53c | A1 | DK4 | Kk49 | DK46 | A1 | Co |
| 53d | A1 | DK4 | Kk50 | DK46 | A1 | Cu |

### Beispiel 54:

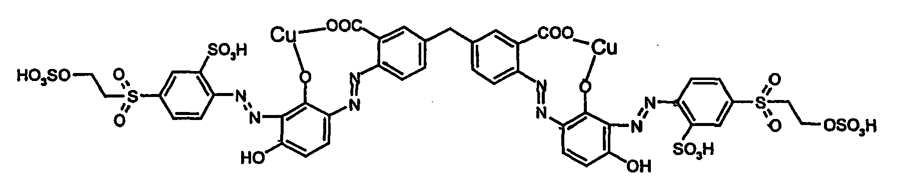

1) 2 mol Anthranilsäure wurde in Schwefelsäure (96%) bei einer Temperatur von 70-80°C gelöst und mit 0,5-0,6 mol Formaldehyd umgesetzt. Nach 2 Stunden bei 70-80°C wurde die Reaktionsmischung durch Zugabe von Eis auf etwa 0°C gekühlt und das erhaltene Produkt mit überschüssigem Natriumnitrit und Salzsäure bei pH<1 und einer Temperatur von 0-5°C tetrazotiert. 1,8-2,2 mol Resorcin wurde in 50 gew.%iger Natronlauge bei einem pH-Wert > 12 gelöst und zu dieser Lösung wurde die tetrazotierte Verbindung innerhalb von 30 Minuten bei einer Temperatur von unter 5°C zugetropft, wobei man durch Zugabe von 10 gew.%iger Natronlauge den pH-Wert oberhalb 8 hielt.
2) 2 mol MSP wurde in Eiswasser suspendiert, mit überschüssigem Natriumnitrit und Salzsäure bei pH<1 und einer Temperatur von 0-5°C diazotiert und zu der in Schritt 1) erhaltenen Reaktionsmischung gegeben. Der pH-Wert wurde durch Zugabe von 10 gew.-%iger Natronlauge zwischen 3 und 8 gehalten. Nach beendeter Umsetzung wurde die Reaktionslösung auf 80°C erwärmt und 2 mol CuSO₄ zugegeben. Anschließend wurde die erhaltene Reaktionsmischung eingedampft wobei man den komplexierten Farbstoff erhielt.

### Beispiel 55:

Die Umsetzung erfolgte nach der in Beispiel 54 beschriebenen Methode mit dem Unterschied, dass keine Umsetzung mit Kupfersalzen folgte.

### Beispiel 56:

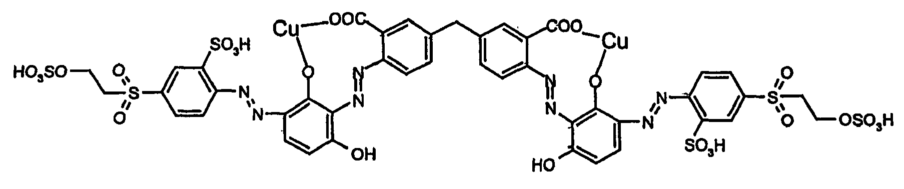

1) 2 mol Anthranilsäure wurde in Schwefelsäure (96%) bei einer Temperatur von 70-1) 2 mol Anthranilsäure wurde in Schwefelsäure (96%) bei einer Temperatur von 70-80°C gelöst und mit 0,5-0,6 mol Formaldehyd umgesetzt. Nach 2 Stunden bei 70-80°C wurde die Reaktionsmischung durch Zugabe von Eis auf etwa 0°C gekühlt und das erhaltene Produkt mit überschüssigem Natriumnitrit und Salzsäure bei pH<1 und einer Temperatur von 0-5°C tetrazotiert.
2) 2 mol MSP wurde im Eiswasser suspendiert, mit überschüssigem Natriumnitrit und Salzsäure bei pH<1 und einer Temperatur von 0-5°C diazotiert. 2 mol Resorcin wurde in 50 gew.%iger Natronlauge gelöst. Hierzu tropfte man das diazotierte MSP innerhalb von 30 min bei einer Temperatur von unter 10°C, wobei man durch Zugabe von 10 gew.-%iger Natronlauge den pH-Wert zwischen 6 und 8 hielt.
3) Die in Schritt 1) erhaltene Reaktionsmischung wurde in die in Schritt 2) erhaltenen Reaktionsmischung gegeben. Der pH-Wert wurde durch Zugabe von 10 gew.%iger Natronlauge zwischen 3 und 8 gehalten. Nach beendeter Umsetzung wurde die Reaktionslösung auf 80°C erwärmt und man gab 2 mol CuSO₄ zu. Anschließend wurde die erhaltene Reaktionsmischung zur Trockne eingeengt, wobei man den komplexierten Farbstoff erhielt.

### Beispiel 57:

Die Umsetzung erfolgte nach der in Beispiel 56a beschriebenen Methode mit dem Unterschied, dass keine Umsetzung mit Kupfersalzen folgte.

In zu den Beispielen 54 und 56 analoger Weise können die Metallkomplexe der Farbstoffe der allgemeinen Formel Dk¹-N=N-Kk¹-N=N-Tk¹-N=N-Kk²-N=N-Dk² erhalten werden (Farbstoffe der allgemeinen Formel IV), worin Dk¹ und DK² für einen von den Diazokomponenten DK1 bis DK83 oder für einen von A1 bis A12 abgeleiteten Rest stehen, wobei wenigstens einer der Reste Dk¹ oder Dk² für einen Rest der Formel A steht Tk¹ für einen von Tk3, Tk4, Tk8 bis Tk11, Tk14, Tk16 oder Tk19 abgeleiteten bivalenten Rest steht, und Kk¹ sowie Kk² unabhängig voneinander für einen von Kk2, Kk3, Kk5, Kk49 oder Kk50 abgeleiteten bivalenten Rest oder für einen bivalenten Rest der Formeln II-2, II-4, II-6, II-8, II-10, II-12 oder II-14 stehen.

In zu den Beispielen 55 und 57 analoger Weise können die Farbstoffe der allgemeinen Formel Dk¹-N=N-Kk¹-N=N-Tk¹-N=N-Kk²-N=N-Dk² erhalten werden (Farbstoffe der allgemeinen Formel IV), worin Dk¹ und DK² für einen von den Diazokomponenten DK1 bis DK83 oder für einen von A1 bis A12 abgeleiteten Rest stehen, wobei wenigstens einer der Reste Dk¹ oder Dk² für einen Rest der Formel A, Tk¹ für einen von Tk1 bis Tk20 abgeleiteten bivalenten Rest steht, und Kk¹ sowie Kk² unabhängig voneinander für einen von Kk2, Kk3, Kk5, Kk49 oder Kk50 abgeleiteten bivalenten Rest oder für einen bivalenten Rest der Formeln II-2, II-4, II-6, II-8, II-10, II-12 oder II-14 stehen.

### Beispiel 58:

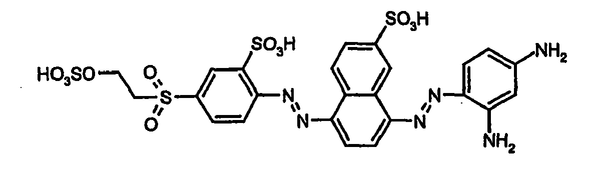

1) 1 mol Clevesäure-7 wurde in 25 gew.-%iger Natronlauge gelöst. Gleichseitig wurde 1 mol MSP in Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde.
2) Das in Schritt 1) erhaltene Produkt wurde mit überschüssigem Natriumnitrit und Salzsäure bei pH<1 und einer Temperatur von 0-5°C diazotiert und anschließend mit 1 mol Metamin bei einem pH-Wert von 3-8 umgesetzt. Nach beendeter Umsetzung wurde der Farbstoff durch Zugabe von NaCl ausgefällt und abgesaugt.

In zu Beispiel 58 analoger Weise können die Farbstoffe der allgemeinen Formel A-N=N-Napht-N=N-Kk erhalten werden (= Farbstoffe der allgemeinen Formel I mit P = Napht, p = 1 und m = 0), worin Napht für einen von den DK42 bis DK59 abgeleiteten Rest steht, Kk für einen von Kk1 bis Kk48 oder Kk51 bis Kk67 abgeleiteten Rest steht und A einen der Reste A1 bis A12 bedeutet. Beispiele hierfür sind in Tabelle 17 angegeben.

**Tabelle 17:**

| Beispiel Nr. | A | Napht | Kk |
|---|---|---|---|
| 58a | A1 | Dk46 | Kk5 |
| 58b | A1 | Dk46 | Kk27 |
| 58c | A1 | Dk44 | Kk27 |

### Beispiel 59a:

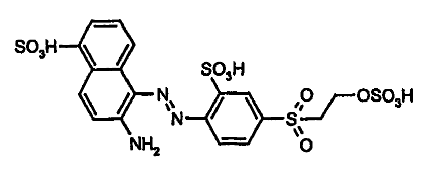

1 mol Clevesäure-7 wurde in 25 gew.%iger Natronlauge gelöst. Gleichzeitig wurde 1 mol MSP in Eiswasser suspendiert und mit überschüssigem Natriumnitrit und Salzsäure bei pH<1 und einer Temperatur von 0-5°C diazotiert und anschließend zu der Lösung der Clevesäure-7 gegeben, wobei der pH-Wert unter 2 gehalten wurde. Nach beendeter Umsetzung wurde der Farbstofflösung sprühgetrocknet.

In zu Beispiel 59a analoger Weise können die Farbstoffe der allgemeinen Formel A-N=N-Kk erhalten werden (= Farbstoffe der allgemeinen Formel I mit p = m = 0), worin Kk für einen von Kk1 bis Kk48, Kk51 bis Kk67 oder von DK3, DK4, DK6, DK7, DK11, DK13, DK14, DK15, DK18, DK21 bis DK27, DK29, DK30, DK33, DK36, DK38, DK39, oder Dk42 bis Dk83 abgeleiteten Rest steht und A einen der Reste A1 bis A12 bedeutet. Abhängig vom pH-Wert der Reaktion, kann die Kupplung des Rest A-N=N-sowohl in ortho-Position zur Hydroxylgruppe als auch in ortho-Position zur Aminogruppe in Dk42 bis Dk57 und in Dk59 erfolgen. Beispiele hierfür sind in Tabelle 18 angegeben.

**Tabelle 18:**

| Beispiele Nr. | A | Napht |
|---|---|---|
| 59a | A1 | DK47 |
| 59b | A1 | Kk32 |
| 59c | A1 | DK44 |
| 59d | A1 | Kk15 |
| 59e | A1 | DK42 |
| 59f | A7 | DK42 |
| 59g | A7 | DK47 |
| 59h | A7 | Kk46 |
| 59i | A7 | DK52 |
| 59j | A4 | DK52 |
| 59k | A4 | DK47 |

### Färbevorschriften:

Alle Angaben in Teilen sind als Gewichtsteile zu verstehen. Alle Angaben bezüglich Gerbstoffen, Hydrophoblermitteln, Fettlickem und Hilfmsitteln beziehen sich auf handelsübliche Produkte (Handelsware). Die Angaben bezüglich Farbstoff beziehen sich auf die Gesamtmenge an farbigen, organisch-chemischen Bestandteilen, gegebenenfalls herstellungbsedingt vorhandenen Salzen (Synthesesalze) und gegebenenfalls vorhandenen Stellmitteln.

Die Fixierausbeute wurde qualitativ mittels HPLC- und quantitativ mittels UV-VIS-spektroskopische Untersuchung der Färbeflotte bestimmt. Hierzug werden 5 ml Proben nach der Färbung (pH <7), nach 60 min, 120 min, 180 min Fixierung (pH>7) und von jede Waschwasserflotte genommen und mit 1 ml Ameisensärelösung auf pH 3-4 gestellt. Die Proben wurden mittels HPLC auf Farbstoff und seine Hydrolyseprodukte hin untersucht. Die Untersuchung erfolgte an HPLC Säulen Nucleodur C18 Gravity 3µ, CC70/2 und Hypersil 120-5 ODS, CC100/2 von der Firma Macherey-Nagel. Als Eluenten dienten Acetonitril / Puffer (1,6 g Tetrabutyammoniumhydrogensulfat, 6 g Dikaliumhydrogenphosphat - trihydrat in 1 L Wasser).

Die Bestimmung der Echtheiten erfolgte nach den folgenden, international anerkannten Normen:
- Schweißechtheit:: in Anlehnung an Veslic C4260
- Waschechtheit:: in Anlehnung an DIN EN ISO 15703
- Migrationsechtheit:: in Anlehnung an DIN EN ISO 15701, sowie durch 16 h Lagern bei 85 °C in einer Feuchte von 95 % unter ansonsten analogen Bedin- gungen zu DIN EN ISO 15701
- Reibechtheit:: in Anlehnung an DIN EN ISO 105 - X12 (Crockmeter, Reibung mit Baumwollgewebe) sowie in Anlehnung an DIN EN ISO 11640 (Ves- lic, Reibung mit Filz)
- Maeser:: in Anlehnung an ASTM D 2099
- Penetrometer:: in Anlehnung an DIN EN ISO 5403
- Wasserdampfdurchlässigkeit:: in Anlehnung an DIN EN ISO 14268
- Dauerbiegefestigkeit:: in Anlehnung an DIN EN ISO 5402
- Stichausreißversuch:: in Anlehnung an DIN 5331
- Weiterreißversuch:: in Anlehnung an DIN EN ISO 3377
- Zugfestigkeit:: in Anlehnung an DIN EN ISO 3376

### Färbevorschrift 1:

a) Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2d 60 Minuten bei pH 4,4 und 30°Cgefärbt. Durch portionsweise Zugabe von 100 Teilen 15%-ige Sodalösung wurde bei 40°C der pH-Wert zwischen 10,0 und 10,2 zur Fixierung des Farbstoffs 60 Minuten lang unter Walken gehalten. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt.
b) Das derart gefärbte Leder wurde in einer frisch angesetzten Flotte aus 100 Teilen Wasser, 2 Teilen Polymergerbstoff und 2 Teilen eines naturbasierten Fettlickers 30 Minuten bei 35°C nachgegerbt. Anschließend gab man zur Flotte 15 Teile eines flüssigen, synthetischen Gerbstoffs, 6 Teile Polymergerbstoff, 10 Teile Tara (Vegetabilgerbstoff) und walkte 120 Minuten. Anschließend wurde das Leder in der gleichen Flotte mit 8 Teilen eines fischölbasierten Fettlickers sowie 2 Teilen eines lecitinbasierten Fettlickers durch 2 stündiges Walken bei 35 °C gefettet. Schließlich säuerte man mit 2 Teilen konzentrierter Ameisensäure auf pH 3,6 ab und walkte zweimal 10 Minuten und einmal 30 Minuten. Das gefärbte, nachgegerbte und gefettete Leder wurde noch mit 15°C kalten Wasser 10 Minuten gespült und anschließend ausgereckt, über Nacht bei Raumtemperatur hängegetrocknet, konditioniert, gestollt und gespannt.

Es wurde eine brillantes farbtiefes rotes Leder-erhalten, das über hervorragende Wasch-, Schweiß-, Reib- und Migrationsechtheit verfügt.

### Färbevorschrift 2 :

a) Ein Lederstück von 100-Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2a 60 Minuten bei pH 4,4 und 30°Cgefärbt. Durch portionsweise Zugabe von 15 Teilen festem Soda wurde bei 40°C der pH-Wert bei 10,0 zur Fixierung des Farbstoffs 60 Minuten lang unter Walken gehalten. Anschließend folgte 4 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### Färbevorschrift 3:

a) Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 24 60 Minuten bei pH 4,4 und 30°C gefärbt. Durch portionsweise Zugabe von 100 Teilen 15-%ige Sodalösung wurde bei 50°C der pH-Wert bei 10,0 zur Fixierung des farbstoffs 60 Minuten lang unter Walken gehalten. Anschließend folgte 4 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### Färbevorschrift 4:

Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 58a 60 Minuten bei pH 4,4 und 30°Cgefärbt. Durch portionsweise Zugabe von 100 Teilen 15-%ige Sodalösung wurde bei 40°C der pH-Wert bei 10,0 zur Fixierung des Farbstoffs 90 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### färbevorschrift 5:

Ein Lederstück von 100 Gewichtsteilen eines auf übliche Weise organisch gegerbten Rindsleders der Falzstärke 1,1 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 58b 60 Minuten bei pH 4,4 und 30°Cgefärbt. Durch portionsweise Zugabe von 100 Teilen 15-%ige Sodalösung wurde bei 40°C der pH-Wert bei 10,0 zur Fixierung des Farbstoffs 60 Minuten lang unter Walken gehalten. Gleichzeitig mit der Sodalösungzugabe wurde in 3 Portionen insgesamt 15 Teile Glaubersalz zugesetzt. Anschließend folgte 5 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### Färbevorschrift 6:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 59a 60 Minuten bei pH 4,1 und 30°Cgefärbt. Durch portionsweise Zugabe von 100 Teilen eines Borax-Puffers wurde bei 40°C der pH im Bereich 7,9 und 9,0 zur Fixierung des Farbstoffs 180 Minuten lang unter Walken gehalten. Anschließend folgte 5 mal eine 10 minütige Waschoperation in 200 Teilen Wasser bei 40°C. Durch Zugabe von 200 Teilen Wasser und 0,6 Teilen Ameisensäure wurde ein pH von 4,3 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### Färbevorschrift 7:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 59e 60 Minuten bei pH 4,1 und 30°C gefärbt. Durch einmalige Zugabe von 30 Teilen einer 15%-igen Sodalösung wurde bei 40°C der pH im Bereich 9,4 - 9,9 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde eine brillantes farbtiefes rotes Leder erhalten, das über hervorragende Wasch-, Schweiß-, Reib- und Migrationsechtheit verfügt.

### Färbevorschrift 8:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen: Danach wurde mit 150 Teilen Wasser, 2 Teilen eines Dispergiermittels und 5 Teilen Farbstoff aus Beispiel 2b 60 Minuten bei pH 4,1 und 30°Cgefärbt. Durch portionsweise Zugabe von 100 Teilen eines Borax-Puffers wurde bei 40°C der pH im Bereich 8,0 und 9,0 zur Fixierung des Farbstoffs 180 Minuten lang unter Walken gehalten. Anschließend folgte, 3 mal eine 10. minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein farbtiefes blaues Leder erhalten, das über hervorragende Wasch-, Schweiß-, Reib- und Migrationsechtheit verfügt.

### Färbevorschrift 9:

Ein Lederstück von 100 Gewichtsteilen eines auf übliche Weise organisch gegerbten Rindsleders der Falzstärke 1.0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 2k 30 Minuten bei pH 4,2 und 30°Cgefärbt. Durch einmalige Zugabe von 30 Teilen einer 15%-igen Sodalösung wurde bei 40°C der pH im Bereich 9,4 - 9,9 zur Fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,8 eingestellt. Anschließend wurde wie in Färbevorschrift 1 unter b) beschrieben fortgefahren.

Es wurde ein farbtiefes blaues Leder erhalten, das über hervorragende Wasch-, Schweiß-, Reib- und Migrationsechtheit verfügt.

### Färbevorschrift 10:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 100 Teilen Wasser, 2 Teilen eines Dispergiermittels und 5 Teilen Farbstoff aus Beispiel 11a 30 Minuten bei pH 4,2 und 30°Cgefärbt. Durch portionsweise Zugabe von 20 Teilen einer 15%-igen Sodalösung wurde bei 40°C der pH im Bereich 8,6 - 9,3 zur fixierung des Farbstoffs 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,8 eingestellt. Anschließend wurde wie in Färbevorschrift 1 unter b) beschrieben fortgefahren.

Es wurde ein farbtiefes bordeaux-farbenes Leder erhalten, das über hervorragende Wasch-, Schweiß-, Reib- und Migrationsechtheit verfügt.

### Färbevorschrift 11:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 12ae 45 Minuten bei pH 4,3 und 30°Cgefärbt. Durch portionsweise Zugabe von 40 Teilen einer 7%-igen Natriumbicarbonatlösung wurde bei 40°C der pH im Bereich 7,3 - 8,2-zur Fixierung des Farbstoffs 240 Minuten lang unter Walken gehalten. Anschließend folgte 6 mal eine 10 minütige Waschoperation in 200 Teilen Wasser bei 40°C. Durch Zugabe von 200 Teilen Wasser und 1,2 Teilen Ameisensäure wurde ein pH von 3,9 eingestellt. Anschlieβend wurde wie in Färbevorschrift 1 unter b) beschrieben fortgefahren.

Es wurde ein brillantes farbtiefes blaues Leder erhalten, das über hervorragende Wasch-, Schweiß-, Reib- und Migrationsechtheit verfügt.

### Färbevorschrift 12:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 13c 30 Minuten bei pH 4,1 und 30°Cgefärbt. Durch portionsweise Zugabe von 40 Teilen einer 7%-igen Natriumbicarbonatlösung wurde zur Fixierung der pH bei 7,9 - 8,1 eingestellt und 60 Minuten lang gewalkt, anschließend wurde in drei Portionen 15 Teile Glaubersalz zugesetzt und weitere 120 Minuten bei pH 8,1 - 9,0 gewalkt. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 3,8.eingestellt. Anschließend wurde wie in Färbevorschrift 1 unter b) beschrieben fortgefahren.

Es wurde ein farbtiefes dunkelgrünes Leder erhalten, das über hervorragende Wasch-, Schweiß-, Reib- und Migrationsechtheit verfügt.

### Färbevorschrift 13:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 12n 45 Minuten bei pH 4,2 und 30°C gefärbt. Durch portionsweise Zugabe von 20 Teilen einer 15%-igen Sodalösung wurde zur Fixierung der pH zwischen 8,4 - 9,2 eingestellt und 120 Minuten lang gewalkt. Anschließend folgte 2 mal eine 10 minütige Waschoperation in 200 Teilen Wasser bei 40°C. Durch Zugabe von 200 Teilen Wasser und 1,1 Teilen Ameisensäure wurde ein pH von 3,9 eingestellt. Anschließend wurde wie in Färbevorschrift 1 unter b) beschrieben fortgefahren.

Es wurde ein schwarzes Leder erhalten, das über hervorragende Wasch-, Schweißund Migrationsechtheit verfügt.

### Färbevorschrift 14:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 5 Teilen Farbstoff aus Beispiel 13i 60 Minuten bei pH 4,2 und 30°C gefärbt. Durch portionsweise Zugabe von 21 Teilen einer 15%-igen Sodalösung wurde zur Fixierung der pH zwischen 8,8 - 9,3 eingestellt und 180 Minuten lang gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein farbtiefes dunkelgrünes Leder erhalten, das über hervorragende Wasch-, Schweiß-, Reib- und Migrationsechtheit verfügt.

### Färbevorschrift 15:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser und 5 Teilen Farbstoff aus Beispiel 59e 60 Minuten bei pH 4,1 und 30°C gefärbt. Durch portionsweise Zugabe von 21 Teilen einer 15%-igen Sodalösung wurde zur Fixierung der pH zwischen 8,8 - 9,3 eingestellt und 180 Minuten lang gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt. Anschließend wurde wie in Färbevorschrift 1 unter b) beschrieben fortgefahren.

Es wurde ein brillante farbtiefes rotes Leder erhalten, das über hervorragende Wasch-, Schweiß-, Reib- und Migrationsechtheit verfügt.

### Färbevorschrift 16:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 0,5 Teil Natriumbicarbonat und 1 Teil eines Dispergiermittels bestehenden flotte 120 Minuten bei 35°C neutralisiert. Die Entsäuerungsflotte hatte dann einen pH-Wert von 5,0. Danach wurde das Leder mit 200 Teilen Wasser 10 Minuten bei 35°C gewaschen. Das derart neutralisierte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten setzte man 5 Teile eines Sulfongerbstoffs und 4 Teile eines Harzgerbstoffs zu und es wurde weitere 60 Minuten gewalkt. Schließlich säuert man mit 0,5 % Ameisensäure auf pH 4,0 ab und walkte einmal 10 Minuten und einmal 30 Minuten.

In einer frisch angesetzten Flotte aus 150 Teilen Wasser, 2 Teilen eines Dispergiermittels, 5 Teilen Farbstoff aus Beispiel 59f und 0,2 Teilen Natriumbicarbonat wurde 90 Minuten bei pH 4,8 und 35°C gefärbt. Durch portionsweise Zugabe von 40 Teilen einer 15%-igen Sodalösung wurde zur Fixierung der pH zwischen 9,0 - 9,3 eingestellt und 180 Minuten lang bei 40°C gewalkt. Anschließend folgte 6 mal eine 10 minütige Waschoperation in 200 Teilen Wasser bei 40°C. Durch Zugabe von 200 Teilen Wasser und 0,7 Teilen Ameisensäure wurde ein pH von 4,5 eingestellt.

In neuer Flotte, bestehend aus 100 Teilen Wasser, 4,5 Teilen eines Mischlicker (Basis sulfitiertes Fischöl und synthetisches Öl), 0,5 Teilen eines lanolinbasierten Lickers wurde das Leder durch 40 minütiges Walken bei 55°C gefettet. Anschließend säuerte man mit 1,5 Teilen konzentrierte Ameisensäure auf pH 3,5 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein brillante farbtiefes rotes Leder erhalten, das über hervorragende Wasch-, Schweiß-, Reib- und Migrationsechtheit verfügt.

### Färbevorschrift 17:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies die Entsäuerungsflotte einen pH-Wert von 6,3 auf. Anschließend wurde mit 200 Teilen Wasser 10 Minuten bei 35°C gewaschen.

In einer frisch angesetzten Flotte aus 150 Teilen Wasser und 5 Teilen Farbstoff aus Beispiel 35g wurde 60 Minuten bei pH 5,6 und 30°C gefärbt. Durch portionsweise Zugabe von 13 Teilen einer 15%-igen Sodalösung stellte man den pH-Wert der flotte zwischen 8,5 - 9,1 ein und walkte 180 Minuten bei 40°C. Anschließend folgte 3 mal eine 10 minütige Waschoperation in 200 Teilen Wasser bei 40°C. Durch Zugabe von 200 Teilen Wasser und 1,5 Teilen Ameisensäure wurde ein pH von 4,8 eingestellt. Das derart gefärbte Leder wurde in einer frisch angesetzten Flotte aus 30 Teilen Wasser und 2 Teilen eines Polymergerbstoffs 30 Minuten bei 30°C nachgegerbt. Anschlieβend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuert man mit 0,5 Teilen Ameisensäure auf pH 4,4 ab und walkte einmal 10 Minuten und einmal 30 Minuten. Nach einer 10 minütigen Waschoperation mit 100 Teilen Wasser wurde das Leder in neuer Flotte bestehend aus 100 Teilen Wasser, 4,5 Teilen eines Mischlickers (Basis sulfitiertes Fischöl und synthetisches Öl), 0,5 Teilen eines Ianolinbasierten Lickers durch 40 minütiges Walken bei 55°C gefettet. Anschließend säuerte man mit 1,5 Teilen konzentrierte Ameisensäure auf pH 3,5 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein farbtiefes braunes Leder erhalten, das über hervorragende Wasch-, Schweiß-, Reib- und Migrationsechtheit verfügt..

### Färbevorschrift 18:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies-die Entsäuerungsflotte einen pH-Wert von 6,5 auf. Anschließend wurde mit 200 Teilen Wasser 10 Minuten bei 35°C gewaschen.

In einer frisch angesetzten Flotte aus 150 Teilen Wasser und 5 Teilen Farbstoff aus Beispiel 35h wurde 45 Minuten bei pH 5,9 und 30°C gefärbt. Durch portionsweise Zugabe von 15 Teilen einer 15%-igen Sodalösung stellte man den pH-Wert der Flotte zwischen 8,8 - 9,6 ein und walkte 120 Minuten bei 50°C. Anschließend folgte 3 mal eine 10 minütige Waschoperation in 200 Teilen Wasser bei 40°C. Durch Zugabe von 200 Teilen Wasser und 0,5 Teilen Ameisensäure wurde ein pH von 5,1 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschlieβend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuert man mit 1,0 Teilen Ameisensäure auf pH 4,1 ab und walkte einmal 10 Minuten und einmal 30 Minuten. Nach einer 10 minütigen Waschoperation mit 200 Teilen Wasser wurde das Leder in neuer Flotte bestehend aus 100 Teilen Wasser, 4,5 Teilen eines Mischlicker (Basis sulfitiertes Fischöl und synthetisches Öl), 0,5 Teilen eines Ianolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein farbtiefes dunkelbraunes Leder erhalten, das über hervorragende Wasch, Schweiß-, Reib- und Migrationsechtheit verfügt.

### Färbevorschrift 19:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Die Entsäuerungsflotte wies dann einen pH-Wert von 6,6 auf. Danach wurde mit 200 Teilen Wasser 10 Minuten bei 35°C gewaschen.

In einer frisch angesetzten Flotte aus 150 Teilen Wasser und 5 Teilen Farbstoff aus Beispiel 12a wurde 60 Minuten bei pH 6,0 und 30°C gefärbt. Durch portionsweise Zugabe von 18 Teilen einer 15%-igen Sodalösung wurde der pH-Wert der Flotte zwischen 8,8 - 9,8 eingestellt. Anschließend wurde 120 Minuten bei 50°C gewalkt. Anschließend folgte 2 mal eine 10 minütige Waschoperation in 200 Teilen Wasser bei 40°C. Durch Zugabe von 200 Teilen Wasser und.0,5 Teilen Ameisensäure wurde ein pH von 5,0 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschlieβend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuert man mit 1,0 Teilen Ameisensäure auf pH 4,1 ab und walkte einmal 10 Minuten, einmal 30 und zweimal 20 Minuten. Nach einer 10 minütigen Waschoperation mit 200 Teilen Wasser wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschlieβend säuerte man mit 1,5 Teilen konzentrierte Ameisensäure auf pH 3,4 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein schwarzes Leder erhalten, das über hervorragende Wasch-, Schweiß-, Reib- und Migrationsechtheit verfügt.

### Färbevorschrift 20:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden flotte 120 Minuten bei 35°C neutralisiert. Danach wies die Entsäuerungsflotte einen pH-Wert von 6,4 auf. Anschließend wurde mit 200 Teilen Wasser 10 Minuten bei 35°C gewaschen.

In einer frisch angesetzten Flotte aus 150 Teilen Wasser und 4,25 Teilen Farbstoff aus Beispiel 17h wurde 90 Minuten bei pH 5,7 und 30°C gefärbt. Durch portionsweise Zugabe von 16 Teilen einer 15%-igen Sodalösung wurde der pH-Wert der Flotte zwischen 8,6 - 9,3 eingestellt und es wurde 180 Minuten bei 50°C gewalkt. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,7 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 0,5 Teilen Ameisensäure auf pH 4,7 ab und walkte einmal 10 Minuten und einmal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschlieβend säuerte man mit 1,5 Teilen konzentrierte Ameisensäure auf pH 3,7 ab und walkt 40 Minuten. Das gefärbte und gefettete Leder wurde noch mit 15°C kaltem Wasser 10 Minuten gespült und anschließend ausgereckt, über Nacht bei Raumtemperatur hängegetrocknet, konditioniert, gestollt und gespannt.

Es wurde ein schwarzes Leder erhalten, das über hervorragende Wasch-, Schweiß-, Reib- und Migrationsechtheit verfügt.

### Färbevorschrift 21:

Ein Lederstück von 100 Gewichtsteilen eines auf übliche Weise chromgegerbten Rindsleders der Falzstärke 1,8 mm wurde in einem mit 200 Teilen Wasser und 0,1 Teillen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach war der pH-Wert der Entsäuerungsflotte 6,4. Anschließend wurde mit 200 Teilen Wasser 10 Minuten bei 35°C gewaschen.

In einer frisch angesetzten Flotte aus 150 Teilen Wasser und 10 Teilen Farbstoff aus Beispiel 25 wurde 45 Minuten bei pH 5,4 und 30°C gefärbt. Durch portionsweise Zugabe von 20 Teilen einer 15%-igen Sodalösung wurde der pH-Wert der Flotte zwischen 8,4 - 9,1 eingestellt und es wurde 120 Minuten bei 50°C gewalkt. Anschließend folgte 2 mal eine 10 minütige Waschoperation in 200 Teilen Wasser bei 40°C. Durch Zugabe von 200 Teilen Wasser und 0,7 Teilen Ameisensäure wurde ein pH von 4,6 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschlieβend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 0,5 Teilen Ameisensäure auf pH 4,7 ab und walkte einmal 10 Minuten und einmal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschlieβend säuerte man mit 1,5 Teilen konzentrierte Ameisensäure auf pH 3,7 ab und walkt 40 Minuten. Das gefärbte und gefettete Leder wurde noch mit 15°C kaltem Wasser 15 Minuten gespült und anschließend ausgereckt, über Nacht bei Raumtemperatur hängegetrocknet, konditioniert, gestollt und gespannt.

Es wurde ein farbtiefes schwarzes Leder erhalten, das über hervorragende Wasch-, Schweiß-, Reib- und Migrationsechtheit verfügt.

### Färbevorschrift 22:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 10 Teilen Farbstoff aus Beispiel 32 60 Minuten bei pH 4,3 und 30°C gefärbt. Durch portionsweise Zugabe von 27 Teilen einer 15%-igen Sodalösung wurde dann bei 40°C in der Flotte ein pH-Wert im Bereich 8,7 und 9,3 eingestellt und 180 Minuten unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,2 eingestellt. Die Nachgerbung/Fettung/Mechanische Arbeiten wurden wie in Färbevorschrift 1 unter b) beschrieben durchgeführt.

Es wurde eine farbtiefes schwarzes Leder erhalten, das über hervorragende Wasch-, Schweiß-, Reib- und Migrationsechtheit verfügt.

### Färbevorschrift 23:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einerflotte aus 150 Teilen Wasser, und 10 Teilen Farbstoff aus Beispiel 40b 60 Minuten bei pH 4,3 und 30°C gefärbt. Durch portionsweise Zugabe von 27 Teilen einer 15%-igen Sodalösung wurde bei 40°C in der Flotte ein pH-Wert im Bereich 8,7 und 9,3 zur Fixierung des Farbstoffs eingestellt und 180 Minuten lang unter Walken gehalten. Anschließend folgte 3 mal eine 10 minütige Waschoperation in 200 Teilen Wasser bei 40°C. Durch Zugabe von 200 Teilen Wasser und 0,7 Teilen Ameisensäure wurde ein pH von 4,3 eingestellt. Die Nachgerbung/Fettung/mechanischen Arbeiten wurden wie in Färbevorschrift 1 unter b) beschrieben durchgeführt.

Es wurde eine farbtiefes braunes Leder erhalten, das über hervorragende Wasch-, Schweiß-, Reib- und Migrationsechtheit verfügt.

### Färbevorschrift 24:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach wies die Entsäuerungsflotte einen pH-Wert von 6,4 auf. Anschließend wurde mit 200 Teilen Wasser 10 Minuten bei 35°C gewaschen.

In einer frisch angesetzten Flotte aus 150 Teilen Wasser und 4,25 Teilen Farbstoff aus Beispiel 42g wurde 60 Minuten bei pH 6,1 und 30°C gefärbt. Durch portionsweise Zugabe von 23 Teilen einer 15%-igen Sodalösung wurde in der Flotte ein pH-Wert zwischen 8,7 - 9,5 eingestellt und es wurde 180 Minuten bei 50°C gewalkt. Anschließend folgte 4 mal eine 10 minütige Waschoperation in 200 Teilen Wasser bei 40°C. Durch Zugabe von 200 Teilen Wasser und 1,0 Teilen Ameisensäure wurde ein pH von 4,3 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 15 Minuten gespült und anschließend ausgeeckt, vakuumiert, über Nacht bei Raumtemperatur hängegetrocknet, konditioniert, gestollt und gespannt.

Es wurde ein farbtiefes braunes Leder erhalten, das über hervorragende Wasch-, Schweiß-, Reib- und Migrationsechtheit verfügt.

### Färbevorschrift 25:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 4,25 Teilen Farbstoff aus Beispiel 43a 60 Minuten bei pH 4,2 und 30°C gefärbt. Durch portionsweise Zugabe von 30 Teilen einer 15%-igen Sodalösung wurde bei 40°C in der flotte ein pH-Wert im Bereich 8,5 und 9,4 eingestellt und 180 Minuten lang unter Walken gehalten. Anschließend folgte 2 mal eine 10 minütige Waschoperation in 200 Teilen Wasser bei 40°C. Durch Zugabe von 200 Teilen Wasser und 1,4 Teilen Ameisensäure wurde ein pH von 4,0 eingestellt. Die Nachger bung/Fettung/mechanischen Arbeiten wurden wie in Färbevorschrift 1 unter b) beschrieben durchgeführt.

Es wurde eine braunes Leder erhalten, das über hervorragende Wasch-, Schweiß-, Reib- und Migrationsechtheit verfügt.

### Färbevorschrift 26:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Die Entsäuerungsflotte wies dann einen pH-Wert von 6,2 auf. Danach wurde mit 200 Teilen Wasser 10 Minuten bei 35°C gewaschen.

In einer frisch angesetzten Flotte aus 150 Teilen Wasser und 11,5 Teilen Farbstoff aus Beispiel 1 c wurde 60 Minuten bei pH 5,3 und 30°C gefärbt. Durch portionsweise Zugabe von 28 Teilen einer 15%-igen Sodalösung wurde in der Flotte ein pH-Wert zwischen 8,8 - 9,3 eingestellt und es wurde 180 Minuten lang bei 50°C gewalkt. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.

Das derart gefärbte Leder wurde in einer frisch angesetzten flotte aus 30 Teilen Wasser und 2 Teilen eines Polymergerbstoffs 30 Minuten bei 30°C nachgegerbt. Anschlieβend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 4,0 ab und walkt 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein farbtiefes schwarzes Leder erhalten, das über hervorragende Wasch-, Schweiß-, Reib- und Migrationsechtheit verfügt.

### Färbevorschrift 27:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden flotte 120 Minuten bei 35°C neutralisiert. Danach hatte die Entsäuerungsflotte einen pH-Wert von 6,2. Anschließend wurde mit 200 Teilen Wasser 10 Minuten bei 35°C gewaschen.

In einer frisch angesetzten Flotte aus 150 Teilen Wasser und 14,3 Teilen Farbstoff aus Beispiel-6c wurde 60 Minuten bei pH 5,3 und 30°C gefärbt. Durch portionsweise Zugabe von 28 Teilen einer 15%-igen Sodalösung stellte man in der Flotte einen pH-Wert zwischen 8,7 - 9,3 ein-und walkte 180 Minuten lang bei 50°C. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.

Das derart gefärbte Leder wurde in einer frisch angesetzten flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 1,8 Teilen Ameisensäure auf pH 4,0 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein farbtiefes schwarzes Leder erhalten, das über hervorragende Wasch-, Schweiß-, Reib- und Migrationsechtheit verfügt.

### Färbevorschrift 28:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 11,5 Teilen Farbstoff aus Beispiel 6d 60 Minuten bei pH 4,3 und 30°C gefärbt. Durch portionsweise Zugabe von 30 Teilen einer 15%-igen Sodalösung wurde bei 40°C der pH-Wert 180 Minuten unter Walken im Bereich 8,8 und 9,2 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,4 eingestellt.
Die Nachgerbung/Fettung/mechanischen Arbeiten wurden wie in Färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 29:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit 150 Teilen Wasser, 2 Teilen eines Dispergiermittels und 14,3 Teilen Farbstoff aus Beispiel 9f 60 Minuten bei pH 4,3 und 30°C gefärbt. Durch portionsweise Zugabe von 30 Teilen einer 15%-igen Sodalösung wurde bei 40°C der pH der Flotte 180 Minuten unter Walken im Bereich 8,7 und 9,2 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.
Die Nachgerbung/Fettung/mechanischen Arbeiten wurden wie in färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 30:

Ein Lederstück von 100 Gewichtsteilen eines auf übliche Weise-organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 11,5 Teilen Farbstoff aus Beispiel 1f 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 180 Minuten unter Walken im Bereich 8,8 und 9,4 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.
Die Nachgerbung/Fettung/mechanischen Arbeiten wurden wie in Färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 31:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser und 14,3 Teilen Farbstoff aus Beispiel 12q 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 180 Minuten unter Walken im Bereich 8,6 und 9,3 gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,6 eingestellt.
Die Nachgerbung/Fettung/mechanischen Arbeiten wurden wie in Färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 32:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde in der neuen Flotte aus 150 Teilen Wasser, 2 Teilen eines Dispergiermittels und 8 Teilen Farbstoff aus Beispiel 12s der pH sofort durch portionsweise Zugabe von 30 Teilen einer 15%-igen Sodalösung auf > 8,5 gestellt und unter Walken bei 40°C im Bereich 8,7 und 9,2 zur Fixierung des Farbstoffs 220 Minuten gehalten. Anschließend folgte 3 mal eine 10 minütige Waschoperation in 200 Teilen Wasser bei 40°C. Durch Zugabe von 200 Teilen Wasser und 1,0 Teilen Ameisensäure wurde ein pH von 4,5 eingestellt.
Die Nachgerbung/Fettung/mechanischen Arbeiten wurden wie in Färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 33:

Ein Lederstück von 100 Gewichtsteilen eines auf übliche Weise chromgegerbten Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flotte 120 Minuten bei 35°C neutralisiert. Danach hatte die Entsäuerungsflotte einen pH-Wert von 6,4. Anschließend wurde mit 200 Teilen Wasser 10 Minuten bei 35°C gewaschen.

In einer frisch angesetzten Flotte aus 150 Teilen Wasser und 8 Teilen Farbstoff aus Beispiel 12t wurde durch portionsweise Zugabe von 23 Teilen einer 15%-igen Sodalösung der pH sofort auf >8,5 gestellt und zur Fixierung des Farbstoffs 240 Minuten bei 50°C unter walken zwischen 8,7 - 9,5 gehalten. Anschließend folgte 4 mal eine 10 minütige Waschoperation in 200 Teilen Wasser bei 40°C. Durch Zugabe von 200 Teilen Wasser und 1,1 Teilen Ameisensäure wurde ein pH von 4,2 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

Es wurde ein farbtiefes schwarzes Leder erhalten, das über hervorragende Wasch-, Schweiß-, Reib- und Migrationsechtheit verfügt.

### Färbevorschrift 34:

Ein Lederstück von 100 Gewichtsteilen eines auf übliche Weise organisch gegerbten Rindsleders der Falzstärke 1,0 mm wurde in einem mit 200 Teilen Wasser gefüllten Wackerfass 20 Minuten bei 30°C gewaschen. Danach wurde mit einer Flotte aus 150 Teilen Wasser, 2 Teilen eines Dispergiermittels und 7 Teilen Farbstoff aus Beispiel 12u 60 Minuten bei pH 4,3 und 30°C gefärbt. Durch portionsweise Zugabe von 30 Teilen einer 15%-igen Sodalösung wurde bei 40°C der pH-Wert der Flotte zur Fixierung des Farbstoffs 200 Minuten lang unter Walken im Bereich von 8,7 und 9,2 gehalten. Nach Flottenwechsel wurde durch Zugabe von 200 Teilen Wasser und 1,0 Teilen Ameisensäure ein pH von 4,5 eingestellt.
Die Nachgerbung/Fettung/mechanischen Arbeiten wurden wie in Färbevorschrift 1 unter b) beschrieben durchgeführt.

Es wurde ein farbtiefes schwarzes Leder erhalten, das über hervorragende Wasch-, Schweiß-, Reib- und Migrationsechtheit verfügt.

### Färbevorschrift 35:

Ein Lederstück von 100 Gewichtsteilen eines auf übliche Weise chromgegerbtes Rindsleders der Falzstärke 1,8 mm wurde in einem mit 200 Teilen Wasser und 0,1 Teilen Ameisensäure gefüllten Wackerfass 10 Minuten bei 35°C gewaschen und anschließend in einer aus 100 Teilen Wasser, 2 Teilen Natriumformiat, 1 Teil Natriumacetat, 1,5 Teil Natriumbicarbonat und 1 Teil eines Dispergiermittels bestehenden Flot te 120 Minuten bei 35°C neutralisiert. Danach hatte die Entsäuerungsflotte einen pH-Wert von 6,4. Anschließend wurde mit 200 Teilen Wasser 10 Minuten bei 35°C gewaschen.

In einer frisch angesetzten Flotte aus 150 Teilen Wasser und 7 Teilen Farbstoff aus Beispiel 13n wurde 60 Minuten bei pH 6,3 und 30°C gefärbt. Durch portionsweise Zugabe von 23 Teilen einer 15%-igen Sodalösung wurde zur Fixierung der pH-Wert der Flotte zwischen 8,7 - 9,5 eingestellt und es wurde 210 Minuten lang bei 50°C gewalkt. Nach Flottenwechsel wurde durch Zugabe von 200 Teilen Wasser und 1,0 Teilen Ameisensäure ein pH von 4,3 eingestellt.

Das derart gefärbte Leder wurde in einer frisch angesetzten Flotte aus 30 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Schließlich säuerte man mit 2,0 Teilen Ameisensäure auf pH 3,8 ab und walkte einmal 10 Minuten und dreimal 30 Minuten. Nach einer 10 minütigen Waschoperation mit 200 Teilen Wasser bei 40°C wurde das Leder in neuer Flotte bestehend aus 100 Teilen Wasser, 4,5 Teilen eines Mischlicker (Basis sulfitiertes Fischöl und synthetisches Öl), 0,5 Teilen eines lanolinbasierten Lickers durch 40 minütiges Walken bei 55°C gefettet. Anschließend säuerte man mit 1,5 Teilen konzentrierte Ameisensäure auf pH 3,3 ab und walkt 40 Minuten. Das gefärbte und gefettete Leder wurde noch mit 15°C kaltem Wasser 15 Minuten gespült und anschließend ausgereckt, vakuumiert, über Nacht bei Raumtemperatur hängegetrocknet, konditioniert, gestollt und gespannt.

### Färbevorschrift 36:

Ein Lederstück von 100 Gewichtsteilen eines auf übliche Weise chromgegerbten Rindsleders der Falzstärke 1,8 mm wurde in einem mit 300 Teilen Wasser gefüllten Wackerfass 10 Minuten bei 35°C gewaschen und anschließend in einer aus 100 Teilen Wasser, 2 Teilen Natriumformiat, 1 Teil Natriumacetat und 2,2 Teilen Natriumbicarbonat bestehenden Flotte 120 Minuten bei 40°C neutralisiert. Die Entsäuerungsflotte hatte dann einen pH-Wert von 7,2. Zur Entsäurungsflotte wurden 10,5 Teile Farbstoff 12bj gegeben und 30 Minuten bei pH 6,9 und 40°C gefärbt. Durch portionsweise Zugabe von 8 Teilen Soda stellte man den pH-Wert der Flotte zwischen 9,2 - 9,7 ein und walkte 75 Minuten bei 40°C. Anschließend folgte 2 mal eine 20 minütige Waschoperation in 300 Teilen Wasser bei 40°C. Durch Zugabe von 200 Teilen Wasser und 1,2 Teilen Ameisensäure wurde ein pH von 3,9 eingestellt.

Das derart gefärbte Leder wurde in einer frisch angesetzten Flotte aus 100 Teilen Wasser und 2 Teilen eines Polymergerbstoffs 30 Minuten bei 30°C nachgegerbt. Anschließend versetzte man die Flotte mit 2 Teilen eines hydrophobierenden Fettungsmittels. Nach einer Walkzeit von weiteren 30 Minuten wurden 5 Teile eines Sulfongerbstoffs und 4 Teile eines Harzgerbstoffs zugesetzt und weitere 60 Minuten gewalkt. Zur Nachgerbflotte wurden 4,5 Teilen eines Mischlickers (Basis sulfitiertes Fischöl und synthetisches Öl) und 0,5 Teilen eines lanolinbasierten Lickers zugegeben und das Leder durch 40 minütiges Walken bei 55°C gefettet. Anschließend säuerte man mit 1,6 Teilen konzentrierte Ameisensäure auf pH 3,6 ab und walkte 45 Minuten. Das gefärbte und gefettete Leder wurde noch mit 300 Teilen 20°C kaltem Wasser 10 Minuten gewaschen und anschließend ausgereckt, 1,5 Minuten bei 70°C vakuumiert, über Nacht bei Raumtemperatur hängegetrocknet, konditioniert, gestollt und gespannt.

Es wurde ein tiefschwarzes Leder erhalten, das über hervorragende Wasch-, Schweiß, Reib- und Migrationsechtheiten verfügt.

In analoger Weise wurden die in Tabelle 19 angegebenen Färbungen durchgeführt:

**Tabelle 19**

| Farbstoff Beispiel-Nr. | Färbevorschrift Nr. | Gew. Teile (%) | Farbe des Leders |
|---|---|---|---|
| 1a | 4 | 5 | schwarz |
| 1b | 11 | 7 | schwarz |
| 1b | 26 | 14,1 | schwarz |
| 1c | 4 | 6,7 | schwarz |
| 1d | 19 | 11,3 | schwarz |
| 1e | 30 | 6,4 | schwarz |
| 1f | 19 | 9,5 | schwarz |
| 2a | 35 | 7,9 | rot |
| 2b | 5 | 4,7 | blau |
| 2c | 6 | 5,8 | blau |
| 2d | 9 | 18,6 | rot |
| 2e | 25 | 14,6 | blau |
| 2f | 12 | 12,4 | blau |
| 2g | 34 | 12,0 | violett |
| 2h | 35 | 7,9 | blau |
| 2i | 26 | 18,6 | blau |
| 2j | 4 | 14,6 | blau |
| 2k | 19 | 12,4 | blau |
| 3 | 30 | 12,0 | violett |
| 4a | 31 | 6,3 | dunkelbraun |
| 5a | 34 | 7,8 | braun |
| 6a | 9 | 17,4 | blau |
| 6b | 1 | 5,2 | schwarz |
| 6b | 16 | 8,3 | schwarz |
| 6c | 15 | 8,8 | schwarz |
| 6d | 13 | 8,9 | schwarz |
| 6d | 17 | 12,0 | schwarz |
| 6e | 9 | 17,4 | blau |
| 6f | 9 | 17,4 | blau |
| 6g | 9 | 17,4 | blau |
| 6h | 9 | 17,4 | rot |
| 7 | 18 | 6,7 | blau |
| 8 | 21 | 9.2 | blau |
| 9a | 2 | 17,1 | rot |
| 9b | 17 | 11,4 | rot |
| 9c | 14 | 9,5 | schwarz |
| 9c | 22 | 16,7 | schwarz |
| 9d | 33 | 15,4 | braun |
| 9e | 33 | 15,4 | schwarz |
| 9f | 34 | 4,9 | schwarz |
| 9g | 2 | 17,1 | rot |
| 9h | 14 | 9,5 | schwarz |
| 10 | 24 | 7,9 | blau |
| 11a | 27 | 12,0 | bordeaux |
| 11b | 21 | 10,2 | bordeaux |
| 12a | 3 | 2,3 | schwarz |
| | 28 | 8,4 | schwarz |
| | 34 | 17,9 | schwarz |
| | 21 | 10,0 | schwarz |
| 12b | 5 | 2,4 | schwarz |
| | 23 | 8,4 | schwarz |
| | 32 | 16,9 | schwarz |
| | 18 | 4,7 | schwarz |
| | 27 | 10,5 | schwarz |
| | 33 | 18,7 | schwarz |
| 12c | 6 | 9,8 | dunkelgrün |
| | 16 | 9,8 | dunkelgrün |
| 12d | 1 | 18,1 | dunkelgrün |
| | 29 | 4,6 | dunkelgrün |
| 12e | 20 | 3,3 | dunkelgrün |
| 12f | 35 | 11,7 | dunkelgrün |
| 12g | 7 | 15,4 | dunkelgrün |
| 12h | 8 | 5,0 | grün |
| | 24 | 5,2 | grün |
| 12i | 7 | 2,7 | dunkelgrün |
| | 7 | 15,4 | dunkelgrün |
| | 17 | 5,1 | dunkelgrün |
| 12j | 4 | 2,7 | schwarz |
| | 10 | 15,4 | schwarz |
| | 31 | 5,1 | schwarz |
| 12k | 12 | 10,0 | schwarz |
| | 19 | 10,0 | schwarz |
| 12l | 15 | 15,1 | grün |
| 12m | 26 | 8,8 | schwarz |
| 12n | 15 | 15,1 | schwarz |
| 120 | 26 | 8,8 | dunkelgrün |
| 12p | 13 | 6,5 | schwarz |
| 12q | 14 | 8,3 | schwarz |
| 12r | 22 | 15,1 | schwarz |
| 12s | 1 | 8,3 | schwarz |
| 12t | 3 | 12,0 | schwarz |
| 12u | 11 | 3,8 | schwarz |
| 12v | 22 | 4,7 | schwarz |
| 12z | 33 | 9,0 | dunkelgrün |
| 12aa | 13 | 7,6 | dunkelblau |
| 12ab | 6 | 6,2 | dunkelblau |
| 12ac | 2 | 7,9 | dunkelblau |
| 12ad | 7 | 5,3 | dunkelblau |
| 12ae | 9 | 8,8 | blau |
| 12af | 8 | 7,4 | schwarz |
| 12ag | 4 | 7,9 | schwarz |
| 12ah | 14 | 8,8 | schwarz |
| 12ai | 5 | 10,1 | schwarz |
| 12aj | 23 | 5,9 | schwarz |
| 12ak | 17 | 14,3 | schwarz |
| 12al | 31 | 13,2 | schwarz |
| 12am | 1 | 19,3 | schwarz |
| 12an | 4 | 1,8 | schwarz |
| 12ao | 11 | 5,7 | grün |
| 12ap | 28 | 3,8 | grün |
| 12aq | 20 | 6,4 | grün |
| 12ar | 13 | 12,5 | schwarz |
| 12as | 26 | 10,5 | schwarz |
| 12at | 35 | 7,7 | schwarz |
| | 7 | 10,2 | schwarz |
| | 19 | 14,3 | schwarz |
| | 36 | 3,5 | schwarz |
| 12au | 15 | 4,6 | schwarz |
| 12av | 16 | 2,3 | schwarz |
| 12aw | 6 | 3,1 | grün |
| 12ax | 34 | 8,6 | schwarz |
| 12ay | 18 | 17,3 | schwarz |
| 12az | 31 | 2,8 | schwarz |
| 12ba | 8 | 5,1 | schwarz |
| 12bb | 10 | 6,2 | schwarz |
| 12bc | 33 | 11,3 | schwarz |
| 12bd | 1 | 7,1 | dunkelgrün |
| 12be | 25 | 13,7 | dunkelgrün |
| 12bf | 29 | 18,1 | dunkelgrün |
| 12bg | 21 | 4,4 | dunkelgrün |
| 12bh | 12 | 3,5 | dunkelgrün |
| 12bi | 17 | 6,2 | grün |
| 12bj | 2 | 2,1 | schwarz |
| 12bk | 23 | 3,6 | grün |
| 12bl | 30 | 5,2 | schwarz |
| 12bm | 27 | 8,9 | schwarz |
| 12bn | 14 | 5,6 | grün |
| 12bo | 32 | 3,1 | grün |
| 12bp | 22 | 14,5 | grün |
| 12bq | 24 | 9,6 | schwarz |
| 12br | 9 | 5,4 | schwarz |
| 12bs | 7 | 7,5 | schwarz |
| 12bt | 5 | 2,9 | schwarz |
| 12bu | 3 | 9,8 | schwarz |
| 12bv | 19 | 4,9 | schwarz |
| 12bw | 8 | 1,8 | schwarz |
| 12bx | 10 | 5,7 | schwarz |
| 12by | 33 | 3,8 | blau |
| 12bz | 1 | 6,4 | blau |
| 12ca | 25 | 12,5 | blau |
| 12cb | 29 | 10,5 | blau |
| 12cc | 21 | 7,7 | blau |
| 12cd | 12 | 4,6 | blau |
| 12ce | 17 | 2,3 | blau |
| 12cf | 2 | 3,1 | blau |
| 12cg | 23 | 8,6 | blau |
| 12ch | 30 | 17,3 | blau |
| 12ci | 27 | 2,8 | blau |
| 12cj | 14 | 5,1 | blau |
| 12ck | 32 | 6,2 | blau |
| 12cl | 22 | 12,5 | blau |
| 12cm | 24 | 10.5 | blau |
| 12cn | 9 | 7,7 | blau |
| 12co | 7 | 4,6 | blau |
| 12cp | 5 | 2,3 | blau |
| 12cq | 3 | 3,1 | blau |
| 12cr | 19 | 8,6 | blau |
| 12cs | 35 | 17,3 | blau |
| 12ct | 15 | 2,8 | blau |
| 12cu | 16 | 5,1 | blau |
| 12cv | 6 | 6,2 | blau |
| 12cw | 34 | 11,3 | bau |
| 12cx | 18 | 7,1 | blau |
| 12cy | 31 | 13,7 | blau |
| 12cz | 4 | 18,1 | blau |
| 12da | 11 | 4,4 | blau |
| 12db | 28 | 3,5 | blau |
| 12dc | 20 | 6,2 | blau |
| 12dd | 13 | 2,1 | blau |
| 12de | 26 | 3,6 | grün |
| 12df | 35 | 5,2 | grün |
| 12dg | 15 | 8,9 | schwarz |
| 12dh | 16 | 5,6 | schwarz |
| 12di | 6 | 3,1 | schwarz |
| 12dj | 25 | 14,5 | schwarz |
| 12dk | 29 | 9,6 | schwarz |
| 12dl | 21 | 5,4 | grün |
| 12dm | 12 | 7,5 | grün |
| 12dn | 17 | 2,9 | grün |
| 12do | 2 | 9,8 | schwarz |
| 12dp | 23 | 4,9 | schwarz |
| 12dq | 30 | 1,8 | schwarz |
| 12dr | 27 | 5,7 | schwarz |
| 12ds | 14 | 3,8 | schwarz |
| 12dt | 32 | 6,4 | schwarz |
| 12du | 22 | 12,5 | schwarz |
| 12dv | 24 | 10,5 | schwarz |
| 12dw | 9 | 7,7 | blau |
| 12dx | 7 | 4,6 | blau |
| 12dy | 5 | 2,3 | blau |
| 12dz | 3 | 3,1 | blau |
| 12ea | 19 | 8,6 | blau |
| 12eb | 35 | 17,3 | blau |
| 12ec | 15 | 2,8 | blau |
| 12ed | 16 | 5,1 | blau |
| 12ee | 6 | 6,2 | blau |
| 12ef | 14 | 5,6 | blau |
| 12eg | 32 | 3,1 | blau |
| 12eh | 22 | 14,5 | blau |
| 12ei | 24 | 9,6 | blau |
| 12ej | 9 | 5,4 | blau |
| 12ek | 7 | 7,5 | blau |
| 12el | 5 | 2,9 | blau |
| 12em | 3 | 1,8 | blau |
| 12en | 19 | 5,7 | blau |
| 12eo | 35 | 3,8 | blau |
| 12ep | 15 | 6,4 | blau |
| 12eq | 16 | 12,5 | blau |
| 12er | 6 | 10,5 | blau |
| 12es | 34 | 7,7 | blau |
| 12et | 18 | 4,6 | blau |
| 12eu | 31 | 2,3 | blau |
| 12ev | 4 | 3,1 | blau |
| 12ew | 11 | 8,6 | blau |
| 12ex | 28 | 17,3 | blau |
| 12ey | 20 | 2,8 | blau |
| 12ez | 13 | 5,1 | blau |
| 12fa | 15 | 6,2 | blau |
| 12fb | 16 | 11,3 | blau |
| 12fc | 6 | 7,1 | blau |
| 12fd | 14 | 13,7 | blau |
| 12fe | 32 | 18,1 | blau |
| 12ff | 22 | 7,7 | blau |
| 12fg | 24 | 4,6 | grün |
| 12fh | 9 | 2,3 | grün |
| 12fi | 7 | 3,1 | schwarz |
| 12fj | 5 | 8,6 | schwarz |
| 12fk | 3 | 17,3 | schwarz |
| 12fl | 19 | 2,8 | schwarz |
| 12fm | 34 | 5,1 | schwarz |
| 12fn | 18 | 6,2 | grün |
| 12fo | 31 | 5,6 | grün |
| 12fp | 4 | 3,1 | grün |
| 12fq | 11 | 14,5 | schwarz |
| 12fr | 28 | 9,6 | schwarz |
| 12fs | 20 | 5,4 | schwarz |
| 12ft | 13 | 8,2 | schwarz |
| 12fu | 15 | 1,9 | schwarz |
| 12fv | 16 | 2,6 | schwarz |
| 12fw | 6 | 14,3 | schwarz |
| 12fx | 5 | 6,7 | schwarz |
| 12fy | 1 | 5,9 | blau |
| 12fz | 14 | 3,2 | blau |
| 12ga | 36 | 4,6 | blau |
| 12gb | 15 | 17,9 | blau |
| 12gc | 27 | 6,8 | blau |
| 12gd | 4 | 2,4 | blau |
| 12ge | 20 | 10,1 | schwarz |
| 12gf. | 9 | 6,6 | schwarz |
| 12gg | 3 | 7,5 | schwarz |
| 12gh | 33 | 3,5 | schwarz |
| 12gi | 15 | 11,2 | schwarz |
| 12gj | 7 | 8,6 | schwarz |
| 12gk | 11 | 3,6 | blau |
| 12gl | 2 | 19 | blau |
| 12gm | 4 | 10,9 | blau |
| 12gn | 8 | 5,6 | blau |
| 12go | 15 | 6,1 | blau |
| 12gp | 16 | 4,8 | blau |
| 12gq | 7 | 3,1 | schwarz |
| 12gr | 13 | 9,9 | schwarz |
| 12gs | 21 | 12,6 | schwarz |
| 12t | 30 | 13,5 | schwarz |
| 12gu | 36 | 14,8 | schwarz |
| 12gv | 25 | 2,8 | schwarz |
| 12gw | 15 | 15,1 | schwarz |
| | 29 | 4,8 | schwarz |
| 12gz | 26 | 8,8 | schwarz |
| 12ha | 15 | 15,1 | schwarz |
| | 8 | 5,5 | schwarz |
| 12hb | 26 | 8,8 | schwarz |
| | 11 | 6,1 | schwarz |
| 12hc | 13 | 6,5 | schwarz |
| | 24 | 11,2 | schwarz |
| 12hd | 14 | 8,3 | schwarz |
| | 35 | 4,1 | schwarz |
| 12he | 22 | 15,1 | schwarz |
| | 16 | 7,5 | schwarz |
| 12hf | 1 | 8,3 | schwarz |
| | 33 | 4,6 | schwarz |
| 12hh | 3 | 12,0 | schwarz |
| | 27 | 6,1 | schwarz |
| 12hi | 11 | 3,8 | schwarz |
| 12hj | 22 | 4,7 | schwarz |
| 12hk | 33 | 9,0 | schwarz |
| 12hl | 13 | 7,6 | schwarz |
| 12hm | 6 | 6,2 | schwarz |
| 12hn | 2 | 7,9 | schwarz |
| 12ho | 7 | 5,3 | schwarz |
| 12hp | 9 | 8,8 | schwarz |
| 12hq | 8 | 7,4 | schwarz |
| 12hr | 4 | 7,9 | schwarz |
| 12hs | 14 | 8,8 | schwarz |
| 12ht | 5 | 10,1 | blau |
| 12hu | 23 | 5,9 | blau |
| 12hv | 17 | 14,3 | blau |
| 12hw | 31 | 13,2 | schwarz |
| 13a | 2 | 2,3 | schwarz |
| | 6 | 8,4 | schwarz |
| | 11 | 17,9 | schwarz |
| | 17 | 10,0 | schwarz |
| 13b | 9 | 2,4 | schwarz |
| | 25 | 8,4 | schwarz |
| | 21 | 4,7 | schwarz |
| | 21 | 10,5 | schwarz |
| | 21 | 18,7 | schwarz |
| 13c | 25 | 11,0 | dunkelgrün |
| 13d | 17 | 10,8 | dunkelgrün |
| 13e | 30 | 17,0 | dunkelgrün |
| 13f | 34 | 11,5 | dunkelgrün |
| 13g | 7 | 11,2 | dunkelgrün |
| 13h | 3 | 8,4 | schwarz |
| | 24 | 8,4 | schwarz |
| 13i | 16 | 8,4 | dunkelgrün |
| 13j | 27 | 11,4 | schwarz |
| 13k | 10 | 6,6 | schwarz |
| | 10 | 13,2 | schwarz |
| 131 | 12 | 15,1 | grün |
| 13m | 15 | 8,8 | schwarz |
| 13n | 15 | 8,8 | schwarz |
| 130 | 1 | 8,2 | dunkelgrün |
| 13p | 19 | 2,9 | schwarz |
| 13q | 21 | 4,5 | schwarz |
| 13r | 4 | 6,7 | schwarz |
| 13s | 20 | 15,0 | schwarz |
| 13t | 5 | 4,6 | schwarz |
| 13u | 17 | 6,7 | schwarz |
| 13v | 19 | 8,2 | schwarz |
| 13z | 8 | 2,9 | dunkelgrün |
| 13aa | 9 | 4,5 | dunkelblau |
| 13ab | 10 | 6,7 | dunkelblau |
| 13ac | 11 | 7,7 | dunkelblau |
| 13ad | 18 | 9,1 | dunkelblau |
| 13ae | 16 | 8,3 | blau |
| 13af | 14 | 5,9 | schwarz |
| 13ag | 15 | 11,0 | schwarz |
| 13ah | 14 | 8,8 | schwarz |
| 13ai | 6 | 10,9 | schwarz |
| 13aj | 7 | 11,1 | dunkelblau |
| 13ak | 15 | 9,7 | dunkelblau |
| 13al | 12 | 8,4 | dunkelgrün |
| 13am | 13 | 7,6 | schwarz |
| 13an | 23 | 5,9 | schwarz |
| 13ao | 17 | 14,3 | schwarz |
| 13ap | 31 | 13,2 | schwarz |
| 13aq | 1 | 19,3 | schwarz |
| 13ar | 4 | 1,8 | schwarz |
| 13as | 11 | 5,7 | grün |
| 13at | 28 | 3,8 | grün |
| 13au | 20 | 6,4 | grün |
| 13av | 13 | 12,5 | schwarz |
| 13aw | 26 | 10,5 | schwarz |
| 13ax | 35 | 7,7 | schwarz |
| 13ay | 15 | 4,6 | schwarz |
| 13az | 16 | 2,3 | schwarz |
| 13ba | 6 | 3,1 | schwarz |
| 13bb | 34 | 8,6 | schwarz |
| 13bc | 18 | 17,3 | schwarz |
| 13bd | 31 | 2,8 | schwarz |
| 13be | 8 | 5,1 | schwarz |
| 13bf | 10 | 6,2 | schwarz |
| 13bg | 33 | 11,3 | schwarz |
| 13bh | 1 | 7,1 | dunkelgrün |
| 13bi | 25 | 13,7 | dunkelgrün |
| 13bj | 29 | 18,1 | dunkelgrün |
| 13bk | 21 | 4,4 | dunkelgrün |
| 13bt | 12 | 3,5 | dunkelgrün |
| 13bm | 17 | 6,2 | dunkelgrün |
| 13bn | 2 | 2,1 | schwarz |
| 13bo | 23 | 3,6 | dunkelgrün |
| 13bp | 30 | 5,2 | grün |
| 13bq | 27 | 8,9 | schwarz |
| 13br | 14 | 5,6 | grün |
| 13bs | 32 | 3,1 | grün |
| 13bt | 22 | 14,5 | grün |
| 13bu | 24 | 9,6 | schwarz |
| 13bv | 9 | 5,4 | schwarz |
| 13bw | 7 | 7,5 | schwarz |
| 13bx | 5 | 2,9 | schwarz |
| 13by | 3 | 9,8 | schwarz |
| 13bz | 19 | 4,9 | schwarz |
| 13ca | 8 | 1,8 | schwarz |
| 13cb | 10 | 5,7 | schwarz |
| 13cc | 33 | 3,8 | blau |
| 13cd | 1 | 6,4 | blau |
| 13ce | 25 | 12,5 | blau |
| 13cf | 29 | 10,5 | blau |
| 13cg | 21 | 7,7 | blau |
| 13ch | 12 | 4,6 | blau |
| 13ci | 17 | 2,3 | blau |
| 13cj | 2 | 3,1 | blau |
| 13ck | 23 | 8,6 | blau |
| 13cl | 30 | 17,3 | blau |
| 13cm | 27 | 2,8 | blau |
| 13cn | 14 | 5,1 | blau |
| 13co | 32 | 6,2 | blau |
| 13cp | 22 | 12,5 | blau |
| 13cq | 24 | 10,5 | blau |
| 13cr | 9 | 7,7 | blau |
| 13cs | 7 | 4,6 | blau |
| 13ct | 5 | 2,3 | blau |
| 13cu | 3 | 3,1 | blau |
| 13cv | 19 | 8,6 | blau |
| 13cw | 35 | 17,3 | blau |
| 13cx | 15 | 2,8 | blau |
| 13cy | 16 | 5,1 | blau |
| 13cz | 6 | 6,2 | blau |
| 13da | 34 | 11,3 | blau |
| 13db | 18 | 7,1 | blau |
| 13dc | 31 | 13,7 | blau |
| 13dd | 4 | 18,1 | blau |
| 13de | 11 | 4,4 | blau |
| 13df | 28 | 3,5 | blau |
| 13dg | 20 | 6,2 | blau |
| 13dh | 13 | 2,1 | grün |
| 13di | 26 | 3,6 | grün |
| 13dj | 35 | 5,2 | schwarz |
| 13dk | 15 | 8,9 | schwarz |
| 13dl | 16 | 5,6 | schwarz |
| 13dm | 6 | 3,1 | schwarz |
| 13dn | 25 | 14,5 | schwarz |
| 13do | 29 | 9,6 | grün |
| 13dp | 21 | 5,4 | grün |
| 13dq | 12 | 7,5 | grün |
| 13dr | 17 | 2,9 | schwarz |
| 13ds | 2 | 9,8 | schwarz |
| 13dt | 23 | 4,9 | schwarz |
| 13du | 30 | 1,8 | schwarz |
| 13dv | 27 | 5,7 | schwarz |
| 13dw | 14 | 3,8 | schwarz |
| 13dx | 32 | 6,4 | schwarz |
| 13dy | 22 | 12,5 | schwarz |
| 13dz | 24 | 10,5 | blau |
| 13ea | 9 | 7,7 | blau |
| 13eb | 7 | 4,6 | blau |
| 13ec | 5 | 2,3 | blau |
| 13ed | 3 | 3,1 | blau |
| 13ee | 19 | 8,6 | blau |
| 13ef | 35 | 17,3 | blau |
| 13eg | 15 | 2,8 | blau |
| 13eh | 16 | 5,1 | blau |
| 13ei | 6 | 6,2 | blau |
| 13ej | 14 | 5,6 | blau |
| 13ek | 32 | 3,1 | blau |
| 13el | 22 | 14,5 | blau |
| 13em | 24 | 9,6 | blau |
| 13en | 9 | 5,4 | blau |
| 13eo | 7 | 7,5 | blau |
| 13ep | 5 | 2,9 | blau |
| 13eq | 3 | 1,8 | blau |
| 13er | 19 | 5,7 | blau |
| 13es | 35 | 3,8 | blau |
| 13et | 15 | 6,4 | blau |
| 13eu | 16 | 12,5 | blau |
| 13ev | 6 | 10,5 | blau |
| 13ew | 34 | 7,7 | blau |
| 13ex | 18 | 4,6 | blau |
| 13ey | 31 | 2,3 | blau |
| 13ez | 4 | 3,1 | blau |
| 13fa | 11 | 8,6 | blau |
| 13fb | 28 | 17,3 | blau |
| 13fc | 20 | 2,8 | blau |
| 13fd | 13 | 5,1 | blau |
| 13fe | 15 | 6,2 | blau |
| 13ff | 16 | 11,3 | blau |
| 13fg | 6 | 7,1 | blau |
| 13fh | 14 | 13,7 | blau |
| 13fi | 32 | 18,1 | blau |
| 13fj | 22 | 7,7 | grün |
| 13fk | 24 | 4,6 | grün |
| 13fl | 9 | 2,3 | schwarz |
| 13fm | 7 | 3,1 | schwarz |
| 13fn | 5 | 8,6 | Schwarz |
| 13fo | 3 | 17,3 | schwarz |
| 13fp | 19 | 2,8 | schwarz |
| 13fq | 34 | 5,1 | grün |
| 13fr | 18 | 6,2 | grün |
| 13fs | 31 | 5,6 | grün |
| 13ft | 4 | 3,1 | schwarz |
| 13fu | 11 | 14,5 | schwarz |
| 13fv | 28 | 9,6 | schwarz |
| 13fw | 20 | 5,4 | schwarz |
| 13fx | 13 | 8,2 | schwarz |
| 13fy | 11 | 8,6 | schwarz |
| 13fz | 28 | 17,3 | schwarz |
| 13ga | 20 | 2,8 | schwarz |
| 13gb | 1 | 5,9 | blau |
| 13gc | 14 | 3,2 | blau |
| 13gd | 36 | 4,6 | blau |
| 13ge | 15 | 17,9 | blau |
| 13gf | 27 | 6,8 | blau |
| 13gg | 4 | 2,4 | blau |
| 13gh | 20 | 10,1 | schwarz |
| 13gi | 9 | 6,6 | schwarz |
| 13gj | 3 | 7,5 | schwarz |
| 13gk | 33 | 3,5 | schwarz |
| 13gl | 15 | 11,2 | schwarz |
| 13gm | 7 | 8,6 | schwarz |
| 13gn | 11 | 3,6 | blau |
| 13go | 2 | 19 | blau |
| 13gp | 4 | 10,9 | blau |
| 13gq | 8 | 5,6 | blau |
| 13gr | 15 | 6,1 | blau |
| 13gs | 16 | 4,8 | blau |
| 13gt | 7 | 3,1 | schwarz |
| 13gr | 13 | 9,9 | schwarz |
| 13gs | 21 | 12,6 | schwarz |
| 13gt | 30 | 13,5 | schwarz |
| 13gu | 36 | 14,8 | schwarz |
| 13gv | 25 | 2,8 | schwarz |
| 13gw | 15 | 15,1 | schwarz |
| | 29 | 4,8 | schwarz |
| 13gz | 26 | 8,8 | schwarz |
| 13ha | 15 | 15,1 | schwarz |
| | 8 | 5,5 | schwarz |
| 13hb | 26 | 8,8 | schwarz |
| | 11 | 6,1 | schwarz |
| 13hc | 13 | 6,5 | schwarz |
| | 24 | 11,2 | schwarz |
| 13hd | 14 | 8,3 | schwarz |
| | 35 | 4,1 | schwarz |
| 13he | 22 | 15,1 | schwarz |
| | 16 | 7,5 | schwarz |
| 13hf | 1 | 8,3 | schwarz |
| | 33 | 4,6 | schwarz |
| 13hh | 3 | 12,0 | schwarz |
| | 27 | 6,1 | schwarz |
| 13hi | 11 | 3,8 | schwarz |
| 13hj | 22 | 4,7 | schwarz |
| 13hk | 33 | 9,0 | schwarz |
| 13hl | 13 | 7,6 | schwarz |
| 13hm | 6 | 6,2 | schwarz |
| 13hn | 2 | 7,9 | schwarz |
| 13ho | 7 | 5,3 | schwarz |
| 13hp | 9 | 8,8 | schwarz |
| 13hq | 8 | 7,4 | schwarz |
| 13hr | 4 | 7,9 | schwarz |
| 13hs | 14 | 8,8 | schwarz |
| 13ht | 5 | 10,1 | blau |
| 13hu | 23 | 5,9 | blau |
| 13hv | 17 | 14,3 | blau |
| 13hw | 31 | 13,2 | schwarz |
| 14 | 2 | 6,9 | schwarz |
| 15 | 3 | 3,9 | schwarz |
| 16a | 8 | 10,0 | grün |
| 16b | 22 | 7,3 | schwarz |
| 16c | 16 | 10,0 | schwarz |
| 16d | 24 | 10,9 | dunkelgrün |
| 16e | 30 | 11,1 | dunkelgrün |
| 1,6f | 28 | 11,1 | grün |
| 16g | 23 | 12,4 | schwarz |
| 16h | 31 | 12,4 | schwarz |
| 16i | 26 | 12,4 | schwarz |
| 16j | 15 | 3,6 | dunkelblau |
| 16k | 27 | 12,3 | dunkelblau |
| 17a | 13 | 8,4 | grün |
| 17b | 28 | 14,4 | schwarz |
| 17c | 32 | 14,4 | schwarz |
| 17d | 35 | 12,4 | dunkelgrün |
| 17e | 34 | 8,4 | dunkelgrün |
| 17f | 33 | 14,4 | grün |
| 17g | 4 | 3,4 | schwarz |
| | 4 | 13,6 | schwarz |
| | 19 | 3,4 | schwarz |
| | 19 | 13,6 | schwarz |
| 17h | 18 | 5,8 | schwarz |
| 17i | 35 | 19,8 | schwarz |
| 17j | 17 | 9,7 | grün |
| 17k | 14 | 7,6 | dunkelblau |
| 171 | 26 | 17,3 | dunkelblau |
| 18 | 16 | 8,6 | dunkelgrün |
| 19 | 15 | 6,8 | dunkelgrün |
| 20 | 31 | 5,9 | dunkelgrün |
| 21 | 29 | 3,9 | dunkelgrün |
| 22 | 30 | 10,0 | dunkelgrün |
| 23 | 22 | 7,3 | blau |
| 24 | 21 | 10,0 | rot |
| 25 | 18 | 7,3 | schwarz |
| 26 | 13 | 8,2 | braun |
| 27 | 34 | 11,1 | braun |
| 28a | 33 | 8,4 | braun |
| 28b | 32 | 7,6 | braun |
| 29a | 11 | 6,9 | braun |
| 29b | 2 | 10,9 | braun |
| 30 | 1 | 11,1 | blau |
| 31 | 5 | 8,8 | blau |
| 32 | 4 | 10,4 | schwarz |
| 33 | 12 | 11,2 | rot |
| 34a | 28 | 4,2 | braun |
| | 28 | 8,4 | braun |
| | 28 | 16,8 | braun |
| 34b | 21 | 4,2 | dunkelbraun |
| | 21 | 8,4 | dunkelbraun |
| | 21 | 16,8 | dunkelbraun |
| 34c | 5 | 8,8 | braun |
| 34d | 4 | 10,4 | braun |
| 34e | 12 | 11,2 | braun |
| 34f | 9 | 10,2 | braun |
| | 18 | 10,2 | braun |
| 34g | 5 | 14,4 | braun |
| | 7 | 7,7 | braun |
| | 24 | 14,4 | braun |
| 34h | 7 | 5,5 | braun |
| 34i | 13 | 7,7 | dunkelbraun |
| 34j | 29 | 7,7 | dunkelbraun |
| 34k | 11 | 9,2 | braun |
| 341 | 15 | 4,9 | braun |
| 34m | 9 | 7,0 | braun |
| 34n | 8 | 6,3 | braun |
| 34o | 32 | 11,1 | braun |
| 34p | 14 | 13,1 | dunkelbraun |
| 34q | 12 | 12,5 | dunkelbraun |
| 34r | 13 | 7,8 | braun |
| 34s | 27 | 8,4 | braun |
| 34t | 11 | 7,7 | dunkelbraun |
| 34u | 18 | 9,1 | hellbraun |
| 34v | 16 | 8,3 | dunkelbraun |
| 34z | 7 | 4,6 | braun |
| 34aa | 14 | 5,7 | braun |
| 34ab | 21 | 18,6 | braun |
| 34ac | 28 | 12,2 | braun |
| 35a | 14 | 5,9 | braun |
| 35b | 1 | 4,2 | dunkelbraun |
| | 1 | 8,4 | dunkelbraun |
| | 1 | 16,8 | dunkelbraun |
| 35c | 6 | 8,1 | dunkelbraun |
| 35d | 19 | 5,4 | hellbraun |
| 35e | 2 | 7,2 | rotbraun |
| | 2 | 14,4 | rotbraun |
| | 2 | 20 | rotbraun |
| | 27 | 7,2 | rotbraun |
| | 27 | 14,4 | rotbraun |
| | 27 | 20 | rotbraun |
| 35f | 33 | 14,4 | braun |
| 35g | 26 | 12,4 | braun |
| 35h | 31 | 9,4 | dunkelbraun |
| 35i | 34 | 7,9 | braun |
| 35j | 15 | 8,8 | braun |
| 35k | 27 | 6,3 | braun |
| 35l | 22 | 8,8 | braun |
| 35m | 18 | 8,9 | braun |
| 35n | 12 | 5,7 | hellbraun |
| 35o | 26 | 8,2 | braun |
| 35p | 24 | 3,9 | braun |
| 35q | 29 | 6,4 | braun |
| 35r | 18 | 5,7 | braun |
| 35s | 30 | 4,1 | braun |
| | 30 | 17,6 | braun |
| | 26 | 4,1 | braun |
| | 26 | 17,6 | braun |
| 35t | 28 | 7,4 | braun |
| 35u | 25 | 8,9 | dunkelbraun |
| 35v | 24 | 4,7 | hellbraun |
| 35z | 11 | 4,7 | hellbraun |
| 35aa | 23 | 8,8 | dunkelbraun |
| 35ab | 11 | 16,6 | hellbraun |
| 35ac | 12 | 6,8 | braun |
| 35ad | 14 | 6,8 | braun |
| 35ae | 20 | 7,4 | braun |
| 35af | 34 | 4,8 | braun |
| 35ag | 33 | 4,8 | braun |
| 35ah | 18 | 4,2 | braun |
| 35ai | 29 | 17,9 | braun |
| 36 | 10 | 7,4 | braun |
| 37 | 16 | 7,4 | braun |
| 38a | 20 | 7,4 | braun |
| 38b | 3 | 8,8 | braun |
| 38c | 9 | 16,6 | braun |
| 38d | 7 | 15,4 | braun |
| 38e | 6 | 5,6 | gelbbraun |
| 38f | 4 | 5,2 | hellbraun |
| 38g | 12 | 13,3 | dunkelbraun |
| 38h | 10 | 5,6 | braun |
| | 35 | 5,6 | braun |
| 38i | 25 | 16,6 | braun |
| 38j | 33 | 15,4 | braun |
| 38k | 34 | 4,9 | braun |
| 381 | 24 | 7,9 | braun |
| 38m | 27 | 12,0 | braun |
| 38n | 31 | 10,0 | braun |
| 38o | 26 | 7,7 | braun |
| 38p | 31 | 9,2 | braun |
| 38q | 34 | 4,9 | braun |
| 38r | 15 | 7,0 | braun |
| 38s | 27 | 12,4 | braun |
| 38t | 22 | 9,4 | braun |
| 38u | 18 | 7,9 | braun |
| 38v | 17 | 11,3 | braun |
| 38z | 3 | 18,2 | braun |
| 39a | 12 | 8,8 | braun |
| 39b | 26 | 6,3 | braun |
| 39c | 23 | 5,6 | braun |
| 39d | 3 | 8,8 | braun |
| 39e | 34 | 6,4 | braun |
| 39f | 12 | 6,4 | braun |
| 39g | 4 | 5,6 | braun |
| 39h | 7 | 4,4 | braun |
| 39i | 8 | 13,3 | braun |
| 39j | 5 | 10,6 | braun |
| | 20 | 10,6 | braun |
| 39k | 14 | 10,2 | braun |
| 391 | 17 | 10,2 | braun |
| 39m | 34 | 14,6 | braun |
| 39n | 15 | 7,3 | braun |
| 39o | 19 | 7,3 | braun |
| 39p | 17 | 11,0 | braun |
| 39q | 11 | 9,2 | braun |
| 39r | 15 | 4,9 | braun |
| 39s | 9 | 7,0 | braun |
| 39t | 8 | 6,3 | braun |
| 39u | 32 | 11,1 | braun |
| 39v | 18 | 7,4 | braun |
| 39z | 16 | 11,0 | braun |
| 40a | 10 | 7,4 | braun |
| 40b | 20 | 7,4 | braun |
| 40c | 13 | 8,8 | braun |
| 40d | 16 | 8,4 | braun |
| 40e | 17 | 8,0 | gelbbraun |
| 40f | 21 | 8,8 | hellbraun |
| 40g | 25 | 8,9 | dunkelbraun |
| 40h | 24 | 4,7 | braun |
| 40i | 11 | 7,3 | braun |
| 40j | 12 | 4,7 | braun |
| 40k | 24 | 4,2 | braun |
| | 24 | 8,4 | braun |
| | 24 | 16,8 | braun |
| 401 | 29 | 16,8 | braun |
| 40m | 25 | 12,4 | braun |
| 40n | 16 | 14,1 | braun |
| 40o | 34 | 8,6 | braun |
| 40p | 1 | 12,0 | braun |
| 40q | 28 | 4,2 | braun |
| 40r | 22 | 8,6 | braun |
| 40s | 24 | 9,0 | braun |
| 40t | 27 | 9,0 | braun |
| 40u | 11 | 5,9 | braun |
| 40v | 2 | 12,7 | braun |
| 40z | 21 | 4,5 | braun |
| 41a | 13 | 8,8 | braun |
| 41b | 9 | 8,6 | braun |
| 41c | 21 | 9,0 | braun |
| 41d | 32 | 8,8 | braun |
| 41 e | 30 | 6,2 | braun |
| 41f | 33 | 8,6 | braun |
| 41 g | 24 | 9,0 | braun |
| 41h | 29 | 7,4 | braun |
| 41i | 9 | 4,2 | braun |
| | 9 | 8,4 | braun |
| | 9 | 16,8 | braun |
| 41j | 30 | 16,8 | braun |
| 41 k | 15 | 12,4 | braun |
| 411 | 14 | 12,4 | braun |
| 41m | 17 | 14,0 | braun |
| 41n | 18 | 9,8 | braun |
| 41o | 27 | 4,2 | braun |
| 41p | 24 | 12,1 | braun |
| 41q | 27 | 12,4 | braun |
| 41r | 11 | 12,4 | braun |
| 41s | 13 | 11,8 | braun |
| 41t | 9 | 14,2 | braun |
| 41u | 10 | 14,0 | braun |
| 42a | 12 | 2,4 | braun |
| 42b | 25 | 4,6 | braun |
| 42c | 16 | 6,8 | dunkelbraun |
| 42d | 31 | 8,7 | braun |
| 42e | 17 | 8,8 | braun |
| | 19 | 8,8 | braun |
| 42f | 32 | 8,6 | dunkelbraun |
| 42g | 25 | 9,0 | braun |
| 42h | 14 | 11,0 | braun |
| 42i | 33 | 8,6 | braun |
| 42j | 24 | 9,0 | braun |
| 42k | 16 | 8,8 | braun |
| | 16 | 16,8 | braun |
| 421 | 10 | 14,0 | braun |
| 42m | 12 | 2,4 | braun |
| 42n | 4 | 15,0 | braun |
| 42o | 23 | 18,6 | braun |
| 43a | 25 | 4,6 | braun |
| 43b | 16 | 6,8 | braun |
| 43c | 31 | 8,7 | braun |
| 43d | 8 | 4,4 | braun |
| 43e | 5 | 4,6 | braun |
| 43f | 29 | 5,4 | braun |
| 43g | 32 | 10,8 | braun |
| 43h | 11 | 14,1 | braun |
| | 33 | 14,4 | braun |
| 43i | 17 | 12,2 | braun |
| 43j | 19 | 12,2 | braun |
| 43k | 7 | 11,0 | braun |
| 431 | 9 | 12,2 | braun |
| 43m | 5 | 11,0 | braun |
| 43n | 22 | 8,8 | braun |
| | 22 | 16,8 | braun |
| 43o | 28 | 2,4 | grün |
| 43p | 34 | 4,6 | grün |
| 43q | 21 | 4,8 | grün |
| 43r | 20 | 8,7 | grün |
| 43s | 18 | 6,9 | Grün |
| | 18 | 15,1 | grün |
| 43t | 15 | 12,2 | grünbraun |
| 43u | 25 | 8,7 | grün |
| 43v | 1 | 11,0 | braun |
| 43z | 26 | 5,4 | grün |
| 43aa | 14 | 5,4 | grün |
| 43ab | 2 | 11,1 | grün |
| 43ac | 13 | 10,0 | grün |
| 43ad | 27 | 12,7 | braun |
| 43ae | 30 | 16,8 | braun |
| 43af | 11 | 5,4 | grün |
| 43ag | 24 | 11,9 | grün |
| 43ah | 23 | 10,5 | grün |
| 43ai | 29 | 2,7 | braun |
| 44 | 15 | 12,4 | braun |
| 45 | 14 | 12,4 | braun |
| 46a | 17 | 14,0 | olivgrün |
| 46b | 18 | 9,8 | grün |
| 46c | 10 | 8,8 | grün |
| 46d | 21 | 7,4 | grün |
| 46e | 32 | 7,4 | grün |
| 46f | 13 | 8,2 | grün |
| 46g | 4 | 7,4 | braun |
| 48h | 15 | 5,6 | hellbraun |
| 46i | 21 | 7,4 | braun |
| 46j | 32 | 7,4 | braun |
| 46k | 26 | 5,6 | braun |
| 46l | 23 | 12,1 | dunkelbraun |
| 46m | 12 | 14,6 | braun |
| 47a | 6 | 6,8 | grün |
| 47b | 24 | 8,7 | braun |
| 47c | 11 | 8,7 | braun |
| 47d | 28 | 2,4 | braun |
| 47e | 34 | 4,6 | braun |
| 47f | 16 | 10,6 | braun |
| 47g | 24 | 10,6 | braun |
| 47h | 34 | 4,8 | braun |
| 47i | 33 | 4,8 | braun |
| 47j | 18 | 4,2 | braun |
| 47k | 29 | 17,9 | braun |
| 47l | 1 | 11,0 | braun |
| 47m | 10 | 8,8 | braun |
| 47n | 1 | 11,0 | braun |
| 47o | 16 | 10,6 | braun |
| 47p | 24 | 10,6 | grün |
| 47q | 2 | 11,1 | grün |
| 47r | 19 | 10,1 | grün |
| 47s | 10 | 8,8 | grün |
| 47t | 20 | 8,8 | grün |
| 47u | 16 | 10,6 | grün |
| 47v | 24 | 10,6 | grün |
| 47z | 10 | 8,8 | grün |
| 47aa | 28 | 2,4 | grün |
| 47ab | 34 | 4,6 | grün |
| 47ac | 10 | 8,8 | grün |
| 47ad | 28 | 2,4 | grün |
| 47ae | 34 | 4,6 | grün |
| 47af | 9 | 4,8 | grün |
| 47ag | 32 | 12,6 | grün |
| 47ah | 7 | 11,6 | grün |
| 47ai | 20 | 7,8 | grün |
| 48 | 23 | 12,0 | braun |
| 49a | 16 | 10,6 | braun |
| 49b | 24 | 10,6 | braun |
| 49c | 28 | 10,4 | braun |
| 50a | 33 | 4,8 | rotbraun |
| 50b | 31 | 16,4 | rostrot |
| 50c | 29 | 17,9 | rotbraun |
| 51 | 30 | 12,0 | gelbbraun |
| 52a | 23 | 7,8 | braun |
| 52b | 23 | 7,8 | braun |
| 52c | 30 | 14,4 | braun |
| 52d | 19 | 7,8 | braun |
| 52e | 22 | 7,8 | braun |
| 53a | 27 | 7,8 | braun |
| 53b | 9 | 6,6 | braun |
| 53c | 21 | 6,6 | braun |
| 53d | 14 | 10,2 | braun |
| 54 | 17 | 10,2 | braun |
| 55 | 34 | 14,6 | braun |
| 56 | 15 | 7,3 | braun |
| 57 | 19 | 7,3 | braun |
| 58a | 17 | 11,0 | rot |
| 58b | 11 | 9,2 | rot |
| 58c | 15 | 4,9 | rot |
| 59a | 9 | 7,0 | rot |
| 59b | 8 | 6,3 | bordeaux |
| 59c | 32 | 11,1 | rot |
| 59d | 10 | 7,4 | gelb |
| 59e | 20 | 7,4 | rot |
| 59f | 13 | 8,8 | rot |
| 59g | 16 | 8,4 | rot |
| 59h | 17 | 8,0 | gelbbraun |
| 59i | 21 | 8,8 | rot |
| 59j | 25 | 8,9 | rot |
| 59k | 24 | 8,8 | beige |

Im folgenden wird das erfindungsgemäße Verfahren exemplarisch anhand von Artikelrezepturen zur Herstellung gefärbter Leder für die wichtigsten Artikelsegmente Schuh, Bekleidung, Automobil, Handschuh und Möbel näher erläutert. Das erfindungsgemäße Verfahren ist jedoch nicht auf diese 5 Ledersegmente beschränkt; z.B. ist es gemäß erfindungsgemäßen Verfahren ebenfalls möglich Taschenleder und Reptilienleder für Accessoirs herzustellen.

In den folgenden Artikelrezepturen sind alle Angaben in Teilen als Gewichtsteile zu verstehen. Alle Angaben beziehen sich auf Handelsware. Die Angaben bezüglich Farbstoff beziehen sich auf die Gesamtmenge an farbigen, organisch-chemischen Bestandteilen, gegebenenfalls herstellungbsedingt vorhandenen Salzen (Synthesesalze) und gegebenenfalls vorhandenen Stellmitteln. In den Artikelrezepturen wurden die folgenden Abkürzungen für die Chemikalien des Wetendprozesses verwendet.

Hauptinhaltsstoffe der handelsüblichen Fettungsmittel (F):
- F1:: wässrige Emulsion von Pflanzenölen und sulfitierten fischölen.
- F2:: wässrige Zubereitung auf Basis des Natriumsalzes eines anionsichen Vinylpoly- merisats und einem nichtionischen Tensid (ethoxylierte Ölsäure).
- F3:: wässrige Zubereitung auf Basis modifizierter Fettsäuren.
- F4:: wässrige Zubereitung auf Basis synthetischer Öle und Phosphorsäureestem e- thoxylierter Fettalkohole, enthaltend, Fettalkoholsulfonate und Butyldiglykol.
- F5:: wässrige Zubereitung auf Basis bisulfitierter Fischöle (Natriumsalze) und den Hydrolysaten sulfochlorierter Paraffinöle, ethoxiliertem Isotridecanol.
- F6:: wässrige Zubereitung auf Basis der Natriumsalze sulfonierter pflanzlicher Öle und modifizierter synthetischer Öle und Polymer.
- F7:: wässrige Zubereitung auf Basis sulfatierter Fettsäureester.
- F8:: wässrige Zubereitung auf Basis von nichtionischen Tensiden, sulfitierten Ölen (Natriumsalz).
- F9:: Mischung von Tensiden auf Basis von Paraffinsulfonat, Alkylphosphat und Mo- noalkylsulfat in Form einer Zubereitung der Ammoniumsalze in Lösungsmit- tet/Wasser.

Hauptinhaltsstoffe der handelsüblichen Hydrophobiermittel (H):
- H1:: wässrige Zubereitung auf Basis von Paraffinen, funktionalisierten Polysiloxanen, N- Oleoylsarkosin-Na-Salz.
- H2:: wässrige Zubereitung auf Basis von Paraffinen, modifizierten Silikonen, N- Oleoylsarkosin-Na-Salz
- H3:: wässrige Zubereitung auf Basis von Paraffinen und anionischen Tensiden.
- H4: wässrige Zubereitung auf Basis von funktionalisierten Polysiloxanen und einem Emulgatorsystem
- H5:: wässrige Zubereitung auf Basis von modifiziertem Silikon mit einem Salz eines Vinylpolymeren.
- H6:: wässrige Zubereitung auf Basis von funktionalisiertem Polysiloxan mit anioni- schen Tensiden.
- H7:: wässrige Zubereitung auf Basis von funktionalisiertem Polysiloxan.
- H8:: wässrige Zubereitung auf Basis von Paraffinen und den Natriumsalzen anioni- scher Tenside.

Der im folgenden bei den Nachgerbstoffen und bei den Hilfsmitteln verwendete Begriff "Mischung" kann sowohl bedeuten, dass die Mischung durch Vermischen der Komponenten bei Raumtemperatur und Normaldruck als auch durch Mischen bei erhöhten Temperaturen und Drücken für einen kurzen bis längeren Zeitraum hergestellt wird.

Hauptinhaltsstoffe der handelsüblichen Nachgerbstoffe (G):
- G1:: Kondensationsprodukt aus Phenolsulfonsäure, Formaldehyd und Anilin in Form des Natriumsalzes.
- G2:: Wässrige Zubereitung des Natriumsalzes eines Kondensationsprodukt aus Phe- nolsulfonsäure, Formaldehyd und Anilin.
- G3:: Wässrige Zubereitung einer Mischung eines Natrium-/Ammoniumsalzes eines Kondensationsprodukts aus Phenolsulfonsäure, Formaldehyd, Melamin, Harn- stoff, und Anilin mit einem amphoteren Copolymerisat auf Basis von Acrylsäure und einem basischen Monomeren.
- G4:: wässrige Zubereitung des Ammoniumsalzes eines Kondensationsprodukts von Phenol, Phenolsulfonsäure und Formaldehyd.
- G5:: Natriumsalz eines Kondensationsprodukts auf Basis von Dihydroxydiphenylsul- fon, Phenolsulfonsäure, Harnstoff und Formaldehyd.
- G6:: wässrige Lösung eines Natrium-/Ammoniumsalzes eines Kondensationsprodukts auf Basis von Dihydroxydiphenylsulfon, Pheholsulfonsäure, Harnstoff und for- maldehyd.
- G7:: hochmolekulares Kondensationsprodukt auf Basis von Dihydroxydiphenylsulfon, Phenolsulfonsäure, Harnstoff und Formaldehyd in Form des Natriumsalzes.
- G8:: Wässrige Zubereitung auf Basis einer Mischung des Natrium-/Ammoniumsalzes eines niedermolekularen Kondensationsprodukt auf Basis von Dihydroxydiphe- nylsulfon, Harnstoff und Formaldehyd mit einem niedermolekularen Kondensati- onsprodukt aus Diphenylsulfon mit Formaldehyd.
- G9:: Fettgerbstoff auf Basis eines modifizierten Paraffins (C₁₆-C₃₄-Alkyl-Sulfochlorid).
- G10:: Wässrige Zubereitung auf Basis eines Copolymers von Acrylsäure mit Acrylnitril und einem Amin.
- G11:: Mischung eines Naphthalinsulfonsäure-Melamin-Kondensats mit Hydroxy- methansulfonat und Harnstoff.
- G12:: 24 gew.-%ige Lösung von Glutardialdehyd in Wasser.
- G13:: 50 gew.-%ige Lösung von Glutardialdehyd in Wasser.
- G14:: Wässrige, lösungsmittelhaltige Zubereitung auf Basis eines aldehydbasierten polymeren Gerbmittels (Kondensationsprodukt von Formaldehyd und und Glu- tardialdehyd).
- G15:: Wässrige Zubereitung auf Basis eines Copolymers von Acrylsäure mit Acrylnitril.
- G16:: Wässrige Zubereitung auf Basis einer niedermolekularen Polyacrylsäure (Mn < 8000, Zahlenmittel).
- G17:: Wässrige Zubereitung auf Basis einer hochmolekularen Polyacrylsäure (Mn > 40000, Zahlenmittel).
- G18:: Wässrige Zubereitung auf Basis von Polymethacrylsäure.
- G19:: Wässrige Zubereitung eines Copolymeren aus Maleinsäure und Styrol
- G20:: Chromsyntan (Mischung eines Kondensationsprodukts auf Basis eines aromati- schen Oligosulfons und einer Chrom-Zubereitung)
- G21:: Tara.
- G22:: Mimosa.
- G23:: Kastanie. einem Gehalt
- G24:: schwach maskierter Chromgerbstoff mit an Cr₂O₃ von 24 -gen.-% und einer Basiszität von 40 %.
- G25:: flüssige Zubereitung von Tetrakis(hydroxymethyl)phosphoniumchlorid und -sulfat
- G26:: 4,4-Dimethyl-1,3-oxazolidin.
- G27:: 1-Aza-3,7-dioxybicyclo-5-ethyl[3.3.0]octan.
- G28:: Mischung eines Polykondensationsprodukts auf Basis von Harnstoff und Formal mit einem Polykondensationsprodukt auf Basis von Phenol und Formaldehyd. dehyd
- G29;: 30 gew.%ige wässrige Formaldehydlösung.
- G30:: Mineraigerbstoffmischung auf Basis von Aluminiumhydroxid in einer Menge von 14 Gew.-% (gerechnet als Al₂O₃) und 3 Gew.-% Chromsalze (gerechnet als Cr₂O₃)

Hauptinhaltsstoffe der handelsüblichen Hilfmittel (HM):
- HM1:: Mischung von Hydroxymethansulfonat mit dem Natriumsalzeines Kondensati- onsprodukts aus Naphthalinsulfonsäure, Harnstoff und Formaldehyd.
- HM2:: Mischung ethoxilierter Alkylamine (C₁₆-C₁₈).
- HM3:: wässrige Zubereitung eines teilhydrolysierten Poly-N-vinylformamid, schwach kationisch.
- HM4:: wässrige Zubereitung eines anionisch modifizierten Copolymerisats.
- HM5:: Hydroxymethylierter Harnstoff.
- HM6:: Mischung auf Bais aromatischer Sulfonsäuren als Natriumsalze, Phenol, Formal- dehyd und Harnstoff.
- HM7:: wässrige Zubereitung eines kationischen, aminogruppenhaltigen Polykonden- sats.

Die Bestimmung der Echtheiten erfolgte nach den folgenden, international anerkannten Normen:
- Schweißechtheit:: in Anlehnung an Veslic C4260
- Waschechtheit:: in Anlehnung an DIN EN ISO 15703
- Migrationsechtheit:: in Anlehnung an DIN EN ISO 15701, sowie durch 16 h Lagern bei 85 °C in einer Feuchte von 95 % unter ansonsten analogen Bedin- gungen zu DIN EN ISO 15701
- Reibechtheit:: in Anlehnung an DIN EN ISO 105 - X12 (Crockmeter, Reibung mit Baumwollgewebe) sowie in Anlehnung an DIN EN ISO 11640 (Ves- lic, Reibung mit Filz)
- Maeser:: in Anlehnung an ASTM D 2099
- Penetrometer:: in Anlehnung an DIN EN ISO 5403
- Wasserdampfdurchlässigkeit:: in Anlehnung an DIN EN ISO 14268
- Dauerbiegefestigkeit:: in Anlehnung an DIN EN ISO 5402
- Stichausreißversuch:: in Anlehnung an DIN 5331
- Weiterreißversuch:: in Anlehnung an DIN EN ISO 3377
- Zugfestigkeit:: in Anlehnung an DIN EN ISO 3376

### A Schuhoberlederrezepturen:

### Schuhoberlederrezeptur 1:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 150 Teilen Wasser, 2 Teilen Natriumformiat und 1 Teil Natriumacetat bestehenden Flotte 5 Minuten bei 40°C gewalkt, danach wurden 2 Teilen Natriumbicarbonat zugegeben und 10 Minuten bei 40°C neutralisiert. Danach hatte die Entsäuerungsflotte einen pH-Wert von 7,3. Zur Entsäuerungsflotte wurden 4,6 Teile Farbstoff 1e zugegeben und 30 Minuten bei pH 6,8 und 40°C gefärbt. Durch portionsweise Zugabe von insgesamt 6 Teilen Natriumcarbonat wurde zur Fixierung der pH-Wert der Flotte zwischen 9,2 - 9,6 eingestellt und es wurde 60 Minuten lang bei 40°C gewalkt. Nach Flottenwechsel wurde zweimal mit jeweils 300 Teilen Wasser insgesamt 30 Minuten lang gewaschen. In einer Flotte aus 300 Teilen Wasser wurde durch portionsweise Zugabe von insgesamt 0,5 Teilen Ameisensäure innerhalb von 30 Minuten ein pH von 6,5 eingestellt.

Das derart gefärbte Leder wurde in einer frisch angesetzten Flotte aus 200 Teilen Wasser und 5 Teilen des fettenden und gerbenden Hydrophobiermittels H5 20 Minuten bei 40°C nachgegerbt. Durch Zusatz von 0,5 Teilen Ameisensäure wurde innerhalb von 20 Minuten ein pH-Wert von 5,0 eingestellt. Mit 3 Teilen des Polymergerbstoffs G15 wurde 30 Minuten bei 40°C nachgegerbt. Anschließend versetzte man die Flotte mit einer Mischung aus 5 Teilen des Hydrophobiermittels H2 und 0,3 Teilen des Hilfsmittels HM 4. Nach einer Walkzeit von weiteren 60 Minuten wird durch portionsweise Zugabe von insgesamt 2,5 Teilen Ameisensäure innerhalb von 60 Minuten auf einen pH-Wert von 3,7 abgesäurt. In einer frisch angesetzten Flotte aus 150 Teilen Wasser und 0,5 Teilen Ameisensäure wurde 10 Minuten bei 30°C gewalkt. Anschließend wurde durch Zusatz von 5 Teilen Chromgerbstoff G 24 90 Minuten nachchromiert. Man erhielt einen pH-Wert von 3,6. Zum Schluß wurde zweimal in jeweils 300 Teilen Wasser jeweils 10 Minuten bei 30°C gewaschen.

Das so gefärbt, nachgegerbt und hydrophobierte Leder wurde über Nacht auf Bock gelagert, anschließend ausgereckt, bei 60°C 3 Minuten vakuumiert, über Nacht bei Raumtemperatur hängegetrocknet, konditioniert, gestollt und bei 60°C 2 Minuten vakuumgetrocknet.

Es wurde ein hydrohphobiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 2:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 150 Teilen Wasser, 2 Teilen Natriumformiat und 1 Teil Natriumacetat bestehenden flotte 5 Minuten bei 40°C gewalkt, danach wurden 2 Teilen Natriumbicarbonat zugegeben und 10 Minuten bei 40°C neutralisiert. Danach hatte die Entsäuerungsflotte einen pH-Wert von 7,3. Zur Entsäuerungflotte wurden 7,5 Teile Farbstoff 2f zugegeben und 30 Minuten bei pH 6,8 und 40°C gefärbt. Durch portionsweise Zugabe von insgesamt 8 Teilen Natriumcarbonat wurde zur Fixierung der pH-Wert der Flotte zwischen 9,2 - 9,6 eingestellt und 60 Minuten lang bei 40°C gewalkt. Nach Flottenwechsel wurde zweimal mit jeweils 300 Teilen Wasser insgesamt 30 Minuten lang gewaschen. In einer Flotte aus 300 Teilen Wasser wurde durch portionsweise Zugabe von insgesamt 0,5 Teilen Ameisensäure innerhalb von 30 Minuten ein pH von 6,5 eingestellt.

Das derart gefärbte Leder wurde in einer frisch angesetzten Flotte aus 200 Teilen Wasser und 5 Teilen des fettenden und gerbenden Hydrophobiermittels H5 20 Minuten bei 40°C nachgegerbt. Durch Zusatz von 0,5 Teilen Ameisensäure wurde innerhalb von 20 Minuten ein pH-Wert von 5,0 eingestellt. Mit 3 Teilen des Polymergerbstoffs G15 wurde 20 Minuten bei 40°C nachgegerbt. Danach wurden zur Flotte 5 Teile Nachgerbstoff G1 zugegeben und weitere 30 Minuten gewalkt. Anschließend versetzte man die Flotte mit einer Mischung aus 6 Teilen des Hydrophobiermittels H2 und 0,3 Teilen des Hilfsmittels HM4. Nach einer Walkzeit von weiteren 60 Minuten wird durch portionsweise Zugabe von insgesamt 2,5 Teilen Ameisensäure innerhalb von 60 Minuten auf einen pH-Wert von 3,6 abgesäurt. In einer frisch angesetzten Flotte aus 150 Teilen Wasser und 0,5 Teilen Ameisensäure wurde 10 Minuten bei 30°C gewalkt. Anschlieβend wurde durch Zusatz von 5 Teilen Chromgerbstoff G24 90 Minuten nachchromiert. Man erhielt einen pH-Wert von 3,6. Zum Schluß wurde zweimal in jeweils 300 Teilen Wasser jeweils 10 Minuten bei 30°C gewaschen.

Das so gefärbte, nachgegerbte und hydrophobierte Leder wurde über Nacht über Bock gelagert, anschließend ausgereckt, bei 60°C 3 Minuten vakuumiert, über Nacht bei Raumtemperatur hängegetrocknet, konditioniert, gestollt und bei 60°C 2 Minuten vakuumgetrocknet.

Es wurde ein hydrophobiertes Schuhoberleder mit ausgezeichneten Wasch-, Schweiß, Migrations- und Reibechtheiten erhalten.

In analoger Weise kann man ein mit einem der Farbstoffe der Beispiel 1a bis 59k gefärbtes, hydrophobiertes Schuhoberleder herstellen.

### Schuhoberlederrezeptur 3:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 150 Teilen Wasser, 2 Teilen Natriumformiat und 1 Teil Natriumacetat bestehenden Flotte 5 Minuten bei 40°C gewalkt, danach wurden 2 Teilen Natriumbicarbonat zugegeben und 10 Minuten bei 40°C neutralisiert. Danach hatte die Entsäuerungsflotte einen pH-Wert von 7,3. Zur Entsäuerungflotte wurden 5,1 Teile Farbstoff 3 zugegeben und 30 Minuten bei pH 6,8 und 40°C gefärbt. Durch portionsweise Zugabe von insgesamt 6 Teilen Natriumcarbonat wurde zur Fixierung der pH-Wert der Flotte zwischen 9,2 - 9,6 eingestellt und es wurde 60 Minuten lang bei 40°C gewalkt. Nach Flottenwechsel wurde zweimal mit jeweils 300 Teilen Wasser insgesamt 30 Minuten lang gewaschen. In einer Flotte aus 300 Teilen Wasser wurde durch portionsweise Zugabe von insgesamt 0,5 Teilen Ameisensäure innerhalb von 30 Minuten ein pH von 6,S eingestellt.

Das derart gefärbte Leder wurde in einer frisch angesetzten Flotte aus 200 Teilen Wasser und 5 Teilen des fettenden und gerbenden Hydrophobiermittels H5 20 Minuten bei 40°C nachgegerbt. Durch Zusatz von 0,5 Teilen Ameisensäure wurde innerhalb von 20 Minuten ein pH-Wert von 5,0 eingestellt. Mit 3 Teilen des Polymergerbstaffs G15 wurde 20 Minuten bei 40°C nachgegerbt. Danach wurden zur Flotten 5 Teile Nachgerbstoff G11 zugegeben und weitere 30 Minuten gewalkt. Anschließend versetzte man die Flotte mit einer Mischung aus 6 Teilen des Hydrophobiermittels H2 und 0,3 Teilen des Hilfsmittels HM4. Nach einer Walkzeit von weiteren 60 Minuten wird durch portionsweise Zugabe von insgesamt 2,5 Teilen Ameisensäure innerhalb von 60 Minuten auf einen pH-Wert von 3;6 abgesäurt. In einer frisch angesetzten Flotte aus 150 Teilen Wasser und 0,5 Teilen Ameisensäure wurde 10 Minuten bei 30°C gewalkt. Anschließend wurde durch Zusatz von 5 Teilen Chromgerbstoff G24 90 Minuten nachchromiert. Man erhielt einen pH-Wert von 3,7. Zum Schluß wurde zweimal in jeweils 300 Teilen Wasser jeweils 10 Minuten bei 30°C gewaschen.

Das so gefärbte, nachgegerbte und hydrophobierte Leder wurde über Nacht über Bock gelagert, anschließend ausgereckt, bei 60°C 3 Minuten vakuumiert, über Nacht bei Raumtemperatur hängegetrocknet, konditioniert, gestollt und bei 60°C 2 Minuten vakuumgetrocknet.

Es wurde ein hydrohphobiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 4:

Ein Lederstück von 100 Gewichtsteilen eines auf übliche Weise organisch gegerbten Rindsleders der Falzstärke 1,3 -1.4 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die -Flotte hatte einen pH-Wert von 4,2 - 4,6. Zur Flotte wurden 8,5 Teile Farbstoff 4d zugegeben und 60 Minuten bei pH 5,5 und 35°C gefärbt. Durch portionsweise Zugabe von insgesamt 3 Teilen Natriumbicarbonat wurde innerhalb von 20 Minuten ein pH-Wert von 7,3 - 7,8 eingestellt. Zur Fixierung wurde der pH-Wert der Flotte durch portionsweise Zugabe von insgesamt 8 Teilen Natriumcarbonat zwischen 9,2 - 9,6 eingestellt und 60 Minuten lang bei 35°C gewalkt. Nach Flottenwechsel wurde zweimal mit jeweils 300 Teilen Wasser und 1,5 Teilen HM3 insgesamt 50 Minuten lang bei 40°C gewaschen. In einer Flotte aus 200 Teilen Wasser wurde durch portionsweise Zugabe von insgesamt 2 Teilen Ameisensäure innerhalb von 70 Minuten bei 40°C ein pH von 4.3-4.6 eingestellt.

Das derart gefärbte Leder wurde in einer frisch angesetzten Flotte aus 100 Teilen Wasser, 6 Teilen Polymergerbstoff G18 und 1,5 Teilen des Fettungsmittels F6 30 Minuten bei 35°C nachgegerbt. Nach Zugabe von 10 Teilen Nachgerbstoff G18 und einer Walkzeit von 60 Minuten wurden zur Ausgerbung 10 Teile Vegetabilgerbstöff G22 und 10 Teile Nachgerbstoff G4 zugegeben und 60 Minuten bei 35°C gewalkt. Zur Flotte wurden 5,5 Teile Fettungsmittel F6 zugegeben und 90 Minuten bei 35°C gefettet. Zur Fixierung des Fettungsmittels wurde nach Zugabe von 100 Teile 40°C heißem Wasser und einer Walkzeit von 20 Minuten innerhalb von 50 Minuten durch Zugabe von Ameisensäure ein pH-Wert von 3.5 eingestellt. Anschließend wird 15 Minuten lang gespült. Das so gefärbte, nachgegerbte und gefettete Leder wurde über Nacht über Bock gelagert, anschließend ausgereckt, bei 45°C 4 Minuten vakuumiert, über Nacht bei Raumtemperatur hängegetrocknet, konditioniert, gestollt und vakuumgetrocknet.

Es wurde ein wetwhite Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, wetwhite Schuhoberleder herstellen.

### Schuhoberlederrezeptur 5:

Ein Lederstück von 100 Gewichtsteilen eines auf übliche Weise organisch gegerbten Rindsleders der Falzstärke 1,3 - 1.4 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die Flotte hatte einen pH-Wert von 4,2 - 4,6. Zur Flotte wurden 10 Teile Farbstoff 5b zugegeben und 60 Minuten bei pH 5,5 und 35°C gefärbt. Durch portionsweise Zugabe von insgesamt 3 Teilen Natriumbicarbonat wurde innerhalb von 20 Minuten ein pH-Wert von 7,3 - 7,8 eingestellt. Zur Fixierung wurde der pH-Wert der Flotte durch portionsweise Zugabe von insgesamt 9 Teilen Natriumcarbonat zwischen 9,2 - 9,6 eingestellt und 60 Minuten lang bei 35°C gewalkt. Nach Flottenwechsel wurde dreimal mit jeweils 300 Teilen Wasser insgesamt 60 Minuten lang bei 40°C gewaschen . In einer Flotte aus 200 Teilen Wasser wurde durch portionsweise Zugabe von insgesamt 2 Teilen Ameisensäure innerhalb von 70 Minuten bei 40°C ein pH von 4.3-4.6 eingestellt.

Das derart gefärbte Leder wurde in einer frisch angesetzten Flotte aus 100 Teilen Wasser, 6 Teilen Polymergerbstoff G18 und 1,5 Teilen Fettungsmittel F6 30 Minuten bei 35°C nachgegerbt. Nach Zugabe von 10 Teilen Nachgerbstoff G18 und einer Walkzeit von 60 Minuten wurden zur Ausgerbung 10 Teile Vegetabilgerbstoff G22 und 10 Teile Nachgerbstoff G4 zugegeben und 60 Minuten bei 35°C gewalkt. Zur Flotte wurden 5,5 Teile Fettungsmittel F6 zugegeben und 90 Minuten bei 35°C gefettet. Zur Fixierung des Fettungsmittels wurde nach Zugabe von 100 Teilen 40°C heißem Wasser und einer Walkzeit von 20 Minuten innerhalb von 50 Minuten durch Zugabe von Ameisensäure ein pH-Wert von 3.5 eingestellt. Anschließend wird 15 Minuten lang gespült.

Das so gefärbte, nachgegerbte und gefettete Leder wurde über Nacht über Bock gelagert, anschließend ausgereckt, bei 45°C 4 Minuten vakuumiert, über Nacht bei Raumtemperatur hängegetrocknet, konditioniert, gestollt und vakuumgetrocknet.

Es wurde ein wetwhite Schuhoberleder mit ausgezeichneten Wasch-, Schweiß-, Migrations- und Reibechtheiten erhalten. In analoger Weise kann man ein mit einem der Farbstoffe der Beispiel 1 a bis 59k gefärbtes wetwhite Schuhoberleder herstellen.

### Schuhoberlederrezeptur 6:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 150 Teilen Wasser und 1,5 Teilen Natriumformiat bestehenden Flotte 5 Minuten bei 40°C gewalkt, danach wurden 1,5 Teilen Natriumbicarbonat zugegeben und 10 Minuten bei 40°C neutralisiert. Nach Zugaben von weiteren 1,5 Teilen Natriumbicarbonat und 3 Teilen HM4 wurde weitere 15 Minuten gewalkt. Danach hatte die Entsäuerungsflotte einen pH-Wert von 7,6. Zur Entsäuerungflotte wurden 9 Teile Farbstoff 6c gegeben und 90 Minuten bei pH 7,2 und 40°C gefärbt. Durch portionsweise Zugabe von insgesamt 8 Teilen Natriumcarbonat wurde zur Fixierung der pH-Wert der Flotte zwischen 9,3 - 9,9eingestellt und 60 Minuten lang bei 40°C gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,5 eingestellt.

Das derart gefärbte Leder wurde in einer frisch angesetzten Flotte aus 80 Teilen Wasser und 4 Teilen Polymergerbstoff G15 30 Minuten bei 45°C nachgegerbt. Nach Zusatz von 5 Teilen Vegetabilgerbstoff G22 und 3 Teilen Harzgerbstoff G11 wurden weitere 40 Minuten gewalkt. Anschließend versetzte man zur Fettung die Flotte mit einer Mischung aus 6 Teilen des Hydrophobiermittels H1 und 0,4 Teilen des Hilfsmittels HM4. Nach einer Walkzeit von weiteren 90 Minuten wurden 70 Teile 60°C heißes Wasser zugesetzt, 10 Minuten gewalkt und anschließend durch portionsweise Zugabe von insgesamt 5 Teilen Ameisensäure innerhalb von 60 Minuten auf einen pH-Wert von 3,4 abgesäurt.
Nach einer 10 minütigen Wäsche mit 200 Teilen Wasser bei 30°C wurde in einer frisch angesetzten Flotte aus 200 Teilen Wasser, 1 Teil Hydrophobiermittel H6 und 0,2 Teilen Hilfsmittel H4 20 Minuten bei 30°C gewalkt. Anschließend wurde durch Zusatz von 4 Teilen Chromgerbstoff G 24 über Nacht nachchromiert. Der Flotten pH-Wert betrug 3,4. Zum Schluß wurde zweimal in jeweils 200 Teilen Wasser jeweils 10 Minuten bei 30°C gewaschen.

Das so gefärbte, nachgegerbte und hydrophobierte Leder wurde über Nacht über Bock gelagert, anschließend ausgereckt, bei 50°C 6 Minuten vakuumiert, über Nacht bei Raumtemperatur hängegetrocknet, konditioniert, gestollt und bei 50°C 2 Minuten vakuumgetrocknet.

Es wurde ein hydrohphobiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 7:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 150 Teilen Wasser und 1,5 Teilen Natriumformiat bestehenden Flotte 5 Minuten bei 40°C gewalkt, danach wurden 1,5 Teilen Natriumbicarbonat zugegeben und 10 Minuten bei 40°C neutralisiert. Nach Zugaben von weiteren 1,5 Teilen Natriumbicarbonat und 3 Teilen HM4 wurde weitere 15 Minuten gewalkt. Danach hatte die Entsäuerungsflotte einen pH-Wert von 7,6. Zur Entsäuerungflotte wurden 11,5 Teile Farbstoff 7 zugegeben und 90 Minuten bei pH 7,2 und 40°C gefärbt. Durch portionsweise Zugabe von insgesamt 10 Teilen Natriumcarbonat wurde zur Fixierung der pH-Wert der Flotte zwischen 9,3 - 9,9 eingestellt und 60 Minuten lang bei 40°C gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,6 eingestellt.

Das derart gefärbte Leder wurde in einer frisch angesetzten Flotte aus 80 Teilen Wasser und 4 Teilen Polymergerbstoff G15 30 Minuten bei 45°C nachgegerbt. Nach Zusatz von 5 Teilen Vegetabilgerbstoff G22 und 3 Teilen Harzgerbstoff G11 wurden weitere 40 Minuten gewalkt. Anschließend versetzte man zur Fettung die Flotte mit einer Mischung aus 6 Teilen des Hydrophobiermittels H1 und 0,4 Teilen des Hilfsmittels HM4. Nach einer Walkzeit von weiteren 90 Minuten wurden 70 Teile 60°C heißes Wasser zugesetzt, 10 Minuten gewalkt und anschließend durch portionsweise Zugabe von insgesamt 5 Teilen Ameisensäure innerhalb von 60 Minuten auf einen pH-Wert von 3,3 abgesäurt.
Nach einer 10 minütigen Wäsche mit 200 Teilen Wasser bei 30°C wurde in einer frisch angesetzten Flotte aus 100 Teilen Wasser und 3 Teilen Nachgerbstoff G24 über Nacht bei 30°C umgeladen. Nach einer 10 minütigen Wäsche in 200 Teilen Wasser bei 30°C wurde in einer frisch angesetzten Flotte aus 100 Teilen Wasser und 2 Teilen Hydrophobiermittel H6 20 Minuten bei 30°C gewalkt. Anschließend wurde durch Zusatz von 3 Teilen Chromgerbstoff G 24 90 Minuten lang fixiert. Der Flotten pH-Wert betrug 3,4. Zum Schluß wurde zweimal in jeweils 200 Teilen Wasser jeweils 10 Minuten bei 30°C gewaschen.

Das so gefärbte, nachgegerbte und hydrophobierte Leder wurde über Nacht über Bock gelagert, anschließend ausgereckt, bei 50°C 6 Minuten vakuumiert, über Nacht bei Raumtemperatur hängegetrocknet, konditioniert, gestollt und bei 50°C 2 Minuten vakuumgetrocknet.

Es wurde ein hydrophobiertes Schuhoberleder mit ausgezeichneten Wasch-, Schweiß-Migrations- und Reibechtheiten erhalten. In analoger Weise kann man ein mit einem der Farbstoffe der Beispiel 1 a bis 59k gefärbtes, hydrophobiertes Schuhoberleder herstellen.

### Schuhoberlederrezeptur 8:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungflotte 6,5 Teile Farbstoff 8 zugegeben und 40 Minuten bei pH 7,5 und 40°C gefärbt. Durch portionsweise Zugabe von insgesamt 7,1 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten flotte aus 80 Teilen Wasser und 3 Teilen Polymergerbstoff G15 bei 45°C 40 Minuten nachgegerbt. Durch Zusatz von 3 Teilen Nachgerbstoff G1, 3 Teilen Vegetabilgerbstoff G22 und 3 Teilen Harzgerbstoff G11 wurde 60 Minuten bei 45°C nachgegerbt. Nach Zugabe von 70 Teilen 60°C heißem Wasser wurde 20 Minuten bei 60°C gewalkt und nach Zugabe von 2,5 Teilen Fettungsmittel F7 und 2,5 Teilen Fettungsmittel F4 60 Minuten bei 60°C gefettet. Durch portionsweise Zugabe von insgesamt 4 Teilen Ameisensäure wurde innerhalb von 60 Minuten auf einen pH-Wert von 3,5 abgesäuert.
Anschließend wurde 15 Minuten lang gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberiederrezeptur 9:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teilen Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 4 Teile Farbstoff 9b zugegeben und 40 Minuten bei pH 7,5 und 40°C gefärbt. Durch portionsweise Zugabe von insgesamt 5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser und 3 Teilen Polymergerbstoff G17 bei 45°C 40 Minuten nachgegerbt. Durch Zusatz von 3 Teilen Nachgerbstoff G7, 2 Teilen Vegetabilgerbstoff G22, 2 Teilen Vegetabilgerbstoff G23 und 3 Teilen Harzgerbstoff G11 wurde 60 Minuten bei 45°C nachgegerbt. Nach Zugabe von 70 Teilen 60°C heißem Wasser wurde 20 Minuten bei 60°C gewalkt und nach Zugabe von 2,5 Teilen Fettungsmittel F7 und 2,5 Teilen Fettungsmittel F4 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 15 Minuten gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 10:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 6,9 Teile Farbstoff 10 zugegeben und 40 Minuten bei pH 7,5 und 40°C gefärbt. Durch portionsweise Zugabe von insgesamt 7,2 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser und 5 Teilen Polymergerbstoff G18 bei 45°C 40 Minuten nachgegerbt. Durch Zusatz von 3 Teilen Nachgerbstoff G1, 2 Teilen Vegetabilgerbstoff G22 und 4 Teilen Polymergerbstoff G10 wurde 60 Minuten bei 45°C nachgegerbt. Nach Zugabe von 70 Teilen 60°C heißem Wasser wurde 20 Minuten bei 60°C gewalkt und nach Zugabe von 4,5 Teilen Fettungsmittel F5 und 0,5 Teilen Fettungsmittel F8 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 15 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 11:

Ein Lederstück von 100 Gewichtsteilen eines auf übliche Weise-chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 9 Teile Farbstoff 11b zugegeben und 40 Minuten bei pH 7,5 und 40°C gefärbt. Durch portionsweise Zugabe von insgesamt 9,5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser, 1,5 Nachgerbstoff G13 und 2,5 Teilen Polymergerbstoff G16 bei 45°C 40 Minuten nachgegerbt. Durch Zusatz von 3 Teilen Nachgerbstoff G1, 3 Teilen Vegetabilgerbstoff G22 und 3 Teilen Harzgerbstoff G11 wurde 60 Minuten bei 45°C nachgegerbt. Nach Zugabe von 70 Teilen 60°C heißem Wasser wurde 20 Minuten bei 60°C gewalkt und nach Zugabe von 4,5 Teilen Fettungsmittel F5 und 0,5 Teilen Fettungsmittel F8 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 15 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 12:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teilen Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 8,5 Teile Farbstoff 12d zugegeben und 40 Minuten bei pH 7,5 und 40°C gefärbt. Durch portionsweise Zugabe von insgesamt 9 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser, 1,5 Teilen Nachgerbstoff G13 und 2,5 Teilen Polymergerbstoff G16 bei 45°C 40 Minuten nachgegerbt. Durch Zusatz von 8 Teilen Nachgerbstoff G2, 3 Teilen Polymergerbstoff G19 und 3 Teilen Harzgerbstoff G11 wurde 60 Minuten bei 45°C nachgegerbt. Nach Zugabe von 70 Teilen 60°C heißem Wasser wurde 20 Minuten bei 60°C gewalkt und nach Zugabe von 4,5 Teilen Fettungsmittel F5 und 0,5 Teilen Fettungsmittel F8 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 15 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 13:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 8 Teile Farbstoff 12at zugegeben und 40 Minuten bei pH 7,5 und 40°C gefärbt. Durch portionsweise Zugabe von insgesamt 9 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser, 1 Teil Nachgerbstoff G13 und 3 Teilen Polymergerbstoff G16 bei 45°C 40 Minuten nachgegerbt. Durch Zusatz von 1,5 Teilen Hilfsmittel HM4, 3 Teilen Polymergerbstoff G19 und 3 Teilen Polymergerbstoff G10 wurde 60 Minuten bei 45°C nachgegerbt. Nach Zugabe von 70 Teilen 60°C heißem Wasser wurde 20 Minuten bei 60°C gewalkt und nach Zugabe von 1,5 Teilen Fettungsmittel F2 und 3,5 Teilen Hydrophobiermittel H3 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 10 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Schuhoberlederrezeptur 14:

Ein Lederstück von 100 Gewichtsteilen eines auf übliche Weise chromgegerbten Rindsleders der Falzstärke 1,3 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 8 Teile Farbstoff 12bx zugegeben und 40 Minuten bei pH 7,5 und 40°C gefärbt. Durch portionsweise Zugabe von insgesamt 8,5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten flotte aus 80 Teilen Wasser und 1 Teil Nachgerbstoff G13 10 Minuten lang gewalkt. Durch Zusatz von 4 Teilen Chromgerbstoff G24, 2 Teilen Nachgerbstoff G1, 1 Teil Fettungmittel F1 wurde 40 Minuten bei 35°C nachgegerbt. Anschließend wurde 1 Teil Natriumformiat zugegeben und 20 min gewalkt. Nach Zugabe von 0,3 Teilen Natriumbicarbonat wurde noch weitere 90 Minuten nachgegerbt. Nach einer 10 minütigen Wäsche bei 35 °C in 300 Teilen Wasser wurde in einer neuen Flotte aus 100 Teilen Wasser und 1,5 Teilen Natriumformiat bei 35°C 10 Minuten neutralisiert. Zur Neutralisationsflotte wurden 0,5 Teile Natriumbicarbonat gegeben und 30 Minuten gewalkt. Nach 30 minütiger Nachgerbung mit 5 Teilen Polymergerbstoff G18 wurde zur Ausgerbung 5 Teile Nachgerbstoff G5 und 3 Teile Nachgerbstoff G1 zugegeben. Nach einer Walkzeit von 40 Minuten wurde die Flotte mit 100 Teilen 60°C heißem Wasser verdünnt und 10 Minuten bei 60°C gewalkt. Nach Zugabe von 3,5 Teilen Fettungsmittel F1 und 3,5 Teilen Hydrophobiermittel H3 wurde 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 10 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Softy Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Softy Schuhoberleder herstellen.

### Schuhoberlederrezeptur 15:

Ein Lederstück von 100 Gewichtsteilen eines auf übliche Weise chromgegerbten Rindsleders der Falzstärke 1,3 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.7 erreicht. Nach Zugabe von 1,5 Teilen HM2 wurde 5 Minuten bei 40°C gewalkt und anschließend zur Entsäuerungsflotte 8 Teile Mischfarbstoff 12gz zugegeben und 40 Minuten bei pH 7,5 und 40°C gefärbt. Durch portionsweise Zugabe von insgesamt 8,5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 90 Minuten ein pH von 4,3 eingestellt.

Das derart gefärbte Leder wurde in einer frisch angesetzten Flotte aus 80 Teilen Wasser und 1,5 Teilen Nachgerbstoff G1410 Minuten lang gewalkt. Durch Zusatz von 6 Teilen Chromsyntan G20 und 1 Teil Fettungmittel F1 wurde 40 Minuten bei 35°C nachgegerbt. Anschließend wurde 1 Teil Natriumformiat zugegeben und 20 min gewalkt. Nach Zugabe von 0,3 Teilen Natriumbicarbonat wurde noch weitere 90 Minuten nachgegerbt. Nach einer 10 minütigen Wäsche bei 35 °C in 300 Teilen Wasser wurde in einer neuen Flotte aus 100 Teilen Wasser und 1,5 Teilen Natriumformiat bei 35°C 10 Minuten neutralisiert. Zur Neutralisationsflotte wurden 0,5 Teile Natriumbicarbonat gegeben und 30 Minuten gewalkt. Nach 30 minütiger Nachgerbung mit 6 Teilen Polymergerbstoff G18 wurde zur Ausgerbung 6 Teile Nachgerbstoff -G5 und 6 Teile Nachgerbstoff G3 zugegeben. Nach einer Walkzeit von 40 Minuten wurde die Flotte mit 100 Teilen 60°C heißem Wasser verdünnt und 10 Minuten bei 60°C gewalkt. Nach Zugabe von 3,5 Teilen Fettungsmittel F1 und 3,5 Teilen Hydrophobiermittel H3 wurde 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 10 Minuten kalt gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Softy Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Softy Schuhoberleder herstellen.

### Schuhoberlederrezeptur 16:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7.4 erreicht. Nach Zugabe von 1,5 Teilen HM2 wurde 5 Minuten bei 40°C gewalkt und anschließend zur Entsäuerungsflotte 7 Teile Mischfarbstoff 12hf zugegeben und 40 Minuten bei pH 7,5 und 40°C gefärbt. Durch portionsweise Zugabe von insgesamt 8 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 4 Teilen Ameisensäure innerhalb von 90 Minuten ein pH von 3,7 eingestellt.

Das derart gefärbte Leder wurde in einer frisch angesetzten Flotte aus 80 Teilen Wasser, 1,5 Teilen Aldehydgerbstoff G13 und 6 Teilen Polymergerbstoff G18 40 Minuten bei 45°C nachgegerbt. Anschließend wurden 8 Teile Nachgerbstoff G2, 2 Teile Polymergerbstoff G19 und 3 Teile Harzgerbstoff G11 zugegeben und 60 min bei 45°C ausgegerbt. Anschließend wurde die Flotte mit 70 Teilen 60°C heißem Wasser verdünnt und 20 Minuten bei 60°C gewalkt. Nach Zugabe von 6,5 Teilen Fettungsmittel F1 und 3,5 Teilen Fettungsmittel F3 wurde 60 Minuten bei 60°C gefettet. Durch portionsweise Zugabe von insgesamt 4 Teilen Ameisensäure wurde innerhalb von 60 Minuten auf einen pH-Wert von 3,5 abgesäuert. Anschließend wurde 10 Minuten kalt-gespült.

Das so gefärbt, nachgegerbt und gefettete Leder wurde über Nacht auf Bock gelagert, anschließend ausgereckt, bei 60°C 2 Minuten vakuumiert, über Nacht bei Raumtemperatur hängegetrocknet, konditioniert, gestollt und bei 60°C 2 Minuten vakuumgetrocknet.

Es wurde ein Softy Schuhoberleder mit ausgezeichneten Wasch-, Schweiß-, Migrations- und Reibechtheiten erhalten. In analoger Weise kann man ein mit einem der Farbstoffe der Beispiel 1 a bis 59k gefärbtes Softy Schuhoberleder herstellen.

### Schuhoberlederrezeptur 17:

Ein Lederstück von 100 Gewichtsteilen eines auf übliche Weise chromgegerbten Rindsleders der Falzstärke 1,5 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7.6 erreicht. Zur Entsäuerungsflotte wurden 9 Teile Mischfarbstoff 12hr gegeben und 30 Minuten bei pH 7,5 und 40°C gefärbt. Durch portionsweise Zugabe von insgesamt 9 Teilen festes Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch Zugabe von insgesamt 4 Teilen Ameisensäure innerhalb von 90 Minuten ein pH von 3,5 eingestellt.

Das derart gefärbte Leder wurde in einer frisch angesetzten Flotte aus 100 Teilen Wasser und 4 Teilen Aldehydgerbstoff G12 10 Minuten bei 35°C gewalkt. Danach wurden 6 Teile Chromgerbstoff G24 und 2 Teile Nachgerbstoff G1 zugegeben und 50 Minuten bei 35°C nachgegerbt. Anschließend fügte man zur Flotte 1 Teil Natriumformiat zu und ließ 10 Minuten walken. Nach Zugabe von 1,5 Teilen der Fettungsmittels F1 wurde 90 min bei 35°C gewalkt. Die Flotte wurde abgelassen und einmal mit 300 Teilen Wasser bei 45°C 10 Minuten lang gewaschen.

Anschließend wurde in einer frisch angesetzen Flotte aus 70 Teilen Wasser und 2 Teilen Hydrophobiermittel H3 15 Minuten bei 45°C vorgefettet. Danach wurden 2 Teile Natriumformiat, 1 Teil Natriumbicarbonat und 3 Teile Hilfsmittel HM4 zugesetzt und 30 Minuten gewalkt. Zur Neutralisationsflotte wurden 12 Teile Nachgerbstoff G6 gegegen, nach einer Walkszeit von 10 Minuten wurden 2 Teile Polymergerbstoff-G19 hinzugefügt und noch weitere 50 Minuten ausgegerbt. Zur Nachgerbflotte wurden 4 Teile Fettungsmittel F4, 4 Teile Fettungsmittel F1 und 2 Teile Fettungsmittel F6 hinzugefügt und 60 Minuten bei 45°C gefettet.Durch portionsweise Zugabe von insgesamt 4 Teilen Ameisensäure wurde innerhalb von 60 Minuten auf einen pH-Wert von 3,5 abgesäurt. Anschließend wurde die Flotte abgelassen und 5 Minuten kalt gespült.

Das so gefärbt, nachgegerbt und gefettete Leder wurde über Nacht auf Bock gelagert, anschließend ausgereckt, bei 55 °C 1 Minuten vakuumiert, über Nacht bei Raumtemperatur hängegetrocknet, konditioniert, gestollt, über Nacht gemillt und Spannrahmen getrocknet.

Es wurde ein Schuhoberleder mit Millnarben und ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder mit Millnarben herstellen.

### Schuhoberlederrezeptur 18:

Ein Lederstück von 100 Gewichtsteilen eines auf übliche Weise chromgegerbten Rindsleders der Falzstärke 2,1 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7.6 erreicht. Zur Entsäuerungsflotte wurden 7,5 Teile Farbstoff 13b gegeben und 30 Minuten bei pH 7,5 und 40°C gefärbt. Durch portionsweise Zugabe von insgesamt 8 Teilen Natriumcarbonat wurde zur Fixierung der pH-Wert der Flotte zwischen 9,2 - 9,6 eingestellt und bei 40°C 75 Minuten lang gewalkt. Nach Flottenwechsel wurde zweimal mit jeweils 300 Teilen Wasser insgesamt 60 Minuten lang gewaschen.

Das derart gefärbte Leder wurde in einer frisch angesetzten Flotte aus 80 Teilen Wasser und 3 Teilen Aldehydgerbstoff G12 30 Minuten bei 45°C gewalkt. Danach wurden 5 Teile Nachgerbstoff G5 zugegeben und 30 Minuten bei 45°C nachgegerbt. Anschließend fügte man zur Flotte 1 Teil Fettungsmittel F1 und 1 Fettungsmittel F4 zu und fettete 40 Minuten bei 45°C vor. Anschließend wurden 70 Teile 55°C heißes Wasser zugefügt und 20 Minuten bei 55°C gewalkt. Durch portionsweise Zugabe von 1,5 Teilen Ameisensäure wurde innerhalb von 55 Minuten ein pH-Wert von 5,0 eingestellt. Die Flotte wurde abgelassen und einmal mit 300 Teilen Wasser bei 45°C 10 Minuten lang gewaschen.

Anschließend wurde in einer frisch angesetzen Flotte aus 100 Teilen Wasser und 2 Teilen Hydrophobiermittel H3 15 Minuten bei 45°C gewalkt. Danach wurden 2 Teile Polymergestoff G19 zugegegen. Nach einer Walkszeit von 15 Minuten wurden 2 Teile Polymergerbstoff G15 hinzugefügt und noch weitere 30 Minuten ausgegerbt. Zur Nachgerbflotte wurden 2,5 Teile Fettungsmittel F1, 2,5 Teile Fettungsmittel F4, 1 Teil Fettungsmittel F3 und 1 Teil Fettungsmittel F2 hinzugefügt und 60 Minuten bei 45°C gefettet. Durch portionsweise Zugabe von insgesamt 4 Teilen Ameisensäure wurde innerhalb von 60 Minuten auf einen pH-Wert von 3,5 abgesäuert. Anschließend wurde die Flotte abgelassen und das Leder 5 Minuten kalt gespült.

Das so gefärbt, nachgegerbt und gefettete Leder wurde über Nacht auf Bock gelagert, anschließend ausgereckt, naßgespannt und bei 40°C getrocknet, konditioniert, gestollt, über Nacht gemillt und Spannrahmen getrocknet.

Es wurde ein Floater Schuhoberleder mit ausgezeichneten Wasch-, Schweiß-, Migrations- und Reibechtheiten erhalten. In analoger Weise kann man ein mit einem der Farbstoffe der Beispiel 1 a bis 59k gefärbtes Floater-Schuhoberleder herstellen.

### Schuhoberlederrezeptur 19:

Ein Lederstück von 100 Gewichtsteilen eines auf übliche Weise chromgegerbten Rindsleders der Falzstärke 2,1 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,7 eingestellt. Zur Entsäuerungsflotte wurden 5,9 Teile Farbstoff 13ae gegeben und 40 Minuten bei pH 7,5 und 40°C gefärbt. Durch portionsweise.Zugabe von insgesamt 6,5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 4 Teilen Ameisensäure innerhalb von 60 Minuten ein pH von 3,6 eingestellt.

Das derart gefärbte Leder wurde in einer frisch angesetzten Flotte aus 80 Teilen Wasser und 1 Teil Aldehydgerbstoff G13 und 3 Teilen Polymergerbstoff G16 60 Minuten bei 45°C gewalkt. Danach wurden 0,5 Teile Natriumbicarbonat zugegeben, nach einer Walkzeit von 30 Minuten wurden 5 Teile Polymergerbstoff G18 zugegeben und 30 Minuten bei 45°C. nachgegerbt. Anschließend fügte man zur Flotte 0,8 Teile Hilfsmittel HM5, 3 Teile Polymergerbstoff G17 und 2 Teile Polymergerbstoff G19 und gerbte 60 Minuten bei 45°C aus. Anschließend wurden 70 Teile Wasser zugegeben und 10 Minuten bei 60°C gewalkt. Zur Nachgerbflotte wurden 2,5 Teile Fettungsmittel F6, 1,5 Teile Hydrophobiermittel H3 und 1,5 Teile Fettungsmittel F2 zugegeben und 60 Minuten bei 45°C gefettet. Anschließend wurde durch portionsweise Zugabe von 4 Teilen Ameisensäure innerhalb von 60 Minuten ein pH-Wert von 3,5 eingestellt. Danach wurde die Flotte abgelassen und kurz kalt gespült.

Das so gefärbt, nachgegerbt und gefettete Leder wurde über Nacht auf Bock gelagert, anschließend ausgereckt, bei 60°C 2 Minuten lang vakuumiert, bei Raumtemperatur hängegetrocknet, konditioniert, gestollt und bei 60°C 2 Minuten vakuumgetrocknet.

Es wurde ein rein polymer basiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, rein polymerbasiertes Schuhoberleder herstellen.

### Schuhoberlederrezeptur 20:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,8 eingestellt. Zur Entsäuerungsflotte wurden 4,8 Teile Farbstoff 13dt gegeben und 35 Minuten bei pH 7,6 und 40°C gefärbt. Durch portionsweise Zugabe von insgesamt 6 Teilen Natriumcarbonat wurde zur Fixierung der pH-Wert der Flotte zwischen 9,4 - 9,9 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,3 eingestellt.

Das derart gefärbte Leder wurde in einer frisch angesetzten Flotte aus 80 Teilen Wasser und 1,5 Teilen Hydrophobiermittel H320 Minuten gewalkt. Anschließend wurden 5 Teile Polymergerbstoff G18 zugegeben, nach einer Walkzeit von 40 Minuten erfolgte eine Zugabe von 1 Teil Hilfsmittel HM5 und 5 Teilen Polymergerbstoff G18. Nach weiteren 30 Minuten Walkzeit bei 45°C wurden 3 Teile Polymergerbstoff G19 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F6, 0,5 Teile Hydrophobiermittel H3 und 1,5 Teile Fettungsmittel F2 zugegeben und 60 Minuten bei 60°C gefettet. Anschließend wurde durch portionsweise Zugabe von 4 Teilen Ameisensäure innerhalb von 60 Minuten ein pH-Wert von 3,4 eingestellt. Danach wurde die Flotte abgelassen und kurz kalt gespült.

Das so gefärbt, nachgegerbt und gefettete Leder wurde über Nacht auf Bock gelagert, anschließend ausgereckt, bei 60°C 2 Minuten lang vakuumiert, bei Raumtemperatur hängegetrocknet, konditioniert, gestollt und bei 60°C 2 Minuten vakuumgetrocknet.

Es wurde ein rein polymer basiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, rein polymerbasiertes Schuhoberleder herstellen.

### Schuhoberlederrezeptur 21:

Ein Lederstück von 100 Gewichtsteilen eines auf übliche Weise chromgegerbten Rindsleders der Falzstärke 2,2 mm wurde in einer Flotte aus 200 Teilen Wasser 10. Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,8 eingestellt. Zur Entsäuerungsflotte wurden 7,7 Teile Mischfarbstoff 13hb gegeben und 35 Minuten bei pH 7,6 und 40°C gefärbt. Durch portionsweise Zugabe von insgesamt 8 Teilen Natriumcarbonat wurde zur Fixierung der pH-Wert der Flotte zwischen 9,5 -10,0 eingestellt und bei 40°C 55 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,4 eingestellt.

Das derart gefärbte Leder wurde in einer frisch angesetzten Flotte aus 80 Teilen Wasser und 1,5 Teilen Hydrophobiermittel H3 15 Minuten gewalkt. Anschließend wurden 5 Teile Polymergerbstoff G18 zugegeben, nach einer Walkzeit von 40 Minute erfolgte eine Zugabe von 1 Teil Hilfsmittel HM5, 3 Teilen Polymergerbstoff G17, 3 Teilen Vegetabilgerbstoff G23 und 2 Teilen Gerbstoff G11. Nach weiteren 30 Minuten Walkzeit bei 45°C wurden 3 Teile Polymergerbstoff G19 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel f7 und 2 Teile Fettungsmittel F4 gegeben und 60 Minuten bei 60°C gefettet. Anschließend wurde durch portionsweise Zugabe von 4 Teilen Ameisensäure innerhalb von 60 Minuten ein pH-Wert von 3,5 eingestellt. Danach wurde die Flotte abgelassen und das Leder kurz kalt gespült.

Das so gefärbt, nachgegerbt und gefettete Leder wurde über Nacht auf Bock gelagert, anschließend ausgereckt, bei 60°C 2 Minuten lang vakuumiert, bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der farbstoffe der Beispiel 1 a bis 59k gefärbtes Schuhoberleder herstellen.

### Schuhoberlederrezeptur 22:

Ein Lederstück von 100 Gewichtsteilen eines auf übliche Weise chromgegerbten Rindsleders der Falzstärke 1,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,8 eingestellt. Zur Entsäuerungsflotte wurden 10,5 Teile Mischfarbstoff 13hp gegeben und 20 Minuten bei pH 7,6 und 40°C gefärbt. Durch portionsweise Zugabe von insgesamt 9 Teilen Natriumcarbonat wurde zur Fixierung der pH-Wert der Flotte zwischen 9,5 -10,0 eingestellt und bei 40°C 70 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugaben von 2 Teilen Ameisensäure innerhalb von 60 Minuten ein pH von 4,3 eingestellt.

Das derart gefärbte Leder wurde in einer frisch angesetzten Flotte aus 80 Teilen Wasser und 3 Teilen Polymergerbstoff G19 5 Minuten gewalkt. Anschließend wurden 6 Teile Nachgerbstoff G2 zugegeben, nach einer Walkzeit von 30 Minute erfolgte eine Zugabe von 5 Teilen Polymergerbstoff G18, 3 Teilen Polymergerbstoff G19 und 4 Teilen Nachgerbstoff G2. Nach weiteren 60 Minuten Walkzeit bei 45°C wurden 70 Teile Wasser zugegeben und 20 Minuten bei 65°C gewalkt. Zur Nachgerbflotte wurden 3 Teile Fettungsmittel F1 und 2 Teile Fettungsmittel F2 zugegeben und 60 Minuten bei 65°C gefettet. Anschließend wurde durch portionsweise Zugabe von 4 Teilen Ameisensäure innerhalb von 60 Minuten ein pH-Wert von 3,6 eingestellt. Danach wurde die Flotte abgelassen und das Leder kurz kalt gespült.

Das so gefärbt, nachgegerbt und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaub und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 23:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungsflotte wurden 6,1 Teile Mischfarbstoff 13hw gegeben und 15 Minuten bei pH 7,5 und 40°C gefärbt. Durch portionsweise Zugabe von insgesamt 8 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,2 eingestellt

Das derart gefärbte Leder wurde in einer frisch angesetzten Flotte aus 80 Teilen Wasser und 1 Teil Aldehydgerbstoff G13 3 Minuten gewalkt. Nach Zugabe von 3 Teilen Polymergerbstoff G19 wurde weitere 30 Minuten gewalkt. Anschließend wurden 0,8 Teile Natriumbicarbonat zugegeben. Nach einer Walkzeit von 30 Minuten wurden 3 Teile Hydrophobiermittel H5 zugegeben, nach weiteren 30 Minuten Walkzeit wurde mit 5 Teilen Polymergerbstoff G18 30 Minuten lang nachgegerbt. Zur Nachgerbflotte wurden 5 Teile Hydrophobiermitte H1 und 0,5 Teile Hilfsmittel HM4 gegeben und 60 Minuten bei 45°C gefettet. Danach wurden 70 Teile Wasser zugegeben und 20 Minuten bei 65°C gewalkt. Anschließend wurde durch portionsweise Zugabe von 4 Teilen Ameisensäure innerhalb von 60 Minuten ein pH-Wert von 3,5 eingestellt. Danach wurde die Flotte abgelassen. Das Leder wurde in einer frisch angesetzten Flotte aus 150 Teilen Wasser und 0,5 Teilen Ameisensäure 10 Minuten lange bei 30 °C gewalkt. Durch Zugabe von 5 Teilen Chromgerbstoff G24 wurde die Hydrophobierung 90 Minuten lang bei 30°C fixiert. Anschließend wurde einmal mit 300 Teilen Wasser 10 Minuten lang gewaschen und danach in einer Flotte aus 300 Teilen Wasser und 0,2 Teilen Ameisensäure 10 Minuten lang gewalkt. Nach Ablassen der Flotte wurde kurz kalt gespült.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein hydrophobiertes Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Nubuk direkt Schuhoberleder herstellen.

### Schuhoberlederrezeptur 24:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,5 eingestellt. Zur Entsäuerungsflotte wurden 9,2 Teile Farbstoff 14 gegeben und 25 Minuten bei pH 7,5 und 40°C gefärbt. Durch portionsweise Zugabe von insgesamt 9 Teilen Natriumcarbonat wurde zur Fixierung der pH-Wert der Flotte zwischen 9,2 - 9,6 eingestellt und bei 40°C 50 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,3 eingestellt.

Das derart gefärbte Leder wurde in einer frisch angesetzten Flotte aus 80 Teilen Wasser und 3 Teilen Polymergerbstoff G19 15 Minuten gewalkt. Danach wurden 2 Teile Hydrophobiermittel H1 zugegeben. Nach einer Walkzeit von 15 Minuten wurde nach Zugabe von 5 Teilen Polymergerbstoff G18, 3 Teilen Nachgerbstoff G1 und 1 Teil Polymergerbstoff G19 30 Minuten lang nachgegerbt. Zur Nachgerbflotte wurden 4 Teile Hydrophobiermitte H1 und 0,3 Teile Hilfsmittel HM4 gegeben und 60 Minuten bei 45°C gefettet. Danach wurden 70 Teile Wasser zugegeben und 20 Minuten bei 65°C gewalkt. Anschließend wurde durch portionsweise Zugabe von 4 Teilen Ameisensäure wurde innerhalb von 60 Minuten ein pH-Wert von 3,5 eingestellt. Danach wurde die Flotte abgelassen. Das Leder wurde in einer frisch angesetzten Flotte aus 150 Teilen Wasser und 0,5 Teilen Ameisensäure 10 Minuten lange bei 30 °C gewalkt. Durch Zugabe von 5 Teilen Chromgerbstoff G24 wurde die Hydrophobierung 90 Minuten lang bei 30°C fixiert. Anschließend wurde einmal mit 300 Teilen Wasser 10 Minuten lang gewaschen und danach in einer Flotte aus 300 Teilen Wasser und 0,2 Teilen Ameisensäure 10 Minuten lang gewalkt. Nach Ablassen der Flotte wurde kurz kalt gespült.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein hydrophobiertes Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Nubuk direkt Schuhoberleder herstellen.

### Schuhoberlederrezeptur 25:

Ein Lederstück von 100 Gewichtsteilen eines auf übliche Weise chromgegerbten Rindsleders der Falzstärke 1,8 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,5 eingestellt. Zur Entsäuerungsflotte wurden 6,8 Teile Farbstoff 15 gegeben und 30 Minuten bei pH 7,5 und 40°C gefärbt. Durch portionsweise Zugabe von insgesamt 8 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 5 Teilen Ameisensäure innerhalb von 90 Minuten ein pH von 3,0 eingestellt.

Das derart gefärbte Leder wurde in einer frisch angesetzten Flotte aus 80 Teilen Wasser und 0,4 Teile Ameisensäure 10 min gewalkt. Danach wurden 1 Teil Nachgerbstoff G14 zugegeben und 30 Minuten gewalkt. Anschließend wurden 4 Teile Chromgerbstoff G24 und 2 Teile Nachgerbstoff G28 zugegeben. Nach einer Walkzeit von 30 Minuten wurde 0,5 Teile Natriumformiat zugegeben und 60 Minuten nachchromiert. Zur Flotte wurden 100 Teile Wasser gegeben und über Nacht gewalkt. Anschließend wurde die Flotte abgelassen.
Das Leder wurde in einer frisch angesetzten Flotte aus 80 Teilen Wasser, 1,5 Teilen Natriumformiat und 0,5 Teilen Natriumbicarbonat 30 Minuten lange bei 30 °C gewalkt. Anschließend wurden 2 Teile Polymergerbstoff G19 zugesetzt. Nach-einer Walkzeit von 15 Minuten wurden 2 Teile Hydrophobiermittel H1 zugesetzt und 15 Minuten gewalkt. Nach Zugabe von 5 Teilen Polymergerbstoff G18 und einer Walkzeit von 30 Minuten wurden zur Ausgerbung 4 Teile Nachgerbstoff G28 und 3 Teile Nachgerbstoff G11 zugesetzt und weitere 30 Minuten nachgegerbt. Zur Nachgerbflotte wurden 4 Teilen Hydrophobiermittel H1 und 0,3 Teile Hilfsmittel HM4 zugesetzt und 60 Minuten lang gefettet. Anschließend wurden zur Flotte 70 Teilen Wasser zugegeben und bei 65°C 20 Minuten lang gewalkt. Innerhalb von 45 Minuten wurde durch portionsweise Zugabe von insgesamt 3,5 Teilen Ameisensäure ein Flotten-pH-Wert von 3,5 eingestellt. Das Leder wurde in einer frisch angesetzten Flotte aus 150 Teilen Wasser und 0,5 Teilen Ameisensäure 10 Minuten lange bei 30 °C gewalkt. Durch Zugabe von 5 Teilen Chromgerbstoff G24 wurde die Hydrophobierung 90 Minuten lang bei 30°C fixiert. Anschließend wurde einmal mit 300 Teilen Wasser 10 Minuten lang gewaschen und danach in einer Flotte aus 300 Teilen Wasser und 0,2 Teilen Ameisensäure 10 Minuten lang gewalkt. Nach Ablassen der Flotte wurde kurz kalt gespült.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein hydrophobiertes Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Nubuk direkt Schuhoberleder herstellen.

### Schuhoberlederrezeptur 26:

Ein Lederstück von 100 Gewichtsteilen eines auf übliche Weise chromgegerbten Rindsleders der Falzstärke 1,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungflotte wurden 8,8 Teile Farbstoff 16i gegeben und 40 Minuten bei pH 7,5 und 40°C gefärbt. Durch portionsweise Zugabe von insgesamt 8 Teilen Natriumcarbonat wurde zur Fixierung der pH-Wert der Flotte zwischen 9,1 - 9,7 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,2 eingestellt.

Das derart gefärbte Leder wurde in einer frisch angesetzten flotte aus 80 Teilen Wasser und 1 Teil Nachgerbstoff G14 5 Minuten lang gewalkt. Anschließend wurden 2 Teile Polymergerbstoff G19 zugegeben, nach einer Walkzeit von 15 Minute erfolgte die Zugabe von 5 Teilen Polymergerbstoff G18. Nach weiteren 40 Minuten Walkzeit bei 45°C wurden 3 Teile Vegetabilgerbstoff G22 und 3 Teile Nachgerbstoff G28 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 50°C gefettet. Anschließend wurde durch portionsweise Zugabe von 4 Teilen Ameisensäure innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet. Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1 a bis 59k gefärbtes Nubuk direkt Schuhoberleder herstellen.

### Schuhoberlederrezeptur 27:

Ein Lederstück von 100 Gewichtsteilen eines auf übliche Weise chromgegerbten Rindsleders der Falzstärke 1,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungflotte wurden 9 Teile Farbstoff 17b gegeben und 40 Minuten bei pH 7,5 und 40°C gefärbt. Durch portionsweise Zugabe von insgesamt 9,5 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser und 2 Teilen Ameisensäure wurde innerhalb von 60 Minuten ein pH von 4,3 eingestellt.

Das derart gefärbte Leder wurde in einer frisch angesetzten Flotte aus 80 Teilen Wasser und 1 Teil Nachgerbstoff G14 5 Minuten lang bei 45°C gewalkt. Anschließend wurden 2 Teile Polymergerbstoff G19 zugegeben, nach einer Walkzeit von 15 Minute erfolgte die Zugabe von 5 Teilen Polymergerbstoff G18. Nach weiteren 40 Minuten Walkzeit bei 45°C wurden 4 Teile Harzgerbstoff G28 und 4 Teile Harzgerbstoff G11 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 gegeben und 60 Minuten bei 55°C gefettet. Anschließend wurde durch portionsweise Zugabe von 4 Teilen Ameisensäure innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1 a bis 59k gefärbtes Nubuk direkt Schuhoberleder herstellen.

### Schuhoberlederrezeptur 28:

Ein Lederstück von 100 Gewichtsteilen eines auf übliche Weise chromgegerbten Rindsleders der Falzstärke 1,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungaflotte wurden 5 Teile Farbstoff 19 gegeben und 30 Minuten bei pH 7,5 und 40°C gefärbt. Durch portionsweise Zugabe von insgesamt 6,5 Teilen Natriumcarbonat wurde zur Fixierung der pH-Wert der Flotte zwischen 9,2 - 9,8 eingestellt und bei 40°C 65 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure innerhalb von 60 Minuten ein pH von 4,3 eingestellt.

Das derart gefärbte Leder wurde in einer frisch angesetzten Flotte aus 80 Teilen Wasser und 1 Teil Nachgerbstoff G14 5 Minuten lang bei 45°C gewalkt. Anschließend wurden 2 Teile Polymergerbstoff G19 zugegeben, nach einer Walkzeit von 15 Minuten erfolgte die Zugabe von 5 Teilen Polymergerbstoff G18. Nach weiteren 40 Minuten Walkzeit bei 45°C wurden 2 Teile Vegetabilgerbstoff G22 und 4 Teile Harzgerbstoff G28 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 60°C gefettet. Anschließend wurde durch portionsweise Zugabe von 4 Teilen Ameisensäure wurde innerhalb von 50 Minuten ein pH-Wert von 3,5 eingestellt. Danach wurde die Flotte abgelassen und kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 29:

Ein Lederstück von 100 Gewichtsteilen eines auf übliche Weise chromgegerbten Rindsleders der Falzstärke 1,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungsflotte wurden 7,1 Teile Farbstoff 22 gegeben und 40 Minuten bei pH 7,5 und 40°C gefärbt. Durch portionsweise Zugabe von insgesamt 8 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 3 Teilen Ameisensäure innerhalb von 60 Minuten ein pH von 3,9 eingestellt.

Das derart gefärbte Leder wurde in einer frisch angesetzten Flotte aus 80 Teilen Wasser und 2 Teilen Nachgerbstoff G29 20 Minuten fang bei 45°C gewalkt. Anschließend wurden 2 Teile Polymergerbstoff G19 zugegeben, nach einer Walkzeit von 15 Minute erfolgte die Zugabe von 5 Teilen Polymergerbstoff G18. Nach weiteren 40 Minuten Walkzeit bei 45°C wurden 4 Teile Harzgerbstoff G28 und 4 Teile Harzgerbstoff G11 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 55°C gefettet. Anschließend wurde durch portionsweise Zugabe von 4 Teilen Ameisensäure wurde innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 30:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungflotte wurden 7,2 Teile Farbstoff 24 gegeben und 40 Minuten bei pH 7,5 und 40°C gefärbt.

Durch portionsweise Zugabe von insgesamt 8 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 4 Teilen Ameisensäure innerhalb von 60 Minuten ein pH von 4,0 eingestellt.

Das derart gefärbte Leder wurde in einer frisch angesetzten Flotte aus 80 Teilen Wasser und 3 Teilen Nachgerbstoff G25 35 Minuten lang bei 45°C gewalkt. Anschließend wurden 2 Teile Polymergerbstoff G19 zugegeben, nach einer Walkzeit von 15 Minute erfolgte die Zugabe von 5 Teilen Polymergerbstoff G18. Nach weiteren 40 Minuten Walkzeit bei 45°C wurden 4 Teile Harzgerbstoff G28 und 4 Teile Harzgerbstoff G11 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 55°C gefettet. Anschließend wurde durch portionsweise Zugabe von 4 Teilen Ameisensäure wurde innerhalb von 60 Minuten ein pH-Wert von 3,5 eingestellt. Danach wurde die Flotte abgelassen und kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 31:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 4,9 Teile Farbstoff 28a gegeben und 30 Minuten bei pH 7,5 und 40°C gefärbt. Durch portionsweise Zugabe von insgesamt 6,8 Teilen Natriumcarbonat wurde zur Fixierung der pH-Wert der Flotte zwischen 9,5 -10,0 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 1,5 Teilen Ameisensäure innerhalb von 50 Minuten ein pH von 5,5 eingestellt.

Das derart gefärbte Leder wurde in einer frisch angesetzten Flotte aus 80 Teilen Wasser und 5 Teilen Hydrophobiermittel H5 20 Minuten lang bei 45°C gewalkt. Anschließend wurden 5 Teile Polymergerbstoff G18 zugegeben, nach einer Walkzeit von 40 Minuten erfolgte die Zugabe von 5 Teilen Hydrophobiermittel H1 und 0,3 Teile Hilfsmittel HM4. Nach einer 60 minütigen Fettung bei 45°C wurden 70 Teile Wasser zugegeben und 10 Minuten bei 60°C gewalkt Dann wurde durch portionsweise Zugabe von 4 Teilen Ameisensäure innerhalb von 60 Minuten ein pH-Wert von 3,5 eingestellt. Danach wurde die Flotte abgelassen und in neu angesetzter Flotte aus 150 Teilen Wasser und 0,5 Teilen Ameisensäure 5 Minuten lang gewalkt. Nach Zugabe von 5 Teilen Chromgerbstoff G24 wurde 90 Minuten lang fixiert. Zum Schluß wurde zweimal mit 300 Teilen Wasser jeweils 10 Minuten bei 30°C gespült.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 2 Minuten vakuumgetrocknet.

Es wurde ein hydrophobiertes Schuhoberleder mit ausgezeichneten Wasch-, Schweiß, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 32:

Ein Lederstück von 100 Gewichtsteilen eines auf übliche Weise chromgegerbten Rindsleders der Falzstärke 1,9 mm wurde in einer Ftotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 9,1 Teile Farbstoff 30 gegeben und 40 Minuten bei pH 7,6 und 40°C gefärbt. Durch portionsweise Zugabe von insgesamt 9,2 Teilen festes Natriumcarbonat wurde zur Fixierung der pH-Wert der Flotte zwischen 9,3 - 9,8 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 150 Teilen Wasser wurde durch portionsweise Zugabe von insgesamt 2 Teilen Ameisensäure innerhalb von 50 Minuten ein pH von 4,3 eingestellt.

Das derart gefärbte Leder wurde in einer frisch angesetzten Flotte aus 80 Teilen Wasser, 1,5 Teilen Nachgerbstoff G13 und 2 Teilen Polymergerbstoff G19 40 Minuten lang bei 45°C gewalkt. Anschließend wurden 0,7 Teile Natriumbicarbonat zugegeben und nach 20 minütiger Walkzeit ein pH-Wert von 5,5 erhalten. Danach wurden 3 Teile Hydrobiermittel H1 und 0,2 Teile Hilfsmittel HM4 zugeben und 20 Minuten gewalkt. Nach Zugabe von 6 Teilen Polymergerbstoff G18 wurde noch weitere 30 Minuten nachgegerbt. Zur Fettung wurden 5 Teile Hydrophobiermittel H1 und 0,3 Teile Hilfsmittel HM4 zugegeben und 60 Minuten gewalkt. Anschließend erfolgt die Zugabe von 70 Teilen Wasser. Nach einer Walkzeit von 10 Minuten bei 60°C wurde durch portionsweise Zugabe von 4 Teilen Ameisensäure innerhalb von 60 Minuten ein pH-Wert von 3,5 eingestellt. Danach wurde die Flotte abgelassen und in neu angesetzter Flotte aus 150 Teilen Wasser und 0,5 Teilen Ameisensäure 5 Minuten lang gewalkt. Nach Zugabe von 5 Teilen Chromgerbstoff G24 wurde 90 Minuten lang fixiert. Zum Schluß wurde zweimal mit 300 Teilen Wasser jeweils 10 Minuten bei 30°C gewaschen.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 2 Minuten vakuumgetrocknet.

Es wurde ein hydrophobiertes Softy Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, hydrophobiertes Softy Schuhoberleder herstellen.

### Schuhoberlederrezeptur 33:

Ein Lederstück von 100 Gewichtsteilen eines auf übliche Weise-chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungflotte wurden 9,9 Teile Farbstoff 32 gegeben und 40 Minuten bei pH 7,6 und 40°C gefärbt. Durch portionsweise Zugabe von insgesamt 10,0 Teilen Natriumcarbonat wurde zur Fixierung der pH-Wert der Flotte zwischen 9,2 - 9,7 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 1,5 Teilen Ameisensäure innerhalb von 50 Minuten ein pH von 5,4 eingestellt.

Das derart gefärbte Leder wurde in einer frisch angesetzten Flotte aus 80 Teilen Wasser und 3 Teilen Polymergerbstoff G19 15 Minuten lang bei 45°C gewalkt. Anschließend wurden 1,5 Teile Hydrobiermittel H1 zugeben und 15 Minuten lang gewalkt. Nach Zugabe von 5 Teilen Polymergerbstoff G18 wurde noch weitere 30 Minuten nachgegerbt. Anschließend wurden 2 Teile Vegetabilgerbstoff G22, 2 Teile Nachgerbstoff G1, 2 Teile Harzgerbstoff G28 und 3 Teile Nachgerbstoff G11 zugegeben und 30 Minuten gewalkt. Zur Fettung wurden 4,5 Teile Hydrophobiermittel H1 und 0,3 Teile Hilfsmittel HM4 zugegeben und 60 Minuten gewalkt. Anschließend erfolgt die Zugabe von 70 Teilen Wasser. Nach einer Walkzeit von 10 Minuten bei 60°C wurde durch portionsweise Zugabe von 4 Teilen Ameisensäure innerhalb von 50 Minuten ein pH-Wert von 3,5 eingestellt. Danach wurde die Flotte abgelassen und und in neu angesetzter Flotte aus 150 Teilen Wasser und 0,5 Teilen Ameisensäure 10 Minuten lang gewalkt. Nach Zugabe von 5 Teilen Chromgerbstoff G24 wurde 90 Minuten lang fixiert. Anschließend wurde einmal mit 300 Teilen Wasser 10 Minuten bei 30°C und einmal mit einer Flotte aus 300 Teilen Wasser und 0,2 Teilen Ameisensäure gewaschen. Zum Schluß wurde das Leder kurz gespült.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 2 Minuten vakuumgetrocknet.

Es wurde ein hydrophobiertes Schuhoberleder mit ausgezeichneten Wasch-, Schweiß, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 34:

Ein Lederstück von 100 Gewichtsteilen eines auf übliche Weise-chromgegerbten Rindsleders der Falzstärke 1.8-2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 6,8 Teile Farbstoff 34p gegeben und 40 Minuten bei pH 7,6 und 40°C gefärbt. Durch portionsweise Zugabe von insgesamt 7,5 Teilen Natriumcarbonat wurde zur Fixierung der pH-Wert der Flotte zwischen 9,2 - 9,6 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 2 Teilen Ameisensäure Innerhalb von 60 Minuten ein pH von 4,3 eingestellt.

Das derart gefärbte Leder wurde in einer frisch angesetzten Flotte aus 80 Teilen Wasser 1 Teil Nachgerbstoff G14 und 2 Teilen Polymergerbstoff G19 40 Minuten lang bei 45°C gewalkt. Danach wurden 0,8 Teile Natriumbicarbonat zugegeben und ein pH von 5,6 erreicht. Anschließend wurden 3 Teile Hydrobiermittel H5 und 0,15 Teile HM4 zugegeben und 20 Minuten lang gewalkt. Nach Zugabe von 5 Teilen Polymergerbstoff G18 wurde noch weitere 30 Minuten nachgegerbt. Anschließend wurden 2 Teile Nachgerbstoff G1, 2 Teile Vegetabilgerbstoff G22 und 2 Teile Harzgerbstoff G28 zugegeben und 30 Minuten gewalkt. Zur Fettung wurden 5 Teile Hydrophobiermittel H1 und 0,15 Teile Hilfsmittel HM4 zugegeben und 60 Minuten gewalkt. Anschließend erfolgt die Zugabe von 70 Teilen Wasser. Nach einer Walkzeit von10 Minuten bei 60°C wurde durch portionsweise Zugabe von 4 Teilen Ameisensäure innerhalb von 40 Minuten ein pH-Wert von 3,5 eingestellt. Danach wurde die Flotte abgelassen und in neu angesetzter Flotte aus 150 Teilen Wasser und 0,5 Teilen Ameisensäure 10 Minuten lang gewalkt. Nach Zugabe von 5 Teilen Chromgerbstoff G24 wurde 90 Minuten lang fixiert. Anschließend wurde einmal mit 300 Teilen Wasser 10 Minuten bei 30°C und einmal mit einer Flotte aus 300 Teilen Wasser und 0,2 Teilen Ameisensäure 10 Minuten bei 30°C gewaschen. Zum Schluß wurde das Leder kurz gespült.

Das so gefärbte, nachgegerbte und hydrophobierte Leder wurde über Nacht auf Bock gelagert, anschließend ausgereckt, bei 55°C 4 Minuten lang vakuumiert, bei Raum- ' temperatur hängegetrocknet, konditioniert, gestollt und bei 55°C 2 Minuten vakuumgetrocknet.

Es wurde ein hydrophobiertes Schuhoberleder mit ausgezeichneten Wasch-, Schweiß, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 35:

Ein Lederstück von 100 Gewichtsteilen eines auf übliche Weise chromgegerbten Rindsleders der Falzstärke 1.8 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 8,1 Teile Farbstoff 36 gegeben und 50 Minuten bei pH 7,6 und 40°C gefärbt. Durch portionsweise Zugabe von insgesamt 8,7 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 150 Teilen Wasser wurde durch portionsweise Zugabe von insgesamt 1,5 Teilen Ameisensäure innerhalb von 60 Minuten ein pH von 5,3 eingestellt.

Das derart gefärbte Leder wurde in einer frisch angesetzten Flotte aus 100 Teilen Wasser und 3 Teilen Hydrophobiermittel H5 20 Minuten vorgefettet. Anschließend wurden 5 Teil Polymergerbstoff G18 zugegeben und 40 Minuten lang gewalkt. Nach Zugabe von 3 Teilen Polymergerbstoff G16 wurden weitere 30 Minuten nachgegerbt. Danach wurden 2 Teile Polymergerbstoff G19 zugegeben und 30 Minuten lang ausgegerbt. Zur Nachgerbflotte wurden 5 Teile Hydrophobiermittel H1 und 0,5 Teile Hilfsmittel HM4 gegeben und 60 Minuten lange gefettet. Anschließend erfolgt die Zugabe von 100 Teilen Wasser. Nach einer Walkzeit von 10 Minuten bei 60°C wurde durch portionsweise Zugabe von 4 Teilen Ameisensäure innerhalb von 55 Minuten ein pH-Wert von 3,5 eingestellt. Danach wurde die Flotte abgelassen und in neu angesetzter Flotte aus 120 Teilen Wasser und 0,5 Teilen Ameisensäure 10 Minuten lang gewalkt. Nach Zugabe von 5 Teilen Chromgerbstoff G24 wurde 90 Minuten lang fxiert. Anschließend wurde zweimal mit jeweils 300 Teilen Wasser 10 Minuten bei 30°C gewaschen.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet.

Es wurde ein rein Polymer basiertes hydrophobiertes Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes, rein polymerbasiertes, hydrophobiertes Schuhoberleder herstellen.

### Schuhoberlederrezeptur 36:

Ein Lederstück von 100 Gewichtsteilen eines auf übliche Weise chromgegerbten Rindsleders der Falzstärke 1,8 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 5,7 Teile Farbstoff 35v gegeben und 50 Minuten bei pH 7,6 und 40°C gefärbt. Durch portionsweise Zugabe von insgesamt 6,5 Teilen Natriumcarbonat wurde zur Fixierung der pH-Wert der Flotte zwischen 9,2 - 9,6 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 150 Teilen Wasser wurde durch portionsweise Zugabe von insgesamt 1,5 Teilen Ameisensäure innerhalb von 60 Minuten ein pH von 5,3 eingestellt.

Das derart gefärbte Leder wurde in einer frisch angesetzten Flotte aus 100 Teilen Wasser und 2 Teilen Hydrophobiermittel H5 20 Minuten vorgefettet. Anschließend wurden 5 Teil Polymergerbstoff G18 zu gegeben und 40 Minuten lang gewalkt. Nach Zugabe von 3 Teilen Nachgerbstoff G1 wurden weitere 30 Minuten nachgegerbt. Danach wurden 2 Teile Vegetabilgerbstoff G22 zugegeben und 30 Minuten lang ausgegerbt. Zur Nachgerbflotte wurden 5 Teile Hydrophobiermittel H1 und 0,5 Teile Hilfsmittel HM4 gegeben und 60 Minuten lange gefettet. Anschließend erfolgt die Zugabe von 100 Teilen Wasser. Nach einer Walkzeit von 10 Minuten bei 60°C wurde durch portionsweise Zugabe von 4 Teilen Ameisensäure innerhalb von 55 Minuten ein pH-Wert von 3,5 eingestellt. Danach wurde die Flotte abgelassen und in neu angesetzter Flotte aus 120 Teilen Wasser und 0,5 Teilen Ameisensäure 10 Minuten lang gewalkt. Nach Zugabe von 5 Teilen Chromgerbstoff G24 wurde 90 Minuten lang fixiert. Anschließend wurde zweimal mit jeweils 300 Teilen Wasser 10 Minuten bei 30°C gewaschen.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet.

Es wurde ein hydrophobiertes Schuhoberleder mit ausgezeichneten Wasch-, Schweiß, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 37:

Ein Lederstück von 100 Gewichtsteilen eines auf übliche Weise chromgegerbtes Rindsleders der Falzstärke 1,8 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3 Teile Natriumbicarbonat zugegeben und ein Neutralisations-pH-Wert von 7,7 eingestellt. Zur Entsäuerungsflotte wurden 7,8 Teile Farbstoff 38o gegeben und 50 Minuten bei pH 7,6 und 40°C gefärbt. Durch portionsweise Zugabe von insgesamt 8,1 Teilen Natriumcarbonat wurde zur Fixierung der pH-Wert der Flotte zwischen 9,2 - 9,6 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 150 Teilen Wasser wurde durch portionsweise Zugabe von insgesamt 2 Teilen Ameisensäure innerhalb von 60 Minuten ein pH von 4,5 eingestellt.

Das derart gefärbte Leder wurde in einer frisch angesetzten Flotte aus 100 Teilen Wasser 1,5 Teilen Nachgerbstoff G14, 1,5 Teile Polymergerbstoff G16 undd 1,5 Teile Nachgerbstoff G19 40 Minuten lang gewalkt. Nach Zugabe von 2 Teilen Vegetabilgerbstoff G22 und 3 Teilen Nachgerbstoff G28 wurde 60 Minuten lang ausgegerbt. Zur Nachgerbflotte wurden 6 Teile Hydrophobiermittel H1 und 0,5 Teile Hilfsmittel HM4 gegeben und 90 Minuten lange gefettet. Anschließend erfolgt die Zugabe von 100 Teilen Wasser. Nach einer Walkzeit von 10 Minuten bei 60°C wurde durch portionsweise Zugabe von 4 Teilen Ameisensäure innerhalb von 50 Minuten ein pH-Wert von 3,5 eingestellt. Danach wurde die Flotte abgelassen und in neu angesetzter Flotte aus 120 Teilen Wasser und 0,5 Teilen Ameisensäure 5 Minuten lang gewalkt. Nach Zugabe von 5 Teilen Chromgerbstoff G24 wurde 90 Minuten lang fixiert. Anschließend wurde zweimal mit jeweils 300 Teilen Wasser 10 Minuten bei 30°C gewaschen.

Das so gefärbte, nachgegerbte und hydrophobierte Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet.

Es wurde ein hydrophobiertes Schuhoberleder mit ausgezeichneten Wasch-, Schweiß, Migrations- und Reibechtheiten erhalten. In analoger Weise kann man ein mit einem der Farbstoffe der Beispiel 1a bis 59k gefärbtes, hydrophobiertes Schuhoberleder herstellen.

### Schuhoberlederrezeptur 38:

Ein Lederstück von 100 Gewichtsteilen eines auf übliche Weise chromgegerbten Rindsleders der Falzstärke 2,0 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungsflotte wurden 9,2 Teile Farbstoff 40d gegeben und 40 Minuten bei pH 7,5 und 40°C gefärbt. Durch portionsweise Zugabe von insgesamt 9,3 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 3,5 Teilen Ameisensäure innerhalb von 60 Minuten ein pH von 3,8 eingestellt.

Das derart gefärbte Leder wurde in einer frisch angesetzten Flotte aus 80 Teilen Wasser und 3 Teilen Nachgerbstoff G26 60 Minuten lang bei 45°C gewalkt. Anschließend wurden 2 Teile Polymergerbstoff G19 zugegeben, nach einer Walkzeit von 15 Minuten erfolgte die Zugabe von 5 Teilen Polymergerbstoff G18. Nach weiteren 40 Minuten Walkzeit bei 45°C wurden 4 Teile Harzgerbstoff G28 und 4 Teile Harzgerbstoff G11 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 55°C gefettet. Anschließend wurde durch portionsweise Zugabe von 4 Teilen Ameisensäure wurde innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde-über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 39:

Ein Lederstück von 100 Gewichtsteilen eines auf übliche Weise chromgegerbten Rindsleders der Falzstärke 2,1 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben und ein Neutralisations-pH-Wert von 7,6 eingestellt. Zur Entsäuerungsflotte wurden 8 Teile Farbstoff 391 gegeben und 40 Minuten bei pH 7,5 und 40°C gefärbt. Durch portionsweise Zugabe von insgesamt 8,6 Teilen Natriumcarbonat wurde zur Fixierung der pH-Wert der Flotte zwischen 9,2 - 9,8 eingestellt und bei 40°C 60 Minuten lang gewalkt. Nach Flottenwechsel wurde zweimal mit jeweils 300 Teilen Wasser insgesamt 60 Minuten lang gewaschen. In einer Flotte aus 200 Teilen Wasser wurde durch portionsweise Zugabe von insgesamt 3,5 Teilen Ameisensäure innerhalb von 60 Minuten ein pH von 3,8 eingestellt.

Das derart gefärbte Leder wurde in einer frisch angesetzten Flotte aus 80 Teilen Wasser und 3,5 Teilen Nachgerbstoff G27 50 Minuten lang bei 45°C gewalkt. Anschließend wurden 2 Teile Polymergerbstoff G19 zugegeben, nach einer Walkzeit von 15 Minuten erfolgte die Zugabe von 5 Teilen Polymergerbstoff-G18. Nach weiteren 40 Minuten Walkzeit bei 45°C wurden 4 Teile Harzgerbstoff G28 und 4 Teile Harzgerbstoff G11 zugegeben und 60 Minuten bei 45°C nachgegerbt. Anschließend wurden 70 Teile Wasser zugegeben und 10 Minuten bei 60°C gewalkt. Zur Nachgerbflotte wurden 2,5 Teile Fettungsmittel F1 und 2,5 Teile Hydrophobiermittel H3 zugegeben und 60 Minuten bei 55°C gefettet. Anschließend wurde durch portionsweise Zugabe von 4 Teilen Ameisensäure wurde innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, bei 55°C 4 Minuten lang vakuumiert, bei Raumtemperatur hängegetrocknet, konditioniert, gestollt und bei 55°C 3 Minuten vakuumgetrocknet, mit 220 er Schleifpapier zu Nubuk geschliffen, entstaubt und Spannrahmen getrocknet.

Es wurde ein Nubuk direkt Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Nubuk direkt Schuhoberleder herstellen.

### Schuhoberlederrezeptur 40:

Ein Lederstück von 100 Gewichtsteilen eines auf übliche Weise chromgegerbten Rindsleders der Falzstärke 1,8 mm wurde in einer Flotte aus 300 Teilen Wasser 10 Minuten bei 30°C gewaschen und anschließend in einer aus 100 Teilen Wasser, 1,5 Teilen Gerbstoff G1 und 1 Teilen Hilfsmittel HM7 bestehenden Flotte 60 Minuten bei 40°C gewalkt. Anschließend gab man zu der Flotte 1,5 Teile Natriumformiat und walkte 30 min. bei 40°C. Danach wurden innerhalb von 25 Minuten portionsweise insgesamt 3 Teile Natriumbicarbonat zugegeben und ein Neutralisations-pH-Wert von 7,6 eingestellt. Zur Entsäuerungsflotte wurden 8,0 Teile Farbstoff 13ae gegeben und 45 Minuten bei pH 7,0 und 40°C gefärbt. Durch portionsweise Zugabe von insgesamt 7,5 Teilen Natriumcarbonat wurde zur Fixierung der pH-Wert der Flotte zwischen 9,2 - 9,5 eingestellt und bei 40°C 60 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 4 Teilen Ameisensäure innerhalb von 60 Minuten ein pH von 3,6 eingestellt.

Das derart gefärbte Leder wurde in einer frisch angesetzten Flotte aus 80 Teilen Wasser und 1 Teil Aldehydgerbstoff G13 und 3 Teilen Polymergerbstoff G16 60 Minuten bei 45°C gewalkt. Dann gab man 0,5 Teile Natriumbicarbonat zu, gab nach einer Walkzeit von 30 Minuten 5 Teile Polymergerbstoff G18 zu und gerbte weitere 30 Minuten bei 45°C nach. Anschließend fügte man zur Flotte 0,8 Teile Hilfmittel HM5, 3 Teile Polymergerbstoff G17 und 2 Teile Polymergerbstoff G19 und gerbte 60 Minuten bei 45°C aus. Anschließend wurden 70 Teile Wasser zugegeben und 10 Minuten bei 60°C gewalkt. Zur Nachgerbflotte wurden 2,5 Teile Fettungsmittel F6, 1,5 Teile Hydrophobiermittel H3 und 1,5 Teile Fettungsmittel F2 zugegeben und 60 Minuten bei 45°C gefettet. Anschließend wurde durch portionsweise Zugabe von 4 Teilen Ameisensäure innerhalb von 60 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, bei 60°C 2 Minuten vakuumiert, bei Raumtemperatur hängegetrocknet, konditioniert, gestollt und bei 60°C 2 Minuten vakuumgetrocknet.

Es wurde ein Schuhoberleder mit ausgezeichneten Wasch-, Schweiß-, Migrations- und Reibechtheiten erhalten. In analoger Weise kann man ein mit einem der Farbstoffe der Beispiel 1a bis 59k gefärbtes Schuhoberleder herstellen.

### Möbellederrezeptur 1:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 25 Minuten portionsweise insgesamt 3 Teile Natriumbicarbonat zugegeben und ein Neutralisations-pH-Wert von 7,8 eingestellt. Anschließend wurden 1,5 Teile HM2 zugegeben und 5 Minuten gewalkt. Zur Entsäuerungsflotte wurden 10,5 Teile Farbstoff 41 c gegeben und 30 Minuten bei pH 7,3 und 35°C gefärbt. Danach wurden 0,5 Teile Natriumbicarbonat zugegeben und 60 Minuten gewalkt. Durch portionsweise Zugabe von insgesamt 9,5 Teilen Natriumcarbonat wurde zur Fixierung der pH-Wert der Flotte zwischen 9,3 - 9,5 eingestellt und bei 35°C 60 Minuten lang gewalkt. Nach Flottenwechsel wurde zweimal mit jeweils 300 Teilen Wasser insgesamt 60 Minuten lang bei 40°C gewaschen. In einer Flotte aus 200 Teilen Wasser wurde durch portionsweise Zugabe von insgesamt 3 Teilen Ameisensäure innerhalb von 60 Minuten ein pH von 3,7 eingestellt.

Das derart gefärbte Leder wurde in einer frisch angesetzten Flotte aus 150 Teilen Wasser und 2 Teilen Nachgerbstoff G13 60 Minuten lang bei 45°C gewalkt. Anschlieβend wurden 2 Teile Polymergerbstoff G18 zugegeben. Nach einer Walkzeit von 60 Minuten erfolgte die Zugabe von 1,5 Teilen Natriumbicarbonat. Nach weiteren 20 Minuten Walkzeit bei 45°C wurden 2 Teile Fettungsmittel F1 und 0,2 Teile Hilfsmittel HM4 zugegeben und 20 Minuten vorgefettet. Zur Flotte wurden 5 Teile Nachgerbstoff G5, 3 Teile Vegetabilgerbstoff G22 und 2 Teile Harzgerbstoff G11 gegeben und 60 Minuten lang nachgegerbt. Zur Nachgerbflotte wurden 7 Teile Fettungsmittel F1 und 3 Teile Fettungsmittel F6 zugegeben und 60 Minuten bei 45°C gefettet. Anschließend wurde durch portionsweise Zugabe von 5 Teilen Ameisensäure innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 2:

Ein Lederstück von 100 Gewichtsteilen eines auf übliche Weise organisch gegerbten Rindsleders der Falzstärke 1,0 -1,1 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die Flotte hatte einen pH-Wert von 4,2 - 4,6. Zur Flotte wurden 8,7 Teile Farbstoff 42g zugegeben und 40 Minuten bei pH 5,5 und 35°C gefärbt. Durch portionsweise Zugabe von insgesamt 3 Teilen Natriumbicarbonat wurde innerhalb von 20 Minuten ein pH-Wert von 7,3 - 7,8 eingestellt. Zur Fixierung wurde der pH-Wert der Flotte durch portionsweise Zugabe von insgesamt 9 Teilen Natriumcarbonat zwischen 9,2 - 9,6 eingestellt und 60 Minuten lang bei 35°C gewalkt. Nach Flottenwechsel wurde zweimal mit mit einer Flotte aus jeweils 300 Teilen Wasser und 1,5 Teilen Hilfsmittel HM3 insgesamt 60 Minuten lang bei 40°C gewaschen. In einer Flotte aus 200 Teilen Wasser wurde durch portionsweise Zugabe von insgesamt 2 Teilen Ameisensäure innerhalb von 60 Minuten bei 40°C ein pH von 4.3-4.6 eingestellt.

Das derart gefärbte Leder wurde in einer frisch angesetzten Flotte aus 100 Teilen Wasser, 3 Teilen Polymergerbstoff G18 und 1,5 Teilen Fettungsmittel F6 30 Minuten bei 35°C nachgegerbt. Anschließend wurden 6 Teile Polymergerbstoff G18 und 10 Teile Nachgerbstoff G18 zugegeben und 60 Minuten bei 35°C gewalkt. Nach Zugabe von 1,5 Teilen Fettungsmittel F6 und einer Walkzeit von 30 Minuten wurden 6 Teile Polymergerbstoff G18 und 10 Teile Nachgerbstoff G8 zugegeben und 60 Minuten bei 35°C nachgegerbt. Zur Nachgerbflotte wurden 10 Teile Fettungsmittel F6 zugegeben und 60 Minuten bei 35°C gefettet. Zur Fixierung des Fettungsmittels wurde nach Zugabe von 100 Teile 45°C heißem Wasser und einer Walkzeit von 20 Minuten innerhalb von 50 Minuten durch Zugabe von Ameisensäure ein pH-Wert von 3.5 eingestellt. Anschließend wurde 15 Minuten lang mit 300 Teilen Wasser gewaschen.

Das so gefärbte, nachgegerbte und gefettete Leder wurde über Nacht über Bock gelagert, anschließend ausgereckt, naßgespannt, Spannrahmen getrocknet, konditioniert, gestollt, gemillt und gespannt.

Es wurde ein wetwhite Möbellederleder mit ausgezeichneten Wasch-, Schweiß-, Migrations- und Reibechtheiten erhalten. In analoger Weise kann man ein mit einem der Farbstoffe der Beispiel 1a bis 59k gefärbtes wetwhite Möbelleder herstellen.

### Möbellederrezeptur 3:

Ein Lederstück von 100 Gewichtsteilen eines auf übliche Weise organisch gegerbten Rindsleders der Falzstärke 1,0 -1,1 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die Flotte hatte einen pH-Wert von 4,4. Zur Flotte wurden 7,5 Teile Farbstoff 46e zugegeben und 45 Minuten bei pH 5,3 und 35°C gefärbt. Durch portionsweise Zugabe von insgesamt 3 Teilen Natriumbicarbonat wurde innerhalb von 20 Minuten ein pH-Wert von 7,3 - 7,8 eingestellt. Zur Fixierung wurde der pH-Wert der Flotte durch portionsweise Zugabe von insgesamt 8 Teilen Natriumcarbonat zwischen 9,5 -10,0 eingestellt und 60 Minuten lang bei 35°C gewalkt. Nach Flottenwechsel wurde dreimal mit einer Flotte aus jeweils 300 Teilen Wasser insgesamt 60 Minuten lang bei 40°C gewaschen. In einer Flotte aus 200 Teilen Wasser wurde durch portionsweise Zugabe von insgesamt 1,5 Teilen Ameisensäure innerhalb von 60 Minuten bei 40°C ein pH von 4,7-5,0 eingestellt.

Das derart gefärbte Leder wurde in einer frisch angesetzten Flotte aus 50 Teilen Wasser, 15 Teilen Hydrophobiermittel H5 und 15 Teilen Polymergerbstoff G18 90 Minuten bei 35°C nachgegerbt. Anschließend wurden 8 Teile Hydrophobiermittel H5 und 6 Teile Fettungsmittel F6 zugegeben und 150 Minuten bei 35°C gefettet. Danach wurden 100 Teile 45°C heißer Wasser zugegeben und 10 Minuten gewalkt. Anschließende wurde innerhalb von 40 Minuten durch Zugabe von 3 Teilen Ameisensäure ein pH-Wert von 3,5 eingestellt. Zum Schluß wurde kurz mit Wasser gespült.

Das so gefärbte, nachgegerbte und gefettete Leder wurde über Nacht über Bock gelagert, anschließend ausgereckt, naßgespannt, Spannrahmen getrocknet, konditioniert, gestollt, über Nacht gemillt, gestollt und gespannt.

Es wurde ein rein Polymer basiertes wetwhite Möbellederleder mit ausgezeichneten Wasch-, Schweiß-, Migrations- und Reibechtheiten erhalten. In analoger Weise kann man ein mit einem der Farbstoffe der Beispiel 1a bis 59k gefärbtes, rein polymerbasiertes wetwhite Möbelleder herstellen.

### Möbellederrezeptur 4:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 4 Teile Natriumbicarbonat zugegeben und ein Neutralisations-pH-Wert von 7,7 eingestellt. Anschließend wurden 1,5 Teile HM2 zugegeben und 5 Minuten gewalkt. Zur Entsäuerungsflotte wurden 9 Teile Farbstoff 43ag gegeben und 30 Minuten bei pH 7,4 und 35°C gefärbt. Danach wurden 0,5 Teile Natriumbicarbonat zugegeben und 60 Minuten bei pH 7,5 gewalkt. Durch portionsweise Zugabe von insgesamt 9,8 Teilen Natriumcarbonat wurde zur Fixierung der pH-Wert der Flotte zwischen 9,3 - 9,8 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch-portionsweise Zugabe von insgesamt 1,8 Teilen Ameisensäure innerhalb von 60 Minuten ein pH von 4,6 eingestellt.

Das derart gefärbte Leder wurde in einer frisch angesetzten Flotte aus 150 Teilen Wasser und 6 Teilen Nachgerbstoff G18 40 Minuten lang bei 45°C gewalkt. Der Flotten pH Wert betrug 5,0. Nach Zugabe von 0,8 Teilen Natriumbicarbonat und einer Walkzeit von 20 Minuten wurde ein Flotten pH Wert von 6,9 erreicht. Zur Nachgerbflotte wurden 2 Teile Fettungsmittel F1 und 0,2 Teile Hilfsmittel HM4 zugegeben und 20 Minuten bei 45°C vorgefettet. Zur Flotte wurden 3 Teile Nachgerbstoff G5, 3 Teile Vegetabilgerbstoff G22 und 2 Teile Harzgerbstoff G11 gegeben und 60 Minuten lang nachgegerbt. Zur Nachgerbflotte wurden 7 Teile Fettungsmittel F1 und 3 Teile Fettungsmittel F6 zugegeben und 60 Minuten bei 45°C gefettet. Anschließend wurde durch portionsweise Zugabe von 5 Teilen Ameisensäure wurde innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 5:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 4 Teile Natriumbicarbonat zugegeben und ein Neutralisations-pH-Wert von 7,7 eingestellt. Anschließend wurden 1,5 Teile HM2 zugegeben und 5 Minuten gewalkt. Zur Entsäuerungsflotte wurden 8 Teile Farbstoff 47ac gegeben und 30 Minuten bei pH 7,5 und 35°C gefärbt. Danach wurden 0,5 Teile Natriumbicarbonat zugegeben und 60 Minuten bei pH 7,6 gewalkt. Durch portionsweise Zugabe von insgesamt 9 Teilen Natriumcarbonat wurde zur Fixierung der pH-Wert der Flotte zwischen 9,5 - 9,9 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 3,0 Teilen Ameisensäure innerhalb von 60 Minuten ein pH von 3,7 eingestellt.

Das derart gefärbte Leder wurde in einer frisch angesetzten Flotte aus 150 Teilen Wasser und 1 Teile Nachgerbstoff G13 60 Minuten lang bei 45°C gewalkt. Anschließend wurden 6 Teile Polymergerbstoff G18 zugegeben und 40 Minuten bei 45°C nachgegerbt. Der Flotten pH Wert betrug 4,2. Nach Zugabe von 1,5 Teilen Natriumbicarbonat und einer Walkzeit von 20 Minuten wurde ein Flotten pH Wert von 6,2 erreicht. Zur Nachgerbflotte wurden 2 Teile Fettungsmittel F1 und 0,2 Teile Hilfsmittel HM4 zugegeben und 20 Minuten bei 45°C vorgefettet. Zur Flotte wurden 3 Teile Nachgerbstoff G5, 3 Teile Vegetabilgerbstoff G22 und 2 Teile Harzgerbstoff G11 gegeben und 60 Minuten lang nachgegerbt. Zur Nachgerbflotte wurden 7 Teile Fettungsmittel F1 und 3 Teile Fettungsmittel F6 zugegeben und 60 Minuten bei 45°C gefettet. Der Flotten pH-Wert betrug 5,6. Anschließend wurde durch portionsweise Zugabe von 5 Teilen Ameisensäure wurde innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 6:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 4 Teile Natriumbicarbonat zugegeben und ein Neutralisations-pH-Wert von 7,7 eingestellt. Anschließend wurden 1,5 Teile HM2 zugegeben und 5 Minuten gewalkt. Zur Entsäuerungsflotte wurden 7 Teile Farbstoff 49b gegeben und 30 Minuten bei pH 7,5 und 35°C gefärbt. Danach wurden 0,5 Teile Natriumbicarbonat zugegeben und 60 Minuten bei pH 7,6 gewalkt. Durch portionsweise Zugabe von insgesamt 8 Teilen Natriumcarbonat wurde zur Fixierung der pH-Wert der Flotte zwischen 9,5 - 9,9 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 3,0 Teilen Ameisensäure innerhalb von 60 Minuten ein pH von 3,7 eingestellt.

Das derart gefärbte Leder wurde in einer frisch angesetzten Flotte aus 150 Teilen Wasser und 1 Teile Nachgerbstoff G13 40 Minuten lang bei 45°C gewalkt. Anschließend wurden 6 Teile Polymergerbstoff G18 zugegeben und 40 Minuten bei 45°C nachgegerbt. Der Flotten pH Wert betrug 4,2. Danach wurde 1 Teil Natriumbicarbonat zugegeben und 20 Minuten gewalkt. Zur Nachgerbflotte wurden 2 Teile Fettungsmittel F1 gegeben und 20 Minuten bei 45°C vorgefettet. Zur Flotte wurden 10 Teile Nachgerbstoff G3 gegeben und 90 Minuten gewalkt. Anschließend wurde mit 6 Teilen Fettungsmittel F1 und 2 Teilen Fettungsmittel F6 60 Minuten bei 45°C gefettet. Duch portionsweise Zugabe von 5 Teilen Ameisensäure wurde innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 7:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 3 Teile Natriumbicarbonat zugegeben und ein Neutralisations-pH-Wert von 7,6 eingestellt. Zur Entsäuerungsflotte wurden 5,5 Teile Farbstoff 52e gegeben und 40 Minuten bei pH 7,5 und 35°C gefärbt. Durch portionsweise Zugabe von insgesamt 7 Teilen Natriumcarbonat wurde zur Fixierung der pH-Wert der Flotte zwischen 9,2 - 9,6 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 150 Teilen Wasser wurde durch portionsweise Zugabe von insgesamt 2,0 Teilen Ameisensäure innerhalb von 60 Minuten ein pH von 5,2 eingestellt.

Das derart gefärbte Leder wurde in einer frisch angesetzten Flotte aus 100 Teilen Wasser, 3 Teilen Polymergerbstoff G18 und 1,5 Teilen Polymergerbstoff G19 20 Minuten lang bei 45°C gewalkt. Zur Nachgerbflotte wurden 1 Teil Fettungsmittel f6 und 0,5 Teile Fettungsmittel F2 gegeben und 20 Minuten bei 45°C vorgefettet. Zur Flotte wurden 3 Teile Polymergerbstoff G18, 6 Teile Nachgerbstoff G8 und 2 Teile Vegetabilgerbstoff G22 gegeben und 60 Minuten nachgegerbt. Anschließend wurde mit 6 Teilen Fettungsmittel F6, 2 Teilen Fettungsmittel F2 und 1 Teil Fettungsmittel F3 60 Minuten bei 45°C gefettet. Nach Zugabe von 100 Teile Wasser und einer Walkszeit von 10 Minuten wurde durch portionsweise Zugabe von 4 Teilen Ameisensäure innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 8:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 25 Minuten portionsweise insgesamt 3 Teile Natriumbicarbonat zugegeben und ein Neutralisations-pH-Wert von 7,6 eingestellt. Zur Entsäuerungsflotte wurden 6 Teile Farbstoff 53b gegeben und 50 Minuten bei pH 7,5 und 35°C gefärbt. Durch portionsweise Zugabe von insgesamt 7 Teilen festes Natriumcarbonat wurde zur Fixierung der pH-Wert der Flotte zwischen 9,5 - 10,0 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 150 Teilen Wasser und 2,2 Teilen Ameisensäure wurde innerhalb von 60 Minuten ein pH von 4,9 eingestellt.

Das derart gefärbte Leder wurde in einer frisch angesetzten Flotte aus 100 Teilen Wasser und 2 Teilen Nachgerbstoff G14 30 Minuten gewalkt. Danach wurden 5 Teilen Polymergerbstoff G18 zugegeben und 40 Minuten lang bei 45°C nachgegerbt. Zur Nachgerbflotte wurden 2 Teile Fettungsmittel F6 und 1 Teil Fettungsmittel F2 gegeben und 20 Minuten bei 45°C vorgefettet. Zur Flotte wurden 6 Teile Nachgerbstoff-G2, 2 Teile Vegetabilgerbstoff G22 und 2 Teile Harzgerbstoff G28 gegeben und 60 Minuten nachgegerbt. Anschließend wurde mit 8 Teilen Fettungsmittel F6, 2 Teilen Fettungsmittel F2 und 1 Teil Fettungsmittel F3 60 Minuten bei 45°C gefettet. Nach Zugabe von 100 Teile Wasser und einer Walkszeit von 10 Minuten wurde durch portionsweise Zugabe von 4 Teilen Ameisensäure innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Möbellederrezeptur 9:

Ein Lederstück von 100 Gewichtsteilen eines auf übliche Weise chromgegerbten Rindsleders der Falzstärke 1,1 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 25 Minuten portionsweise insgesamt 3 Teile Natriumbicarbonat zugegeben und ein Neutralisations-pH-Wert von 7,8 eingestellt. Zur Entsäuerungflotte wurden 5,7 Teile Farbstoff 58b gegeben und 60 Minuten bei pH 7,7 und 35°C gefärbt. Durch portionsweise Zugabe von insgesamt 9 Teilen Natriumcarbonat wurde zur Fixierung der pH-Wert der Flotte zwischen 9,5 - 10,0 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 150 Teilen Wasser wurde durch portionsweise Zugabe von insgesamt 2,3 Teilen Ameisensäure innerhalb von 60 Minuten ein pH von 5,0 eingestellt.

Das derart gefärbte Leder wurde in einer frisch angesetzten Flotte aus 100 Teilen Wasser und 2 Teilen Nachgerbstoff G14 30 Minuten gewalkt. Danach wurden 6 Teilen Polymergerbstoff G18 zugegeben und 40 Minuten lang bei 45°C nachgegerbt. Zur Nachgerbflotte wurden 2 Teile Fettungsmittel F1 gegeben und 20 Minuten bei 45°C vorgefettet. Zur Flotte wurden 4 Teile Nachgerbstoff G3 und 2 Teile Vegetabilgerbstoff G22 gegeben und 60 Minuten gewalkt. Nach Zugabe von 2 Teilen Polymergerbstoff G19 wurden noch weitere 20 Minuten nachgegerbt. Anschließend wurden zur Nachgerbflotte 6 Teilen Fettungsmittel F1, 4 Teile Fettungsmittel F6 und 1 Teil Fettungsmittel F3 gegeben und 60 Minuten bei 45°C gefettet. Nach Zugabe von 100 Teile Wasser und einer Walkszeit von 10 Minuten wurde durch portionsweise Zugabe von 4 Teilen Ameisensäure innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Möbelleder mit ausgezeichneten Wasch-, Schweiß-, Migrations- und Reibechtheiten erhalten. In analoger Weise kann man ein mit einem der Farbstoffe der Beispiel 1a bis 59k gefärbtes Möbelleder herstellen.

### Autolederrezeptur 1:

Ein Lederstück von 100 Gewichtsteilen eines auf übliche Weise chromgegerbten Rindsleders der Falzstärke 1,2-1,3 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 25 Minuten portionsweise insgesamt 3 Teile Natriumbicarbonat zugegeben und ein Neutralisations-pH-Wert von 7,8 eingestellt. Anschließend wurden 1,5 Teile HM2 zugegeben und 5 Minuten gewalkt. Zur Entsäuerungsflotte wurden 4,7 Teile Farbstoff 59d gegeben und 30 Minuten bei pH 7,3 und 35°C gefärbt. Danach wurden 0,5 Teile Natriumbicarbonat zugegeben und 60 Minuten bei pH 7,4 gewalkt. Durch portionsweise Zugabe von insgesamt 5 Teilen Natriumcarbonat wurde zur Fixierung der pH-Wert der Flotte zwischen 9,4 - 9,8 eingestellt und bei 35°C 80 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 3 Teilen Ameisensäure innerhalb von 60 Minuten ein pH von 3,7 eingestellt.

Das derart gefärbte Leder wurde in einer frisch angesetzten Flotte aus 150 Teilen Wasser und 1,5 Teilen Nachgerbstoff G13 60 Minuten lang bei 45°C gewalkt. Anschließend wurden 8 Teile Polymergerbstoff G18 zugegeben und 40 Minuten bei 45°C nachgegerbt. Nach Zugabe von 1,5 Teilen Natriumbicarbonat und einer Walkzeit von 20 Minuten wurde mit 2 Teile Fettungsmittel F1 und 0,2 Teile Hilfsmittel HM4 20 Minuten lang bei 45°C vorgefettet. Zur Flotte wurden 4 Teile Nachgerbstoff G5,4 Teile Vegetabilgerbstoff G21 und 2 Teile Harzgerbstoff G11 gegeben und 60 Minuten lang nachgegerbt. Zur Nachgerbflotte wurden 7 Teile Fettungsmittel F1 und 3 Teile Fettungsmittel F6 zugegeben und 60 Minuten bei 45°C gefettet. Anschließend wurde durch portionsweise Zugabe von 5 Teilen Ameisensäure wurde innerhalb von 45 Minuten ein pH-Wert von 3,5 eingestellt. Danach wurde die Flotte abgelassen und das Leder kurz kalt gespült.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Autoleder mit ausgezeichneten Wasch-, Schweiß-, Migrations- und Reibechtheiten erhalten. In analoger Weise kann man ein mit einem der Farbstoffe der Beispiel 1a bis 59k gefärbtes Autoleder herstellen.

### Autolederrezeptur 2:

Ein Lederstück von 100 Gewichtsteilen eines auf übliche Weise organisch gegerbten Rindsleders der Falzstärke 1,1 - 1.2 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die Flotte hatte einen pH-Wert von 4,4. Zur Flotte wurden 7,2 Teile Farbstoff 56 zugegeben und 60 Minuten bei pH 4,5 und 35°C gefärbt. Durch portionsweise Zugabe von insgesamt 3 Teilen Natriumbicarbonat wurde innerhalb von 20 Minuten ein pH-Wert von 7,1 - 7,6 eingestellt. Zur Fixierung wurde der pH-Wert der Flotte durch portionsweise Zugabe von insgesamt 8 Teilen Natriumcarbonat zwischen 9,6 - 9,7 eingestellt und 90 Minuten lang bei 35°C gewalkt. Nach Flottenwechsel wurde dreimal mit jeweils 300 Teilen Wasser insgesamt 60 Minuten lang bei 40°C gewaschen. In einer Flotte aus 300 Teilen Wasser wurde durch portionsweise Zugabe von insgesamt 2 Teilen Ameisensäure innerhalb von 60 Minuten bei 40°C ein pH von 4.2 eingestellt.

Das derart gefärbte Leder wurde in einer frisch angesetzten Flotte aus 100 Teilen Wasser und 5 Teilen Polymergerbstoff G1810 Minuten bei 35°C gewalkt. Anschließend wurden 1 Teil Fettungsmittel F6 und 0,5 Teile Fettungsmittel F2 zugegeben und 20 Minuten bei 35°C vorgefettet. Nach Zugabe von 5 Teilen Polymergerbstoff G18 und 10 Teilen Nachgerbstoff G8 wurde 60 Minuten nachgegerbt. Zur Nachgerbflotte wurden 1 Teil Fettungsmittel F6 und 0,5 Teile Fettungsmittel F2 zugegeben und 30 Minuten bei 35°C gefettet. Anschließend wurde mit 5 Teilen Polymergerbstoff G18 und 10 Teilen Nachgerbstoff G8 90 Minuten ausgegerbt. Nach Zugabe von 8 Teilen Fettungsmittel F6 und 2 Teilen Fettungsmittel F2 wurde 60 Minuten bei 35°C gefettet. Zur Fixierung wurde nach Zugabe von 100 Teile 45°C heißem Wasser und einer Walkzeit von 20 Minuten innerhalb von 60 Minuten durch Zugabe von 3 Teilen Ameisensäure ein pH-Wert von 3.5 eingestellt. Anschließend wurde das Leder 15 Minuten mit 300 Teilen Wasser gewaschen.

Das so gefärbte, nachgegerbte und gefettete Leder wurde über Nacht über Bock gelagert, anschließend ausgereckt, Spannrahmen getrocknet, konditioniert, gestollt, gemillt und Spannrahmen getrocknet.

Es wurde ein wetwhite Autoleder mit ausgezeichneten Wasch-, Schweiß-, Migrations- und Reibechtheiten erhalten. In analoger Weise kann man ein mit einem der Farbstoffe der Beispiel 1a bis 59k gefärbtes wetwhite Autoleder herstellen.

### Autolederrezeptur 3:

Ein Lederstück von 100 Gewichtsteilen eines auf übliche Weise organisch gegerbten Rindsleders der Falzstärke 1,1 - 1.2 mm wurde in einer Flotte aus 300 Teilen Wasser 15 Minuten bei 30°C gewaschen und anschließend in einer aus 100 Teilen Wasser und 1,5 Teilen Natriumformiat bestehenden Flotte 10 Minuten bei 35°C gewalkt. Die Flotte hatte einen pH-Wert von 4,4. Zur Flotte wurden 3,5 Teile Farbstoff 54 zugegeben und 40 Minuten bei pH 4,5 und 35°C gefärbt. Durch portionsweise Zugabe von insgesamt 3 Teilen Natriumbicarbonat wurde innerhalb von 20 Minuten ein pH-Wert von 7,6 eingestellt. Zur Fixierung wurde der pH-Wert der Flotte durch portionsweise Zugabe von insgesamt 5 Teilen Natriumcarbonat zwischen 9,6 - 9,7 eingestellt und 90 Minuten lang bei 35°C gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 1,5 Teilen Ameisensäure innerhalb von 60 Minuten bei 40°C ein pH von 5,0 eingestellt.

Das derart gefärbte Leder wurde in einer frisch angesetzten Flotte aus 50 Teilen Wasser, 15 Teilen Hydrophobiermittel H5 und 15 Teilen Polymergerbstoff G18 90 Minuten bei 35°C nachgegerbt. Anschließend wurden zur Nachgerbflotte 4 Teile Hydrophobiermittel H5, 6 Teile Fettungsmittel F6 und 4 Teile Fettungsmittel F2 gegeben und 150 Minuten bei 35°C gefettet. Zur Fixierung wurde nach Zugabe von 100 Teile 45°C heißem Wasser und einer Walkzeit von 10 Minuten innerhalb von 60 Minuten durch portionsweise Zugabe von 4 Teilen Ameisensäure ein pH-Wert von 3,5 eingestellt. Anschließend wurde das Leder 15 Minuten mit 300 Teilen Wasser gewaschen.

Das so gefärbte, nachgegerbte und gefettete Leder wurde über Nacht über Bock gelagert, anschließend ausgereckt, Spannrahmen getrocknet, konditioniert, gestollt uüber Nacht gemillt, gestollt und Spannrahmen getrocknet.

Es wurde ein rein Polymer basiertes wetwhite Autoleder mit ausgezeichneten Wasch-, Schweiß-, Migrations- und Reibechtheiten erhalten. In analoger Weise kann man ein mit einem der Farbstoffe der Beispiel 1a bis 59k gefärbtes wetwhite Autoleder herstellen.

### Autolederrezeptur 4:

Ein Lederstück von 100 Gewichtstellen eines auf übliche Weise chromgegerbten Rindsleders der Falzstärke 1,1-1,2 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 3,5 Teile Natriumbicarbonat zugegeben und ein Neutralisations-pH-Wert von 7,6 eingestellt. Zur Entsäuerungsflotte wurden 5,2 Teile Farbstoff 51 gegeben und 30 Minuten bei pH 7,5 und 35°C gefärbt. Danach wurden 0,5 Teile Natriumbicarbonat zugegeben und 60 Minuten bei pH 7,6 gewalkt. Durch portionsweise Zugabe von insgesamt 7 Teilen Natriumcarbonat wurde zur Fixierung der pH-Wert der Flotte zwischen 9,3 - 9,9 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 3,5 Teilen Ameisensäure innerhalb von 60 Minuten ein pH von 3,5 eingestellt.

Das derart gefärbte Leder wurde in einer frisch angesetzten Flotte aus 150 Teilen Wasser und 3 Teilen Nachgerbstoff G12 10 Minuten lang bei 45°C gewalkt. Nach Zugabe von 1,5 Teilen Fettungsmittel F1 wurde 50 Minuten lang bei 45°C vorgefettet. Anschließend wurden 0,5 Teile Natriumbicarbonat zugegeben und 30 Minuten gewalkt. Zur Flotte wurden 5 Teile Polymergerbstoff G18 und 1,5 Teile Fettungsmittel F1 gegeben und 40 Minuten lang gewalkt. Zur Nachgerbflotte wurden 1,5 Teile Fettungsmittel F1 und 1,5 Teile Fettungsmittel F2 gegeben und 20 Minuten bei 45°C gefettet. Danach erfolgte die Zugabe von 8 Teilen Nachgerbstoff G6, 8 Teilen Nachgerbstoff G8 und 2 Teilen Polymergerbstoff G19. Nach einer Walkzeit von weiteren 60 Minuten wurden 3 Teile Fettungsmittel F1, 1.5 Teile Fettungsmittel F6 und 1,5 Teile Fettungsmittel F2 zugegeben und 90 Minuten bei 45°C gefettet. Anschließend wurde durch portionsweise Zugabe von 3,5 Teilen Ameisensäure wurde innerhalb von 50 Minuten ein pH-Wert von 3,5 eingestellt. Danach wurde die Flotte abgelassen und das Leder mit 300 Teilen Wasser 15 Minuten lang gewaschen.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Autoleder mit ausgezeichneten Wasch-, Schweiß-, Migrations- und Reibechtheiten erhalten. In analoger Weise kann man ein mit einem der Farbstoffe der Beispiel 1 a bis 59k gefärbtes Autoleder herstellen.

### Autolederrezeptur 5:

Ein Lederstück von 100 Gewichtsteilen eines auf übliche Weise chromgegerbten Rindsleders der Falzstärke 1,1-1,2 mm wurde in einer Flotte aus 300 Teilen Wasser 10 Minuten bei 30°C gewaschen und anschließend in einer aus 100 Teilen Wasser und 1,5 Teilen Natriumformiat bestehenden Flotte 5 Minuten bei 35°C gewalkt, danach wurden innerhalb von 30 Minuten portionsweise insgesamt 3,5 Teile Natriumbicarbonat zugegeben und ein Neutralisations-pH-Wert von 7,5 eingestellt. Zur Entsäuerungsflotte wurden 4,7 Teile Farbstoff 48 gegeben und 30 Minuten bei pH 7,5 und 35°C gefärbt. Danach wurden 0,5 Teile Natriumbicarbonat zugegeben und 60 Minuten bei pH 7,6 gewalkt. Durch portionsweise Zugabe von insgesamt 6 Teilen festes Natriumcarbonat wurde zur Fixierung der pH-Wert der Flotte zwischen 9,3 - 9,9 eingestellt und bei 35°C 60 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 1,5 Teilen Ameisensäure innerhalb von 60 Minuten ein pH von 5,5 eingestellt.

Das derart gefärbte Leder wurde in einer frisch angesetzten Flotte aus 120 Teilen Wasser und 6 Teilen Polymergerbstoff G18 5 Minuten lang bei 45°C gewalkt. Anschließend wurden 2 Teile Polymergerbstoff G19 zugesetzt. Nach einer Walkzeit von weiteren 5 Minuten wurden 1,5 Teilen Fettungsmittel F1 zugegeben und 30 Minuten lang bei 45°C gewalkt. Anschließend wurden 1,5 Teile Fettungsmittel F1 und 1 Teil Fettungsmittel F2 zugegeben und weitere 20 Minuten vorgefettet. Zur Flotte wurden 4 Teile Polymergerbstoff G18 gegeben und 20 Minuten lang gewalkt. Danach erfolgte die Zugabe von 8 Teilen Nachgerbstoff G6 und 8 Teilen Nachgerbstoff G8. Nach einer Walkzeit von weiteren 40 Minuten wurde 1 Teil Polymergerbstoff G19 zugesetzt und 20 Minuten lang ausgegerbt. Zur Nachgerbflotte wurden 6 Teile Fettungsmittel F1 und 2 Teile Fettungsmittel F2 gegeben und 90 Minuten bei 45°C gefettet. Anschließend wurde durch portionsweise Zugabe von 3,5 Teilen Ameisensäure wurde innerhalb von 45 Minuten ein pH-Wert von 3,5 eingestellt. Danach wurde die Flotte abgelassen und das Leder mit 300 Teilen Wasser 15 Minuten lang gewaschen.

Das so gefärbte, nachgegerbte und gefettete Leder wurde über Nacht auf Bock gelagert, anschließend ausgereckt, naßgespannt und Spannrahmen getrocknet, konditioniert, gestollt und gemillt.

Es wurde ein Autoleder mit ausgezeichneten Wasch-, Schweiß-, Migrations- und Reibechtheiten erhalten. In analoger Weise kann man ein mit einem der Farbstoffe der Beispiel 1a bis 59k gefärbtes Autoleder herstellen.

### Bekleidungslederrezeptur 1:

Ein Lederstück von 100 Gewichtsteilen eines auf übliche Weise chromgegerbten Schafsleders der Falzstärke 0,7 mm wurde in einer Flotte aus 300 Teilen Wasser 10 Minuten bei 35°C gewaschen und anschließend in einer aus 150 Teilen Wasser und 1,5 Teilen Natriumformiat bestehenden Flotte 5 Minuten bei 40°C gewalkt, danach wurden innerhalb von 20 Minuten portionsweise insgesamt 3 Teile Natriumbicarbonat zugegeben. Anschließend wurden 3 Teile Hilfsmittel HM4 zugeben und 10 Minuten gewalkt. Der pH der Flotte betrug 7,7. Zur Entsäuerungsflotte wurden 9 Teile Farbstoff 44 gegeben und 40 Minuten bei pH 7,4 und 40°C gefärbt. Durch portionsweise Zugabe von insgesamt 10 Teilen Natriumcarbonat wurde zur Fixierung der pH-Wert der Flotte zwischen 9,6 - 9,8 eingestellt und bei 40°C 60 Minuten lang gewalkt. Nach Flottenwechsel wurde dreimal mit jeweils 300 Teilen Wasser insgesamt 60 Minuten lang bei 40°C gewaschen. In einer Flotte aus 150 Teilen Wasser wurde durch portionsweise Zugabe von insgesamt 4 Teilen Ameisensäure innerhalb von 55 Minuten ein pH von 3,6 eingestellt.

Das derart gefärbte Leder wurde in einer frisch angesetzten Flotte aus 150 Teilen Wasser und 2 Teilen Nachgerbstoff G14 40 Minuten lang bei 45°C gewalkt. Anschließend wurden 2 Teile Natriumformiat zugesetzt. Nach einer Walkzeit von weiteren 20 Minuten wurden 2 Teile Natriumbicarbonat zugegeben und 20 Minuten lang bei 45°C gewalkt. Der pH der Flotte betrug 5,2. Zur Flotte wurden 8 Teile Nachgerbstoff G3 und 2 Teil Nachgerbstoff G11 gegeben und 40 Minuten lang gewalkt. Danach erfolgt die Zugabe von 6 Teile Fettungsmittel F1, 4 Teile Fettungsmittel F3 und 1 Teil Hydrophobiermittel H7. Nach einer Walkzeit von 20 Minuten wurden 4 Teile Polymergerbstoff G10 zugesetzt und 20 Minuten gewalkt. Anschließend erfolgte die Zugabe von 6 Teilen Fettungsmittel F1, 4 Teilen Fettungsmittel F3 und 1 Teil Hydrophobiermittel H7. Nach einer Fettungszeit von weiteren 40 Minuten wurde durch portionsweise Zugabe von 5 Teilen Ameisensäure innerhalb von 45 Minuten ein pH-Wert von 3,5 eingestellt. Danach wurde die Flotte abgelassen und das Leder mit 300 Teilen Wasser 15 Minuten lang gewaschen.

Das so gefärbte, nachgegerbte und gefettete Leder wurde über Nacht auf Bock gelagert, anschließend ausgereckt, hängegetrocknet, konditioniert, gestollt, gemillt und Spannrahmen getrocknet.

Es wurde ein Bekleidungsleder mit ausgezeichneten Wasch-, Schweiß-, Migrations- und Reibechtheiten erhalten. In analoger Weise kann man ein mit einem der Farbstoffe der Beispiel 1a bis 59k gefärbtes Bekleidungsleder herstellen.

### Bekleidungslederrezeptur 2:

Ein Lederstück von 100 Gewichtsteilen eines auf übliche Weise chromgegerbten Rindsleders der Falzstärke 0,8 -0,9 mm wurde in einer Flotte aus 200 Teilen Wasser 10 Minuten bei 35°C gewaschen und anschließend in einer aus 100 Teilen Wasser und 1,5 Teilen Natriumformiat bestehenden Flotte 5 Minuten bei 40°C gewalkt, danach wurden innerhalb von 25 Minuten portionsweise insgesamt 3,2 Teile Natriumbicarbonat zugegeben und ein Neutralisations-pH-Wert von 7,6 eingestellt. Zur Entsäuerungflotte wurden 8 Teile Mischfarbstoff 12hu gegeben und 40 Minuten bei pH 7,5 und 40°C gefärbt. Durch portionsweise Zugabe von insgesamt 8,7 Teilen Natriumcarbonat wurde zur Fixierung der pH-Wert der Flotte zwischen 9,6 - 9,8 eingestellt und bei 40°C 90 Minuten lang gewalkt. Nach Flottenwechsel wurde dreimal mit jeweils 300 Teilen Wasser insgesamt 60 Minuten lang gewaschen. In einer Flotte aus 200 Teilen Wasser wurde durch portionsweise Zugabe von insgesamt 5 Teilen Ameisensäure innerhalb von 60 Minuten ein pH von 3,3 eingestellt.

Das derart gefärbte Leder wurde in einer frisch angesetzten Flotte aus 100 Teilen Wasser und 3 Teilen Nachgerbstoff G12 10 Minuten lang bei 30°C gewalkt. Nach Zugabe von 4 Teilen Chromgerbstoff G24 und 1,5 Teilen Hilfsmittel HM6 wurde 50 Minuten bei 30°C nachchromiert. Anschließend wurde 1 Teile Natriumformiat zugegeben und 90 Minuten gewalkt. Nach Zugabe von 100 Teilen Wasser wurde über Nacht nachchromiert. Anschließend wurde die Flotte abgelassen und mit 300 Teilen Wasser 10 Minuten lang bei 45°C gewaschen. In einer frisch angesetzten Flotte aus 100 Teilen Wasser, 1,5 Teilen Hydrophobiermittel H5 wurde 20 Minuten lang bei 45°C gewalkt. Anschließend wurden 5 Teile Polymergerbstoff G18 zugegeben, nach einer Walkzeit von 5 Minuten erfolgte die Zugabe von 2 Teilen Nachgerbstoff G5. Nach weiteren 30 Minuten Nachgerbzeit wurden 2 Teile Polymergerbstoff G19 zugegeben, 10 Minuten gewalkt und anschließend 5 Teile Nachgerbstoff G5 zugeben. Nach weiteren 60 Minuten Nachgerbzeit wurden 4 Teile Hydrophobiermittel H8, 6 Teile Hydrophobiermittel H2, 7 Teile Hydrophobiermittel H7 und 0,8 Teile Hilfsmittel HM4 zugegeben und 60 Minuten bei 45°C gefettet. Anschließend wurden 100 Teile Wasser zugegeben und 10 Minuten bei 60°C gewalkt. Dann wurde durch portionsweise Zugabe von 4 Teilen Ameisensäure innerhalb von 45 Minuten ein pH-Wert von 3,5 eingestellt. Danach wurde die Flotte abgelassen und und in neu angesetzter Flotte aus 300 Teilen Wasser und 0,15 Teilen Ameisensäure 15 Minuten lang gewaschen. In neu angesetzte Flotte aus 150 Teilen Wasser, 2 Teilen Hydrophobiermittel H7 und 0,2 Teilen Hilfsmittel HM4 wurde 20 Minuten bei 30°C gewalkt. Nach Zugabe von 5 Teilen des Mineralgerbstoffs G30 wurde 90 Minuten lang fixiert. Zum Schluß wurde einmal mit einer Flotte aus 300 Teilen Wasser und 0,2 Teilen Ameisensäure und einmal mit einer Flotte aus 300 Teilen Wasser und 0,1 Teilen Ameisensäure jeweils 10 Minuten bei 30°C gewaschen.

Das so gefärbte, nachgegerbte und hydrophobierte Leder wurde über Nacht auf Bock gelagert, anschließend ausgereckt, naßgespannt und Spannrahmen getrocknet, konditioniert, gestollt, gemillt und Spannrahmen getrocknet.

Es wurde ein hydrophobiertes Motorrad-Bekleidungsleder mit ausgezeichneten Wasch, Schweiß-, Migrations- und Reibechtheiten erhalten. In analoger Weise kann man ein mit einem der Farbstoffe der Beispiel 1a bis 59k gefärbtes Bekleidungsleder für Motoradbekleidung herstellen.

### Handschuhlederrezeptur 1:

Ein Lederstück von 100 Gewichtsteilen eines auf übliche Weise chromgegerbten Ziegenleders der Falzstärke 0,5-0,7 mm wurde in einer Flotte aus 300 Teilen Wasser 10 Minuten bei 30°C gewaschen und anschließend in einer aus 120 Teilen Wasser und 1,5 Teilen Natriumformiat bestehenden Flotte 5 Minuten bei 35°C gewalkt, danach wurden innerhalb von 30 Minuten portionsweise insgesamt 3,1 Teile Natriumbicarbonat zugegeben. Anschließend wurden 3 Teile Hilfsmittel HM2 zugeben und 5 Minuten gewalkt. Der pH der Flotte betrug 7,8. Zur Entsäuerungsflotte wurden 10 Teile Mischfarbstoff 13hi gegeben und 40 Minuten bei pH 7,4 und 35°C gefärbt. Durch portionsweise Zugabe von insgesamt 9 Teilen Natriumcarbonat wurde zur Fixierung der pH-Wert der Flotte zwischen 9,6 - 9,8 eingestellt und bei 35°C 90 Minuten lang gewalkt. Nach Flottenwechsel wurde zweimal mit einer Flotte aus jeweils 300 Teilen Wasser und 1,5 Teilen Hilfsmittel HM3 insgesamt 50 Minuten lang bei 40°C gewaschen. In einer Flotte aus 200 Teilen Wasser wurde durch portionsweise Zugabe von insgesamt 3 Teilen Ameisensäure innerhalb von 60 Minuten ein pH von 3,4 eingestellt.

Das derart gefärbte Leder wurde in einer frisch angesetzten Flotte aus 150 Teilen Wasser und 1,5 Teilen Nachgerbstoff G13 60 Minuten lang bei 40°C gewalkt. Anschließend wurden 1,5 Teile Natriumformiat zugesetzt. Nach einer Walkzeit von weiteren 20 Minuten wurde 1 Teil Natriumbicarbonat zugegeben und 30 Minuten lang bei 40°C gewalkt. Zur Flotte wurden 6 Teile Polymergerbstoff G18 gegeben und 40 Minuten lang gewalkt. Danach wurden 6 Teilen Nachgerbstoff G3 zugegeben und 30 Minuten nachgegerbt. Anschließend wurden 5 Teile Hydropobiertmittel H3, 2 Teile Polymergerbstoff G19, 10 Teile Nachgerbstoff G9, 4 Teile Fettungsmittel F9 und 1 Teil Natriumcarbonat zugegeben und 120 Minuten nachgegerbt. Durch portionsweise Zugabe von 3,5 Teilen Ameisensäure wurde innerhalb von 45 Minuten ein pH-Wert von 3,5 eingestellt. Anschließend wurden 3 Teile Hydrophobiermittel H4 zugegeben und 20 Minuten gewalkt. Danach wurde die Flotte abgelassen und das Leder zweimal mit einer Flotte aus jeweils 300 Teilen Wasser und 0,2 Teile Ameisensäure 15 Minuten lang gewaschen.

Das so gefärbte, nachgegerbte und gefettete Leder wurde über Nacht auf Bock gelagert, anschließend ausgereckt, naß gespannt und Spannrahmen getrocknet, konditioniert, gestollt und gemillt.

Es wurde ein Handschuhleder mit ausgezeichneten Wasch-, Schweiß-, Migrations- und Reibechtheiten erhalten. In analoger Weise kann man ein miteinem der Farbstoffe der Beispiel 1a bis 59k gefärbtes Handschuhleder herstellen.

### Handschuhlederrezeptur 2:

Ein Lederstück von 100 Gewichtsteilen eines auf übliche Weise chromgegerbten Ziegenleders der Falzstärke 0,5-0,7 mm wurde in einer Flotte aus 300 Teilen Wasser 10 Minuten bei 30°C gewaschen und anschließend in einer aus 120 Teilen Wasser und 1,5 Teilen Natriumformiat bestehenden Flotte 5 Minuten bei 35°C gewalkt, danach wurden innerhalb von 30 Minuten portionsweise insgesamt 3,1 Teile Natriumbicarbonat zugegeben. Anschließend wurden 3 Teile Hilfsmittel HM2 zugeben und 5 Minuten gewalkt. Der pH der Flotte betrug 7,8. Zur Entsäuerungsflotte wurden 8 Teile Mischfarbstoff 13gz gegeben und 40 Minuten bei pH 7,4 und 35°C gefärbt. Durch portionsweise Zugabe von insgesamt 8 Teilen festes Natriumcarbonat wurde zur Fixierung der pH-Wert der Flotte zwischen 9,6 - 9,8 eingestellt und bei 35°C 90 Minuten lang gewalkt. Nach Flottenwechsel wurde zweimal mit einer Flotte aus jeweils 300 Teilen Wasser und 1,5 Teilen Hilfsmittel HM3 insgesamt 50 Minuten lang bei 40°C gewaschen. In einer Flotte aus 200 Teilen Wasser wurde durch portionsweise Zugabe von insgesamt 1,3 Teilen Ameisensäure innerhalb von 60 Minuten ein pH von 5,8 eingestellt.

Das derart gefärbte Leder wurde in einer frisch angesetzten Flotte aus 150 Teilen Wasser und 4 Teilen Hydrophobiermittel H3 20 Minuten gewalkt. Anschließend wurden 8 Teilen Polymergerbstoff G18 zugesetzt und 40 Minuten nachgegerbt. Danach wurden 8 Teile Nachgerbstoff G2 zugesetzt und 30 Minuten lang bei 40°C gewalkt. Anschließend wurden 4 Teile Hydropobiermittel H3, 0,5 Teile Hilfsmittel HM4, 8 Teile Nachgerbstoff G9, 3 Teile Fettungsmittel F9 und 0,8 Teile Natriumcarbonat zugegeben und 120 Minuten nachgegerbt. Durch portionsweise Zugabe von 3,5 Teilen Ameisensäure wurde innerhalb von 35 Minuten ein pH-Wert von 3,5 eingestellt. Anschließend wurden 3 Teile Hydrophobiermittel H7 und 3 Teile Hilfsmittel HM4 zugegeben und 20 Minuten gewalkt. Danach wurde die Flotte abgelassen und das Leder zweimal mit einer Flotte aus jeweils 300 Teilen Wasser und 0,2 Teile Ameisensäure 15 Minuten lang gewaschen.

Das so gefärbte, nachgegerbte und gefettete Leder wurde über Nacht auf Bock gelagert, anschließend ausgereckt, naß gespannt und Spannrahmen getrocknet, konditioniert, gestollt und gemillt.

Es wurde ein Handschuhleder mit ausgezeichneten Wasch-, Schweiß-, Migrations- und Reibechtheiten erhalten. In analoger Weise kann man ein mit einem der Farbstoffe der Beispiel 1a bis 59k gefärbtes Handschuhleder herstellen.

### Handschuhlederrezeptur 3:

Ein Lederstück von 100 Gewichtsteilen eines auf übliche Weise chromgegerbten Ziegenleders der Falzstärke 0,5-0,7 mm wurde in einer Flotte aus 300 Teilen Wasser 10 Minuten bei 30°C gewaschen und anschließend in einer aus 120 Teilen Wasser und 1,5 Teilen Natriumformiat bestehenden Flotte 5 Minuten bei 35°C gewalkt, danach wurden innerhalb von 30 Minuten portionsweise insgesamt 3,1 Teile Natriumbicarbonat zugegeben. Anschließend wurden 3 Teile Hilfsmittel HM2 zugeben und 5 Minuten gewalkt. Der pH der Flotte betrug 7,8. Zur Entsäuerungsflotte wurden 8,2 Teile Mischfarbstoff 12hb gegeben und 40 Minuten bei pH 7,4 und 35°C gefärbt. Durch portionsweise Zugabe von insgesamt 8 Teilen festes Natriumcarbonat wurde zur Fixierung der pH-Wert der Flotte zwischen 9,6 - 9,8 eingestellt und bei 35°C 90 Minuten lang gewalkt. Nach Flottenwechsel wurde dreimal mit jeweils 300 Teilen Wasser insgesamt 60 Minuten lang bei 40°C gewaschen. In einer Flotte aus 200 Teilen Wasser wurde durch portionsweise Zugabe von insgesamt 1,2 Teilen Ameisensäure innerhalb von 60 Minuten ein pH von 5,7 eingestellt.

Das derart gefärbte Leder wurde in einer frisch angesetzten Flotte aus 100 Teilen Wasser, 1 Teil Hydrophobiermittel H1 und 0,2 Teilen Hilfsmittel HM4 20 Minuten lang gewalkt. Anschließend wurden 10 Teile Hydrophobiermittel H5 zugesetzt und 5 Minuten gewalkt. Danach wurden 10 Teile Polymergerbstoff G18 zugesetzt und 55 Minuten lang nachgegerbt. Zur Nachgerbflotte wurden 5 Teile Hydropobiertmittel H5, 8 Teile Hydrophobiermittel H1 und 0,8 Teile Hilfsmittel HM4 zugegeben und 120 Minuten gefettet. Nach Zugabe von 100 Teilen Wasser und einer Walkzeit von 20 Minuten wurde durch portionsweise Zugabe von 4 Teilen Ameisensäure innerhalb von 50 Minuten ein pH-Wert von 3,5 eingestellt. Danach wurde die Flotte abgelassen und das Leder zweimal mit einer Flotte aus jeweils 300 Teilen Wasser und 0,2 Teile Ameisensäure 15 Minuten lang gewaschen.

Das so gefärbte, nachgegerbte und gefettete Leder wurde über Nacht auf Bock gelagert, anschließend ausgereckt, naß gespannt und Spannrahmen getrocknet, konditioniert, gestollt und gemillt.

Es wurde ein rein Polymer basiertes hydrophobiertes Handschuhleder mit ausgezeichneten Wasch-, Schweiß-, Migrations- und Reibechtheiten erhalten. In analoger Weise kann man ein mit einem der Farbstoffe der Beispiel 1a bis 59k gefärbtes Handschuhleder herstellen.

## Patentansprüche

1. Verfahren zum Färben von Leder mit wenigstens einem Farbstoff F, der wenigstens eine unter alkalischen Bedingungen aktivierbare Gruppe der Formel A; 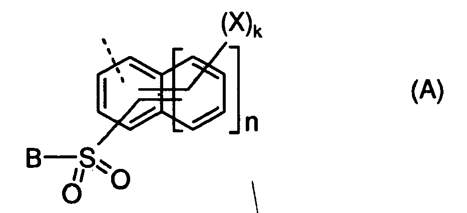 aufweist, worin
---- die Bindung zum Farbstoffmolekül bedeutet,
X für einen elektronenziehenden Rest steht,
k für 1, 2 oder 3 steht,
n 0 oder 1 bedeutet, und
B für eine Gruppen CH=CH₂ oder eine Gruppe CH₂-CH₂-Q steht, worin Q eine unter alkalischen Bedingungen abspaltbare Gruppe steht,
umfassend die Behandlung des Leders mit einer wässrigen Rotte, enthaltend wenigstens einen Farbstoff F, bei einem pH-Wert von 7;5 bis 11.

2. Verfahren nach Anspruch 1, wobei wenigstens einer der Reste X in Formel A für eine Gruppe SO₃H steht.

3. Verfahren nach Anspruch 1 oder 2, worin B in Formel A für CH=CH₂, eine Gruppe CH₂-CH₂-O-SO₃H oder eine Gruppen CH₂-CH₂-O-C(O)CH₃ steht.

4. Verfahren nach einem der vorhergehenden Ansprüche, worin die Gruppe A über eine Gruppe -NH- oder -N=N- an das Farbstoffmolekül gebunden ist.

5. Verfahren nach Anspruch 4, wobei der Farbstoff F ausgewählt ist unter Farbstoffen der Phthalocyanin-Reihe, Antrachinon-Farbstoffen, Azofarbstoffen, Formazanfarbstoffen, Dioxazin-Farbstoffen, Actidin-Farbstoffen, Xanthen-Farbstoffen, Polymothin-Farbstoffen, Stilbenfarbstoffen, Schwefelfarbstoffen und Triarylmethanfarbstoffen.

6. Verfahren nach einem der vorhergehenden Ansprüche, worin n = 0 ist.

7. Verfahren nach Anspruch 6, worin der Rest A ausgewählt ist unter den nachfolgenden Resten A1 bis A12:

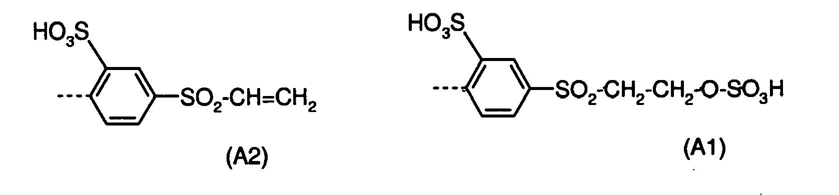

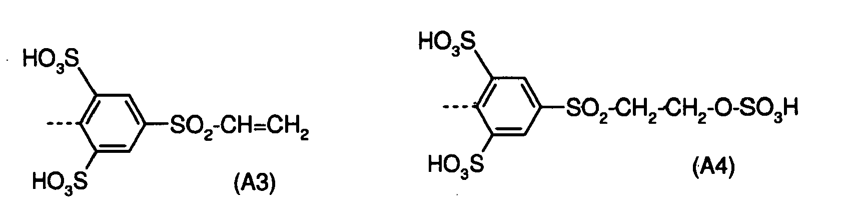

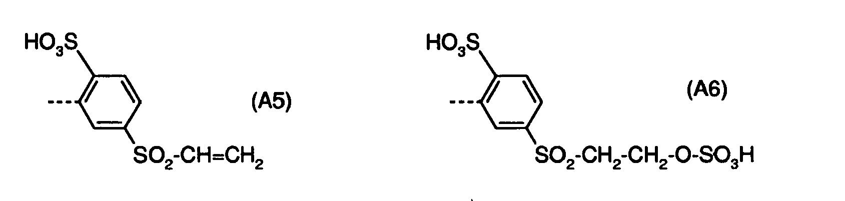

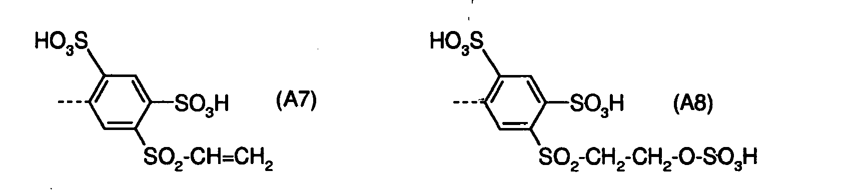

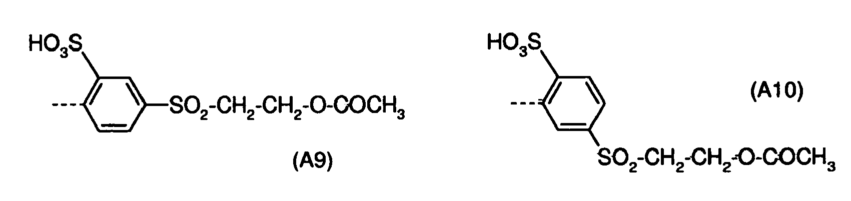

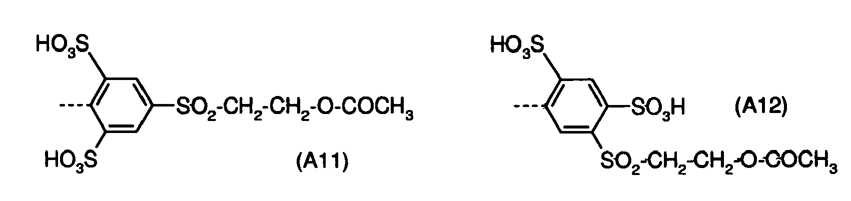

8. Verfahren nach einem der vorhergehenden Ansprüche, worin der Farbstoff F ausgewählt ist unter den Farbstoffen der allgemeinen formeln I bis XV:
Dk¹-N=N-[P-N=N-]ₚKk¹[-N=N-Dk²]ₘ (I)
Dk¹-N=N-Napht¹[-N=N-Tk¹]ᵣ[-N=N-Kk¹]ₖ[-N=N-Dk²]ₙ (II)
Dk¹-N=N-Napht¹-N=N-Tk¹-N=N-Kk¹-N=N-Tk²-N=N-Napht²-N=N-Dk² (III)
Dk¹-N=N-Kk¹-N=N-Tk¹-N=N-Kk²-N=N-Dk² (IV)
Dk¹-N=N-[P-N=N-]ₚNapht¹[-N=N- R]ᵣ-NH-Tr¹-NH-Dk² (V)
Dk¹-N=N-P-NH-Tr¹-NH-R-N=N-Dk² (VI)
Dk¹-N=N-Napht¹-N=N-Tk¹-N=N-P-NH-Tr¹-NH-Dk² (VII)
Dk¹-N=N-Napht¹-NH-Tr¹-NH-P-NH-Tr²-NH-Napht²-N=N-Dk² (VIII)
Dk¹-N=N-Napht¹-NH-Tr¹-NH-Tk¹-NH-Tr²-NH-Napht²-N=N-Dk² (IX)
Dk¹[-N=N-L]ₖ-NH-Tr¹-NH-M-N=N-Napht¹-N=N-P-NH-Tr²-NH-[R-N=N-]ₙDk² (X)
Dk¹-N=N-Kk¹-N=N-Tk¹-NH-Tr¹-NH-Dk² (XI)
Dk¹-N=N-[P-N=N-]ₚR-N=N-Kk¹[-N=N-Dk²]ₙ (XII)
Dk¹-N=N-Pyr-A (XIII)
Kk³-N=N-Tk¹-N=N-Kk¹-N=N-A (XIV)
Dk¹-N=N-P-N=N-Kk¹-N=N-R-N=N-Dk² (XV)
worin:
k, n, p und r unabhängig voneinander für 0 oder 1 stehen, wobei k+n+r in Formel II = 1, 2 oder 3 ist;
m 0, 1 oder 2 bedeutet;
Dk¹, Dk² unabhängig voneinander für einem von einem aromatischen Amin abgeleiten Rest stehen oder eine Gruppe der Formel A bedeutet, wobei in den Formeln I - XII und XV jeweils wenigstens einer der Reste Dk¹ oder Dk² für einen Rest der Formel A steht
Kk¹, Kk² unabhängig voneinander für einen ein-, zwei- oder dreiwertigen aromatischen, von Benzol, Napthalin, Pyrazol, Chinolin, Dipheny- lamin, Diphenylmethan, Pyrimidin, Pyridin oder Diphenylether abgeleiteten Rest stehen, der gegebenenfalls einen oder mehrere der folgenden Reste als Substituenten aufweisen kann: SO₃H, COOH, CN, CONH₂, OH, NH₂, NO₂, Halogen, C₁-C₄-Alkyl, C₁-C₄- Hydroxyalkyl, Carboxy-C₁-C₄-alkyl, C₁-C₄-Alkoxy, C₁-C₄- Alkylamino, C₁-C₄-Dialkylamino, C₁-C₄-Alkylaminocarbonyl, C₁- C₄-Dialkylaminocarbonyl, C₁-C₄-Alkylcarbonylamino, N-(C₁-C₄- Alkylcarbonyl)-N-(C₁-C₄-alkylcarbonyl)amino, C₁-C₄- Alkylaminocarbonyloxy, C₁-C₄₋Dialkylaminocarbonyloxy, C₁-C₄- Alkylaminocarbonylamino, C₁-C₄-Dialkylaminocarbonylamino, Phenylaminocarbonyloxy, Phenylaminocarbonylamino, C₁-C₄- Alkoxycarbonylamino, C₁-C₄-Hydroxy-G₁-C₄-alkylamino, Carboxy- C₁-C₄-alkylamino, Phenylcarbonylamino, C₁-C₄-Alkylsulfonyl, Hydroxy-C₁-C₄-alkylsulfonyl, C₁-C₄-Alkylaminosulfonyl, -C₁-C₄- Alkylsulfonylamino, Phenylsulfonyl, Phenylsulfonylamino, For- mamid, ein Rest der Formel SO₂NR⁵⁶R⁵⁷, worin R⁵⁶ und R⁵⁷ unab- hängig voneinander für Wasserstoff, C₁-C₄-Alkyl, Formyl, C₁-C₄- Alkylcarbonyl, C₁-C₄-Alkyloxycarbonyl, NH₂-CO oder C₁-C₄- Alkylaminocarbonyl stehen, C₁-C₄-Alkylaminosulfonylamino, Di-C₁- C₄-alkylaminosulfonylamino, Phenylsulfonylamino, das am Phenyl- ring einen oder zwei Substituenten, ausgewählt unter C₁-C₄-Alkyl, C₁-C₄-Alkoxy oder Halogen aufweisen kann, oder 5- oder 6- gliedriges Heterocyclyl, das gegebenenfalls durch 1, 2 oder 3 der folgenden Reste: OH, Halogen, -C₁-C₄-Alkyl oder Phenyl, substitu- iert ist, wobei 5-gliedriges aromatisches Heterocyclyl gegebenen- falls am Stickstoff eine Phenylgruppe oder Naphthylgruppe trägt, diegegebenenfalls einen oder zwei der folgenden Reste aufwei- sen kann: OH, SO₃H, -C₁-C₄-Alkyl, und/oder C₁-C₄-Alkoxy;
Kk³ für einen von Benzol, Pyrimidin, Pyridin oder Naphthalin abgelei- teten einwertigen Rest steht, der gegebenenfalls 1 oder 2 Hydro- xysulfonylgruppen aufweist und gegebenenfalls 1, 2 oder 3 wei- tere Substituenten, ausgewählt unter SO₃H, COOH, CN, -CONH₂, OH, NH₂, NO₂, Halogen, C₁-C₄-Alkyl, C₁-C₄-Hydroxyalkyl, Carbo- xy-C₁-C₄-alkyl, C₁-C₄-Alkoxy, C₁-C₄-Alkylamino, C₁-C₄- Dialkylamino, C₁-C₄-Alkylaminocarbonyl, C₁-C₄- Dialkylaminocarbonyl, C₁-C₄-Alkylcarbonylamino, N-(C₁-C₄- Alkylcarbonyl)-N-(C₁-C₄-alkylcarbonyl)amino, C₁-C₄- Alkylaminocarbonyloxy, C₁-C₄-Dialkylaminocarbonyloxy, C₁-C₄- Alkylaminocarbonylamino, C₁-C₄-Dialkylaminocarbonylamino, Phenylaminocarbonyloxy, Phenylaminocarbonylamino, C₁-C₄- Alkoxycarbonylamino, C₁-C₄-Hydroxy-C₁-C₄-alkylamino, Carboxy- C₁-C₄-alkylamino, Phenylcarbonylamino, C₁-C₄-Alkylsulfonyl, Hydroxy-C₁-C₄-alkylsulfonyl, C₁-C₄-Alkylaminosulfonyl, C₁-C₄- Alkylsulfonylamino, Phenylsulfonyl, Phenylsulfonylamino, For- mamid, ein Rest der Formel SO₂NF⁵⁶F⁵⁷, worin R⁵⁶ und R⁵⁷ unab- hängig voneinander für Wasserstoff, C₁-C₄-Alkyl, Formyl, C₁-C₄- Alkylcarbonyl, C₁-C₄-Alkyloxycarbonyl, NH₂-CO oder C₁-C₄- Alkylaminocarbonyl stehen, C₁-C₄-Alkylaminosulfonylamino, Di-C₁- C₄-alkylaminosulfonylamino, Phenylsulfonylamino, das am Phenyl- ring einen oder zwei Substituenten, ausgewählt unter C₁-C₄-Alkyl, C₁-C₄-Alkoxy oder Halogen aufweisen kann, oder 5- oder 6- gliedriges Heterocyclyl, das gegebenenfalls durch 1, 2 oder 3 der folgenden Reste: OH, Halogen, C₁-C₄-Alkyl oder Phenyl, substitu- iert ist, wobei 5-gliedriges aromatisches Heterocyclyl gegebenen- falls am Stickstoff eine Phenylgruppe oder Naphthylgruppe trägt, die gegebenenfalls einen oder zwei der folgenden Reste aufwei- sen kann: OH, SO₃H, C₁-C₄-Alkyl, und/oder C₁-C₄-Alkoxy;
Tk¹, Tk² unabhängig voneinander für einen zweiwertigen aromatischen Rest stehen, der von Benzol, Diphenylamin, Diphenyl, Diphenyl- methan, 2-Phenylbenzimidazol, Phenylsulfonylbenzol, Phenyla- minosulfonylbenzol, Stilben oder Phenylaminocarbonylbenzol abgeleitetet ist, die gegebenenfalls einen oder mehrere der fol- genden Reste als Substituenten aufweisen können: SO₃H, COOH, OH, NH₂, NO₂, Halogen, C₁-C₄-Alkyl;
L, M, P und R unabhängig voneinander für einen zweiwertigen aromatischen Rest stehen, der von Benzol oder Naphthalin abgeleitetet ist, die gegebenenfalls einen oder mehrere, z.B. 1, 2, 3, 4 oder 5 der fol- genden Reste als Substituenten aufweisen können: SO₃H, COOH, CN, CONH₂, OH, NH₂, NO₂, Halogen, C₁-C₄-Alkyl, C₁-C₄- Hydroxyalkyl, Carboxy-C₁-C₄-alkyl, C₁-C₄-Alkoxy, C₁-C₄- Alkylamino, C₁-C₄-Dialkylamino, C₁-C₄-Alkylaminocarbonyl, C₁- C₄-Dialkylaminocarbonyl, C₁-C₄-Alkylcarbonylamino, N-(C₁-C₄- Alkylcarbonyl)-N-(C₁C₄-alkylcarbonyl)amino, C₁-C₄- Alkylaminocarbonyloxy, C₁-C₄-Dialkylaminocarbonyloxy, C₁-C₄- Alkylaminocarbonylamino, C₁-C₄-Dialkylaminocarbonylamino, Phenylaminocarbonyloxy, Phenylaminocarbonylamino, C₁-C₄- Alkoxycarbonylamino, C₁-C₄-Hydroxy-C₁C₄-alkylamino, Carboxy- C₁-C₄-alkylamino, Phenylcarbonylamino, C₁-C₄-Alkylsulfonyl, Hydroxy-C₁-C₄-alkylsulfonyl, C₁-C₄-Alkylaminosulfonyl, C₁-C₄- Alkylsulfonylamino, Phenylsulfonyl, Phenylsulfonylamino, For- mamid, ein Rest der Formel SO₂NR⁵⁶R⁵⁷, worin R⁵⁶ und R⁵⁷ unab- hängig voneinander für Wasserstoff, C₁-C₄-Alkyl, Formyl, C₁-C₄- Alkylcarbonyl, C₁-C₄-Alkyloxycarbonyl, NH₂-CO oder C₁-C₄- Alkylaminocarbonyl stehen, C₁-C₄-Alkylaminosulfonylamino, Di-C₁- C₄-alkylaminosulfonylamino, Phenylsulfonylamino, das am Phenyl- ring einen oder zwei Substituenten, ausgewählt unter C₁-C₄-Alkyl, C₁-C₄-Alkoxy oder Halogen aufweisen kann, oder 5- oder 6- gliedriges Heterocyclyl, das gegebenenfalls durch 1, 2 oder 3 der folgenden Reste: OH, Halogen, C₁-C₄-Alkyl oder Phenyl, substitu- iert ist, wobei 5-gliedriges aromatisches Heterocyclyl gegebenen- falls am Stickstoff eine Phenylgruppe oder Naphthylgruppe trägt, die gegebenenfalls einen oder zwei der folgenden Reste aufwei- sen kann:-OH, SO₃H, C₁-C₄-Alkyl, und/oder C₁-C₄-Alkoxy;
Napht¹, Napht² unabhängig voneinander für einen von Naphthalin abgeleiteten zweiwertigen Rest stehen, der 1 oder 2 Hydroxysulfonylgruppen aufweist und gegebenenfalls 1, 2 oder 3 weitere Substituenten, ausgewählt unter OH, NH₂, C₁-C₄-Alkylamino, C₁-C₄-Dialkylamino C₁-C₄-Alkylsulfonylamino, Phenylsulfonylamino, 4- Methylphenylsulfonylamino, C₁-C₄-Alkylaminosulfonyl, Di-C₁-C₄- alkylaminosulfonyl, Phenylaminosulfonyl, 4- Methylphenylaminosulfonyl und Resten NHC(O)R^{x}, worin R^{x} für Wasserstoff, C₁-C₄-Alkyl, Maleinyl oder Phenyl, aufweisen kann;
Pyr für Pyrazol-1,4-diyl steht, das mit dem Stickstoffatom an die Gruppe A gebunden ist und gegebenenfalls einen oder 2 Substi- tuenten aufweist, die ausgewählt sind unter Halogen, C₁-C₄-Alkyl, Hydroxy oder C₁-C₄-Alkoxy;
Tr¹, Tr² unabhängig voneinander für einen 1,3,5-Triazin-2,4-diyl-Rest stehen, der gegebenenfalls noch ein Halogenatom, eine Methyl- gruppe oder eine Methoxygruppe als Substituenten aufweist,
und den Metallkomplexen dieser Farbstoffe.

9. Verfahren nach einem der vorhergehenden Ansprüche, wobei man das Leder zunächst mit der wässrigen Flotte, enthaltend wenigstens einen Farbstoff F, bei einem pH-Wert im Bereich von 3 bis 6,5 behandelt und anschließend in der Flotte einen pH-Wert von wenigstens 7,5 einstellt.

10. Verfahren nach einem der Ansprüche 1 bis 7, wobei die Färbung als einstufiges Verfahren durchgeführt wird.

11. Verfahren nach einem der vorhergehenden Ansprüche, wobei die Färbung vor der Nachgerbung durchgeführt wird.

12. Verfahren nach einem der vorhergehenden Ansprüche, wobei die Färbung bei Temperaturen im Bereich von 10 bis 60°C erfolgt.

13. Verwendung von Farbstoffen F, die wenigstens eine der in Anspruch 1 definierten, unter alkalischen Bedingungen aktivierbare Gruppe der Formel A aufweisen, und von deren Mischungen zum Färben von Leder bei pH 7,5 bis 11.

14. Farbstoffe F der allgemeinen Formeln IIa, IIIa oder IVa
Dk¹-N=N-Napht¹-N=N-Tk¹-[N=N-Kk¹]ₖ-N=N-Dk² (IIa)
Dk¹-N=N-Napht¹-N=N-Tk¹-N=N-Kk¹-N=N-Tk²-N=N-Napht²-N=N-Dk² (IIIa)
Dk¹-N=N-Napht¹-N=N-Tk¹-N=N-Napht²-N=N-Dk² (IVa)
worin Dk¹, Dk², Napht¹, Napht² und Kk¹ die zuvor genannten Bedeutungen aufweisen, k für 0 oder 1 steht, und worin Tk¹ und Tk² unabhängig voneinander für einen von Diphenyl, Diphenylmethan, 2-Phenylbenzimidazol, Phenylsulfonylbenzol, Phenylaminosulfonylbenzol, Diphenylamin, Stilben oder Phenylaminocarbonylbenzol abgeleiteten, zweiwertigen Rest stehen, der gegebenenfalls einen oder mehrere der folgenden Reste als Substituenten aufweisen kann: SO₃H, COOH, OH, NH₂, NO₂, Halogen, C₁-C₄-Alkyl, wobei Tk¹ in Formel IIa nicht für einen von Diphenylamin abgeleiteten Rest steht, wenn k = 0 ist, und wobei einer oder beide Reste Dk¹ und Dk² für einen Rest der Formel A, wie in Anspruch 1 definiert, stehen.

15. Farbstoffe F der allgemeinen Formel IIb,
A-N=N-Napht¹-N=N-Tk¹-N=N-Kk¹-[N=N-Dk²]ₙ (IIb)
worin A, Dk², Napht¹ und Kk¹ die zuvor genannten Bedeutungen aufweisen, n für 0 oder 1 steht, und worin Tk¹ für einen von Diphenyl, Diphenylmethan, 2-Phenylbenzimidazol, Phenylsulfonylbenzol, Phenylaminosulfonylbenzol, Diphenylamin, Stilben oder Phenylaminocarbonylbenzol abgeleiteten, zweiwertigen Rest steht, der gegebenenfalls einen oder mehrere der folgenden Reste als Substituenten aufweisen kann: SO₃H, COOH, OH, NH₂, NO₂, Halogen, C₁-C₄-Alkyl, wobei Tk¹ nicht für einen von Diphenylamin abgeleiteten Rest steht, wenn n = 0 ist, und wobei Rest Dk² auch für einen Rest der Formel A, wie in Anspruch 1 definiert, stehen kann.

16. Farbstoffe nach Anspruch 14 oder 15, worin Tk¹ und/oder Tk² in den Formeln IIa, IIb, IIIa oder IVa für einen Rest der allgemeinen Formel 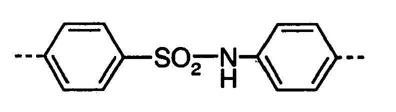 steht, worin die Bindungen zu den Azogruppen darstellen.

17. Farbstoffe nach einem der Ansprüche 14 bis 16, worin Napht¹ und/oder Napth² für einen bivalenten Rest der allgemeinen Formel 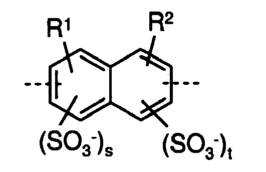 stehen, worin R¹ und R² unabhängig voneinander Wasserstoff, OH, NH₂ oder NHC(O)R³ bedeuten, worin R³ für Wasserstoff, C₁-C₄-Alkyl, Maleinyl oder Phenyl steht, und wenigstens einer der Reste R¹ und R² von Wasserstoffverschieden ist, ⁻⁻⁻⁻ die Bindungen zu den Azogruppen darstellen, s und t für 0 oder 1 stehen und die Summe s + t den Wert 1 oder 2 hat.

18. Farbstoffe nach einem der Ansprüche 14 bis 17, worin einer oder beide der Reste Dk¹ und Dk² für einen der in Anspruch 7 definierten Reste A1 bis A12 stehen.

19. Gefärbtes Leder, erhältlich durch ein Färbeferfahren nach einem der Ansprüche 1 bis 12.

20. Leder nach Anspruch 19, für die Segmente Handschuh, Schuh, Auto, Bekleidung oder Möbel.

## Claims

1. A process for dying leather with at least one dye F which has at least one alkaline-activable group of the formula A; 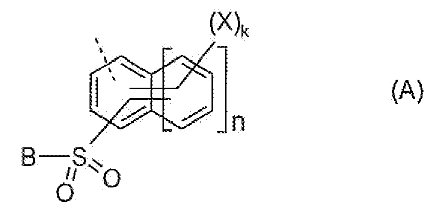 where
⁻⁻⁻⁻ denotes the bond to the dye molecule,
X is an electron-attracting radical,
K is 1, 2 or 3,
n is 0 or 1 and
B is a CH=CH₂ group or a CH₂-CH₂-Q group, where Q is an alkaline-detachable group,
which comprises treating the leather with an aqueous float comprising at least one dye F at a pH of from 7.5 to 11.

2. The process according to claim 1, wherein at least one radical X in the formula A is an SO₃H group.

3. The process according to claim 1 or 2, wherein B in the formula A is CH=CH₂, a CH₂-CH₂-Q-SO₃H group or a CH₂-CH₃-O-C(O)CH₃ group.

4. The process according to any preceding claim, wherein the group A is attached to the dye molecule via an -NH- or -N=N- group.

5. The process according to claim 4, wherein the dye F is selected from dyes of the phthalocyanine series, anthraquinone dyes, azo dyes, formazan dyes, dioxazine dyes, actidine dyes, xanthene dyes, polymethine dyes, stilbene dyes, sulfur dyes and triarylmethane dye.

6. The process according to any preceding claim, wherein n = 0.

7. The process according to claim 6, wherein the radical A is selected from the following radicals A1 to A12:

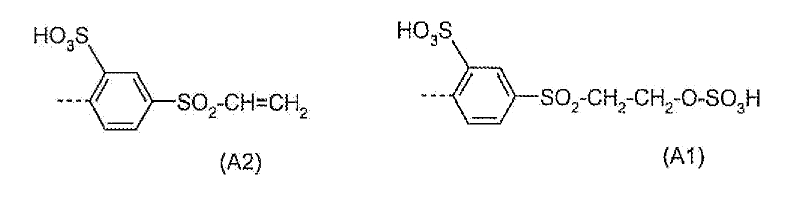

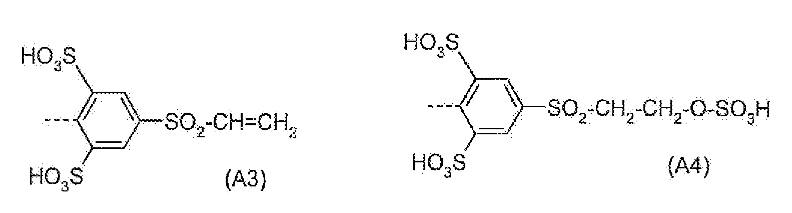

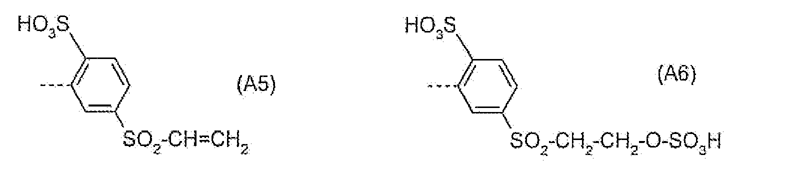

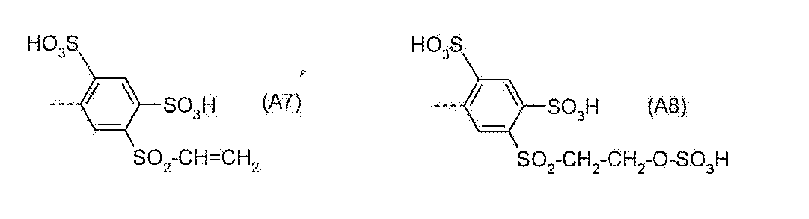

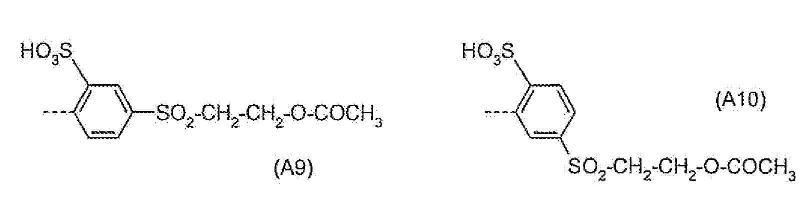

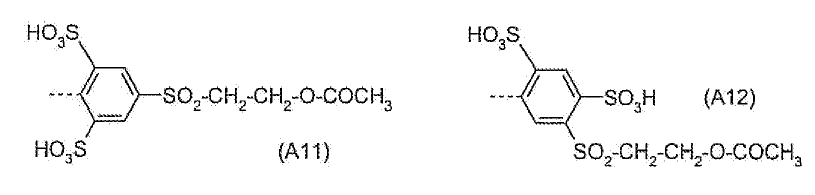

8. The process according to any preceding claim, wherein the dye F is selected from the dyes of the general formulae I to XV:
Dk¹-N=N-[P-N=N-]pKk¹[-N=N-Dk²]ₘ (I)
Dk¹-N=N-Napht¹[-N=N-Tk¹]ᵣ[-N=N-Kk¹]ₖ[-N=N-Dk²]ₙ (II)
Dk¹-N=N-Napht¹-N=N-Tk¹-N=N-Kk¹-N=N-Tk² -N=N-Napht²-N=N-Dk² (III)
Dk¹-N=N-Kk¹-N=N-Tk¹-N=N-Kk²-N=N-Dk² (IV)
Dk¹-N=N- [P-N=N-]ₚNapht¹[-N=N-R]ᵣ-NH-Tr¹-NH-Dk² (V)
Dk1-N=N-P-NH-Tr¹-NH-R-N=N-Dk² (VI)
Dk¹-N=N-Napht¹-N=N-Tk¹-N=N-P-NH-Tr¹-NH-Dk² (VII)
Dk¹-N=N-Naphtl¹-NH-Tr1-NH-P-NH-Tr²-NH-Napht²-N=N-Dk² (VIII)
Dk¹-N=N-Napht¹-NH-Tr¹-NH-Tk¹-NH-Tr²-NH-Napht²-N=N-Dk² (IX)
Dk¹-[-N=N-L]ₖ-NH-Tr¹-NH-M-N=N-Napht¹-N=N-P-NH-Tr²-NH-[R-N=N-]ₙDk² (X)
Dk¹-N=N-Kk¹-N=N-Tk¹-NH-Tr¹-NH-Dk² (XI)
Dk¹-N=N-[P-N=N-]ₚR-N=N-Kk¹[-N=N-Dk²]ₙ (XII)
Dk¹-N=N-Pyr-A (XIII)
Kk³-N=N-Tk¹-N=N-Kk¹-N=N-A (XIV)
Dk¹-N=N-P-N=N-Kk¹-N=N-R-N=N-Dk² (XV)
where
k, n, p and r are independently 0 or 1 subject to the condition that k+n+r in the formula II is = 1, 2 or 3;
m is 0, 1 or 2;
Dk¹, Dk² independently represent a radical derived from an aromatic amine or denotes a group of the formula A subject to the condition that in each of the formulae I - XII and XV at least one of Dk¹ and Dk² represents a radical of the formula A
Kk¹, Kk² independently represent a mono-, di- or trivalent aromatic radical which derives from benzene, naphthalene, pyrazole, quinoline, diphenylamine, diphenylmethane, pyrimidine, pyridine or diphenyl ether and which may optionally comprise one or more of the following radicals as substituents: SO₃H, COOH, CN, CONH₂, OH, NH₂, NO₂, halogen, C₁-C₄-alkyl, C₁-C₄-hydroxyalkyl, carboxy-C₁-C₄-alkyl, C₁-C₄-alkoxy, C₁-C₄-alkylamino, C₁-C₄- dialkylamino, C₁-C₄-alkylaminocarbonyl, C₁-C₄-dialkylaminocarbonyl, C₁-C₄- alkylcarbonylamino, N- (C₁-C₄- alkylcarbonyl) -N- (C₁-C₄- alkylcarbonyl)amino, C₁-C₄- alkylaminocarbonyloxy, C₁-C₄- dialkylaminocarbonyloxy, C₁-C₄- alkylaminocarbonylamino, C₁-C₄- dialkylaminocarbonylamino, phenylaminocarbonyloxy, phenylaminocarbonylamino, C₁-C₄- alkoxycarbonylamino, C₁-C₄-hydroxy-C₁-C₄- alkylamino, carboxy-C₁-C₄-alkylamino, phenylcarbonylamino, C₁-C₄-alkylsulfonyl, hydroxy-C₁-C₄-alkylsulfonyl, C₁-C₄- alkylaminosulfonyl, C₁-C₄-alkylsulfonylamino, phenylsulfonyl, phenylsulfonylamino, formamide, a radical of the formula SO₂NR⁵⁶R⁵⁷ where R⁵⁶ and R⁵⁷ independently represent hydrogen, C₁-C₄- alkyl, formyl, C₁-C₄-alkylcarbonyl, C₁-C₄- alkyloxycarbonyl, NH₂-CO or C₁-C₄- alkylaminocarbonyl, C₁-C₄- alkylaminosulfonylamino, di-C₁-C₄- alkylaminosulfonylamino, phenylsulfonylamino which may be substituted on the phenyl ring by one or two substituents selected from C₁-C₄- alkyl, C₁-C₄-alkoxy or halogen, or 5- or 6-membered heterocyclyl, which is optionally substituted by 1, 2 or 3 of the following radicals: OH, halogen, C₁-C₄-alkyl or phenyl, 5-membered aromatic Heterocyclyl optionally bearing on the nitrogen a phenyl or naphthyl group which can optionally comprise one or two of the following radicals: OH, SO3H,C₁-C₄-alkyl, and/or C₁-C₄-alkoxy;
Kk³ is a monovalent radical which derives from benzene, pyrimidine, pyridine or naphthalene and which optionally comprises 1 or 2 hydroxysulfonyl groups and optionally 1, 2 or 3 further substituents selected from SO₃H, COOH, CN, CONH₂, OH. NH₂, NO₂, halogen, C₁-C₄- alkyl, C₁-C₄-hydroxyalkyl, carboxy-C₁-C₄- alkyl, C₁-C₄-alkoxy, C₁-C₄-alkylamino, C₁- C₄-dialkylamino, C₁-C₄ -alkylaminocarbonyl, C₁-C₄-dialkylaminocarbonyl, C₁-C₄-alkylcarbonylamino, N-(C₁-C₄- alkylcarbonyl)-N-(C₁-C₄- alkylcarbonyl)amino, C₁-C₄- alkylaminocarbonyloxy, C₁-C₄- dialkylaminocarbonyloxy, C₁-C₄- alkylaminocarbonylamino, C₁-C₄- dialkylaminocarbonylamino, phenylaminocarbonyloxy, phenylaminocarbonylamino, C₁-C₄- alkoxycarbonylamino, C₁-C₄-hydroxy-C₁-C₄- alkylamino, carboxy-C₁-C₄-alkylamino, phenylcarbonylamino, C₁-C₄-alkylsulfonyl, hydroxy-C₁-C₄-alkylsulfonyl, C₁-C₄- alkylaminosulfonyl, C₁-C₄- alkylsulfonylamino, phenylsulfonyl, phenylsulfonylamino, formamide, a radical of the formula SO₂NR⁵⁶R⁵⁷, where R⁵⁶ and R⁵⁷ independently represent hydrogen, C₁-C₄- alkyl, formyl, C₁-C₄-alkylcarbonyl, C₁-C₄- alkoxycarbonyl, NH₂-CO or C₁-C₄- alkylaminocarbonyl, C₁-C₄- alkylaminosulfonylamino, di-C₁-C₄- alkylaminosulfonylamino, phenylsulfonylamino which may be substituted on the phenyl ring by one or two substituents selected from C₁-C₄- alkyl, C₁-C₄-alkoxy or halogen, or 5- or 6-membered heterocyclyl, which is optionally substituted by 1, 2 or 3 of the following radicals: OH, halogen, C₁-C₄-alkyl or phenyl, 5-membered aromatic heterocyclyl optionally bearing on the nitrogen a phenyl or naphthyl group which can optionally comprise one or two of the following radicals: OH, SO₃H, C₁-C₄-alkyl, and/or C₁-C₄-alkoxy;
Tk¹, Tk² independently represent a divalent aromatic radical which derives from benzene, diphenylamine, biphenyl, diphenylmethane, 2-phenylbenzimidazole, phenylsulfonylbenzene, phenylaminosulfonylbenzene, stilbene or phenylaminocarbonylbenzene which may each optionally comprise one or more of the following radicals as substituents: SO₃H, COOH, OH, NH₂, NO₂, halogen, C₁-C₄alkyl;
L, M, P and R independently represent a divalent aromatic radical which derives from benzene or naphtalene which may each optionally comprise one or more, for example 1, 2, 3, 4 or 5, of the following radicals as substituents: SO₃H, COOH, CN, CONH₂, OH, NH₂, NO₂, halogen, C₁-C₄-alkyl, C₁-C₄-hydroxyalkyl, carboxy-C₁-C₄-alkyl, C₁-C₄-alkoxy, C₁-C₄-alkylamino, C₁-C₄- dialkylamino, C₁-C₄-alkylaminocarbonyl, C₁-C₄-dialkylaminocarbonyl, C₁-C₄-alkylcarbonylamino, N-(C₁-C₄- alkylcarbonyl)-N-(C₁-C₄- alkylcarbonyl)amino, C₁-C₄- alkylaminocarbonyloxy, C₁-C₄- dialkylaminocarbonyloxy, C₁-C₄- alkylaminocarbonylamino, C₁-C₄- dialkylaminocarbonylamino, phenylaminocarbonyloxy, phenylaminocarbonylamino, C₁-C₄- alkoxycarbonylamino, C₁-C₄-hydroxy-C₁-C₄- alkylamino, carboxy-C₁-C₄-alkylamino, phenylcarbonylamino, C₁-C₄-alkylsulfonyl, hydroxy-C₁-C₄-alkylsulfonyl, C₁-C₄- alkylaminosulfonyl, C₁-C₄- alkylsulfonylamino, phenylsulfonyl, phenylsulfonylamino, formamide, a radical of the formula SO₂NR⁵⁶R⁵⁷, where R⁵⁶ and R⁵⁷ independently represent hydrogen, C₁-C₄- alkyl, formyl, C₁-C₄-alkylcarbonyl, C₁-C₄- alkoxycarbonyl, NH₂-CO or C₁-C₄- alkylaminocarbonyl, C₁-C₄- alkylaminosulfonylamino, di-C₁-C₄- alkylaminosulfonylamino, phenylsulfonylamino which may be substituted on the phenyl ring by one or two substituents selected from C₁-C₄- alkyl, C₁-C₄-alkoxy or halogen, or 5- or 6-membered heterocyclyl, which is optionally substituted by 1, 2 or 3 of the following radicals: OH, halogen, C₁-C₄-alkyl or phenyl, 5-membered aromatic heterocyclyl optionally bearing on the nitrogen a phenyl or naphthyl group which can optionally comprise one or two of the following radicals: OH, SO₃H, C₁-C₄-alkyl, and/or C₁-C₄-alkoxy;
Napht¹, Napht² independently represent a divalent radical which derives from naphthalene and which comprises 1 or 2 hydroxysulfonyl groups and may optionally comprise 1, 2 or 3 further substituents selected from OH, NH₂, C₁-C₄-alkylamino, C₁-C₄-dialkylamino, C₁-C₄- alkylsulfonylamino, phenylsulfonylamino, 4-methylphenylsulfonylamino, C₁-C₄- alkylaminosulfonyl, di-C₁-C₄- alkylaminosulfonyl, phenylaminosulfonyl, 4-methylphenylaminosulfonyl and NHC(O)R^{x} radicals, where R^{x} hydrogen, C₁-C₄-alkyl, maleyl or phenyl;
Pyr represents pyrazole-1,4-diyl which attaches through the nitrogen atom to the A group and optionally comprises one or 2 substituents selected from halogen, C₁- C₄-alkyl, hydroxyl or C₁-C₄-alkoxy;
Tr¹, Tr² independently represent a 1,3,5-triazine- 2,4-diyl radical which optionally further comprises a halogen atom, a methyl group or a methoxy group as substituent,
and the mental complexes of these dyes.

9. The process according to any preceding claim, wherein initially the leather is treated with the aqueous float comprising at least one dye F at a pH in the range from 3 to 6.5 and then a pH of at least 7.5 is set in the float.

10. The process according to any one of claims 1 to 7, wherein the dyeing is carried out as a one-stage process.

11. The process according to any preceding claim, wherein the dyeing is carried out before retanning.

12. The process according to any preceding claim, wherein the dyeing is effected at temperatures in the range from 10 to 60°C.

13. The use of dyes F which comprise at least one alkali-activable group of the formula A as defined in claim 1 and mixtures thereof for dyeing leather at pH 7.5 to 11.

14. Dyes F of the general formulae IIa, IIIa or IVa
Dk¹-N=N-Napht¹-N=N-Tk¹-[N=N-Kk¹-N=N-Dk² (IIa)
Dk¹-N=N-Napht¹-N=N-Tk¹-N=N-Kk¹-N=N-Tk²-N=N-Napht²-N=N-Dk² (IIIa)
Dk¹-N=N-Napht¹-N=N-Tk¹-N=N-Napht²-N=N-Dk² (IVa)
where Dk¹, Dk², Napht¹, Napht² and Kk¹ are each as defined above, k is 0 or 1 and where Tk¹ and Tk² independently represent a divalent radical which derives from biphenyl, diphenylmethane, 2-phenylbenzimidazole, phenylsulfonylbenzene, phenylaminosulfonylbenzene, diphenylamine, stilbene or phenylaminocarbonylbenzene and may optionally comprise one or more of the following radicals as substituents: SO₃H, COOH, OH, NH2, NO₂, halogen, C₁-C₄-alkyl, although Tk¹ in formula IIa does not represent a diphenylamine-derived radical when k is = 0 and either or both of the radicals Dk¹ and Dk² represent a radical of the formula A as defined in claim 1.

15. . Dyes F of the general formula IIb
A-N=N-Napht¹-N=N-Tk¹-N=N-Kk¹-[N=N-Dk²]ₙ (IIb)
where A, Dk², Napht¹ and Kk¹ are each as defined above, n is 0 or 1 and where Tk¹ represents a divalent, radical which derives from biphenyl, diphenylmethane, 2-phenylbenzimidazole, phenylsulfonylbenzene, phenylaminosulfonylbenzene, diphenylamine, stilbene or phenylaminocarbonylbenzene and may optionally comprise one or more of the following radicals as substituents: SO₃H, COOH, OH, NH₂, NO₂, halogen, C₁-C₄-alkyl, where Tk¹ does not represent a diphenylamine-derived radical when n is = 0 and where Dk² radical may also represent a radical of the formula A as defined in claim 1.

16. Dyes according to claim 14 or 15, herein Tk¹ and/or Tk² in the formulae IIa, IIb, IIIa or IVa represents a radical of the general formula 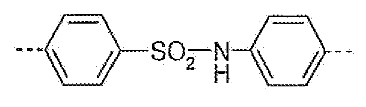 where represent the bonds to the azo groups.

17. Dyes according to any one of claims 14 to 16, wherein Napht¹ and/or Napht² represent a bivalent radical of the general formula 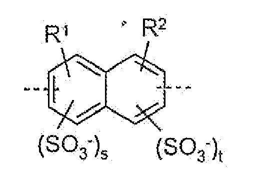 where R¹ and R² are independently hydrogen, OH, NH₂ or NHC(O)R³, where R³ represents hydrogen, C₁-C₄-alkyl, maleyl or phenyl and at least one of R¹ and R² is other than hydrogen, ⁻⁻⁻⁻ represent the bonds to the azo groups, s and t represent 0 or 1 and the s + t sum is 1 or 2.

18. Dyes according to any one of claims 14 to 17, wherein either or both of the radicals Dk¹ and Dk² represent one of the A1 to A12 radicals defined in claim 7.

19. Dyed leather obtainable by a dyeing process according to any one of claims to 1 to 12.

20. Leather according to Claim 19 for handwear, footwear, automobiles, apparel or furniture.

## Revendications

1. Procédé pour la teinture du cuir avec au moins un colorant F, qui comporte au moins un groupe activable dans des conditions alcalines, de formule A : 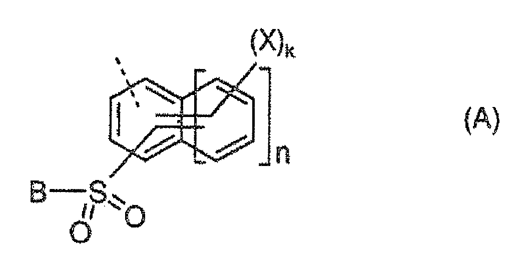 dans laquelle
---- représente la liaison à la molécule de colorant,
X représente un radical attirant les électrons,
k représente 1, 2 ou 3,
n représente 0 ou 1, et
B représente un groupe CH=CH₂ ou un groupe CH₂-CH₂-Q, dans lequel Q représente un groupe séparable dans des conditions alcalines,
comprenant le traitement du cuir par un bain aqueux, contenant au moins un colorant F, à un pH de 7,5 à 11.

2. Procédé selon la revendication 1, dans lequel au moins l'un des radicaux X dans la formule A représente un groupe SO₃H.

3. Procédé selon la revendication 1 ou 2, dans lequel B dans la formule A représente CH=CH₂, un groupe CH₂-CH₂-O-SO₃H ou un groupe CH₂-CH₂-O-C(O)CH₃.

4. Procédé selon l'une quelconque des revendications précédentes, dans lequel le groupe A est lié par un groupe -NH- ou -N=N- à la molécule de colorant.

5. Procédé selon la revendication 4, dans lequel le colorant F est choisi parmi les colorants de la série phtalocyanine, les colorants anthraquinoniques, les colorants azoïques, les colorants formazan, les colorants dioxazine, les colorants actidine, les colorants xanthène, les colorants polyméthine, les colorants stilbène, les colorants soufrés et les colorants triarylméthane.

6. Procédé selon l'une quelconque des revendications précédentes, dans lequel n = 0.

7. Procédé selon la revendication 6, dans lequel le radical A est choisi parmi les radicaux A1 à A12 suivantes :

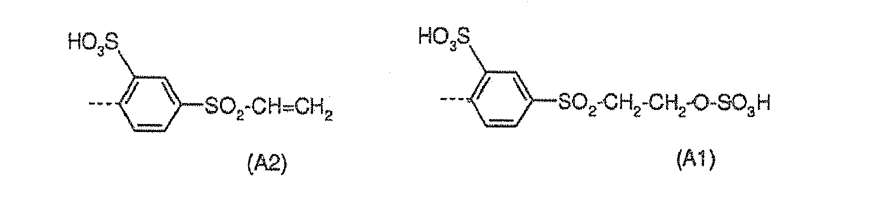

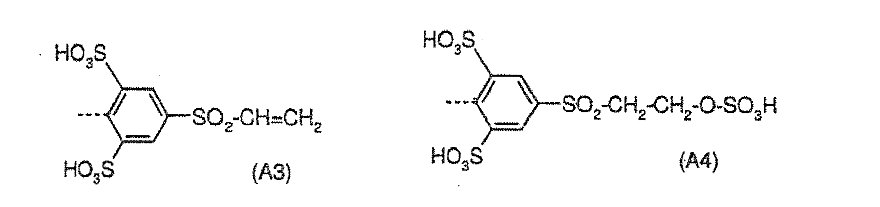

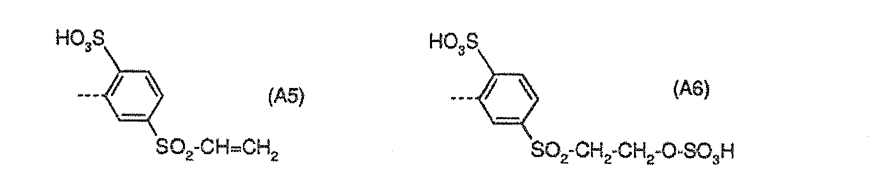

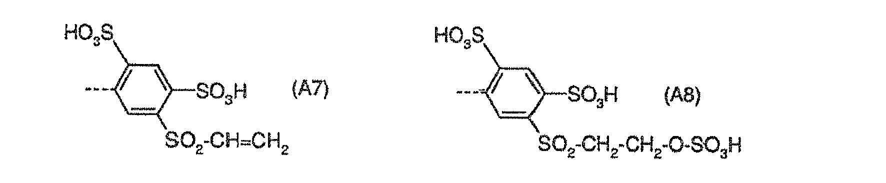

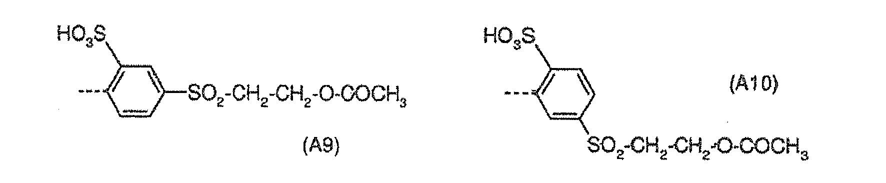

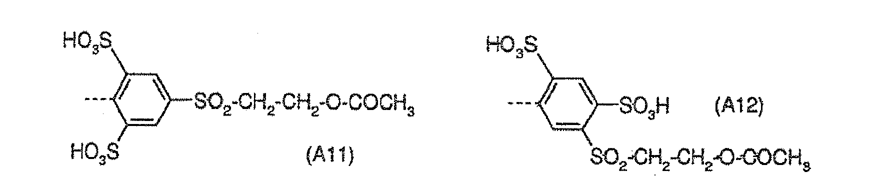

8. Procédé selon l'une quelconque des revendications précédentes, dans lequel le colorant F est choisi parmi les colorants de formules générales I à XV :
Dk¹-N=N-[P-N=N-]ₚKk¹[-N=N-Dk²]ₘ (I)
Dk-¹-N=N-Napht¹[-N=N-Tk¹]ᵣ[-N=N-Kk¹]ₖ[-N=N-Dk²]ₙ (II)
Dk¹-N=N-Napht¹-N=N-Tk¹-N=N-Kk¹-N=N-Tk²-N=N-Napht²-N=N-Dk² (III)
Dk¹-N=N-Kk¹-N=N-Tk¹-N=N-Kk²-N=N-Dk² (IV)
Dk¹-N=N- [P-N=N-]ₚNapht¹[-N=N-R]ᵣ-NH-Tr¹-NH-Dk² (V)
Dk¹-N=N-P-NH-Tr¹-NH-R-N=N-Dk² (VI)
Dk¹-N=N-Napht¹-N=N-Tk¹-N=N-P-NH-Tr¹-NH-Dk² (VII)
Dk¹-N=N-Napht¹-NH-Tr¹-NH-P-NH-Tr²-NH-Napht²-N=N-Dk² (VIII)
Dk¹-N=N-Napht¹-NH-Tr¹-NH-Tk¹-NH-Tr²-NH-Napht²-N=N-Dk² (IX)
Dk¹[-N=N-L]ₖ-NH-Tr¹-NH-M-N=N-Napht¹-N=N-P-NH-Tr²-NH-[R-N=N-]ₙDk² (X)
Dk¹-N=N-Kk¹-N=N-Tk¹-NH-Tr¹-NH-DK² (XI)
Dk¹-N=N-[P-N=N-]ₚR-N=N-Kk¹[-N=N-Dk²]ₙ (XII)
Dk¹-N=N-Pyr-A (XIII)
Kk³-N=N-Tk¹-N=N-Kk¹-N=N-A (XIV)
Dk¹-N=N-P-N=N-Kk¹-N=N-R-N=N-Dk² (XV)
où :
k, n, p et r représentent, indépendamment les uns des autres, 0 ou 1, k+n+r dans la formule II étant = 1, 2 ou 3 ;
m représente 0, 1 ou 2 ;
Dk¹, Dk² représentent, indépendamment l'un de l'autre, un radical dérivé d'une amine aromatique ou un groupe de formule A, dans chacune des formules I - XII et XI au moins l'un des radicaux Dk¹ ou Dk² représentant un radical de formule A
Kk¹, Kk² représentent, indépendamment l'un de l'autre, un radical aromatique mono-, di- ou trivalent, dérivé du benzène, du naphtalène, du pyrazole, de la quinoléine, de la diphénylamine, du diphénylméthane, de la pyrimidine, de la pyridine ou de l'éther diphénylique, qui peut éventuellement comporter comme substituants un ou plusieurs des radicaux suivants : SO₃H, COOH, CN, CONH₂, OH, NH₂, NO₂, halogéno, alkyle en C₁-C₄, hydroxyalkyle en C₁-C₄, carboxy- alkyle(C₁-C₄), alcoxy en C₁-C₄, alkyl(C₁-C₄)amino, dialkyl(C₁-C₄)amino, alkyl(C₁-C₄)aminocarbonyle, dialkyl(C₁-C₄)aminocarbonyle, alkyl(C₁-C₄)carbonylamino, N-[alkyl(C₁-C₄)carbonyl]-N-[alkyl(C₁-C₄)- carbonyl]amino, alkyl(C₁-C₄)amino- carbonyloxy, dialkyl(C₁-C₄)amino- carbonyloxy, alkyl(C₁-C₄)aminocarbonyl- amino, dialkyl(C₁-C₄) aminocarbonylamino, phénylaminocarbonyloxy, phénylamino- carbonylamino, alcoxy(C₁-C₄)- carbonylamino, C₁-C₄-hydroxy- alkyl(C₁-C₄)amino, carboxy-alkyl(C₁-C₄)- amino, phénylcarbonylamino, alkyl(C₁-C₄)- sulfonyle, hydroxyalkyl(C₁-C₄)sulfonyle, alkyl(C₁-C₄)aminosulfonyle, alkyl(C₁-C₄)- sulfonylamino, phénylsulfonyle, phényl- sulfonylamino, formamido, un radical de formule SO₂NR⁵⁶R⁵⁷, dans laquelle R⁵⁶ et R⁵⁷ représentent, indépendamment l'un de l'autre, un atome d'hydrogène, un groupe alkyle en C₁-C₄, formyle, alkyl(C₁-C₄)carbonyle, alkyloxy(C₁-C₄)- carbonyle, NH₂-CO ou alkyl(C₁-C₄)amino- carbonyle, des radicaux alkyl(C₁-C₄)- aminosulfonylamino, dialkyl(C₁-C₄)- aminosulfonylamino, phénylsulfonylamino, qui peut comporter sur le cycle phényle un ou deux substituants, choisis parmi des atomes d'halogène et des groupes alkyle en C₁-C₄ ou alcoxy en C₁-C₄, ou un radical hétérocyclyle à 5 ou 6 chaînons, qui est éventuellement substitué par 1, 2 ou 3 des radicaux suivants : OH, halogéno, alkyle en C₁-C₄ ou phényle, un radical hétérocyclyle aromatique à 5 chaînons portant éventuellement sur l'atome d'azote un groupe phényle ou naphtyle, qui peut éventuellement comporter un ou deux des radicaux suivants . OH, SO₃H, alkyle en C₁-C₄, et/ou alcoxy en C₁-C₄;
Kk³ représente un radical monovalent dérivé du benzène, de la pyrimidine, de la pyridine ou du naphtalène, qui comporte éventuellement 1 ou 2 groupes hydroxy- sulfonyloxy et éventuellement 1, 2 ou 3 autres substituants choisis parmi SO₃H, COOH, CN, CONH₂, OH, NH₂, NO₂, halogéno, alkyle en C₁-C_{4,} hydroxyalkyle en C₁-C₄, carboxy-alkyle(C₁-C₄), alcoxy en C₁-C₄, alkyl(C₁-C₄)amino, dialkyl(C₁-C₄)amino, alkyl(C₁-C₄)aminocarbonyle, dialkyl(C₁-C₄)aminocarbonyle, alkyl(C₁-C₄)carbonylamino, N-[alkyl(C₁-C₄)carbonyl]-N-[alkyl(C₁-C₄)- carbonyl]amino, alkyl(C₁-C₄)amino- carbonyloxy, dialkyl(C₁-C₄)amino- carbonyloxy, alkyl(C₁-C₄)amino- carbonylamino, dialkyl(C₁-C₄)amino- carbonylamino, phénylaminocarbonyloxy, phénylaminocarbonylamino, alcoxy(C₁-C₄)- carbonylamino, C₁-C₄-hydroxy- alkyl(C₁-C₄)amino, carboxy-alkyl(C₁-C₄)- amino, phénylcarbonylamino, alkyl(C₁-C₄)- sulfonyle, hydroxyalkyl(C₁-C₄)sulfonyle, alkyl(C₁-C₄)aminosulfonyle, alkyl(C₁-C₄)- sulfonylamino, phénylsulfonyle, phényl- sulfonylamino, formamido, un radical de formule SO₂NR⁵⁶R⁵⁷, dans laquelle R⁵⁶ et R⁵⁷ représentent, indépendamment l'un de l'autre, un atome d'hydrogène, un groupe alkyle en C₁-C₄, formyle, alkyl(C₁-C₄)carbonyle, alkyloxy(C₁-C₄)carbonyle, NH₂-CO ou alkyl(C₁-C₄)aminocarbonyle, des radicaux alkyl(C₁-C₄)aminosulfonylamino, dialkyl(C₁-C₄)aminosulfonylamino, phénylsulfonylamino, qui peut comporter sur le cycle phényle un ou deux substituants, choisis parmi des atomes d'halogène et des groupes alkyle en C₁-C₄ ou alcoxy en C₁-C₄, ou un radical hétérocyclyle à 5 ou 6 chaînons, qui est éventuellement substitué par 1, 2 ou 3 des radicaux suivants : OH, halogéno, alkyle en C₁-C₄ ou phényle, un radical hétérocyclyle aromatique à 5 chaînons portant éventuellement sur l'atome d'azote un groupe phényle ou naphtyle, qui peut éventuellement comporter un ou deux des radicaux suivants : OH, SO₃H, alkyle en C₁-C₄, et/ou alcoxy en C₁-C₄ ;
Tk¹, Tk² représentent, indépendamment l'un de l'autre, un radical aromatique divalent, qui est dérivé du benzène, de la diphénylamine, du diphényle, du diphénylméthane, du 2-phényl- benzimidazole, du phénylsulfonylbenzène, du phénylaminosulfonylbenzène, du stilbène ou du phénylaminocarbonyl- benzène, qui peuvent éventuellement comporter comme substituants un ou plusieurs des radicaux suivants : SO₃H, COOH, OH, NH₂, NO₂, halogéno, alkyle en C₁-C₄ ;
L, M, P et R représentent, indépendamment les uns des autres, un radical aromatique divalent, qui est dérivé du benzène ou du naphtalène, qui peuvent éventuellement comporter comme substituants un ou plusieurs, par exemple 1, 2, 3, 4 ou 5 des radicaux suivants : SO₃H, COOH, CN, CONH₂ , OH, NH₂, NO₂, halogéno, alkyle en C₁-C₄, hydroxyalkyle en C₁-C₄, carboxy- alkyle(C₁-C₄), alcoxy en C₁-C₄, alkyl(C₁-C₄)amino, dialkyl(C₁-C₄)amino, alkyl(C₁-C₄)aminocarbonyle, dialkyl(C₁-C₄)aminocarbonyle, alkyl(C₁-C₄)carbonylamino, N-[alkyl(C₁-C₄)carbonyl]-N-alkyl(C₁-C₄) - carbonyl]amino, alkyl(C₁-C₄)amino- carbonyloxy, dialkyl(C₁-C₄)amino- carbonyloxy, alkyl(C₁-C₄)amino- carbonylamino, dialkyl(C₁-C₄)amino- carbonylamino, phénylaminocarbonyloxy, phénylaminocarbonylamino, alcoxy(C₁-C₄₎- carbonylamino, C₁-C₄-hydroxy- alkyl(C₁-C₄)amino, carboxy-alkyl(C₁-C₄)- amino, phénylcarbonylamino, alkyl(C₁-C₄)- sulfonyle, hydroxyalkyl(C₁-C₄)sulfonyle, alkyl(C₁-C₄)aminosulfonyle, alkyl(C₁-C₄)- sulfonylamino, phénylsulfonyle, phényl- sulfonylamino, formamido, un radical de formule SO₂NR⁵⁶R⁵⁷, dans laquelle R⁵⁶ et R⁵⁷ représentent, indépendamment l'un de l'autre, un atome d'hydrogène, un groupe alkyle en C₁-C₄, formyle, alkyl(C₁-C₄)- carbonyle, alkyloxy(C₁-C₄)carbonyle, NH₂- CO ou alkyl(C₁-C₄)aminocarbonyle, des radicaux alkyl(C₁-C₄)aminosulfonylamino, dialkyl(C₁-C₄)aminosulfonylamino, phénylsulfonylamino, qui peut comporter sur le cycle phényle un ou deux substituants, choisis parmi des atomes d'halogène et des groupes alkyle en C₁-C₄ ou alcoxy en C₁-C₄, ou un radical hétérocyclyle à 5 ou 6 chaînons, qui est éventuellement substitué par 1, 2 ou 3 des radicaux suivants : OH, halogéno, alkyle en C₁-C₄ ou phényle, un radical hétérocyclyle aromatique à 5 chaînons portant éventuellement sur l'atome d'azote un groupe phényle ou naphtyle, qui peut éventuellement comporter un ou deux des radicaux suivants : OH, SO₃H, alkyle en C₁-C₄, et/ou alcoxy en C₁-C₄ ;
Napht¹ Napht² représentent, indépendamment l'un de l'autre, un radical divalent dérivé du naphtalène, qui comporte 1 ou 2 groupes hydroxysulfonyle et peut éventuellement comporter 1, 2 ou 3 autres substituants, choisis parmi OH, NH₂, alkyl(C₁-C₄)amino, dialkyl(C₁-C₄)amino, alkyl(C₁-C₄)- sulfonylamino, phénylsulfonylamino, 4-méthylphénylsulfonylamino, alkyl(C₁-C₄)aminosulfonyle, dialkyl(C₁-C₄)aminosulfonyle, phénylaminosulfonyle, 4-méthylphényl- aminosulfonyle et des radicaux NHC(O)R^{x}, dans lesquels R^{x} représente un atome d'hydrogène, un groupe alkyle en C₁-C₄, maléyle ou phényle ;
Pyr représente un groupe pyrazol-1,4-diyle, qui est lié par l'atome d'azote au groupe A et comporte éventuellement un ou 2 substituants, qui sont choisis parmi des atomes d'halogène et des groupes alkyle en C₁-C₄, hydroxy ou alcoxy en C₁-C₄ ;
Tr¹, Tr² représentent, indépendamment l'un de l'autre, un radical 1,3,5-triazine-2,4- diyle, qui éventuellement comporte encore comme substituants un atome d'halogène, un groupe méthyle ou un groupe méthoxy,
et les complexes métallifères de ces colorants.

9. Procédé selon l'une quelconque des revendications précédentes, dans lequel on traite d'abord le cuir par le bain aqueux, contenant au moins un colorant F, à un pH dans la plage de 3 à 6,5 et ensuite on ajuste dans le bain un pH d'au moins 7,5.

10. Procédé selon l'une quelconque des revendications 1 à 7, dans lequel la teinture est effectuée en tant que procédé en une étape.

11. Procédé selon l'une quelconque des revendications précédentes, dans lequel la teinture est effectuée avant le retannage.

12. Procédé selon l'une quelconque des revendications précédentes, dans lequel la teinture est effectuée à des températures dans la plage de 10 à 60 °C.

13. Utilisation de colorants F, qui comportent au moins un groupe de formule A, activable dans des conditions alcalines, défini dans la revendication 1, et de mélanges de ceux-ci, pour la teinture du cuir à pH 7,5 à 11.

14. Colorants F de formules générales IIa, IIIa ou IVa
Dk¹-N=N-Napht¹-N=N-Tk¹- [N=N-Kk¹]ₖ-N=N-Dk² (IIa)
DK¹-N=N-Napht¹-N=N-Tk¹-N=N-Kk¹-N=N-Tk²-N=N-Napht²-N=N-Dk² (IIIa)
Dk¹-N=N-Napht¹-N=N-Tk¹-N=N-Napht²-N=N-Dk² (IVa)
dans lesquelles Dk¹, Dk², Napht¹, Napht² et Kk¹ ont les significations données précédemment, k représente 0 ou 1, et dans lesquelles Tk¹ et Tk² représentent, indépendamment l'un de l'autre, un radical divalent dérivé du diphényle, du diphénylméthane, du 2-phénylbenzimidazole, du phénylsulfonylbenzène, du phénylaminosulfonylbenzène, de la diphénylamine, du stilbène ou du phénylaminocarbonylbenzène, qui peuvent éventuellement comporter comme substituants un ou plusieurs des radicaux suivants : SO₃H, COOH, OH, NH₂, NO₂, halogéno, alkyle en C₁-C₄, Tk¹ dans la formule IIa ne représentant pas un radical dérivé de la diphénylamine, lorsque k est = 0, et l'un des radicaux Dk¹ et Dk² ou les deux représentant un radical de formule A, tel que défini dans la revendication 1.

15. Colorants de formule générale IIb,
A-N=N-Napht¹-N=N-Tk¹-N=N-Kk¹-[N=N-Dk²]ₙ (IIb)
dans laquelle A, Dk², Napht¹ et Kk¹ ont les significations données précédemment, n représente 0 ou 1, et dans laquelle Tk¹ représente un radical divalent dérivé du diphényle, du diphénylméthane, du 2-phénylbenzimidazole, du phénylsulfonylbenzène, du phénylaminosulfonylbenzène, de la diphénylamine, du stilbène ou du phénylaminocarbonylbenzène, qui peut éventuellement comporter comme substituants un ou plusieurs des radicaux suivants : SO₃H, COOH, OH, NH₂, NO₂, halogéno, alkyle en C₁-C₄, Tk¹ ne représentant pas un radical dérivé de la diphénylamine, lorsque n est = 0, et le radical Dk² pouvant également représenter un radical de formule A, tel que défini dans la revendication 1.

16. Colorants selon la revendication 14 ou 15, dans lesquels Tk¹ et/ou Tk² dans les formules IIa, IIb, IIIa ou IVa représente(nt) un radical de formule générale 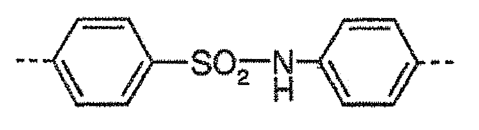 dans laquelle - - - - représente les liaisons aux groupes azo.

17. Colorants selon l'une quelconque des revendications 14 à 16, dans lesquels Napht¹ et/ou Napht² représentent un radical divalent de formule générale 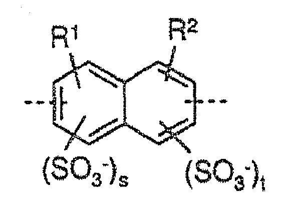 dans laquelle R¹ et R² représentent, indépendamment l'un de l'autre, un atome d'hydrogène, OH, NH₂ ou NHC(O)R³, où R³ représente un atome d'hydrogène, un groupe alkyle en C₁-C₄, maléyle ou phényle, et au moins l'un des radicaux R¹ et R² est différent d'un atome d'hydrogène, ---- représente les liaisons aux groupes azo, s et t représentent 0 ou 1 et la somme s + t a la valeur 1 ou 2.

18. Colorants selon l'une quelconque des revendications 14 à 17, dans lesquels l'un des radicaux Dk¹ et Dk² ou les deux représente(nt) l'un des radicaux A1 à A12 définis dans la revendication 7.

19. Cuir teint, pouvant être obtenu par un procédé de teinture selon l'une quelconque des revendications 1 à 12.

20. Cuir selon la revendication 19, pour les secteurs du gant, de la chaussure, de l'automobile, de l'habillement ou du meuble.
